# EUROPEAN PATENT SPECIFICATION

(11) **EP 1 666 766 B1**
(45) Date of publication and mention of the grant of the patent: **18.11.2009**
(21) Application number: 04787890.5
(22) Date of filing: 10.09.2004
(51) Int. Cl.: F16H 3/66, F16H 3/62

(54) **AUTOMATIC TRANSMISSION FOR VEHICLE**
AUTOMATIKGETRIEBE FÜR FAHRZEUG
BOITE DE VITESSE AUTOMATIQUE POUR VEHICULE

(30) Priority: 10.09.2003 JP 2003319101; 18.12.2003 JP 2003421650; 09.01.2004 JP 2004004842; 27.02.2004 JP 2004055564
(43) Date of publication of application: 07.06.2006
(73) Proprietor: Aisin AW Co., Ltd., Fujii-cho Anjo-shi, Aichi 444-1192 (JP)
(72) Inventor: FUKUYAMA, Satoshi c/o Aisin AW Co., Ltd., Aichi 444-1192 (JP); AOKI, Toshihiko c/o Aisin AW Co., Ltd., Aichi 444-1192 (JP); TODO, Minoru c/o Aisin AW Co., Ltd., Aichi 444-1192 (JP); OZAKI, Kazuhisa c/o Aisin AW Co., Ltd., Aichi 444-1192 (JP); FUJIMINE, Takuya c/o Aisin AW Co., Ltd., Aichi 444-1192 (JP); ISHII, Takuya c/o Aisin AW Co., Ltd., Aichi 444-1192 (JP); INAGAKI, Tomochika c/o Aisin AW Co., Ltd., Aichi 444-1192 (JP); ANDOH, Yousuke c/o Aisin AW Co., Ltd., Aichi 444-1192 (JP)
(74) Representative: Vossius & Partner
(86) International application number: PCT/JP2004/013250
(87) International publication number: WO 2005/026579

(56) References cited:
- EP-A- 1 249 644
- EP-A2- 1 013 968
- DE-A1- 10 318 565
- JP-A- 2000 240 740
- JP-A- 2001 182 785
- JP-A- 2002 323 098
- JP-U- 4 056 968
- US-A1- 2002 091 032

## Description

### Technical Field

The present invention relates to an automatic transmission mounted in a vehicle or the like and more specifically to structural allocations of an automatic transmission capable of attaining a multi-stage shift by enabling transmission of a reduced rotation to at least two rotary elements within a planetary gear set and by enabling transmission of an inputted rotation to at least one of the rotary elements.

### Background Art

With the recent demand on improvement of fuel consumption, an automatic transmission mounted in a vehicle or the like has come to be required to have a multi-stage shift. Among such automatic transmissions, Japanese Patent Laid-Open No. 2001-182785 has proposed one capable of attaining the multi-stage shift by having a reduction planetary gear capable of outputting a 'reduced rotation' that is attained by reducing an 'inputted rotation' inputted to an input shaft and a planetary gear unit having a plurality of rotary elements and by arranging such that the reduced rotation from the reduction planetary gear may be inputted to the rotary elements of the planetary gear unit via clutches and others.

By the way, while it is necessary to provide a number of clutches in order to build such automatic transmission capable of attaining the multi-stage shift as described above, there is a problem in contrary that the automatic transmission is desired to be compact from the point of view of mountability in mounting such automatic transmission in a vehicle.

Still more, while it is necessary to supply operating fluid to hydraulic servos of those many clutches by providing oil passages between relatively rotating members and to provide seal rings for sealing the part between those relatively rotating members, there is a possibility of causing such problems as a drop of efficiency and controllability of the automatic transmission because those relatively rotating members may cause sliding resistance when such a number of seal rings are provided.

### Disclosure of Invention

It is therefore a primary object of the invention to provide a compact vehicular automatic transmission.

Another obj ect of the invention is to provide a vehicular automatic transmission wherein a number of seal rings may be cut.

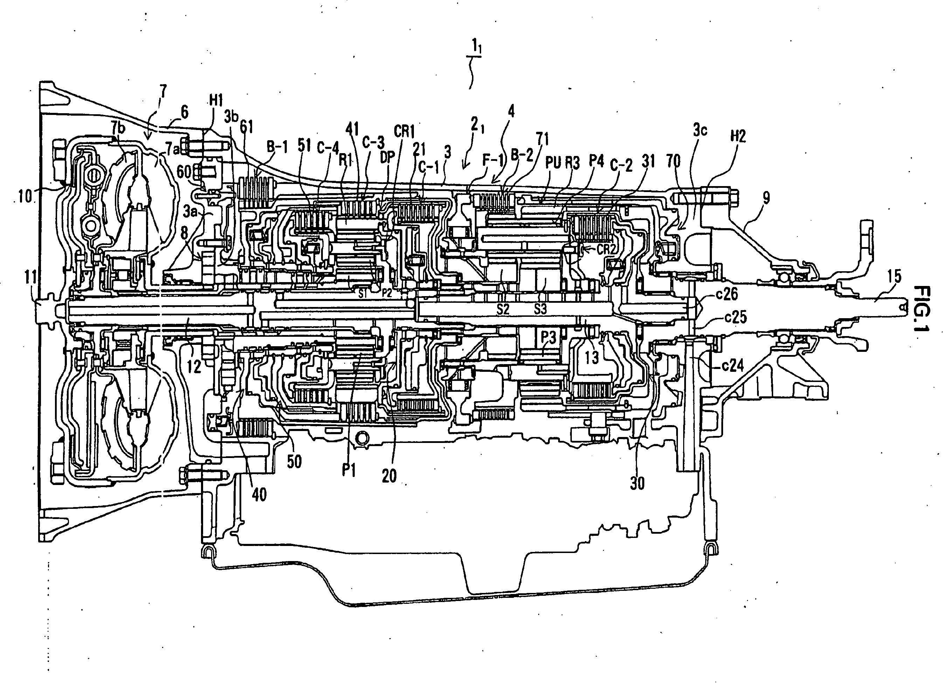

A first aspect of the invention (see FIGs. 1 through 81 for example) consists in that in a vehicular automatic transmission (1) capable of attaining a multi-stage shift, comprising;
a reduction planetary gear (DP) for reducing and outputting an inputted rotation of an input shaft (12);
at least two reduction transmitting clutches (C-1 and C-3) for enabling transmission of the reduced rotation reduced through the reduction planetary gear (DP);
a planetary gear set (PU) having at least two rotary elements (S2 and S3) to which the reduced rotation can be transmitted by the reduction transmitting clutches (C-1 and C-3); and
an input transmitting clutch (C-4) for enabling transmission of the inputted rotation to at least one (S2 for example) of the two rotary elements (S2 and S3):
the vehicular automatic transmission is characterized in that a hydraulic servo (50) of the input transmitting clutch (C-4) is disposed axially on the opposite side of the reduction planetary gear (DP) from the planetary gear set (PU); and
the input transmitting clutch (C-4) is linked to the rotary element (S2 for example) of the planetary gear set (PU) via output side members (42 and 101) of one (C-3 for example) of the two reduction transmitting clutches.

Because the input transmitting clutch is linked to the rotary element of the planetary gear set (PU) via the output side members of one of the two reduction transmitting clutches as described above, the output side members become the output side members of the two clutches that transmit different rotations. That is, the output side members may be commonly used as one rotating member. Thereby, the vehicular automatic transmission may be compactly built.

A second aspect of the invention (see FIGs . 1 through 81 for example) consists in that in a vehicular automatic transmission (1) capable of attaining a multi-stage shift, comprising:
a reduction planetary gear (DP) for reducing and outputting an inputted rotation of an input shaft (12);
at least two reduction transmitting clutches (C-1 and C-3) for enabling the transmission of the reduced rotation reduced through the reduction planetary gear (DP);
a planetary gear set (PU) having at least two rotary elements (S2 and S3) to which the reduced rotation can be transmitted by the reduction transmitting clutches (C-1 and C-3); and
an input transmitting clutch (C-4) for enabling the transmission of the inputted rotation to one (S2 for example) of the two rotary elements (S2 and S3):
the vehicular automatic transmission is characterized in that a hydraulic servo (50) of the input transmitting clutch (C-4) is disposed axially on the opposite side of the reduction planetary gear (DP) from the planetary gear set (PU) and on a boss portion (3b) extending from a case (4); and
operating fluid is supplied to the hydraulic servo (50) of the input transmitting clutch (C-4) through oil passages within the boss portion (3b).

Because the hydraulic servo of the input transmitting clutch is disposed axially on the opposite side of the reduction planetary gear (DP) from the planetary gear set (PU) and on the boss portion (3b) extending from the case and operating fluid is supplied to the hydraulic servo of the input transmitting clutch through the oil passages within the boss portion (3b), a number of seal rings may be cut as compared to a case of disposing the hydraulic servo of the input transmitting clutch on the input shaft through an intermediary of a member having another speed of rotation, i.e., as compared to a case of supplying the operating fluid via another member. Thereby, it becomes possible to prevent the drop of the efficiency and controllability of the vehicular automatic transmission.

A third aspect of the invention (see FIGs. 1 through 81) is characterized in that in the vehicular automatic transmission (1) as described in the first or second aspects of the invention:
the two reduction transmitting clutches are composed of first and third clutches (C-1 and C-3);
the input transmitting clutch is composed of a fourth clutch (C-4);
the planetary gear set (PU) has four rotary elements including the two rotary elements (S2 and S3) described above, i.e., the first rotary element (S2), the second rotary element (S3), a third rotary element (CR2) and a fourth rotary element (R3);
the first rotary element (S2) is capable of transmitting the inputted rotation in connection with the fourth clutch (C-4), is capable of transmitting the reduced rotation in connection with the third clutch (C-3) and is capable of fixing the rotation with first braking means (B-1);
the second rotary element (S3) is capable of transmitting the reduced rotation in connection with the first clutch (C-1);
the third rotary element (CR2) is capable of transmitting the inputted rotation in connection with the second clutch (C-2) and is capable of fixing the rotation with second braking means (B-2); and
the fourth rotary element (R3) is linked to an output member (15).

Thus, because the first rotary element is capable of transmitting the inputted rotation in connection with the fourth clutch (C-4), is capable of transmitting the reduced rotation in connection with the third clutch (C-3) and is capable of fixing the rotation in connection with the first braking means, the second rotary element is capable of transmitting the reduced rotation in connection with the first clutch, the third rotary element is capable of transmitting the inputted rotation in connection with the second clutch (C-2) and is capable of fixing the rotation in connection with the second braking means and the fourth rotary element is linked to the output member, the multi-stage shift of forward eighth speed and reverse second speed stages for example may be attained.

A fourth aspect of the invention (see FIG. 1 and others for example) is characterized in that in the vehicular automatic transmission (1) as described in the third aspect, the hydraulic servo (40) of the third clutch (C-3) is disposed axially on the opposite side of the reduction planetary gear (DP) from the planetary gear unit (PU) and the hydraulic servo (20) of the first clutch (C-1) is disposed axially between the planetary gear (DP) and the planetary gear unit (PU).

Because the hydraulic servo (40) of the third clutch (C-3) is disposed axially on the opposite side of the reduction planetary gear (DP)from the planetary gear set (PU) and the hydraulic servo of the first clutch is disposed axially between the reduction planetary gear (DP) and the planetary gear set (PU), the fourth clutch (C-4) may be disposed on the inner peripheral side of the clutch drum of the third clutch (C-3). Accordingly, the vehicular automatic transmission may be compactly built, even though the capacity of the third clutch (C-3) may be increased.

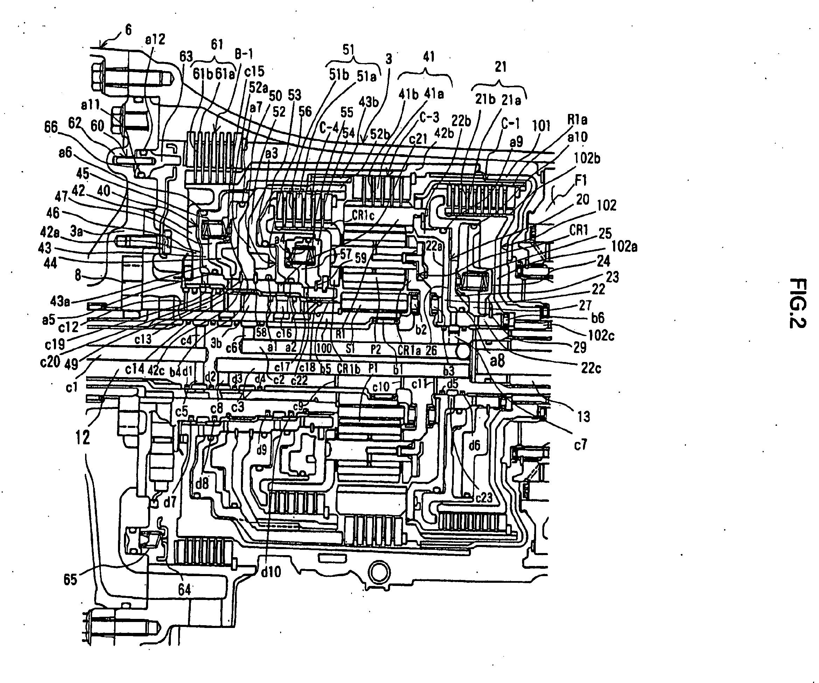

A fifth aspect of the invention (see FIG. 2 and others for example) is characterized in that in the vehicular automatic transmission (1) as described in the fourth aspect, the planetary gear (DP) and the fourth clutch (C-4) are disposed on the inner peripheral side of at least either one of the clutch drum (22) of the first clutch (C-1) and the clutch drum (42) of the third clutch (C-3).

Because the reduction planetary gear (DP) and the fourth clutch (C-4) are disposed on the inner peripheral side of at least either one of the clutch drum of the first clutch and the clutch drum of the third clutch (C-3), the area of the friction plate of at least either one of the first and third clutches may be enlarged. Accordingly, even though the capacity for transmitting the reduced rotation may be increased, the fourth clutch (C-4) and the reduction planetary gear (DP) whose capacity for transmitting the inputted rotation can be relatively small may be disposed on the inner peripheral side of the first or third clutch drum and the vehicular automatic transmission capable of attaining the multi-stage shift may be compactly built.

A sixth aspect of the invention (see FIG. 2 and others for example) is characterized in that in the vehicular automatic transmission (1) as described in the fourth or fifth aspect, the hydraulic servo (40) of the third clutch (C-3), the hydraulic servo (50) of the fourth clutch (C-4) and the planetary gear (DP) are disposed on the boss portion (3b) extending from the case (4) axially in order from the side of the joint of the boss portion (3b) with the case (4);
the hydraulic servo (20) of the first clutch (C-1) is disposed on the input shaft (12) and adjacent to the planetary gear (DP);
operating fluid is supplied respectively to the hydraulic servo (40) of the third clutch (C-3) and the hydraulic servo (50) of the fourth clutch (C-4) from the oil passages provided within the boss portion (3b); and
operating fluid is supplied to the hydraulic servo (20) of the first clutch (C-1) from oil passages provided within the input shaft (12).

Because the hydraulic servo (40) of the third clutch (C-3), the hydraulic servo (50) of the fourth clutch (C-4) and the planetary gear (DP) are disposed on the boss portion (3b) extending from the case (4) axially in order from the joint side of the boss portion (3b) with the case (4) and operating fluid is supplied respectively to the hydraulic servo (40) of the third clutch (C-3) and the hydraulic servo (50) of the fourth clutch (C-4) from the oil passages provided within the boss portion (3b), the operating fluid may be supplied just by providing a pair of seal rings respectively between the hydraulic servos of the third and fourth clutches and the boss portion (3b). Thereby, a number of seal rings may be reduced as compared to a case of disposing the hydraulic servos of the third and fourth clutches on the input shaft and of supplying operating fluid to the hydraulic servos from the boss portion (3b) via the oil passage of the input shaft for example. Still more, because the hydraulic servo (20) of the first clutch (C-1) is disposed on the input shaft (12) and adjacent to the reduction planetary gear and operating fluid is supplied to the hydraulic servo (20) of the first clutch (C-1) from the oil passage provided within the input shaft (12), the operating fluid may be supplied just by providing the pair of seal rings respectively between the oil passage for supplying operating fluid from the hydraulic control unit and the input shaft and between the hydraulic servo of the first clutch and the input shaft. Thereby, a number of seal rings may be cut as compared to a case of supplying operating fluid via another member for example. Thus, it becomes possible to prevent the drop of the efficiency and controllability of the vehicular automatic transmission.

A seventh aspect of the invention (see FIG. 2 and others for example) is characterized in that in the vehicular automatic transmission (1) as described in any one of the fourth through sixth aspects, the third and fourth clutches (C-3 and C-4) are linked to the first rotary element (S2) through the outer peripheral side of the first clutch (C-1).

Even though the increase of size of the first clutch to the outer peripheral side is limited because the third and fourth clutches are linked to the rotary element of the planetary gear set (PU) through the outer peripheral side of the first clutch and the member for linking the third and fourth clutches with the rotary element of the planetary gear set (PU) passes through the outer peripheral side of the first clutch, the capacity of the first clutch may be maintained by increasing the size in the inner diametric direction, as compared to a case of disposing it on the boss portion (3b), because the first clutch is disposed on the input shaft.

An eighth aspect of the invention (see FIG. 2 and others for example) is characterized in that in the vehicular automatic transmission (1) as described in any one of the fourth through seventh aspects, the reduction planetary gear (DP) is composed of a double pinion planetary gear (DP) having a first sun gear (S1) whose rotation is fixed, a pinion gear (P1) engaging with the first sun gear (S1), a pinion gear (P2) engaging with the pinion gear (P1) ; a first carrier (CR1) rotatably supporting the first and second pinion gears (P1 and P2) and always linked with the input shaft (12), and a first ring gear (R1) engaging with the second pinion gear (P2) and outputting the reduced rotation.

Thereby, the reduced rotation reduced from the inputted rotation of the input shaft may be outputted from the first ring gear.

A ninth aspect of the invention (see FIG. 2 and others for example) is characterized in that in the vehicular automatic transmission (1) as described in the eighth aspect, the friction plate (41) of the third clutch (C-3) is disposed on the outer peripheral side of the first ring gear (R1) and the fourth clutch (C-4) is disposed axially between the hydraulic servo (40) of the third clutch (C-3) and the friction plate (41) of the third clutch (C-3).

Because the friction plate (41) of the third clutch (C-3) is disposed on the outer peripheral side of the first ring gear (R1) and the fourth clutch (C-4) is disposed axially between the hydraulic servo (40) of the third clutch (C-3) and the friction plate (41) of the third clutch (C-3), it becomes possible to prevent the fourth clutch (C-4) from radially overlapping with the hydraulic servo (40) or the friction plate (41) of the third clutch (C-3). Accordingly, because the size of the fourth clutch (C-4) may be increased as compared to a case of disposing the fourth clutch on the inner peripheral side of the third clutch (C-3), the capacity may be maintained while compactly building the vehicular automatic transmission in the radial direction.

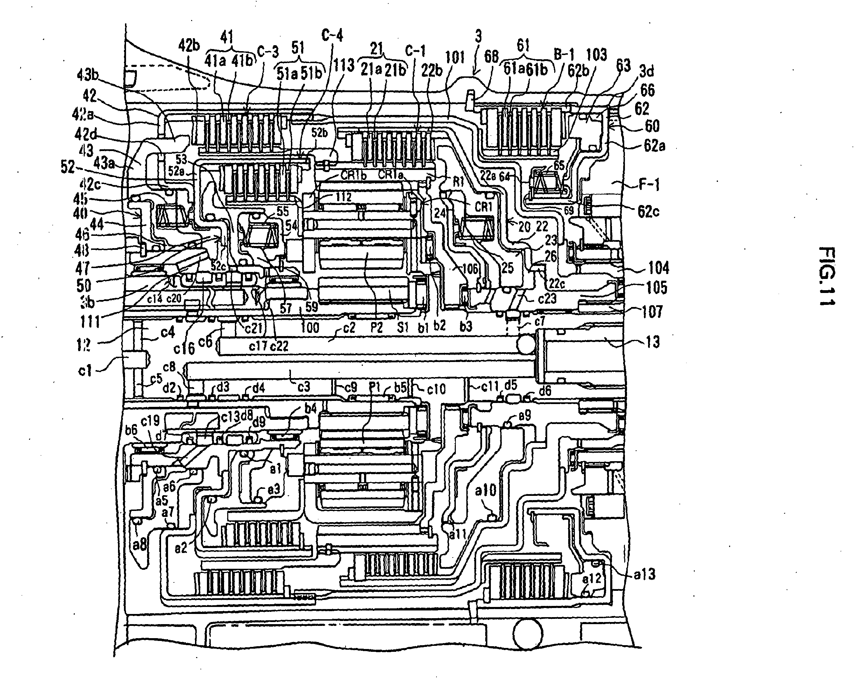

A 10th aspect of the invention (see FIG. 11 and others for example) is characterized in that in the vehicular automatic transmission (1) as described in the eighth aspect, the friction plate (41) of the third clutch (C-3) is disposed on the outer peripheral side of the fourth clutch (C-4) and the friction plate (21) of the first clutch (C-1) is disposed on the outer peripheral side of the first ring gear (R1).

Because the friction plate (41) of the third clutch (C-3) is disposed on the outer peripheral side of the fourth clutch (C-4) and the friction plate (21) of the first clutch (C-1) is disposed on the outer peripheral side of the first ring gear (R1), i.e., because the friction plate (41) of the third clutch (C-3) that relatively often changes over clamping during traveling is disposed on the outer peripheral side of the fourth clutch (C-4) where it can be readily lubricated as compared to a case of disposing it on the outer peripheral side of the reduction planetary gear (DP), heat of the friction plate (41) of the third clutch (C-3) may be readily radiated and the durability of the third clutch (C-3) may be improved. Still more, the vehicular automatic transmission may be shortened in the axial direction by disposing the friction plate of the first clutch that relatively less changes over clamping on the outer peripheral side of the reduction planetary gear (DP).

An 11th aspect of the invention (see FIG. 11 and others for example) is characterized in that in the vehicular automatic transmission (1) as described in the 10th aspect, the clutch drum (42) of the third clutch (C-3) is disposed in linkage on the outer peripheral side of the clutch drum (52) of the fourth clutch (C-4) ;
the hydraulic servo (40) of the third clutch (C-3) is disposed in linkage with the clutch drum (52) of the fourth clutch (C-4) and is built so as to have a cylinder member (44), a piston member (43) and an oil chamber (46) formed between the cylinder member (44) and the piston member (43) separately from the clutch drum (42) of the third clutch (C-3); and
the piston member (43) of the hydraulic servo (40) of the third clutch (C-3) is disposed so as to penetrate through and intersect with the clutch drum (42) of the third clutch (C-3) and to face to the friction plate (41) of the third clutch (C-3).

Because the clutch drum (42) of the third clutch (C-3) is disposed in linkage on the outer peripheral side of the clutch drum (52) of the fourth clutch (C-4), the hydraulic servo (40) of the third clutch (C-3) is disposed in linkage with the clutch drum (52) of the fourth clutch (C-4) and is built so as to have the cylinder member (44), the piston member (43) and the oil chamber (46) formed between the cylinder member (44) and the piston member (43) separately from the clutch drum (42) of the third clutch (C-3), and the piston member (43) of the hydraulic servo (40) of the third clutch (C-3) is disposed so as to penetrate through and intersect with the clutch drum (42) of the third clutch (C-3) and to face to the friction plate (41) of the third clutch (C-3), the clutch drum (42) of the third clutch (C-3) for transmitting the rotation of the clutch drum of the fourth clutch (C-4) may be relatively shortened and its weight to be lightened even though the third clutch (C-3) becomes removable.

A 12th aspect of the invention (see FIG. 11 and others for example) is characterized in that in the vehicular automatic transmission (1) as described in the 11th aspect, a return spring (45) of the hydraulic servo (40) of the third clutch (C-3) is disposed on the clutch drum (52) of the fourth clutch (C-4).

Because the return spring (45) of the hydraulic servo (40) of the third clutch (C-3) is disposed on the clutch drum (52) of the fourth clutch (C-4), i.e., because the clutch drum (52) of the fourth clutch (C-4) may be used in common as a cancel plate of the hydraulic servo (40) of the third clutch (C-3), a number of parts may be cut and the vehicular automatic transmission may be compactly built.

A 13th aspect of the invention (see FIG. 2 and others for example) is characterized in that in the vehicular automatic transmission (1) as described in any one of the fourth through 12th aspects, a friction plate (61) of the first braking means (B-1) is disposed on the outer peripheral side of the hydraulic servo (40) of the third clutch (C-3).

Because the first braking means (B-1) is disposed on the outer peripheral side of the hydraulic servo (40) of the third clutch (C-3), the friction plate (61) of the first braking means (B-1) may be disposed at the position radially overlapping with the third clutch (C-3) while maintaining the capacity (torque capacity and thermal capacity) of the friction plate (61) of the first braking means (B-1) and while reducing the radial size thereof. Accordingly, it becomes possible to compactly build the vehicular automatic transmission in the radial direction and to shorten in the axial direction.

A 14th aspect of the invention (see FIG. 11 and others for example) is characterized in that in the vehicular automatic transmission (1) as described in any one of the fourth through 12th aspects, the first braking means (B-1) is disposed axially between the first clutch (C-1) and the planetary gear unit (PU).

Because the first braking means (B-1) is disposed axially between the first clutch (C-1) and the planetary gear set (PU), the friction plate (41) of the third clutch (C-3) may be disposed on the outer peripheral side of the fourth clutch (C-4).

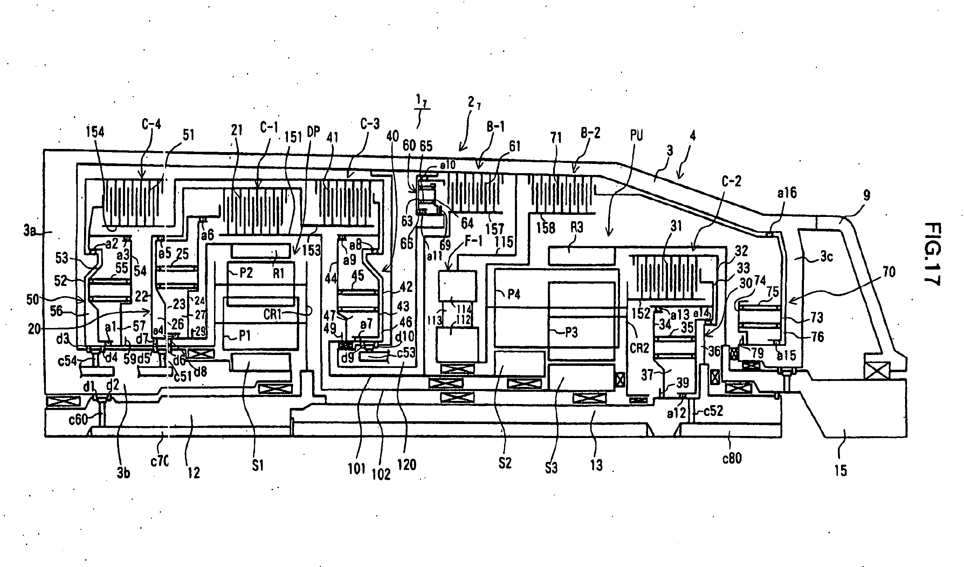

A 15th aspect of the invention (see FIG. 17 and others for example) is characterized in that in the vehicular automatic transmission (1) as described in the third aspect, the hydraulic servo (20) of the first clutch (C-1) is disposed axially on the opposite side of the reduction planetary gear (DP) from the planetary gear unit (PU); and
the hydraulic servo (40) of the third clutch (C-3) isdisposed axially between the reduction planetary gear (DP) and the planetary gear set (PU).

Because the hydraulic servo (20) of the first clutch (C-1) is disposed axially on the opposite side of the reduction planetary gear (DP) from the planetary gear set (PU), the hydraulic servo (40) of the third clutch (C-3) may be disposed axially between the reduction planetary gear (DP) and the planetary gear set (PU) .

A 16th aspect of the invention (see FIG. 17 and others for example) is characterized in that in the vehicular automatic transmission (1) as described in the 15th aspect, the first braking means (B-1) is disposed axially between the third clutch (C-3) and the planetary gear set (PU).

Because the first braking means (B-1) is disposed axially between the third clutch (C-3) and the planetary gear set (PU), it becomes possible to increase the radial size of the hydraulic servo and the friction plate of the fourth clutch (C-4) and thus to increase the capacity of the fourth clutch (C-4).

A 17th aspect of the invention (see FIG. 17 and others for example) is characterized in that in the vehicular automatic transmission (1) as described in the 15th or 16th aspect, a support wall (120) fixed to the case (4) is disposed axially between the planetary gear set (PU) and the third clutch (C-3); and
operating fluid is supplied to the hydraulic servo (40) of the third clutch (C-3) via an oil passage provided in the support wall (120).

Because the support wall (120) fixed to the case (4) is disposed axially between the planetary gear set (PU) and the third clutch (C-3) and operating fluid is supplied to the hydraulic servo (40) of the third clutch (C-3) via the oil passage provided in the support wall (120), the operating fluid may be supplied to the hydraulic servo (40) of the third clutch (C-3) just by providing a pair of seal rings between the hydraulic servo (40) and the support wall (120). Thereby, a number of seal rings may be cut and sliding resistance of the seal rings may be reduced as compared to a case of supplying operating fluid to the hydraulic servo (40) of the third clutch (C-3) from the input shaft (12). Thus the power transmitting efficiency of the vehicular automatic transmission may be improved.

An 18th aspect of the invention (see FIG. 17 and others for example) is characterized in that in the vehicular automatic transmission (1) as described in the 17th aspect, the hydraulic servo (60) of the first braking means (B-1) is disposed on the outer peripheral side of the support wall 120.

Because the hydraulic servo of the first braking means (B-1) is disposed on the outer peripheral side of the support wall (120), the support wall (120) may be used in common also as a cylinder member of the hydraulic servo of the first braking means (B-1) and thus a number of parts may be cut.

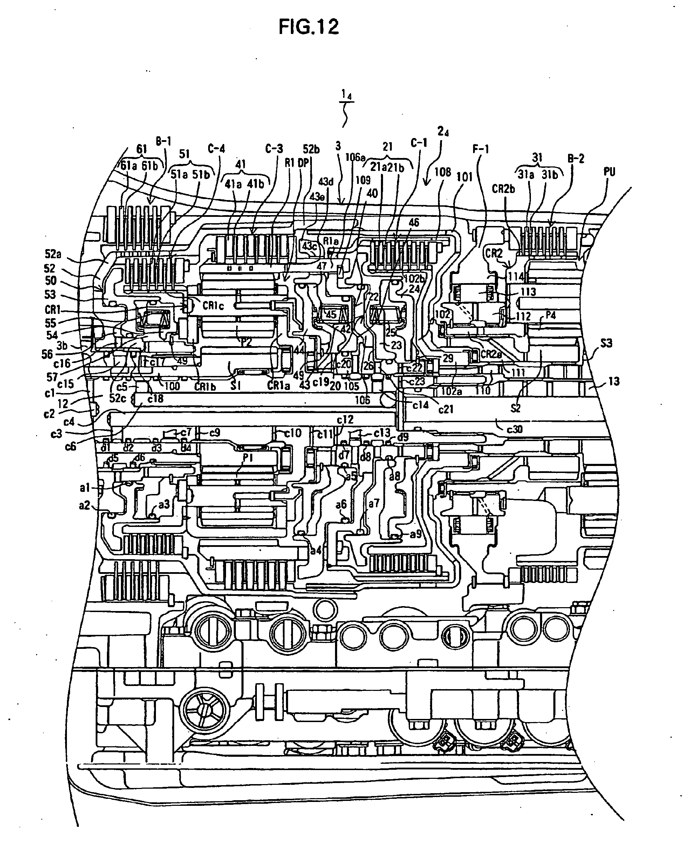

A 19th aspect of the invention (see FIG. 12 and others for example) is characterized in that in the vehicular automatic transmission (1) as described in the third aspect, the hydraulic servo (20) of the first clutch (C-1) and the hydraulic servo (40) of the third clutch (C-3) are disposed axially between the reduction planetary gear (DP) and the planetary gear set (PU).

Because the hydraulic servo (20) of the third clutch (C-1) and the hydraulic servo (40) of the third clutch (C-3) are disposed axially between the planetary gear set (PU) and the reduction planetary gear (DP), the vehicular automatic transmission may be compactly built especially in the radial direction while attaining the multi-stage shift as compared to a case of disposing a plurality of clutches and hydraulic servos on the boss portion (3b) extending from the case (4).

A 20th aspect of the invention (see FIG. 12 and others for example) is characterized in that in the vehicular automatic transmission (1) as described in the 19th aspect, the friction plate (61) of the first braking means (B-1) is disposed so as to overlap radially with the outside of the fourth clutch (C-4) .

Because the friction plate (61) of the first braking means (B-1) is disposed so as to overlap radially with the outside of the fourth clutch (C-4), i.e., because the friction plate (61) of the first braking means (B-1) is disposed on the outer peripheral side of the fourth clutch (C-4) whose capacity is relatively small as compared to the reduction transmitting clutch, the axial size of the vehicular automatic transmission may be shortened by disposing the friction plate (61) of the first braking means (B-1) and the clutch in the radial direction without increasing the radial size thereof.

A 21st aspect of the invention (see FIG. 12 and others for example) is characterized in that in the vehicular automatic transmission (1) as described in the 19th or 20th aspect, the fourth clutch (C-4) and the reduction planetary gear (DP) are disposed on the boss portion (3b) extending from one side of the case (4);
operating fluid is supplied to the hydraulic servo (50) of the fourth clutch (C-4) from an oil passage provided within the boss portion (3b); and
operating fluid is supplied to the hydraulic servo (30) of the second clutch (C-2) from an oil passage provided in a wall on the other side of the case (4).

Because the fourth clutch (C-4) and the reduction planetary gear (DP) are disposed on the boss portion (3b) extending from one side of the case (4), operating fluid is supplied to the hydraulic servo (50) of the fourth clutch (C-4) from the oil passage provided within the boss portion (3b) and operating fluid is supplied to the hydraulic servo (30) of the second clutch (C-2) from the oil passage provided in the wall on the other side of the case (4), the fourth clutch (C-4) and the second clutch (C-2) may be disposed separately with respect to the planetary gear set (PU). Accordingly, it becomes possible to prevent the oil passages from concentrating within the case and to improve the freedom of design. Still more, operating fluid may be supplied to the hydraulic servos of the fourth and second clutches just by providing a pair of seal rings, i.e., a least number of seal rings, and the power transmitting efficiency of the vehicular automatic transmission may be improved by cutting the sliding resistance of the seal rings.

A 22nd aspect of the invention (see FIG. 12 and others for example) is characterized in that in the vehicular automatic transmission (1) as described in any one of the 19th through 21st aspects, the hydraulic servo (20) of the first clutch (C-1) is disposed on the side of the planetary gear set (PU);
the hydraulic servo (40) of the third clutch (C-3) is disposed on the side of the reduction planetary gear (DP); and
a link member (101) for linking the third clutch (C-3) with the rotary element of the planetary gear set (PU) is disposed so as to pass through the outer peripheral side of the first clutch (C-1).

Because the link member (101) for linking the third clutch (C-3) with the rotary element of the planetary gear set (PU) is disposed so as to pass through the outer peripheral side of the first clutch (C-1), output side members of the fourth and third clutches (C-4 and C-3) disposed on the opposite sides of the reduction planetary gear (DP) may be linked without complicating the members and the vehicular automatic transmission may be compactly built.

A 23rd aspect of the invention (see FIG. 12 and others for example) is characterized in that in the vehicular automatic transmission (1) as described in the 22nd aspect, the reduction planetary gear (DP) is composed of a double pinion planetary gear (DP) having a first sun gear (S1) whose rotation is fixed, a first pinion gear (P1) engaging with the sun gear (S1), a second pinion (P2) engaging with the first pinion gear (P1), a carrier (CR1) for rotatably supporting the first and second pinion gears (P1 and P2) and always linked with the input shaft (12), and a ring gear (R1) engaging with the pinion gear (P2) and outputting the reduced rotation.

Thereby, the reduced rotation reduced from the inputted rotation of the input shaft (12) may be outputted from the first ring gear.

A 24th aspect of the invention (see FIG. 12 and others for example) is characterized in that in the vehicular automatic transmission (1) as described in the 23rd aspect, the friction plate (41) of the third clutch (C-3) is disposed on the outer peripheral side of the first ring gear (R1) of the reduction planetary gear (DP);
a positioning member (106) for positioning the first ring gear (R1) of the reduction planetary gear (DP) is disposed on the input shaft (12);
a cylinder portion (22) of the hydraulic servo (20) of the first clutch (C-1) and a cylinder portion (42) of the hydraulic servo (40) of the third clutch (C-3) are disposed axially on the both sides of the positioning member (106); and
the piston member (43) of the hydraulic servo (40) of the third clutch (C-3) and the first ring gear (R1) of the reduction planetary gear (DP) are arranged so that they penetrate through and intersect with each other and so that the piston member (43) is slidable against the first ring gear (R1) and the positioning member (106).

Because the friction plate (41) of the third clutch (C-3) is disposed on the outer peripheral side of the first ring gear (R1) of the reduction planetary gear (DP), the positioning member (106) for positioning the first ring gear (R1) of the reduction planetary gear (DP) is disposed on the input shaft (12), the cylinder portion (22) of the hydraulic servo (20) of the first clutch (C-1) and the cylinder portion (42) of the hydraulic servo (40) of the third clutch (C-3) are disposed axially on the both sides of the positioning member (106), and the piston member (43) of the hydraulic servo (40) of the third clutch (C-3) and the first ring gear (R1) of the reduction planetary gear (DP) are arranged so that they penetrate through and intersect with each other and so that the piston member (43) is slidable against the first ring gear (R1) and the positioning member (106), the positioning member (106) may be used in common as the cylinder portion of the two clutches. Accordingly, the vehicular automatic transmission may be built so that the third clutch (C-3) is removable while compacting in the axial direction.

Further, because the hydraulic servo (50) of the third clutch (C-4) and the hydraulic servos of the first and third clutches (C-1 and C-3) are separately disposed and the hydraulic servos of the first and third clutches (C-1 and C-3) are disposed on the positioning member (106), it becomes possible to prevent the clutch drums and pistons of the first and third clutches (C-1 and C-3) from rotating due to the inputted rotation of the input shaft (12) and to prevent the seal rings provided for the hydraulic servo of the reduction transmitting clutch from causing unnecessary sliding resistance. Accordingly, it becomes possible to prevent the drop of the power transmitting efficiency of the vehicular automatic transmission.

Further, because the positioning member (106) becomes the cylinder portion of the hydraulic servos of the two clutches, i.e., because the oil chambers of their hydraulic servos are provided on the positioning member (106), seal rings need to be provided just between the input shaft (12) and the positioning member (106) to supply operating fluid to those oil chambers. Accordingly, the diameter of the seal rings may be reduced and the sliding resistance of those seal rings may be cut as compared to a case of providing the seal rings on the boss portion (3b). Thereby, the power transmitting efficiency of the vehicular automatic transmission may be improved.

Still more, because the positioning member (106) composing the hydraulic servos is disposed on the input shaft (12), i.e., because the clutch drum is disposed directly on the input shaft (12) without interposing the boss portion (3b) between the clutch drum and the input shaft (12), a pressure receiving area of the oil chambers of the hydraulic servos of the clutches may be increased as compared to a case of disposing the hydraulic servos of the clutches on the boss portion (3b). That is, it becomes possible to increase the capacity of the clutches that transmit the reduced rotation through which a higher torque than that of the rotation of the input shaft is transmitted.

A 25th aspect of the invention (see FIG. 12 and others for example) is characterized in that in the vehicular automatic transmission (1) as described in the 24th aspect, an end portion (R1a) of the first ring gear (R1) of the reduction planetary gear (DP) is formed in the shape of a comb; and
a plurality of through holes (43c) through which the comb-like end portion (R1a) of the first ring gear (R1) of the reduction planetary gear (DP) penetrates and intersects are formed through the piston member (43) of the hydraulic servo (40) of the third clutch (C-3).

Because the end portion (R1a) of the first ring gear (R1) of the reduction planetary gear (DP) is formed in the shape of a comb and the plurality of through holes (43c) through which the comb-like end portion (R1a) of the first ring gear (R1) of the reduction planetary gear (DP) penetrates and intersects are formed through the piston member (43) of the hydraulic servo (40) of the third clutch (C-3), it becomes possible to arrange so that the piston member (43) of the hydraulic servo (40) of the third clutch (C-3) is slidable as against the first ring gear (R1) and the positioning member (106) and so that the third clutch (C-3) is removable.

A 26th aspect of the invention (see FIG. 12 and others for example) is characterized in that in the vehicular automatic transmission (1) as described in the 25th aspect, an outer peripheral end portion (106a) of the positioning member (106) is formed in the shape of a comb;
the comb-like end portion (R1a) of the first ring gear (R1) of the reduction planetary gear (DP) is fitted into the comb-like outer peripheral end portion (106a) of the positioning member (106); and
the first ring gear (R1) of the reduction planetary gear (DP) is fixed to the positioning member (106) in the axial direction by a snap ring (109).

Because the outer peripheral end portion (106a) of the positioning member (106) is formed in the shape of a comb, the comb-like end portion (R1a) of the first ring gear (R1) of the reduction planetary gear (DP) is fitted into the comb-like outer peripheral end portion (106a) of the positioning member (106) and the first ring gear (R1) of the reduction planetary gear (DP) is fixed to the positioning member (106) in the axial direction by the snap ring (109), the first ring gear (R1) may be fixed to and supported by the positioning member (106). Thereby, it becomes possible to stabilize the attitude of the first ring gear (R1) and to cut gear noise.

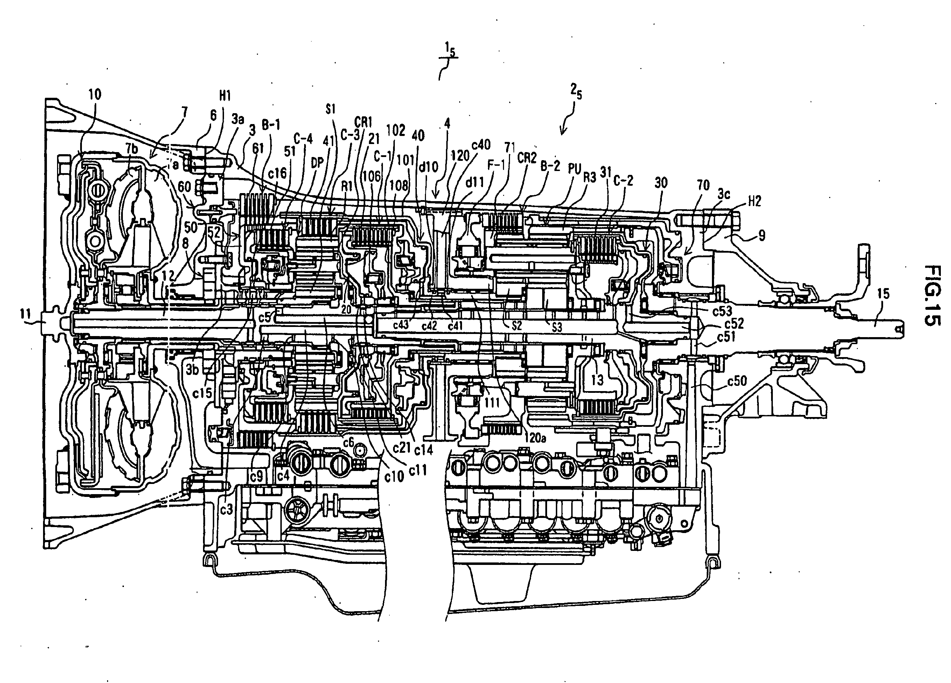

A 27th aspect of the invention (see FIG. 15 and others for example) is characterized in that in the vehicular automatic transmission (1) as described in any one of the 19th through 21st aspects, the hydraulic servo (20) of the first clutch (C-1) is disposed on the side of the reduction planetary gear (DP); and
the hydraulic servo (40) of the third clutch (C-3) is disposed on the side of the planetary gear set (PU) and a link member (102) for linking the first clutch (C-1) with the second rotary element (S3) is disposed through the inner peripheral side of the third clutch (C-3).

Because the link member (102) for linking the first clutch (C-1) with the second rotary element (S3) of the planetary gear set (PU) is disposed through the inner peripheral side of the third clutch (C-3), the output side member of the third clutch (C-3) may be provided on the outer peripheral side of the output side member of the first clutch (C-1) and the output side members of the fourth and third clutches disposed on the opposite sides of the reduction planetary gear (DP) may be linked without complicating the members. Accordingly, the vehicular automatic transmission may be compactly built.

A 28th aspect of the invention (see FIG. 15 and others for example) is characterized in that in the vehicular automatic transmission (1) as described in the 27th aspect, the reduction planetary gear (DP) is composed of a double pinion planetary gear (DP) having a first sun gear (S1) whose rotation is fixed, a first pinion gear (P1) engaging with the sun gear (S1), a second pinion gear (P2) engaging with the first pinion gear (P1), a carrier (CR1) for rotatably supporting the first and second pinion gears (P1 and P2) and always linked with the input shaft (12), and a first ring gear (R1) engaging with the second pinion gear (P2) and outputting the reduced rotation.

Thereby, the reduced rotation reduced from the inputted rotation of the input shaft (12) may be outputted from the first ring gear (R1).

A 29th aspect of the invention (see FIG. 15 and others for example) is characterized in that in the vehicular automatic transmission (1) as described in the 28th aspect, the friction plate (41) of the third clutch (C-3) is disposed on the outer peripheral side of the first ring gear (R1) of the reduction planetary gear (DP); and
the first clutch (C-1) is disposed on the inner peripheral side of the clutch drum (42) of the third clutch (C-3).

Because the friction plate (41) of the third clutch (C-3) is disposed on the outer peripheral side of the first ring gear (R1) of the reduction planetary gear (DP) and the first clutch (C-1) is disposed on the inner peripheral side of the clutch drum (42) of the third clutch (C-3), it becomes possible to enlarge the hydraulic servo and the friction plate of the first clutch (C-1) relatively in the radial direction and thereby to increase the capacity of the first clutch (C-1), as compared to a case of disposing the friction plate (41) of the third clutch (C-3) on the outer peripheral side of the first clutch (C-1), even though the vehicular automatic transmission may be compactly built in the radial direction.

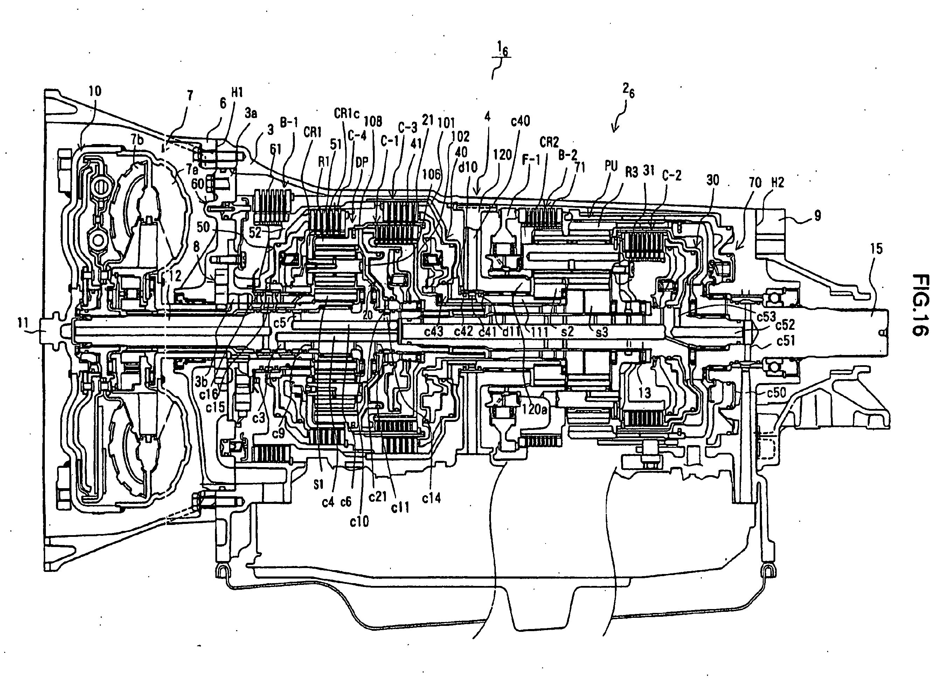

A 30th aspect of the invention (see FIG. 16 and others for example) is characterized in that in the vehicular automatic transmission (1) as described in the 28th aspect, the friction plate (51) of the fourth clutch (C-4) is disposed on the outer peripheral side of the first ring gear (R1) of the reduction planetary gear (DP).

Because the friction plate (51) of the fourth clutch (C-4) is disposed on the outer peripheral side of the first ring gear (R1) of the reduction planetary gear (DP), it becomes possible to relatively increase the radial size of the hydraulic servo and the friction plate (51) of the fourth clutch (C-4) and thereby to increase the capacity of the fourth clutch (C-4).

A 31st aspect of the invention (see FIG. 16 and others for example) is characterized in that in the vehicular automatic transmission (1) as described in the 30th aspect, the friction plate (41) of the third clutch (C-3) is disposed on the outer peripheral side of the clutch drum (22) of the first clutch (C-1).

Because the friction plate (41) of the third clutch (C-3) is disposed on the outer peripheral side of the clutch drum (22) of the first clutch (C-1), it becomes possible to put the third clutch (C-3) closer to the planetary gear set (PU), as compared to a case of disposing the friction plate (41) of the third clutch (C-3) on the outer peripheral side of the reduction planetary gear (DP). Accordingly, the length of a transmitting member for transmitting relatively high torque may be shortened, even though the vehicular automatic transmission may be compactly built in the axial direction. As a result, it becomes possible to shorten the transmitting member that is required to have a high strength and to lighten the vehicular automatic transmission.

A 32nd aspect of the invention (see FIG. 12 and others for example) is characterized in that in the vehicular automatic transmission (1) as described in any one of the 19th through 31st aspects, the hydraulic servo (20) of the first clutch (C-1) and the hydraulic servo (40) of the third clutch (C-3) are disposed on the input shaft (12); and
operating fluid is supplied to the hydraulic servo (20) of the first clutch (C-1) and the hydraulic servo (40) of the third clutch (C-3) via oil passages provided within the input shaft (12).

Because the hydraulic servo (20) of the first clutch (C-1) and the hydraulic servo (40) of the third clutch (C-3) are disposed on the input shaft (12) and operating fluid is supplied to the hydraulic servo (20) of the first clutch (C-1) and the hydraulic servo (40) of the third clutch (C-3) via the oil passages provided within the input shaft (12), operating fluid may be supplied to the hydraulic servos of the first and third clutches just by providing two pairs of seal rings between the boss portion (3b) and the input shaft (12) and between the hydraulic servo and the input shaft (12). Because the diameter of the seal rings may be reduced as compared to a case of disposing the first and third clutches on the boss portion (3b), the sliding resistance of the seal rings may be cut and the power transmitting efficiency of the vehicular automatic transmission may be improved.

A 33rd aspect of the invention (see FIG. 12 and others for example) is characterized in that in the vehicular automatic transmission (1) as described in the 32nd aspect, a first oil passage (c6) for supplying operating fluid to the hydraulic servo (20) of the first clutch (C-1) in the axial direction, a second oil passage (c8) for supplying operating fluid to the hydraulic servo (40) of the third clutch (C-3) in the axial direction and a third oil passage (c4) for supplying lubricant oil in the axial direction are formed within the input shaft (12) in parallel with the axial direction.

Because the first oil passage (c6) for supplying operating fluid to the hydraulic servo (20) of the third clutch (C-1) in the axial direction, the second oil passage for supplying operating fluid to the hydraulic servo (40) of the third clutch (C-3) in the axial direction and the third oil passage for supplying lubricant oil in the axial direction are formed within the input shaft (12) in parallel with the axial direction, lubricant oil may be supplied from the input shaft (12) even though operating fluid may be supplied to the hydraulic servo (20) of the third clutch (C-1) and to the hydraulic servo (40) of the third clutch (C-3) via the input shaft (12).

A 34th aspect of the invention (see FIG. 15 and others for example) is characterized in that in the vehicular automatic transmission (1) as described in any one of the 19th through 31st aspects, at least one of the hydraulic servo (20) of the first clutch (C-1) and the hydraulic servo (40) of the third clutch (C-3) is disposed on the input shaft (12);
the support wall (120) fixed to the case (4) is disposed axially between the planetary gear set (PU) and the first clutch (C-1) and the third clutch (C-3);
operating fluid is supplied to one of the hydraulic servo (20) of the first clutch (C-1) and the hydraulic servo (40) of the third clutch (C-3) via the oil passage provided within the input shaft (12); and
operating fluid is supplied to the other one of the hydraulic servo (20) of the first clutch (C-1) and the hydraulic servo (40) of the third clutch (C-3) via the oil passage provided within the support wall (120).

Because at least one of the hydraulic servo (20) of the first clutch (C-1) and the hydraulic servo (40) of the third clutch (C-3) is disposed on the input shaft (12), the support wall (120) fixed to the case (4) is disposed axially between the planetary gear set (PU) and the first clutch (C-1) and the third clutch (C-3), operating fluid is supplied to one of the hydraulic servo (20) of the first clutch (C-1) and the hydraulic servo (40) of the third clutch (C-3) via the oil passage provided within the input shaft (12) and operating fluid is supplied to the other one of the hydraulic servo (20) of the first clutch (C-1) and the hydraulic servo (40) of the third clutch (C-3) via the oil passage provided within the support wall (120), operating fluid may be supplied to one of the hydraulic servos of the first and third clutches by providing two pairs of seal rings in total between the boss portion (3b) and the input shaft (12) and between the hydraulic servo and the input shaft (12) and to the other one of the hydraulic servos of the first and third clutches by providing a pair of seal rings between the hydraulic servo and the support wall (120). Thereby, it becomes possible to cut a number of seal rings as compared to a case of supplying operating fluid to the hydraulic servos of the first and third clutches from the input shaft (120). Accordingly, the sliding resistance of the seal rings may be reduced and the power transmitting efficiency of the vehicular automatic transmission may be improved.

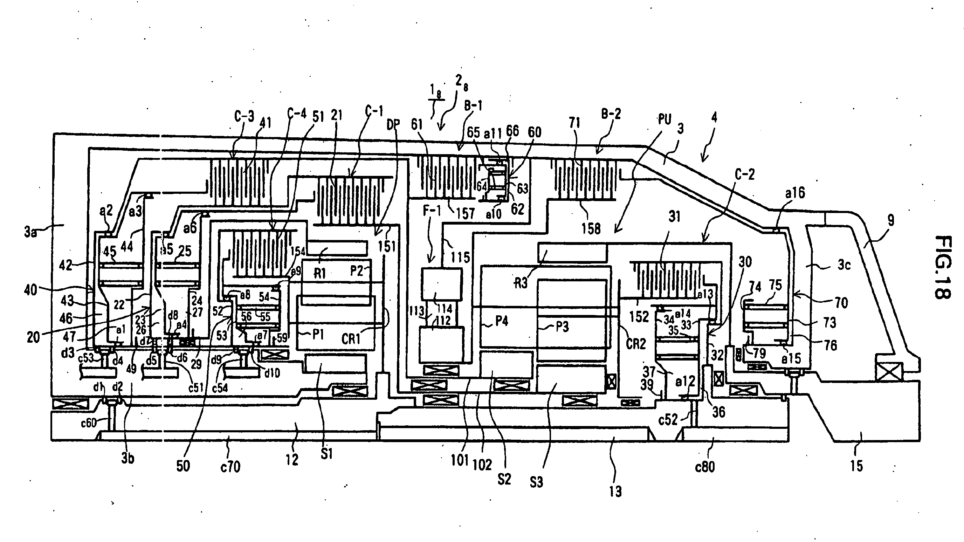

A 35th aspect of the invention (see FIG. 18 and others for example) is characterized in that in the vehicular automatic transmission (1) as described in the third aspect, the hydraulic servo (20) of the first clutch (C-1) and the hydraulic servo (40) of the third clutch (C-3) are disposed axially on the opposite side of the reduction planetary gear (DP) from the planetary gear set (PU).

Thereby, the hydraulic servo (20) of the first clutch (C-1) and the hydraulic servo (40) of the third clutch (C-3) may be disposed axially on the opposite side of the reduction planetary gear (DP) from the planetary gear set (PU):

A 36th aspect of the invention (see FIG. 18 and others for example) is characterized in that in the vehicular automatic transmission (1) as described in the 35th aspect, the hydraulic servo (40) of the third clutch (C-3), the hydraulic servo (20) of the first clutch (C-1), the hydraulic servo (50) of the fourth clutch (C-4) and the reduction planetary gear (DP) are disposed on the boss portion (3b) extending from the case (4) in order from the side of the joint of the boss portion (3b) with the case (4) in the axial direction; and
operating fluid is supplied to the hydraulic servo (40) of the third clutch (C-3), the hydraulic servo (20) of the first clutch (C-1) and the hydraulic servo (50) of the fourth clutch (C-4) respectively from the oil passages provided within the boss portion (3b).

Because the hydraulic servo (40) of the third clutch (C-3), the hydraulic servo (20) of the first clutch (C-1), the hydraulic servo (50) of the fourth clutch (C-4) and the reduction planetary gear (DP) are disposed on the boss portion (3b) extending from the case (4) in order from the side of the joint of the boss portion (3b) with the case (4) in the axial direction and operating fluid is supplied to the hydraulic servo (40) of the third clutch (C-3), the hydraulic servo (20) of the first clutch (C-1) and the hydraulic servo (50) of the fourth clutch (C-4) respectively from the oil passages provided within the boss portion (3b), operating fluid may be supplied to the hydraulic servo (40) of the third clutch (C-3) and the hydraulic servo (50) of the third clutch (C-4) by providing a pair of seal rings between the hydraulic servos and the boss portion (3b) and to the hydraulic servo (20) of the third clutch (C-1) by providing two pairs of seal rings between the hydraulic servo and the boss portion (3b). Still more, it is possible to shorten the oil passages as compared to a case of supplying operating fluid via the oil passage within the input shaft (12) and thereby to prevent the drop of the efficiency and controllability of the vehicular automatic transmission.

A 37th aspect of the invention (see FIG. 18 and others for example) is characterized in that in the vehicular automatic transmission (1) as described in the 35th or 36th aspect, the first braking means (B-1) is disposed axially between the reduction planetary gear (DP) and the planetary gear set (PU).

Because the first braking means (B-1) is disposed axially between the reduction planetary gear (DP) and the planetary gear set (PU), the friction plate of the third clutch (C-3) may be disposed on the outer peripheral side of the fourth clutch (C-4) .

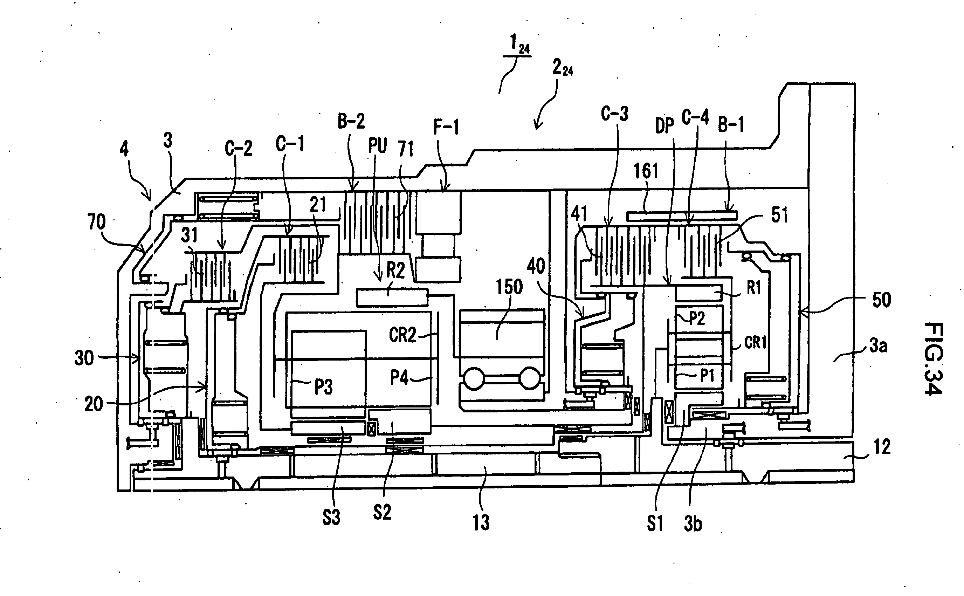

A 38th aspect of the invention (see FIG. 34 and others for example) is characterized in that in the vehicular automatic transmission (1) as described in the third aspect, the hydraulic servo (20) of the first clutch (C-1) is disposed axially on the opposite side of the planetary gear set (PU) from the reduction planetary gear (DP); and
the hydraulic servo (40) of the third clutch (C-3) is disposed between the reduction planetary gear (DP) and the planetary gear set (PU).

Because the hydraulic servo (20) of the first clutch (C-1) is disposed axially on the opposite side of the planetary gear set (PU) from the reduction planetary gear (DP) and the hydraulic servo (40) of the third clutch (C-3) is disposed between the reduction planetary gear (DP) and the planetary gear set (PU), operating fluid may be supplied to the hydraulic servo (20) of the third clutch (C-1) by providing a pair of seal rings between the hydraulic servo (20) and the input shaft (12) and to the hydraulic servo (40) of the third clutch (C-3) by providing a pair of seal rings between the hydraulic servo (40) and a center support, i.e., two pairs of seal rings in total. Thereby, it becomes possible to cut a number of seal rings, to cut the sliding resistance of the seal rings and to improve the power transmitting efficiency of the vehicular automatic transmission.

Still more, because the hydraulic servo (20) of the third clutch (C-1) and the hydraulic servo (40) of the third clutch (C-3) are disposed separately on the both sides of the planetary gear set (PU) in the axial direction, members for linking the first clutch (C-1), the third clutch (C-3) and the fourth clutch (C-4) with the respective rotary elements of the planetary gear set (PU) may be shortened and thus the vehicular automatic transmission may be lightened. Accordingly, because those link members are shortened and lightened, inertia torque may be lowered and the controllability of the vehicular automatic transmission may be improved.

Further, because the hydraulic servo (20) of the third clutch (C-1) is disposed axially on the opposite side of the planetary gear set (PU) from the reduction planetary gear (DP), it becomes possible to prevent the concentration of the oil passages for supplying operating fluid and to improve the degree of freedom of design.

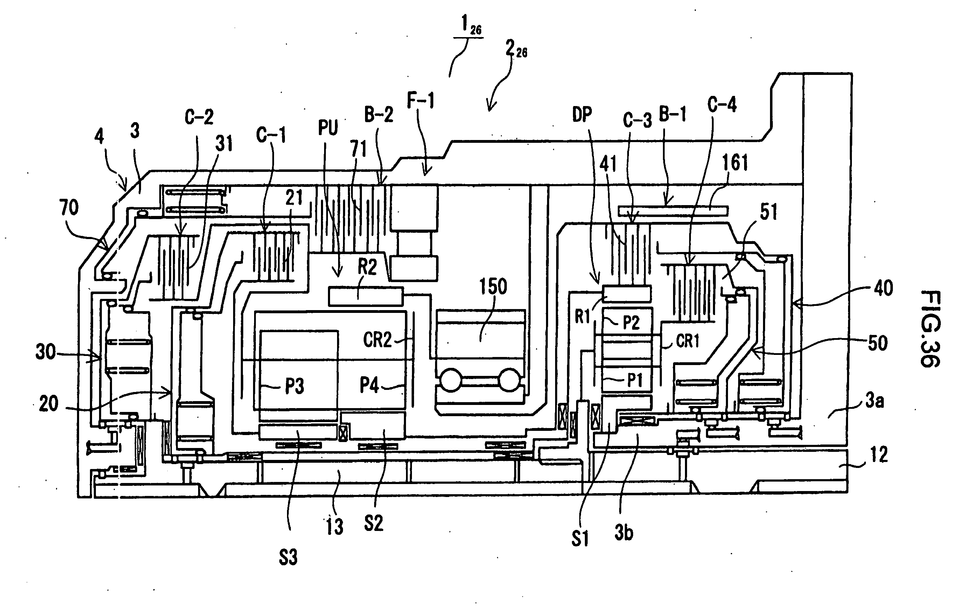

A 39th aspect of the invention (see FIG. 36 and others for example) is characterized in that in the vehicular automatic transmission (1) as described in the third aspect, the hydraulic servo (20) of the first clutch (C-1) is disposed axially on the opposite side of the planetary gear set (PU) from the reduction planetary gear (DP); and
the hydraulic servo (40) of the third clutch (C-3) is disposed on the opposite side of the reduction planetary gear (DP) from the planetary gear set (PU).

Because the hydraulic servo (20) of the first clutch (C-1) is disposed axially on the opposite side of the planetary gear set (PU) from the reduction planetary gear (DP) and the hydraulic servo (40) of the third clutch (C-3) is disposed on the opposite side of the reduction planetary gear (DP) from the planetary gear set (PU), operating fluid may be supplied to the hydraulic servo (20) of the third clutch (C-1) by providing a pair of seal rings between the hydraulic servo (20) and the input shaft (12) and to the hydraulic servo (40) of the third clutch (C-3) by providing a pair of seal rings between the hydraulic servo (40) and the boss portion (3b), i.e., two pair of seal rings in total. Thereby, it becomes possible to cut a number of seal rings, to cut the sliding resistance of the seal rings and to improve the power transmitting efficiency of the vehicular automatic transmission.

Still more, because the hydraulic servo (20) of the third clutch (C-1) and the hydraulic servo (40) of the third clutch (C-3) are disposed separately on the both sides of the planetary gear set (PU) in the axial direction, the members for linking the first clutch (C-1), the third clutch (C-3) and the fourth clutch (C-4) with the respective rotary elements of the planetary gear set (PU) may be shortened and thus the vehicular automatic transmission may be lightened. Accordingly, because those link members are shortened and lightened, inertia torque may be lowered and the controllability of the vehicular automatic transmission may be improved.

Further, because the hydraulic servo (20) of the third clutch (C-1) is disposed axially on the opposite side of the planetary gear set (PU) from the reduction planetary gear (DP), it becomes possible to prevent the concentration of the oil passages for supplying operating fluid and to improve the degree of freedom of design.

A 40th aspect of the invention (see FIG. 1 and others for example) is characterized in that in the vehicular automatic transmission (1) as described in any one of the third through 39th aspects, the second clutch (C-2) is disposed axially on the opposite side of the planetary gear set (PU) from the reduction planetary gear (DP).

Because the second clutch (C-2) is disposed axially on the opposite side of the planetary gear set (PU) from the reduction planetary gear (DP), the second clutch (C-2) may be linked with the third rotary element without crossing each other with the members for linking the first and third clutches with the first and second rotary elements of the planetary gear set (PU). Still more, the planetary gear set (PU) and the reduction planetary gear (DP) may be disposed relatively closely from each other and the transmitting member for transmitting the reduced rotation, i.e., the transmitting member for transmitting a large torque, may be shortened. Thereby, the controllability of the vehicular automatic transmission may be improved by lightening the vehicular automatic transmission and cutting the inertia.

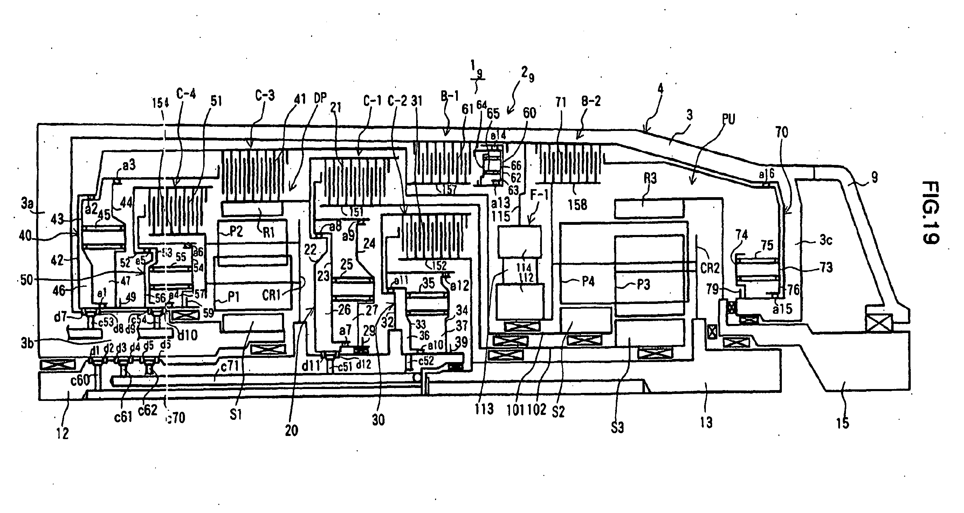

A 41st aspect of the invention (see FIG. 19 and others for example) is characterized in that in the vehicular automatic transmission (1) as described in any one of the third through 39th aspects, the second clutch (C-2) is disposed axially between the reduction planetary gear (DP) and the planetary gear set (PU).

Because the second clutch (C-2) is disposed axially between the reduction planetary gear (DP) and the planetary gear set (PU), the first through fourth clutches may be disposed together on one side of the planetary gear set (PU). In case of mounting the automatic transmission in an FR-type vehicle in particular, the planetary gear set (PU) and the output members may be closely disposed and the member for linking the planetary gear set (PU) with the output members, i.e., the member for transmitting a large torque, may be shortened. Thereby, the controllability of the vehicular automatic transmission may be improved by lightening the vehicular automatic transmission and by cutting the inertia. Still more, because the second clutch (C-2) whose capacity for transmitting torque can be relatively small is disposed on the inner peripheral side of the first and third clutches which are required to have a capacity for transmitting a relatively large torque, the vehicular automatic transmission may be compactly built as compared to a case of disposing the second clutch (C-2) on the outer peripheral side.

A 42nd aspect of the invention (see FIG. 11 and others for example) is characterized in that in the vehicular automatic transmission (1) as described in any one of the third through 41st aspects, the reduced rotation of the reduction planetary gear (DP) is inputted to the clutch drum (22) of the first clutch (C-1) forming the hydraulic servo (20) of the first clutch (C-1) when the first clutch (C-1) engages.

Because the reduced rotation of the reduction planetary gear (DP) is inputted to the clutch drum (22) of the first clutch (C-1) forming the hydraulic servo (20) of the first clutch (C-1) when the first clutch (C-1) engages, the reduced rotation is not inputted to the clutch drum (22) of the first clutch (C-1) when the first clutch (C-1) is not engaged even if a driver races an engine in Neutral or Parking range for example and the input shaft rotates. Accordingly, it is possible to prevent the whole hydraulic servo (20) of the third clutch (C-1) from rotating and to prevent a drag of the first clutch (C-1) from occurring due to centrifugal hydraulic pressure generated in the oil chamber.

A 43rd aspect of the invention (see FIG. 2 and others for example) is characterized in that in the vehicular automatic transmission (1) as described in any one of the third through 42nd aspects, the reduced rotation of the reduction planetary gear (DP) is inputted to the clutch drum (42) of the third clutch (C-3) forming the hydraulic servo (40) of the third clutch (C-3) when the third clutch (C-3) engages.

Because the reduced rotation of the reduction planetary gear (DP) is inputted to the clutch drum (42) of the third clutch (C-3) forming the hydraulic servo (40) of the third clutch (C-3) when the third clutch (C-3) engages, the reduced rotation is not inputted to the clutch drum (42) of the third clutch (C-3) when the third clutch (C-3) is not engaged even if the driver races the engine in Neutral or Parking range for example and the input shaft rotates. Accordingly, it is possible to prevent the whole hydraulic servo (40) of the third clutch (C-3) from rotating and to prevent a drag of the third clutch (C-3) from occurring due to centrifugal hydraulic pressure generated in the oil chamber.

A 44th aspect of the invention (see FIG. 2 and others for example) is characterized in that in the vehicular automatic transmission (1) as described in any one of the third through 43rd aspects, the inputted rotation of the input shaft (12) is inputted to the clutch drum (52) of the fourth clutch (C-4) forming the hydraulic servo (50) of the fourth clutch (C-4) when the fourth clutch (C-4) engages.

Because the inputted rotation of the input shaft (12) is inputted to the clutch drum (52) of the fourth clutch (C-4) forming the hydraulic servo (50) of the fourth clutch (C-4) when the fourth clutch (C-4) engages, the inputted rotation is not inputted to the clutch drum (52) of the fourth clutch (C-4) when the fourth clutch (C-4) is not engaged even if the driver races the engine in Neutral or Parking range for example and the input shaft rotates. Accordingly, it is possible to prevent the whole hydraulic servo (50) of the third clutch (C-4) from rotating and to prevent a drag of the fourth clutch (C-4) from occurring due to centrifugal hydraulic pressure generated in the oil chamber.

A 45th aspect of the invention (see FIG. 1 and others for example) is characterized in that in the vehicular automatic transmission (1) as described in any one of the third through 44th aspects, the planetary gear set (PU) has the second sun gear (S2), the third sun gear (S3), the third pinion gear (P3) engaging with the third sun gear (S3), the fourth pinion gear (P4) engaging with the second sun gear (S2) and with the third pinion gear (P3), the carrier (CR2) rotatably supporting the third and fourth pinion gears (P3 and P4) and the ring gear (R2) engaging with the fourth pinion gear (P4);
the first rotary element consists of the second sun gear (S2);
the second rotary element consists of the third sun gear (S3);
the third rotary element consists of the second carrier (CR2); and
the fourth rotary element consists of the second ring gear (R2).

Thereby, the planetary gear set (PU) may be composed of the so-called Ravigneoux type planetary gear and a good gear ratio may be obtained even though it is capable of preventing the respective rotary elements from rotating at high speed.

A 46th aspect of the invention (see FIG. 1 and others for example) is characterized in that in the vehicular automatic transmission (1) as described in the 45th aspect, the planetary gear set (PU) is the Ravigneoux type planetary gear in which the second ring gear (R2) is disposed on one side of the outer peripheral side thereof; and
a friction plate (71) of the second brake B-2 is disposed on the other side of the outer peripheral side of the planetary gear set (PU).

Because the planetary gear set (PU) is the Ravigneoux type planetary gear in which the second ring gear (R2) is disposed on one side of the outer peripheral side and the friction plate (71) of the second brake (B-2) is disposed on the other side of the outer peripheral side of the planetary gear set (PU), the friction plate (71) of the second brake (B-2) may be disposed on the position radially overlapping with the planetary gear set (PU) while maintaining the capacity and reducing the diameter thereof. Accordingly, it is possible to compactly build the vehicular automatic transmission in the radial direction and to shorten in the axial direction.

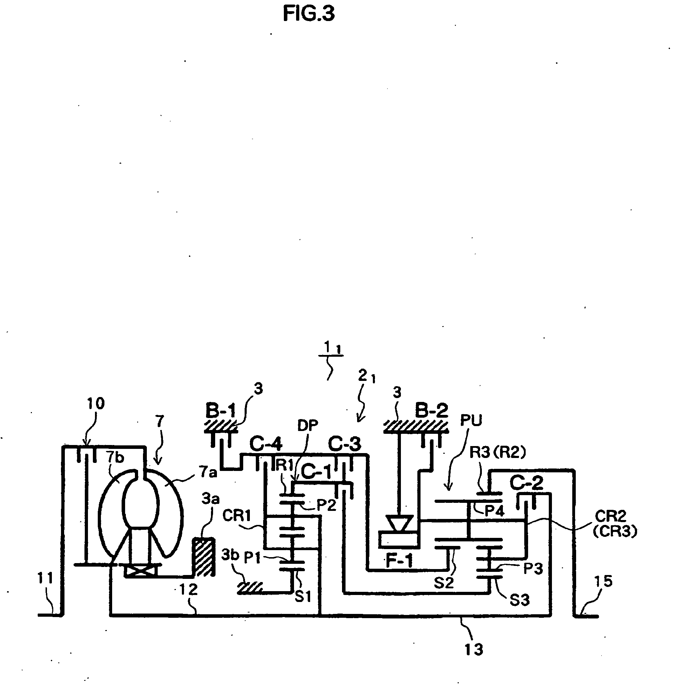

A 47th aspect of the invention (see FIGs. 3 through 5 for example) is characterized in that the vehicular automatic transmission (1) as described in any one of the third through 46th aspects is capable of attaining:
a forward first speed stage by engaging the first clutch (C-1) and fastening the second brake (B-2);
a forward second speed stage by engaging the first clutch (C-1) and fastening the first braking means (B-1);
a forward third speed stage by engaging the first clutch (C-1) and the third clutch (C-3);
a forward fourth speed stage by engaging the first clutch (C-1) and the fourth clutch (C-4);
a forward fifth speed stage by engaging the first clutch (C-1) and the second clutch (C-2);
a forward sixth speed stage by engaging the second clutch (C-2) and the fourth clutch (C-4);
a forward seventh speed stage by engaging the second clutch (C-2) and the third clutch (C-3);
a forward eighth speed stage by engaging the second clutch (C-2) and fastening the first braking means (B-1); and
a reverse stage by engaging the third clutch (C-3) or the fourth clutch (C-4) and fastening the second braking means (B-2).

Thereby, the vehicular automatic transmission is capable of attaining the forward first speed stage by engaging the first clutch (C-1) and fastening the second braking means (B-2), the forward second speed stage by engaging the first clutch (C-1) and fastening the first braking means (B-1), the forward third speed stage by engaging the first clutch (C-1) and the third clutch (C-3), the forward fourth speed stage by engaging the first clutch (C-1) and the fourth clutch (C-4), the forward fifth speed stage by engaging the first clutch (C-1) and the second clutch (C-2), the forward sixth speed stage by engaging the second clutch (C-2) and the fourth clutch (C-4), the forward seventh speed stage by engaging the second clutch (C-2) and the third clutch (C-3), the forward eighth speed stage by engaging the second clutch (C-2) and fastening the first braking means (B-1), and the reverse stage by engaging the third clutch (C-3) or the fourth clutch (C-4) and fastening the second braking means (B-2), respectively.

A 48th aspect of the invention (see FIG. 1 and others for example) is characterized in that in the vehicular automatic transmission (1) as described in any one of the third through 47th aspects, the reduction planetary gear (DP) and the planetary gear set (PU) are disposed coaxially and in line in the axial direction.

Because the reduction planetary gear (DP) and the planetary gear set (PU) are disposed coaxially and in line in the axial direction, the automatic transmission may be readily mounted in an FR-type vehicle.

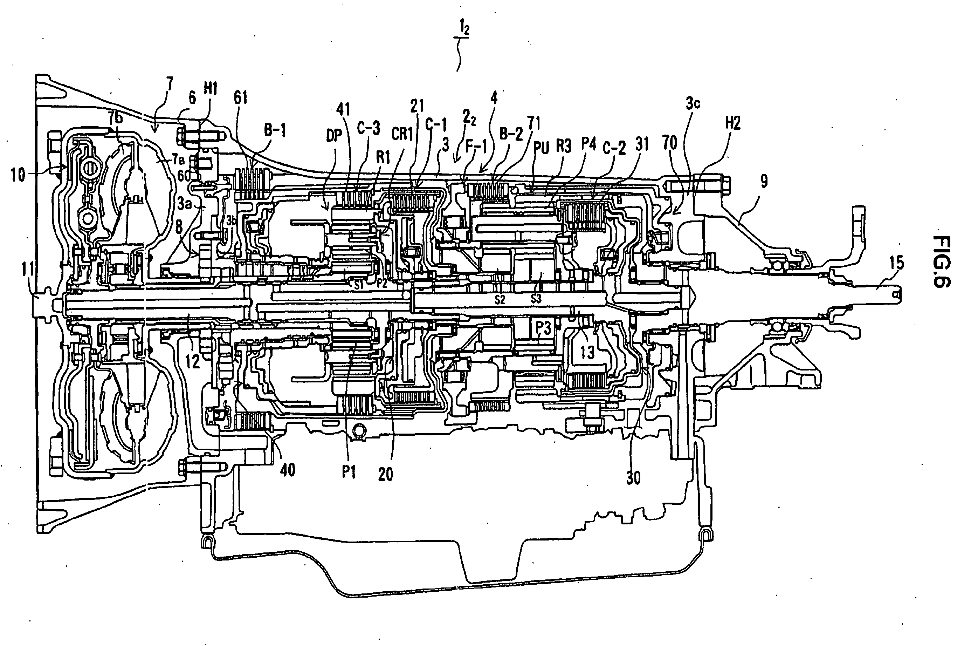

A 49th aspect of the invention (see FIG. 6 and others for example) is characterized in that in the vehicular automatic transmission (1) as described in any one of the third through 48th aspects, the fourth clutch (C-4) is removable.

Because the fourth clutch (C-4) is removable, it is possible to provide the vehicular automatic transmission capable of attaining the forward sixth speed stage and the reverse first speed stage while using the parts of the vehicular automatic transmission as they are other than the fourth clutch (C-4). Accordingly, it becomes possible to line up the vehicular automatic transmission of the forward eighth speed stage having the fourth clutch (C-4) for example and the vehicular automatic transmission of the forward sixth speed stage which requires no fourth clutch, without increasing the cost.

A 50th aspect of the invention (see FIG. 1 and others for example) is characterized in that in the vehicular automatic transmission (1) as described in any one of the third through 49th aspects, the output member described above is an output shaft (15) for transmitting a rotation coaxially with the input shaft (12).

Thereby, the vehicular automatic transmission may be suitably used for the FR-type vehicle.

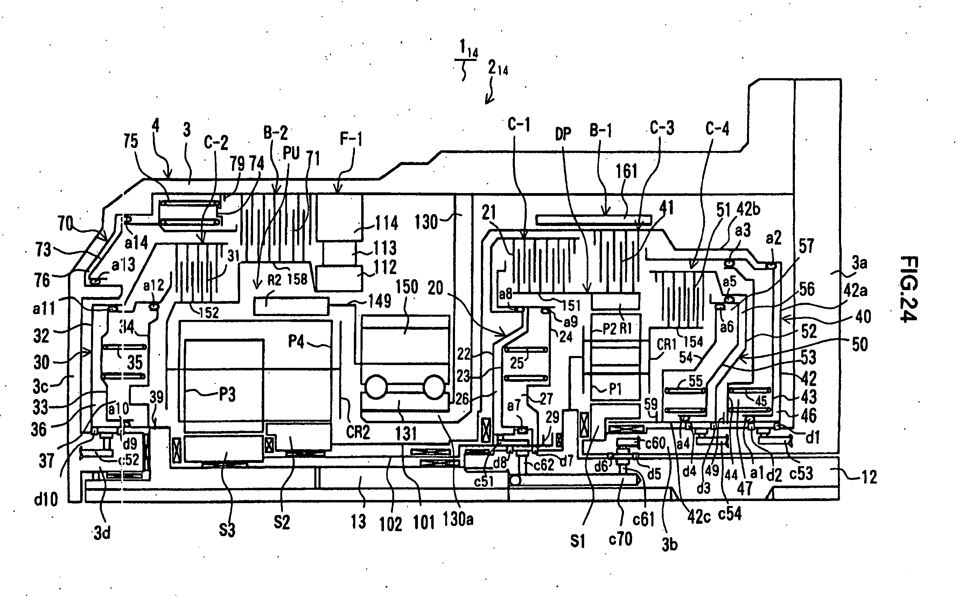

A 51st aspect of the invention (see FIG. 24 and others for example) is characterized in that in the vehicular automatic transmission (1) as described in any one of the third through 49th aspects, the output member described above is a counter gear (150) that transmits a rotation to a shaft parallel with the input shaft (12).

Thereby, the vehicular automatic transmission may be suitably used in an FF-type vehicle.

A 52nd aspect of the invention (see FIG. 24 and others for example) is characterized in that in the vehicular automatic transmission (1) as described in the 51st aspect, the counter gear (150) and a support wall (130) for supporting the counter gear (150) are disposed axially between the reduction planetary gear (DP) and the planetary gear set (PU).

Thereby, operating fluidmaybe supplied to the hydraulic servo from the support wall (130) when the hydraulic servo of the clutch adjoins the support wall (130) and a number of seal rings may be cut as compared to a case of supplying operating fluid from the input shaft (12). Thereby, it becomes possible to prevent the drop of the efficiency and controllability of the vehicular automatic transmission. When a multi-plate type brake adjoins the support wall (130), a part of the support wall (130) may be used in common as a cylinder member of the brake. It also allows a number of parts to be cut and the weight of the vehicular automatic transmission to be lightened.

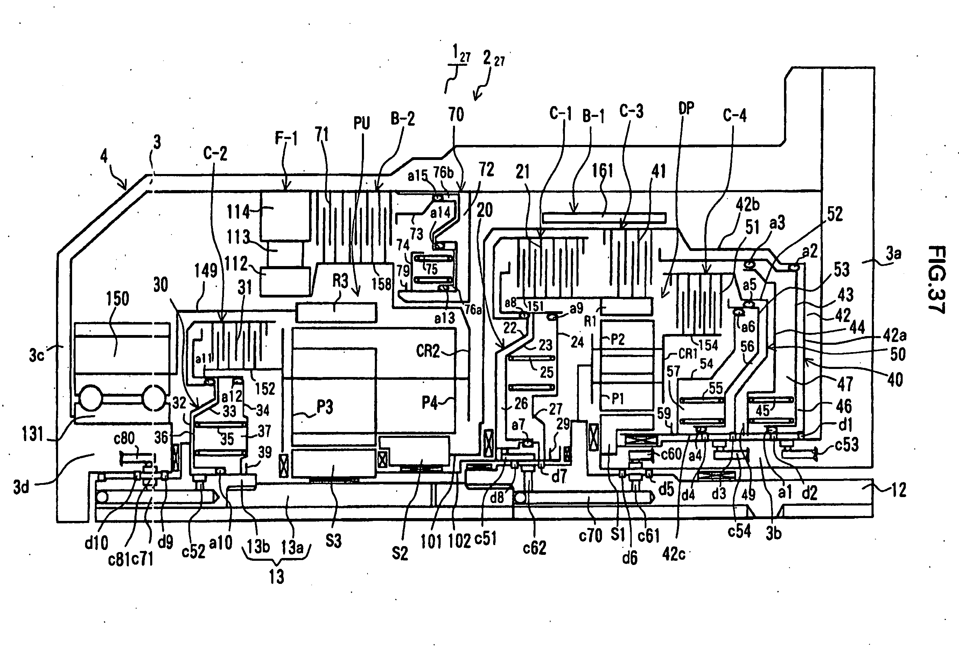

A 53rd aspect of the invention (see FIG. 37 and others for example) is characterized in that in the vehicular automatic transmission (1) as described in the 51st aspect, the counter gear (150) is disposed axially on the opposite side of the planetary gear set (PU) from the reduction planetary gear (DP).

A 54th aspect of the invention (see FIG. 37 and others for example) is characterized in that in the vehicular automatic transmission (1) as described in the 53rd aspect, the counter gear (150) is disposed on a boss portion (3d) extending from a side wall (3c) of the case (4) axially on the opposite side of the planetary gear unit (PU) from the reduction planetary gear (DP).

Because the counter gear (150) is disposed on the boss portion (3d), it becomes possible to eliminate the support wall, to cut a number of parts and to lighten the vehicular automatic transmission.

A 55th aspect of the invention (see FIG. 37 and others for example) is characterized in that in the vehicular automatic transmission (1) as described in the 53rd or 54th aspect, the counter gear (150) is disposed axially at an end position on the opposite side of the input shaft (12) within the case (4).

Thereby, the vehicular automatic transmission suitably used for the FF-type vehicle may be readily converted into one for use in the FR-type vehicle.

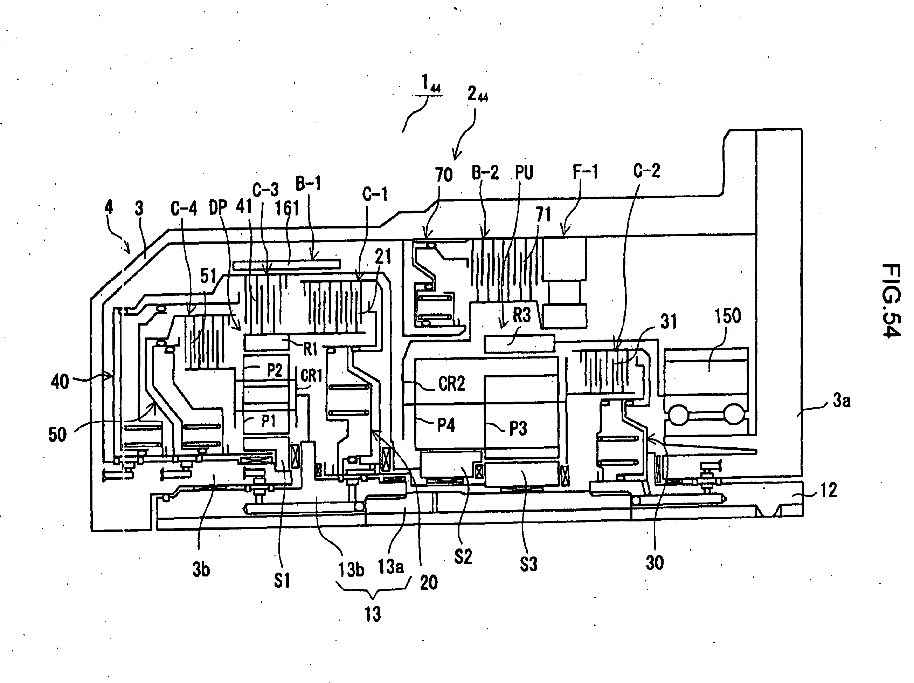

A 56th aspect of the invention (see FIG. 54 and others for example) is characterized in that in the vehicular automatic transmission (1) as described in the 53rd aspect, the counter gear (150) is disposed axially at an end position on the side of the input shaft (12) within the case (4).

Because the counter gear (150) may be disposed closer to the input side in the vehicular automatic transmission and closer to the axial position of a differential unit, an axial length of a counter shaft may be shortened.

It is noted that the reference numerals within the parentheses are cited for the purpose of collating the parts with those in the drawings and FIG. Nos. within the parentheses are cited for the purpose of making reference to examples of collated typical drawings. Accordingly, they are cited for convenience for facilitating the understanding of the invention and by no means affect the composition of the scope of Claims of the invention.

### Brief Description of Drawings

FIG. 1 is a section view showing an automatic transmission 1₁ according to a first embodiment of the invention;
FIG. 2 is an enlarged section view showing a part of a transmission mechanism 2₁;
FIG. 3 is a skeleton view of the automatic transmission 1₁ ;
FIG. 4 is an operation table of the automatic transmission 1₁ ;
FIG. 5 is a speed diagram of the automatic transmission 1₁;
FIG. 6 is a section view showing an automatic transmission 1₂ according to a second embodiment;
FIG. 7 is a skeleton view of the automatic transmission 1₂;
FIG. 8 is an operation table of the automatic transmission 1₂;
FIG. 9 is a speed diagram of the automatic transmission 1₂;
FIG. 10 is a section view showing an automatic transmission 1₃ according to a third embodiment;
FIG. 11 is an enlarged section view showing a part of a transmission mechanism 2₃;
FIG. 12 is an enlarged section view showing a part of an automatic transmission 1₄ according to a fourth embodiment;
FIGs. 13A and 13B show a ring gear R1 and a piston member (43), wherein FIG. 13A is an enlarged section view seen from its axial direction and FIG. 13B is a section view taken along an arrow A-A in FIG. 13A;
FIG. 14A and 14B are section views showing an input shaft, wherein FIG. 14A is a partially enlarged section view and FIG. 14B is a section view taken along an arrow B-B in FIG. 14A;
FIG. 15 is a section view showing an automatic transmission 1₅ according to a fifth embodiment;
FIG. 16 is a section view showing an automatic transmission 1₆ according to a sixth embodiment;
FIG. 17 is a diagrammatic section view showing an automatic transmission 1₇ according to a seventh embodiment;
FIG. 18 is a diagrammatic section view showing an automatic transmission 1₈ according to an eighth embodiment;
FIG. 19 is a diagrammatic section view showing an automatic transmission 1₉ according to a ninth embodiment;
FIG. 20 is a diagrammatic section view showing an automatic transmission 1₁₀ according to a tenth embodiment;
FIG. 21 is a diagrammatic section view showing an automatic transmission 1₁₁ according to an eleventh embodiment;
FIG. 22 is a diagrammatic section view showing an automatic transmission 1₁₂ according to a twelfth embodiment;
FIG. 23 is a diagrammatic section view showing an automatic transmission 1₁₃ according to a thirteenth embodiment;
FIG. 24 is a diagrammatic section view showing an automatic transmission 1₁₄ according to a fourteenth embodiment;
FIG. 25 is a diagrammatic section view showing an automatic transmission 1₁₅ according to a fifteenth embodiment;
FIG. 26 is a diagrammatic section view showing an automatic transmission 1₁₆ according to a sixteenth embodiment;
FIG. 27 is a diagrammatic section view showing an automatic transmission 1₁₇ according to a seventeenth embodiment;
FIG. 28 is a diagrammatic section view showing an automatic transmission 1₁₈ according to an eighteenth embodiment;
FIG. 29 is a diagrammatic section view showing an automatic transmission 1₁₉ according to a nineteenth embodiment;
FIG. 30 is a diagrammatic section view showing an automatic transmission 1₂₀ according to a 20th embodiment;
FIG. 31 is a diagrammatic section view showing an automatic transmission 1₂₁ according to a 21st embodiment;
FIG. 32 is a diagrammatic section view showing an automatic transmission 1₂₂ according to a 22nd embodiment;
FIG. 33 is a diagrammatic section view showing an automatic transmission 1₂₃ according to a 23rd embodiment;
FIG. 34 is a diagrammatic section view showing an automatic transmission 1₂₄ according to a 24th embodiment;
FIG. 35 is a diagrammatic section view showing an automatic transmission 1₂₅ according to a 25th embodiment;
FIG. 36 is a diagrammatic section view showing an automatic transmission 1₂₆ according to a 26th embodiment;
FIG. 37 is a diagrammatic section view showing an automatic transmission 1₂₇ according to a 27th embodiment;
FIG. 38 is a diagrammatic section view showing an automatic transmission 1₂₈ according to a 28th embodiment;
FIG. 39 is a diagrammatic section view showing an automatic transmission 1₂₉ according to a 29th embodiment;
FIG. 40 is a diagrammatic section view showing an automatic transmission 1₃₀ according to a 30th embodiment;
FIG. 41 is a diagrammatic section view showing an automatic transmission 1₃₁ according to a 31st embodiment;
FIG. 42 is a diagrammatic section view showing an automatic transmission 1₃₂ according to a 32nd embodiment;
FIG. 43 is a diagrammatic section view showing an automatic transmission 1₃₃ according to a 33rd embodiment;
FIG. 44 is a diagrammatic section view showing an automatic transmission 1₃₄ according to a 34th embodiment;
FIG. 45 is a diagrammatic section view showing an automatic transmission 1₃₅ according to a 35th embodiment;
FIG. 46 is a diagrammatic section view showing an automatic transmission 1₃₆ according to a 36th embodiment;
FIG. 47 is a diagrammatic section view showing an automatic transmission 1₃₇ according to a 37th embodiment;
FIG. 48 is a diagrammatic section view showing an automatic transmission 1₃₈ according to a 38th embodiment;
FIG. 49 is a diagrammatic section view showing an automatic transmission 1₃₉ according to a 39th embodiment;
FIG. 50 is a diagrammatic section view showing an automatic transmission 1₄₀ according to a 40th embodiment;
FIG. 51 is a diagrammatic section view showing an automatic transmission 1₄₁ according to a 41st embodiment;
FIG. 52 is a diagrammatic section view showing an automatic transmission 1₄₂ according to a 42nd embodiment;
FIG. 53 is a diagrammatic section view showing an automatic transmission 1₄₃ according to a 43rd embodiment;
FIG. 54 is a diagrammatic section view showing an automatic transmission 1₄₄ according to a 44th embodiment;
FIG. 55 is a diagrammatic section view showing an automatic transmission 1₄₅ according to a 45th embodiment;
FIG. 56 is a diagrammatic section view showing an automatic transmission 1₄₆ according to a 46th embodiment;
FIG. 57 is a diagrammatic section view showing an automatic transmission 1₄₇ according to a 47th embodiment;
FIG. 58 is a diagrammatic section view showing an automatic transmission 1₄₈ according to a 48th embodiment;
FIG. 59 is a diagrammatic section view showing an automatic transmission 1₄₉ according to a 49th embodiment;
FIG. 60 is a diagrammatic section view showing an automatic transmission 1₅₀ according to a 50th embodiment;
FIG. 61 is a diagrammatic section view showing an automatic transmission 1₅₁ according to a 51st embodiment;
FIG. 62 is a diagrammatic section view showing an automatic transmission 1₅₂ according to a 52nd embodiment;
FIG. 63 is a diagrammatic section view showing an automatic transmission 1₅₃ according to a 53rd embodiment;
FIG. 64 is a diagrammatic section view showing an automatic transmission 1₅₄ according to a 54th embodiment;
FIG. 65 is a diagrammatic section view showing an automatic transmission 1₅₅ according to a 55th embodiment;
FIG. 66 is a diagrammatic section view showing an automatic transmission 1₅₆ according to a 56th embodiment;
FIG. 67 is a diagrammatic section view showing an automatic transmission 1₅₇ according to a 57th embodiment;
FIG. 68 is a diagrammatic section view showing an automatic transmission 1₅₈ according to a 58th embodiment;
FIG. 69 is a diagrammatic section view showing an automatic transmission 1₅₉ according to a 59th embodiment;
FIG. 70 is a diagrammatic section view showing an automatic transmission 1₆₀ according to a 60th embodiment;
FIG. 71 is a diagrammatic section view showing an automatic transmission 1₆₁ according to a 6lst embodiment;
FIG. 72 is a diagrammatic section view showing an automatic transmission 1₆₂ according to a 62nd embodiment;
FIG. 73 is a diagrammatic section view showing an automatic transmission 1₆₃ according to a 63rd embodiment;
FIG. 74 is a diagrammatic section view showing an automatic transmission 1₆₄ according to a 64th embodiment;
FIG. 75 is a diagrammatic section view showing an automatic transmission 1₆₅ according to a 65th embodiment;
FIG. 76 is a diagrammatic section view showing an automatic transmission 1₆₆ according to a 66th embodiment;
FIG. 77 is a diagrammatic section view showing an automatic transmission 1₆₇ according to a 67th embodiment;
FIG. 78 is a diagrammatic section view showing an automatic transmission 1₆₈ according to a 68th embodiment;
FIG. 79 is a diagrammatic section view showing an automatic transmission 1₆₉ according to a 69th embodiment;
FIG. 80 is a diagrammatic section view showing an automatic transmission 1₇₀ according to a 70th embodiment; and
FIG. 81 is a: diagrammatic section view showing an automatic transmission 1₇₁ according to a 71st embodiment.

### Best Modes for Carrying out the Invention

### <First Embodiment>

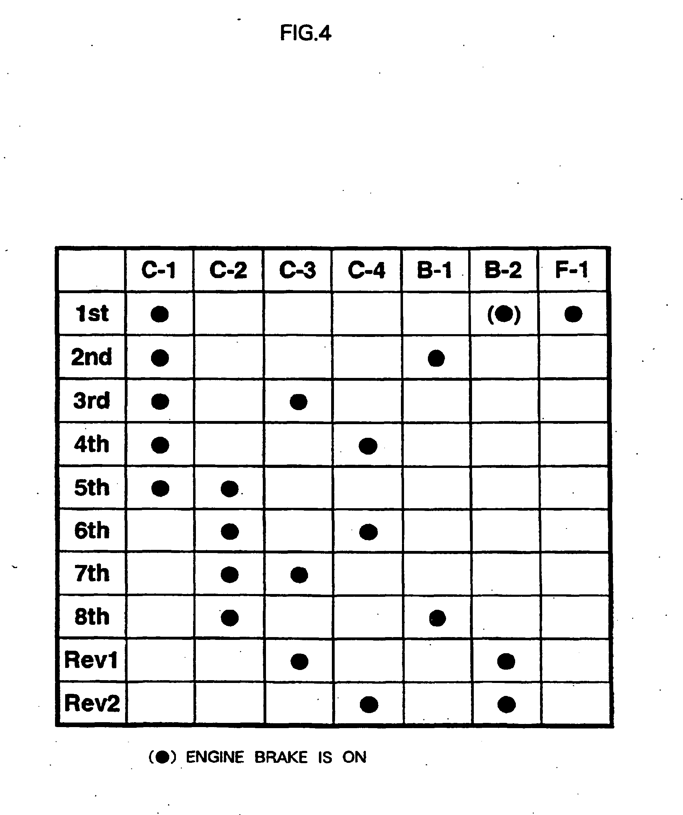

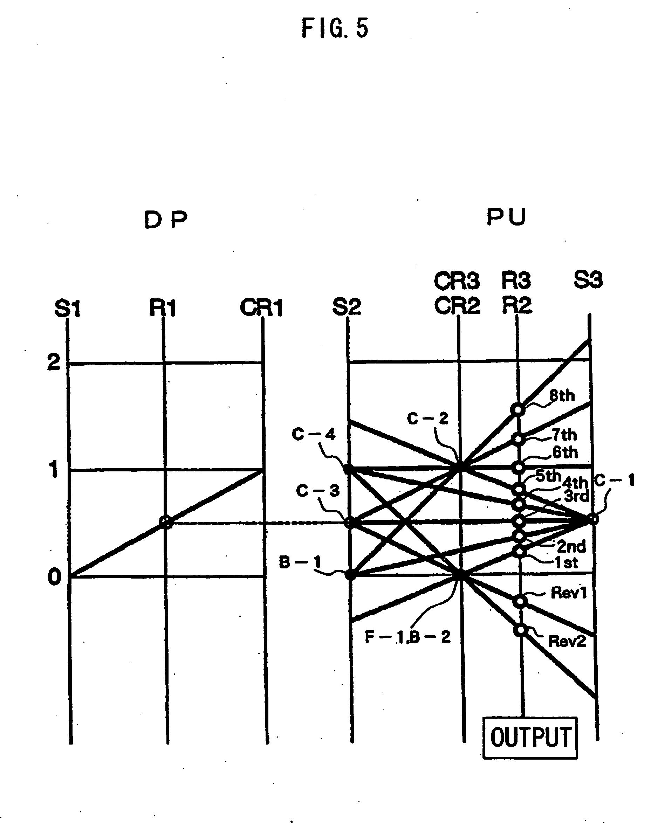

A first embodiment of the invention will be explained with reference to FIGs. 1 through 5. FIG. 1 is a section view showing an automatic transmission 1₁ according to a first embodiment of the invention, FIG. 2 is an enlarged section view showing a part of a transmission mechanism 2₁, FIG. 3 is a skeleton view of the automatic transmission 1₁, FIG. 4 is an operation table of the automatic transmission 1₁, and FIG. 5 is a speed chart of the automatic transmission 1₁.

It is noted that the following explanation will be made so that upper, lower, left and right directions in FIGs. 1, 2 and 3 correspond to "upper", "lower", "front" and "rear" directions in the actual vehicular automatic transmission (or referred to simply as "automatic transmission" hereinafter) 1₁. Accordingly, while an input shaft 11 of the automatic transmission 1₁ as well as an input shaft 12, an intermediate shaft 13 and an output shaft (output member) 15 of a transmission mechanism 2₁ are shown on one straight line in order from the left to right nearly at the middle of the vertical direction in FIGs. 1 and 3, they are actually aligned in this order from the front to rear. Here, the input shaft 12 and the intermediate shaft 13 described above are combined in a body and compose an "input shaft' in a broad sense because the rear part of the input shaft 12 is spline-coupled with the front part of the intermediate shaft 13. Still more, the direction of the input shaft along the longitudinal direction will be referred to as the "axial direction" and the direction orthogonal to the axial direction as the "radial direction". Further, as for the position in .the radial direction, the side closer to the axis will be referred to as the "inner diametric side (inner peripheral side) " and the side farther from the axis as the "outer diametric side (outer peripheral side)" hereinafter.

At first, a schematic structure of the automatic transmission 1₁ to which the invention is applicable will be explained with reference to FIG. 3. As shown in FIG. 3, the automatic transmission 1₁ that may be suitably used for an FR (front engine rear drive) type vehicle has the input shaft 11 of the automatic transmission 1₁ that may be connected to an engine not shown and is provided with a torque converter 7 and the transmission mechanism 2₁ centering on the axis of the input shaft 11.

The torque converter 7 has a pump impeller 7a connected to the input shaft 11 of the automatic transmission 1₁ and a turbine runner 7b to which the rotation of the pump impeller 7a is transmitted through an intermediary of operating fluid. The turbine runner 7b is connected to the input shaft 12 of the transmission mechanism 2₁ disposed coaxially with the input shaft 11. The torque converter 7 is also provided with a lockup clutch 10. When the lockup clutch 10 engages through a hydraulic control made by a hydraulic control unit not shown, the rotation of the input shaft 11 of the automatic transmission 1₁ is transmitted directly to the input shaft 12 of the transmission mechanism 2₁.

The transmission mechanism 2₁ is provided with a planetary gear (reduction planetary gear) DP and a planetary gear unit (planetary gear set) PU on the input shaft 12 (and more specifically on the intermediate shaft 13 described later). The planetary gear DP is provided with a sun gear (first sun gear) S1, a carrier.(first carrier) CR1 and a ring gear (first ring gear) R1. It is a so-called double pinion planetary gear having a pinion (first pinion gear) P1 engaging with the sun gear S1 and a pinion (second pinion gear) P2 engaging with the ring gear (R1) in a manner of engaging each other with the carrier CR1.

The planetary gear unit PU has four rotary elements, i.e., a sun gear S2 (one of two rotary elements, i.e., a first rotary element or a second sun gear), a sun gear S3 (one of the two rotary elements, i.e., a second rotary element or a third sun gear), a carrier CR2 (CR3) (a third rotary element or a second carrier) and a ring gear R3 (R2) (a fourth rotary element or a second ring gear). It is a so-called Ravigneoux type planetary gear having a long pinion P4 engaging with the sun gear S2 and the ring gear R3 and a short pinion PS engaging with the sun gear S3 in a manner of engaging each other with the carrier CR2.

The sun gear S1 of the planetary gear DP is connected with a boss portion 3b that is fixed in a body with a mission case 3 described in detail later so that its rotation is fixed. The carrier CR1 is connected with the input shaft 12 so as to rotate equally with the rotation of the input shaft 12 (hereinafter referred to as "inputted rotation") and is also connected with a fourth clutch C-4 (input transmitting clutch) . The ring gear R1 rotates at the "reduced rotation" reduced from the inputted rotation in connection with the fixed sun gear S1 and the carrier CR1 that rotates at the inputted rotation and is connected with a first clutch C-1 (reduction transmitting clutch) and a third clutch C-3 (reduction transmitting clutch).

The sun gear S2 of the planetary gear unit PU is connected with a first brake B-1, i.e., braking means, so that it may be fixed to the mission case 3 and is also connected with the fourth and third clutches C-4 and C-3 so that the inputted rotation of the carrier CR1 may be inputted thereto via the fourth clutch C-4 and so that the reduced rotation of the ring gear R1 may be inputted thereto via the third clutch C-3, respectively. Still more, the sun gear S3 is connected with the first clutch C-1 so that the reduced rotation of the ring gear (R1) may be inputted thereto.

The carrier CR2 is connected with the second clutch C-2 to which the rotation of the input shaft 12 its inputted via the intermediate shaft 13 so that the inputted rotation may be inputted via the second clutch C-2. It is also connected with a one-way clutch F1 and a second brake B-2 as braking means so that its rotation in one direction is restricted with respect to the mission case 3 via the one-way clutch F-1 and so that its rotation may be fixed through an intermediary of the second brake B-2. The ring gear R3 is connected with the output shaft (output member) 15 for outputting the rotation to driving wheels not shown.

Next, operations of the transmission mechanism 2₁ will be explained based on the structure described above with reference to FIGs. 3, 4 and 5. It is noted that in the speed diagram in FIG. 5, the vertical axis indicates a number of rotations of each rotary element (gear) and the horizontal axis corresponds to a gear ratio of the respective rotary elements. In the part of the planetary gear DP in the speed diagram, the vertical line at the lateral end (on the left in FIG. 5) corresponds to the sun gear S1. The other vertical lines correspond, in order to the right in the diagram, to the ring gear R1 and the carrier CR1, respectively. Still more, in the part of the planetary gear unit PU in the speed diagram, the vertical line at the lateral end (on the right in FIG. 5) corresponds to the sun gear S3. The other vertical lines correspond, in-order to the left in the diagram, to the ring gear R3 (R2), the carrier CR2 (CR3) and the sun gear S2, respectively.

For example, in case of a forward first speed stage (lst) in D (drive) range, the first clutch C-1 and the one-way clutch F-1 engage as shown in FIG. 4. Then, as shown in FIGs. 3 and 5, the rotation of the ring gear R1 at the reduced rotation reduced by the fixed sun gear S1 and the carrier CR1 rotating at the inputted rotation is inputted to the sun gear S3 via the first clutch C-1. Further, the carrier CR2 is restricted so as to rotate in one direction (normal rotating direction) and is prevented from rotating in the reverse direction, i.e., it is locked from rotating in reverse. Then, the reduced rotation inputted to the sun gear S3 is outputted to the ring gear R3 via the fixed carrier CR2 and the output shaft 15 outputs the normal rotation of the forward first speed stage.

It is noted that when an engine brake is on (coasting time), the condition of the forward first speed stage is kept in a manner of fastening the second brake B-2 to fix the carrier CR2 and to prevent the carrier CR2 from rotating normal. Because the one-way clutch F-1 prevents the carrier CR2 from rotating in the reverse direction and allows the normal rotation in the forward first speed stage, the forward first-speed stage in shifting from a non-Driving range to a Driving range for example may be achieved smoothly by automatically engaging the one-way clutch F-1.

In case of a forward second speed stage (2nd)), the first clutch C-1 engages and the first brake B-1 is fastened as shown in FIG. 4. Then, as shown in FIGs. 3 and 5, the rotation of the ring gear R1 at the reduced rotation reduced by the fixed sun gear S1 and the carrier CR1 rotating at the inputted rotation is inputted to the sun gear S3 via the first clutch C-1. Still more, the rotation of the sun gear S2 is fixed because the first brake B-1 is fastened. Then, the carrier CR2 rotates at a reduced rotation whose speed is lower than that of the sun gear S3, the reduced rotation inputted to the sun gear S3 is outputted to the ring gear R3 via the carrier CR2 and the output shaft 15 outputs the normal rotation of the forward second speed stage.

In case of a forward third speed stage (3rd), the first clutch C-1 and the third clutch C-3 engage as shown in FIG. 4. Then, as shown in FIGs. 3 and 5, the rotation of the ring gear R1 at the reduced rotation reduced by the fixed sun gear S1 and the carrier CR1 rotating at the inputted rotation is inputted to the sun gear S3 via the first clutch C-1. Further, because the third clutch C-3 engages, the reduced rotation of the ring gear R1 is inputted to the sun gear S2. That is, because the reduced rotation of the ring gear R1 is inputted to the sun gear S2 and the sun gear S3, the planetary gear unit PU is put into a state in which it is directly coupled at the reduced rotation. That is, the reduced rotation is outputted to the ring gear R3 as it is and the output shaft 15 outputs the normal rotation of the forward third speed stage.

In case of a forward fourth speed stage (4th), the first clutch C-1 and the fourth clutch C-4 engage as shown in FIG. 4. Then, as shown in FIGs. 3 and 5, the rotation of the ring gear R1 at the reduced rotation reduced by the fixed sun gear S1 and the carrier CR1 rotating at the inputted rotation is inputted to the sun gear S3 via the first clutch C-1. Further, because the fourth clutch C-4 engages, the inputted rotation of the carrier CR1 is inputted to the sun gear S2. Then, the carrier CR2 rotates at a reduced rotation whose speed is higher than that of the sun gear S3, the reduced rotation inputted to the sun gear S3 is outputted to the ring gear R3 via the carrier CR2 and the output shaft 15 outputs the normal rotation of the forward fourth speed stage.

In case of a forward fifth speed stage (5th), the first clutch C-1 and the second clutch C-2 engage as shown in FIG. 4. Then, as shown in FIGs. 3 and 5, the rotation of the ring gear R1 at the reduced rotation reduced by the fixed sun gear S1 and the carrier CR1 rotating at the inputted rotation is inputted to the sun gear S3 via the first clutch C-1. Still more, because the second clutch C-2 engages, the inputted rotation is inputted to the carrier CR2 . Then, a reduced rotation whose speed is higher than that of the forward fourth speed stage due to the reduced rotation inputted to the sun gear S3 and the inputted rotation inputted to the carrier CR2 is outputted to the ring gear R3 and the output shaft 15 outputs the normal rotation of the forward fifth speed stage.

In case of a forward sixth speed stage (6th), the second clutch C-2 and the fourth clutch C-4 engage as shown in FIG. 4. Then, as shown in FIGs. 3 and 5, the inputted rotation of the carrier CR1 is inputted to the sun gear S2 because the fourth clutch C-4 engages. Further, because the second clutch C-2 engages, the inputted rotation is inputted to the carrier CR2. That is, because the inputted rotation is inputted to the sun gear S2 and the carrier CR2, the planetary gear unit PU is directly coupled at the inputted rotation, the inputted rotation is outputted to the ring gear R3 as it is and the output shaft 15 outputs the normal rotation of the forward sixth speed stage.

In case of a forward,seventh speed stage (7th), the second clutch C-2 and the third clutch C-3 engage as shown in FIG. 4. Then, as shown in FIGs. 3 and 5, the rotation of the ring gear R1 at the reduced rotation reduced by the fixed sun gear S1 and the carrier CR1 rotating at the inputted rotation is inputted to the sun gear S2 via the third clutch C-3. Still more, the inputted rotation is inputted to the carrier CR2 as the second clutch C-2 engages. Then, an over-driven rotation whose speed has become slightly higher than that of the inputted rotation due to the reduced rotation inputted to the sun gear S2 and the inputted rotation inputted to the carrier CR2 is outputted to the ring gear R3 and the output shaft 15 outputs the normal rotation of the forward seventh speed stage.

In case of a forward eighth speed stage (8th), the second clutch C-2 engages and the first brake B-1 is fastened as shown in FIG. 4. Then, as shown in FIGs. 3 and 5, the inputted rotation is inputted to the carrier CR2 because the second clutch C-2 engages. Further, because the first brake B-1 is fastened, the rotation of the sun gear S2 is fixed. Then, the inputted rotation of the carrier CR2 turns out to be an over-driven rotation whose speed is higher than that of the forward seventh speed stage described above and is outputted to the ring gear R3. Thus, the output shaft 15. outputs the normal rotation of the forward eighth speed stage.

In case of a reverse first speed stage (Rev1), the third clutch C-3 engages and the second brake B-2 is fastened as shown in FIG. 4. Then, as shown in FIGs. 3 and 5, the rotation of the ring gear R1 at the reduced rotation reduced by the fixed sun gear S1 and the carrier CR1 rotating at the inputted rotation is inputted to the sun gear S2 via the third clutch C-3. Further, because the second brake B-2 is fastened, the rotation of the carrier CR2 is fixed. Then, the reduced rotation inputted to the sun gear S2 is outputted to the ring gear R3 via the fixed carrier CR2 and the output shaft 15 outputs the reverse rotation of the reverse first speed stage.

In case of a reverse second speed stage (Rev2), the fourth clutch C-4 engages and the second brake B-2 is fastened as shown in FIG. 4. Then, as shown in FIGs. 3 and 5, because the fourth clutch C-4 engages, the inputted rotation of the carrier CR1 is inputted to the sun gear S2. Further, because the second brake B-2 is fastened, the rotation of the carrier CR2 is fixed. Then, the inputted rotat,ion inputted to the sun gear S2 is outputted to the ring gear R3 via the fixed carrier CR2 and the output shaft 15 outputs the reverse rotation of the reverse second speed stage.

It is noted that in P (parking) and N (neutral) ranges for example, the first clutch C-1, the second clutch C-2, the third and fourth clutches C-3 and C-4 are disengaged. Then, the transmission of power between the carrier CR1 and the sun gear S2 and between the ring gear R1, the sun gear S2 and the sun gear S3, i.e., the transmission of power between the planetary gear DP and the planetary gear unit PU, is disconnected. Still more, the transmission of power between the input shaft 12 (the intermediate shaft 13) and the carrier CR2 is disconnected. Thereby, the transmission of power between the input shaft 12 and the planetary gear unit PU is disconnected. That is, the transmission of power between the input shaft 12 and the output shaft 15 ifs disconnected.

Here, the overall schematic structure of the automatic transmission 1 or more specifically the relative positional relationship among the components will be explained briefly with reference to FIG. 1.

It is noted that the terms "clutch" (first through fourth clutches C-1 through C-4) and "brake" (first brake B-1 and second brake B-2) will be used in a sense of including friction plates (outer and inner frictional plates) and hydraulic servos for engaging/disengaging them in the following explanation.

As shown in FIG. 1, a case 4 of the automatic transmission 1 is formed approximately in a cylindrical shape having a large diameter more or less at its front side (the left side in FIG. 1) and a small diameter at its rear side as a whole. The whole case 4 is composed of three partial cases. That is, it is formed by jointing a front housing case 6, the intermediary mission case 3 and a rear extension case 9, respectively, at joint faces H1 and H2. A flange-like partition member 3a is fixed at the front edge of the mission case 3 positioned in the vicinity of the front joint face H1 among those joint faces H1 and H2. It is noted that a boss portion 3b projects toward the rear on the inner diametric side of the rear face of the partition member 3a. Meanwhile, a flange-like partitioning portion 3c is provided in a body with the mission case 3 at the rear end of the mission case 3 positioned in the vicinity of the rear joint face H2.

The input shaft 11 of the automatic transmission 1 as well as the input shaft 12, the intermediate shaft 13 and the output shaft 15 of the transmission mechanism 2 are disposed on the same axis in order from the front to the rear side at the center of the case 4 described above. As for their position in the axial direction, the input shaft 11 of the automatic transmission 1 is positioned at the front part of the housing case 6 and the input shaft 12 of the transmission mechanism 2 extends from just behind the input shaft 11 nearly to the center of the mission case 3 by penetrating through the center of the partition member 3a. The front part of the intermediate shaft 13 is spline-coupled with the inside of the rear part of the input shaft 12 and the rear end thereof extends nearly to the rear joint face H2. The front part of the output shaft 15 is fitted around the outer peripheral face of the intermediate shaft 13 so as to be relatively rotatable and the rear part thereof protrudes out of the rear part of the extension case 9. It is noted that the input shaft 12 and the intermediate shaft 13 are built in a body as described above and compose the input shaft in a broad sense.

The aforementioned torque converter 7 is stored within the housing case 6 on the input shaft 12 of the transmission mechanism 2. An oil pump 8 is disposed on the inner diametric side of the partition member 3a parting the inside of the housing case 6 from the inside of the mission case 3.

Within the mission case 3, the planetary gear unit PU is disposed on the intermediate shaft 13 and the third clutch C-3, the fourth clutch C-4, the planetary gear DP and the first clutch C-1 are disposed axially on the front side (on one side) of the planetary gear unit PU. The fourth clutch C-4 and the planetary gear DP are disposed on the inner peripheral side of a clutch drum 42 of the third clutch C-3 described later in detail. Further, the first brake B-1 is disposed on the outer peripheral side of the clutch drum 42 of the third clutch C-3.

Meanwhile, the second clutch C-2 is disposed axially on the rear side (on the other side) of the planetary gear unit PU. The second brake B-2 is disposed on the outer peripheral side of the planetary gear unit PU and the one-way clutch F-1 is disposed between the planetary gear unit PU and the first clutch C-1.

More specifically, a friction plate 61 of the first brake B-1, a friction plate 51 of the fourth clutch C-4, a friction plate 41 of the third clutch C-3 and a friction plate 21 of the first clutch C-1 are disposed on the input shaft 12 in order from the front relatively on the outer diametric side within the mission case 3 within the front half part of the mission case 3, i.e., within the part before the one-way clutch F-1 . A hydraulic servo 60 of the first brake B-1 is disposed just before the friction plate 61. A hydraulic servo 40 of the third clutch C-3 extending to the friction plate 41 is disposed on the inner diametric side of the friction plate 61. Further, a hydraulic servo 50 of the fourth clutch C-4 is disposed from the front side to the inner diametric side of the friction plate 51. The planetary gear DP is disposed on the inner diametric side of the friction plate 41 and a hydraulic servo 20 of the first clutch C-1 is disposed approximately on the inner diametric side of the friction plate 21. That is, the hydraulic servo 40, the hydraulic servo 50 and the planetary gear DP are disposed in order approximately from the front (in order from the side of the joint of the boss portion 3b with the case 4 in the axial direction) on the boss portion 3b described later on the inner diametric side within the front half part of the mission case 3 and the hydraulic servo 20 is disposed on the input shaft 12 in a manner of adjoining with the planetary gear DP.

Meanwhile, the planetary gear unit PU is disposed on the intermediate shaft 13 within the rear half part of the mission case 3, i.e., within the part behind the one-way clutch F-1 . A friction plate 71 of the second brake B-2 is disposed on the outer peripheral side in the front half portion of the planetary gear unit PU and a friction plate 31 of the second clutch C-2 is disposed on the outer diametric side behind the planetary gear unit PU. A hydraulic servo 30 of the second clutch C-2 is disposed from the part behind the friction plate 31 to the inner diametric side and a hydraulic servo 70 of the second brake B-2 that partially extends to the friction plate 71 from the rear side by passing through the outer diametric side of the friction plate 31 is disposed behind the hydraulic servo 30.

Next, the structure within the mission case 3 will be explained in detail with reference to FIG. 2. It is noted that the structure for supporting each component and the structure of each oil passage will be collectively explained later.

The planetary gear DP disposed within the mission case 3 is provided with the sun gear S1, the carrier CR1 and the ring gear R1 as described above. Among them, the sun gear S1 is fixed to a sleeve member 100. This sleeve member 100 fits around the outer peripheral face of the input shaft 12 and extends forward to be fixed in a body with the inner peripheral face of the boss portion 3b that extends to the rear from the inner diametric side of the rear face of the partition member 3a of the mission case 3 described above. That is, it is a part of the boss portion 3b in a broad sense and the sun gear S1 is fixed to the boss portion 3b so as not to be rotatable. The carrier CR1 has a rear carrier plate CR1a and a front carrier plate CR1b to rotatably support the pinions P1 and P2. While these pinions P1 and P2 engage from each other, the pinion P7. engages with the sun gear S1 and the pinion P2 engages with the ring gear R1, respectively. The rear carrier plate CR1a is formed so as to extend from the outer peripheral face of the rear part of the input shaft 12 to the outer diametric side in the shape of a flange. Meanwhile, the front carrier plate CR1b is formed in the shape of a ring and has a hub portion CR1c extending forward from its outer periphery. An inner friction plate 51b of the fourth clutch C-4 described later is spline-coupled with the outer peripheral face of the hub portion CR1c. The inner friction plate 41b of the third clutch C-3 described later is spline-coupled with the outer peripheral face of the ring gear R1. A hub portion R1a extending to the rear from the outer diametric side more or less is linked to the rear end of the ring gear R1. An outer friction plate 21a of the first clutch C-1 described later is spline-coupled with the hub portion R1a. Further, the ring gear R1 is rotatably supported by the input shaft 12 through an intermediary of a clutch drum 22 of the hydraulic servo 20 described later, extending from its rear end to the inside.

The fourth clutch C-4 is disposed on the boss portion 3b through an intermediary of the clutch drum 42 of the third clutch C-3 described later just in front of the planetary gear DP described above. The fourth clutch C-4 is provided with the friction plate 51 composed of an outer friction plate 51a and an inner friction plate 51b and a hydraulic servo 50 for engaging/disengaging the friction plate 51. The hydraulic servo 50 has a clutch drum 52, a piston member 53, a cancel plate 54 and a return spring 55 and composes thereby an oil chamber 56 and a cancel oil chamber 57. The clutch drum 52 has a flange portion 52a extending from the inner diametric side to the outer diametric side and a drum portion 52b extending from the outer periphery of the flange portion 52a to the rear. The basal portion on the inner diametric side of the flange portion 52a is blocked from moving to the front side by a snap ring 58 fitted to a hub portion 42c that is a part of the clutch drum 42 of the hydraulic servo 40 of the third clutch C-3 described later. The drumportion 52b is disposed on the outer diametric side of the hub portion CR1c of the front carrier plate CR1b of the planetary gear DP described above and the outer friction plate 51a is spline-coupled with the inner peripheral face thereof. The piston member 53 is disposed behind the flange portion 52a of the clutch drum 52 so as to be reciprocal in the longitudinal direction and composes an oil-tight oil chamber 56 between the clutch drum 52 by three seal rings al, a2 and a3. Still more, the cancel plate 54 is blocked from moving to the rear by a snap ring 59 fitted to the hub portion 42c described above. The cancel plate 54 is provided with a return spring 55 in contraction between the piston member 53 disposed in front of it and composes an oil-tight cancel oil chamber 57 by two seal rings a2 and a4.

It is noted that because the fourth clutch C-4 is built as described above, the inputted rotation of the carrier CR1 is inputted to the clutch drum 52 when the fourth clutch C-4 engages. The rotation is not inputted to the clutch drum 52 and the hydraulic servo 50 will not rotate when the fourth clutch C-4 is not engaged especially in Neutral and Parking ranges.

The third clutch C-3 is built so as to surround the inner peripheral side, the front side and the outer peripheral side of the fourth clutch C-4 and is disposed on the boss portion 3b. The third clutch C-3 is provided with the friction plate 41 comprising an outer friction plate 41a and an inner friction plate 41b and the hydraulic servo 40 for engaging/disengaging the friction plate 41. The hydraulic servo 40 has the clutch drum 42, the piston member 43, a cancel plate 44 and a return spring 45 and composes an oil chamber 46 and a cancel oil chamber 47 with them. The clutch drum 42 has a flange portion 42a disposed behind the partition member 3a, a hub portion 42c extending to the rear from the inner periphery of the flange portion 42a and a drum portion 42b extending to the rear from the outer periphery of the flange portion 42a. The boss portion 3b extends from the rear face of the partition member 3a described above. The hub portion 42c is fitted around the outer peripheral face of the boss portion 3b and is rotatably supported by the boss portion 3b. The hub portion 42c is formed so that its outer peripheral face has a plurality of steps whose diameter is large at the front end side and is small at the rear end side. The rear end of the hub portion 42c is positioned just before the front end face of the sun gear S1 described above. In other words, the rear end of the hub portion 42c is positioned on the rear side of the fourth clutch C-4. The drum portion 42b of the clutch drum 42 extends to the outer diametric side of the first clutch C-1 by passing through the outer diametric side of the fourth clutch C-4. The drum portion 42b is spline-coupled with an inner friction plate 61b of the first brake B-1 on the outer peripheral face of the front part thereof, is spline-coupled with the inner friction plate 41b on the inner peripheral face of the middle part thereof, i.e., at the part corresponding to the ring gear R1 described above, and is linked with a link member 101 at the rear part. The link member 101 extends to the inner diametric side via the outer diametric side and the rear side of the first clutch C-1 and is linked with the sun gear S2 shown in FIG. 1.

The piston member 43 of the third clutch C-3 has a flange portion 43a and a drum portion 43b extending to the rear from the outer periphery of the flange portion 43a. Among them, the flange portion 43a is disposed behind the flange portion 42a of the clutch drum 42 described above so as to be movable in the longitudinal direction and composes an oil-tight oil chamber 46 between the clutch drum 42 by two seal rings a5 and a6. Still more, the drum portion 43b extends to the rear by passing through the outer peripheral side of the drum portion 52b of the clutch drum 52 of the fourth clutch C-4 and on the inner peripheral side of the drum portion 42b of the clutch drum 4.2 so that its rear end faces to the friction plate 41. It is noted that a part of the outer peripheral face of the drum portion 52b described above is spline-coupled with a part of the inner peripheral face of the drum portion 42b via a cut-away portion not shown provided in a part of the drum portion 43b. A cancel plate 44 is blocked from moving to the rear side by a snap ring 49 fitted into the hub portion 42c described above. The cancel plate 44 is provided with a return spring 45 in contraction between the piston member 43 disposed in front thereof and composes an oil-tight cancel oil chamber 47 with two seal rings a5 and a7.

It is noted that because the third clutch C-3 is built as described above, the reduced rotation of the ring gear R1 is inputted to the clutch drum 42 when the third clutch C-3 engages. The rotation is not inputted to the clutch drum 42 and the hydraulic servo 40 will not rotate when the third clutch C-3 is not engaged specially in Neutral and Parking ranges.

The first clutch C-1 is disposed on the input shaft 12 behind the planetary gear DP and the friction plate 41 of the third clutch C-3 and is provided with the friction plate 21 comprising an outer friction plate 21a and an inner friction plate 21b and the hydraulic servo 20 for engaging/disengaging the friction plate 21. The outer friction plate 21a is spline-coupled with the inner peripheral face of a drum portion R1a of the ring gear R1 described above. The inner friction plate 21b is linked with a drum portion 102b of a link member 102. The link member 102 is linked with a flange portion 102a extending to the inner diametric side from the drum portion 102b and with the sun gear S3 described above (see FIG. 1) via a sleeve-like hub portion 102c extending to the rear from the inner periphery of the flange portion 102a. The hydraulic servo 20 has a clutch drum 22, a piston member 23, a cancel plate 24 and a return spring 25 and composes an oil chamber 26 and a cancel oil chamber 27 with them. The clutch drum 22 has a flange portion 22a extending from the inner diametric side to the outer diametric side, a drum portion 22b extending forward from the outer periphery of the flange portion 22a to be linked with the rear end of the ring gear R1 and a hub portion 22c extending to the rear from the inner periphery of the flange portion 22a. The hub portion 22c is attached to the outer peripheral face of the rear part of the input shaft 12 so as to be relatively rotatable. The piston member 23 is disposed behind the clutch drum 22 so as to be movable in the longitudinal direction and composes an oil-tight oil chamber 26 between the clutch drum 22 with two seal rings a8 and a9. A part of the piston member 23 on the outer peripheral side faces to the front face of the friction plate 21 from the front side. The cancel plate 24 is blocked from moving to the rear by a snap ring 29 fitted to the hub portion 22c described above. The cancel plate 24 is provided with the return spring 25 in contraction between the piston member 23 disposed in front thereof and composes an oil-tight cancel oil chamber 27 with two seal rings a8 and a10.

The first brake B-1 is disposed in the vicinity of the outer diametric side of the partition member 3a. The first brake B-1 is provided with a friction plate 61 composed of an outer friction plate 61a and an inner friction plate 61b and a hydraulic servo 60 for engaging/disenaaging the friction plate 61. The outer friction plate 61a is spline-coupled with the inner peripheral face of the front end side of the mission case 3. The inner friction plate 61b is spline-coupled with the outer peripheral face of the front part of the drum portion 42b of the third clutch C-3 described above. The hydraulic servo 60 has a clutch drum 62, a piston member 63, a cancel plate 64 and a return spring 65 and composes an oil chamber 66 with them. The clutch drum 62 is formed by providing a concave portion on the outer peripheral side of the rear face of the partition member 3a. The piston member 63 is engaged with the cylinder member 62 so as to be movable in the longitudinal direction. A part of the piston member 63 on the rear end part penetrates through the cancel plate 64 and faces to the front end of the friction plate 61. An oil-tight oil chamber 66 is formed between the piston member 63 and the cylinder member 62 by two seal rings all and a12. The cancel plate 64 is formed in the shape of plate and ring and its inner peripheral side is fixed to the rear face of the partition member 3a by bolts. A return spring 65 is disposed in contraction between the cancel plate 64 and the piston member 63.

Next, the structure for supporting each component, i.e., bearings, will be explained.

A bearing b1 is interposed between the inner peripheral face of the rear end of the sleeve member 100, which is combined in a body with the boss portion 3b of the partition member 3a, and the outer peripheral face of the input shaft 12. Bearings b2 and b3 are interposed between the front face of the inner diametric side of the rear carrier plate CRla which is combined with the input shaft 12 and the rear end face of the sun gear S1 and between the rear face thereof and the clutch drum 22, respectively. Thereby, the input shaft 12 is rotatably supported to the mission case 3. Bearings b4 and b5 are interposed between the outer peripheral face of the boss portion 3b of the partition member 3a and the inner peripheral face of the hub portion 42c of the clutch drum 42. Thereby, the clutch drum 42 is rotatably supported to the boss portion 3b. A bearing b6 is interposed between the rear end of the hub portion 22c of the clutch drum 22 of the first clutch C-1 and the hub portion 102c of the link member 102.

Next, the structure of oil passages of each component will be explained.

The input shaft 12 is provided with three perforated oil passages in the axial direction, i.e., an oil passage c1 heading from the front end to the rear and oil passages c2 and c3 heading from the rear end to the front. The oil passage c1 communicates with the outer peripheral face of the input shaft 12 through oil passages c4 and c5 in the radial direction, the oil passage c2 communicates through oil passages c6 and c7 in the radial direction and the oil passage c3 communicates through oil passages c8 through c11 in the radial direction, respectively. Seven oil passages c12 through c18 are perforated through the boss portion 3b of the partition member 3a in the radial direction in order from the front side. Oil passages c19 through c22 are perforated radially through the hub portion 42c of the clutch drum 42 of the third clutch C-3 positioned on the outer peripheral side of the boss portion 3b in order from the front side. An oil passage c23 is perforated radially through the hub portion 22c of the clutch drum 22 of the first clutch C-1 positioned on the outer peripheral side of the rear part of the input shaft 12. Still more, an oil groove not shown is formed on the outer peripheral side of the sleeve member 100 and composes an oil passage between the boss portion 3b. That is, an oil passage is formed within the boss portion 3b in a broad sense (hereinafter referred to as an 'oil passage within the boss portion 3b'). Seal rings d1 through d4 for sealing the boss portion 3b (sleeve member 100) and the oil passages c4, c5, c8 and c6 are provided on the outer peripheral side of the input shaft 12 and seal rings d5 and d6 for sealing the oil passages c7 and c23 are provided on the outer peripheral side of the rear side of the input shaft 12. still more, seal rings d7 through d10 for sealing the oil passages c13 and c16 of the boss portion 3b and the oil passages c19 and c21 of the hub portion 42c of the clutch drum 42 are provided on the outer peripheral side of the boss portion 3b.

It is noted that operating fluid is supplied from the hydraulic control unit to the hydraulic servo 30 of the second clutch C-2 via an oil passage c24 provided in the partitioning portion 3c of the mission case 3, an oil passage 25 provided in the output shaft 15 and an oil passage c26 provided in the intermediate shaft (input shaft) 13 as shown in FIG. 1.

Next, the supply of lubricant oil will be explained.

When lubricant oil is supplied to the oil passages within the boss portion 3b based on hydraulic pressure generated by the oil pump 8 described above, the lubricant oil is supplied to the oil passages c12, c14, c15, c17 and c18 within the boss portion 3b and is splashed to the outer peripheral side of the boss portion 3b. Further, the lubricant oil supplied to the oil passages within the boss portion 3b by the oil pump 8 is supplied to the oil passage c8 of the input shaft 12 in a manner of being sealed by the seal rings d2 and d3. Then, it is supplied to the rear side via the oil passage c3 and is splashed to the outer peripheral side of the input shaft 12 from the oil passages c9, c10 and c11. Thereby, each member within the mission case 3, i.e., each gear of the planetary gear DP, each member of the first clutch C-1, each member of the third clutch C-3, each member of the fourth clutch C-4, each member of the first brake B-1 and specifically the friction plates 21, 41, 51 and 61 as well as the bearings b1 through b6 are lubricated. It is noted that oil within the cancel oil chambers 47 and 57 of the third and fourth clutches C-3 and C-4 for example is also supplied in the same manner with the lubricant oil via the oil passages c20 and c22 and lubricates each member within the mission case 3 in a manner of joining with other lubricant oil when it is emitted.

Next, the supply of operating fluid will be explained.

The hydraulic control unit not shown generates and controls engaging pressure of the first clutch C-1, the second clutch C-2, the third clutch C-3, the fourth clutch C-4, the first brake B-1, the second brake B-2 and the lockup clutch 10 based on the hydraulic pressure caused by the oil pump 8 for example. Each operating fluid is supplied to each oil passage provided separately within the boss portion 3b (within the sleeve member 100) from around the joint of the boss portion 3b on the front side based on the engaging hydraulic pressure of the lockup clutch 10, the first clutch C-1, the third and fourth clutches C-3 and C-4 among them.

When the operating fluid for engaging the lockup clutch 10 is supplied to the oil passage within the boss portion 3b, it is supplied from the oil passage within the boss portion 3b to the oil passages c4 and c5 in a manner of being sealed by the seal rings d1 and d2. The operating fluid supplied to the oil passages c4 and c5 is supplied to the friction plate of the lockup clutch 10 via the oil passage c1 and acts on the friction plate. Then, a flange-like member provided around the input shaft 11 presses the friction plate and the lockup clutch 10 engages as a result. It is noted that the operating fluid is emitted in reverse via the oil passages c1, c4 and c5 when the lockup clutch 10 is disengaged based on the hydraulic control made by the hydraulic control unit.

When the operating fluid for engaging the third clutch C-3 is supplied to the oil passage within the boss portion 3b, it is supplied to the oil passage c13 from the oil passage in the axial direction not shown within the boss portion 3b. The operating fluid supplied to the oil passage c13 is supplied to an oil passage c19 in a manner of being sealed by the seal rings d7 and d8, i.e., from the oil passage c13 in the boss portion 3b to the oil passage c19 of the clutch drum 42 which are mutually and relatively rotatable. Then, the operating fluid is supplied to the oil chamber 46 of the hydraulic servo 40 of the third clutch C-3 via the oil passage c19. Thus, the piston member 43 is pressed backward and the drum portion 43b presses the friction plate 41, i.e., the third clutch C-3 engages. It is noted that when the third clutch C-3 is disengaged based on the hydraulic control made by the hydraulic control unit, the piston member 43 is pressed forward by an urging force of the return spring 45 and thereby, the operating fluid of the oil chamber 46 is emitted in reverse via the oil passages c19, c13 and the oil passage in the axial direction within the boss portion 3b.

When the operating fluid for engaging the fourth clutch C-4 is supplied to the oil passage within the boss portion 3b, it is supplied to the oil passage c16 from the oil passage in the axial direction not shown within the boss portion 3b. The operating fluid supplied to the oil passage c16 is supplied to an oil passage c21 in a manner of being sealed by the seal rings d9 and d10, i.e., from the oil passage c16 in the boss portion 3b to the oil passage c21 of the clutch drum 42 which are mutually and relatively rotatable. Then, the operating fluid is supplied to the oil chamber 56 of the hydraulic servo 50 of the fourth clutch C-4 via the oil passage c21. Thus, the piston member 53 is pressed backward and the friction plate 51 is pressed, i.e., the fourth clutch C-4 engages. It is noted that when the fourth clutch C-4 is disengaged based on the hydraulic control made by the hydraulic control unit, the piston member 53-is pressed forward by an urging force of the return spring 55 and thereby, the operating fluid of the oil chamber 56 is emitted in reverse via the oil passages c21, c16 and the oil passage in the axial direction within the boss portion 3b.

When the operating fluid for engaging the first clutch C-1 is supplied to the oil passage within the boss portion 3b, it is supplied to the oil passage c6 from the oil passage in the axial direction not shown within the boss portion 3b in a manner of being sealed by the seal rings d3 and d4. That is, it is supplied from the oil passage in the boss portion 3b to the oil passage c6 of the input shaft 12, which are mutually and relatively rotatable. Further, the operating fluid supplied to the oil passage c6 is supplied to the rear side to the oil passage c7 via the oil passage c2 within the input shaft 12. The operating fluid supplied to the oil passage c7 is then supplied to an oil passage c23 of the clutch drum 22 from the oil passage c7 of the input shaft 12 which are mutually and relatively rotatable in a manner of being sealed by the seal rings d5 and d6. Then, the operating fluid is supplied to the oil chamber 26 of the hydraulic servo 20 of the first clutch C-1 via the oil passage c23. Thus, the piston member 23 is pressed backward and the friction plate 21 is pressed, i.e., the first clutch C-1 engages. It is noted that when the first clutch C-1 is disengaged based on the hydraulic control made by the hydraulic control unit, the piston member 23 is pressed forward by an urging force of the return spring 25 and thereby, the operating fluid in the oil chamber 26 is emitted in reverse via the oil passages c23, c17, c2, c6 and the oil passage in the axial direction within the boss portion 3b.

According to the inventive automatic transmission 1₁ described above, the fourth clutch C-4 is linked with the sun gear S2 of the planetary gear unit PU via the output side members (the clutch drum 42 and the link member 102) of the third clutch C-3, so that the output side members become the output side members of the two clutches transmitting different rotations, i.e., they may be shared in common as one rotary member. Thereby, the automatic transmission 1₁ may be compactly built.

Still more, because the hydraulic servo 50 of the fourth clutch C-4 is disposed axially on the opposite side of the planetary gear DP from the planetary gear unit PU and on the boss portion 3b extending from the case 4 to supply the operating fluid to the hydraulic servo 50 of the fourth clutch C-4 from the oil passage within the boss portion 3b, it becomes possible to cut a number of seal rings as compared to a case of disposing the hydraulic servo 50 of the fourth clutch C-4 on the input shaft 12 through an intermediary of a member having another speed of rotation, i.e., as compared to a case of supplying the operating fluid via the other member for example. Thereby, it is possible to prevent the drop of the efficiency and controllability of the automatic transmission 1₁.

By the way, the clutch that enables the transmission of the reduced rotation as described above has a problem that it is required to transmit a relatively large torque because the rotation is reduced as compared to the clutch that enables the transmission of the inputted rotation that is inputted to the input shaft.

However, according to the inventive automatic transmission 1₁, because the planetary gear DP, the first clutch C-1, the third clutch C-3 and the fourth clutch C-4 are disposed axially on one side of the planetary gear unit PU and the planetary gear DP and the fourth clutch C-4 are disposed on the inner peripheral side of the clutch drum 42 of the third clutch C-3, it becomes possible to increase an area of the friction plates 21 and 41 of the first and third clutches C-1 and C-3. That is, even though the capacity of the first and third clutches C-1 and C-3 for transmitting the reduced rotation may be increased, the fourth clutch C-4 and the planetary gear DP whose transmittable torque capacity can be relatively small for transmitting the inputted rotation may be disposed on the inner peripheral side of the clutch drum 42 of the third clutch C-3 (note that even though 'capacity' means to include a transmittable torque capacity, a thermal capacity and the like, it will be simply referred to as 'capacity' hereinbelow). Accordingly, the automatic transmission 1, that is capable of attaining the multi-stage shift such as the forward eighth speed stage and the reverse second speed stage may be compactly built.

Still more, because the hydraulic servo 20 of the first clutch C-1 is disposed on the input shaft 12 and adjacent to the planetary gear DP and the operating fluid is supplied to the hydraulic servo 20 of the first clutch C-1 from the oil passage provided within the input shaft 12, the operating fluid may be supplied just by providing the pairs of seal rings d3, d4, d5 and d6 along the oil passage for supplying the operating fluid from the hydraulic control unit, i.e., between the oil passage within the boss portion 3b and the input shaft 12 and between the hydraulic servo 20 of the first clutch C-1 and the input shaft 12, respectively. Accordingly, it becomes possible to cut a number of seal rings as compared to a case of supplying operating fluid via another member for example. Thereby, it becomes possible to prevent the drop of the efficiency and controllability of the vehicular automatic transmission 1₁.

Sti-11 more, although the increase of radial size of the first clutch C-1 to the outer peripheral side is limited because the third and fourth clutches C-3 and C-4 are linked to the sun gear S2 of the planetary gear unit PU through the outer peripheral side of the first clutch C-1 and the link member 101 and others for linking the third and fourth clutches C-3 and C-4 with the sun gear S2 of the planetary gear unit PU pass through the outer peripheral side of the first clutch C-1, the capacity of the first clutch C-1 may be maintained by increasing the size in the inner radial direction because the first clutch C-1 is disposed on the input shaft 12, as compared to a case of disposing it on the boss portion b3.

Still more, the sun gear S2 of the planetary gear unit PU is capable of transmitting the inputted rotation in connection with the fourth clutch C-4, is capable of transmitting the reduced rotation in connection with the third clutch C-3 and is capable of fixing the rotation in connection with the first brake B-1, the sun gear S3 is capable of transmitting the reduced rotation in connection with the first clutch C-1, the carrier CR2 is capable of transmitting the inputted rotation in connection with the second clutch C-2 and is capable of fixing the rotation in connection with the second brake B-2 and the ring gear. R3 is linked to the output shaft 15, so that the multi-stage shift such as the forward eighth speed stage and the reverse second speed stage may be attained.

Further, because the friction plate 41 of the third clutch C-3 is disposed on the outer peripheral side of the ring gear R1 and the fourth clutch C-4 is disposed axially between the hydraulic servo 40 of the third clutch C-3 and the friction plate 41 of the third clutch C-3, it is possible to prevent the fourth clutch C-4 from radially overlapping with the hydraulic servo 40 or the friction plate 41 of the third clutch C-3. Accordingly, because-the radial size of the fourth clutch C-4 may be increased as compared to a case of disposing it on the inner peripheral side of the third clutch C-3, the automatic transmission 1₁ may be compactly built in the radial direction.

Still more, because the first brake B-1 is disposed on the outer peripheral side of the hydraulic servo 40 of the third clutch C-3 and it may be disposed at the position radially overlapping with the third clutch C-3 while maintaining the capacity of the friction plate 61 of the first brake B-1 and reducing the radial size thereof, the automatic transmission 1₁ may be built both compactly in the radial direction and shortly in the axial direction.

Further, because the automatic transmission 1₁ is built so that the reduced rotation of the ring gear R1 is inputted to the clutch drum 42 of the third clutch C-3 forming the hydraulic servo 40 of the third clutch C-3 when the third clutch C-3 engages, the reduced rotation is not inputted to the clutch drum 42 of the third clutch C-3 when the third clutch C-3 is not engaged even if a driver races an engine in Neutral or Parking range for example and the input shaft rotates. Accordingly, it is possible to prevent the whole hydraulic servo 40 of the third clutch C-3 from rotating and to prevent dragging of the third clutch C-3 which is otherwise caused by a centrifugal hydraulic pressure generated in the oil chamber 96.

Still more, because the automatic transmission 1₁ is built so that the inputted rotation is inputted to the clutch drum 52 of the fourth clutch C-4 forming the hydraulic servo 50 of the fourth clutch C-4 via the carrier CR1 when the fourth clutch C-4 engages, the inputted rotation its not inputted to the clutch drum 52 of the fourth clutch C-4 when the fourth clutch C-4 is not engaged even if the driver races the engine in Neutral or Parking range for example and the input shaft rotates. Accordingly, it is possible to prevent the rotation of the whole hydraulic servo 50 of the fourth clutch C-4 and to prevent dragging of the fourth clutch C-4 which is otherwise caused by a centrifugal hydraulic pressure generated in the oil chamber 56.

Because the second clutch C-2 is disposed axially on the opposite side of the planetary gear unit PU from the planetary gear DP, the second clutch C-2 may be linked with the carrier CR2 without entangling with the member for linking the first clutch C-1 with the sun gear S3 and the member for linking the third clutch C-3 with the sun gear S2 for example.

Still more, because planetary gear unit PU is the Ravigneaux type planetary gear in which the ring gear R3 is disposed at one side of the outer peripheral side thereof and the friction plate 71 of the second brake B-2 is disposed on the other side of the outer peripheral side of the planetary gear unit PU, the friction plate 71 of the second brake B-2 may be disposed at the position radially overlapping with the planetary gear unit PU while assuring its capacity and decreasing the diameter thereof. Accordingly, the automatic transmission 1₁ may be built both compactly in the radial direction and shortly in the axial direction.

It is noted that although the fourth clutch C-4 and the planetary gear DP are disposed on the inner peripheral side of the clutch drum 42 of the third clutch C-3 in the first embodiment described above, the invention is not limited to that and they may be disposed on the inner peripheral side of the clutch drum 22 of the first clutch C-1 for example. Or, the fourth clutch C-4 may be disposed on the inner peripheral side of the clutch drum 42 of the third clutch C-3 and the planetary gear DP may be disposed on the inner peripheral side of the clutch drum 22 of the first clutch C-1. That is, the fourth clutch C-4 and the planetary gear DP may be disposed at any position as long as they are disposed on the inner peripheral side of at least one of the clutch drum 22 of the first clutch C-1 and the clutch drum 42 of the third clutch C-3.

### <Second Embodiment>

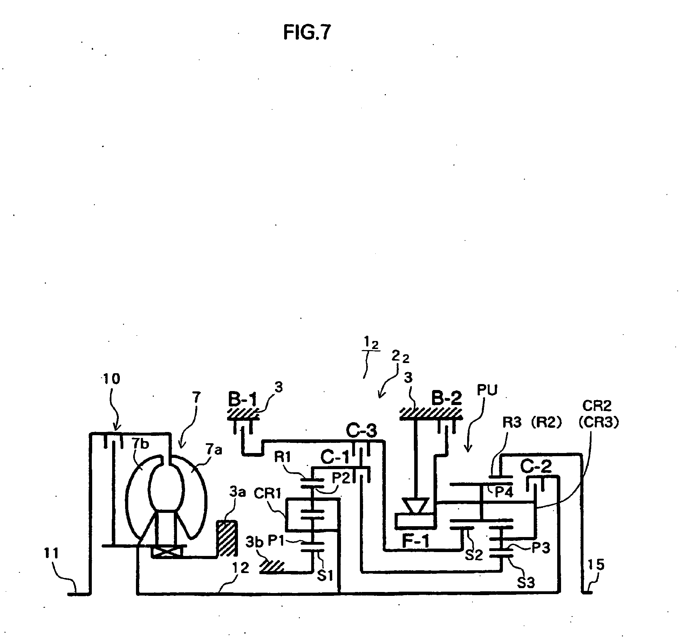

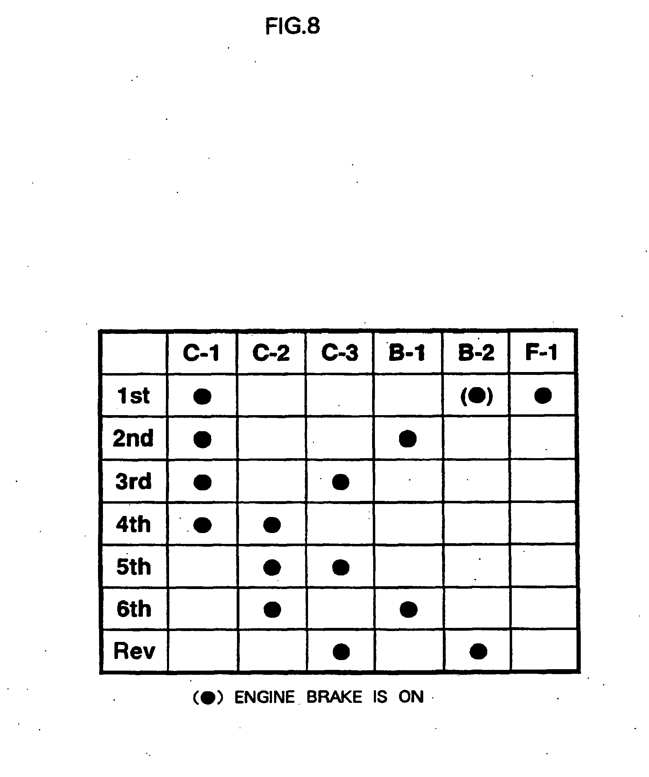

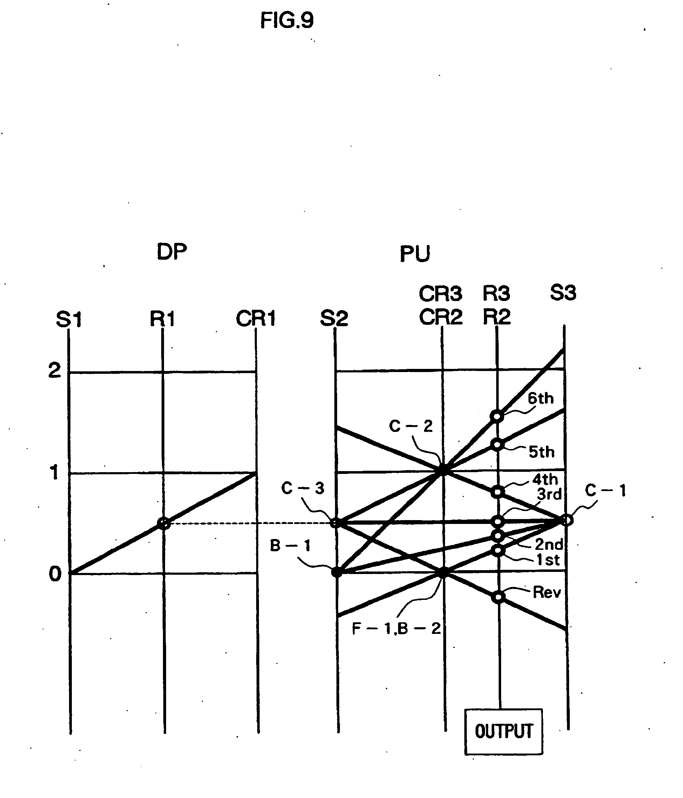

. A second embodiment, which is a partial modification of the first embodiment described above, will be explained with reference to FIGs. 6 through 9. FIG. 6 is a section view showing an automatic transmission 1₂ according to the second embodiment, FIG. 7 is a skeleton view of the automatic transmission 1₂, FIG. 8 is an operation table of the automatic transmission 1₂ and FIG. 9 is a speed diagram of the automatic transmission 1₂.

The automatic transmission 1₂ of the second embodiment is provided with a transmission mechanism 2₂. The transmission mechanism 2₂ is what is arranged so that the fourth clutch C-4 (and its hydraulic servo 50, the friction plate 51 and others) is removable from the transmission mechanism 2₁ of the automatic transmission 1₁ of the first embodiment. Here, the transmission mechanism 2₂ from which the fourth clutch C-4 has been removed will be explained below. It is noted that the members other than the fourth clutch C-4 are built in the same manner with those in the automatic transmission 1₁ of the first embodiment, so that they are denoted by the same reference numerals and their explanation will be omitted here.

Operations of the transmission mechanism 2₂ will be explained with reference to FIGs . 7, 8 and 9. It is noted that in the speed diagram shown in FIG. 9, the vertical axis indicates a number of rotations of each rotary element (each gear) and the horizontal axis indicates a gear ratio of those rotary elements. In the part of the planetary gear DP in the speed diagram, the vertical line at the lateral end (on the left side in FIG. 9) corresponds to the sun gear S1. The other vertical lines correspond, in order to the right in the diagram, to the ring gear R1 and to the carrier CR1, respectively. In the part of the planetary gear unit PU in the speed diagram, the vertical line at the lateral end (on the right side in FIG. 9) corresponds to the sun gear S3 and the other vertical lines correspond, in order to the left in the diagram, to the ring gear R3 (R2)., the carrier CR2 (CR3) and the sun gear S2, respectively.

For example, in case of a forward first speed stage (lst) in D (drive) range, the first clutch C-1 and the one-way clutch F-1 engage as shown in FIG. 8. Then, as shown in FIGs. 7 and 9, the rotation of the ring gear R1 at the reduced rotation reduced by the fixed sun gear S1 and the carrier CR1 rotating at the inputted rotation is inputted to the sun gear S3 via the first clutch C-1. Further, the carrier CR2 is restricted so as to rotate in one direction (normal rotating direction) and is prevented from rotating in the reverse direction, i.e., it is fixed. Then, the reduced rotation inputted to the sun gear S3 is outputted to the ring gear R3 via the fixed carrier CR2 and the output shaft 15 outputs the normal rotation of the forward first speed stage.

It is noted that when the engine brake is on (coasting time), the condition of the forward first speed stage is kept in a manner of fastening the second brake B-2 to fix the carrier CR2 and to prevent the carrier CR2 from rotating normal. Because the one-way clutch F-1 prevents the carrier CR2 from rotating in the reverse direction and allows the normal rotation in the forward first speed stage, the forward first speed stage in shifting from non-Driving range to Driving range for example may be achieved smoothly by automatically engaging the one-way clutch F-1.

In case of a forward second speed stage (2nd)), the first clutch C-1 engages and the first brake B-1 is fastened as shown in FIG. 8. Then, as shown in FIGs. 7 and 9, the rotation of the ring gear R1 at the reduced rotation reduced by the fixed sun gear S1 and the carrier CR1 rotating at the inputted rotation is inputted to the sun gear S3 via the first clutch C-1. Further, the rotation of the sun gear S2 is fixed because the first brake B-1 is fastened. Then, the carrier CR2 rotates at a reduced rotation whose speed is lower than that of the sun gear 53, the reduced rotation inputted to the sun gear S3 is outputted to the ring gear R3 via the carrier CR2 and the output shaft 15 outputs the normal rotation of the forward second speed stage.

In case of a forward third speed stage (3rd), the first clutch C-1 and the third clutch C-3 engage as shown in FIG. 8. Then, as shown in FIGs. 7 and 9, the rotation of the ring gear R1 at the reduced rotation reduced by the fixed sun gear S1 and the carrier CR1 rotating at the inputted rotation is inputted to the sun gear S3 via the first clutch C-1. Further, because the third clutch C-3 engages, the reduced rotation of the ring gear R1 is inputted to the sun gear S2. That is, because the reduced rotation of the ring gear R1 is inputted to the sun gear S2 and the sun gear S3, the planetary gear unit PU is put into a state in which the reduced rotation is directly connected. Then, the reduced rotation is outputted to the ring gear R3 as it is and the output shaft 15 outputs the normal rotation of the forward third speed stage.

In case of a forward fourth speed stage (4th), the first clutch C-1 and the second clutch C-2 engage as shown in FIG. 8. Then, as shown in FIGs. 7 and 9, the rotation of the ring gear R1 at the reduced rotation reduced by the fixed sun gear S1 and the carrier CR1 rotating at the inputted rotation is inputted to the sun gear S3 via the first clutch C-1. Further, because the second clutch C-2 engages, the inputted rotation is inputted to the carrier CR2. Then, the ring gear R3 rotates at a reduced rotation whose speed is higher than that of the forward third speed stage due to the reduced rotation inputted to the sun gear S3 and the inputted rotation inputted to the carrier CR2. Thus, the output shaft 15 outputs the normal rotation of the forward fourth speed stage.

In case of a forward fifth speed stage (5th), the second clutch C-2 and the third clutch C-3 engage as shown in FIG. 8. Then, as shown in FIGs. 7 and 9, the rotation of the ring gear R1 at the reduced rotation reduced by the fixed sun gear S1 and the carrier CR1 rotating at the inputted rotation is inputted to the sun gear S2 via the third clutch C-3. Still more, because the second clutch C-2 engages, the inputted rotation is inputted to the carrier CR2. Then, the ring gear R3 outputs an over-driven rotation whose speed is slightly higher than the inputted rotation due to the reduced rotation inputted to the sun gear S2 and the inputted rotation inputted to the carrier CR2 and the output shaft 15 outputs the normal rotation of the forward fifth speed stage.

In case of a forward sixth speed stage (6th), the second clutch C-2 engages and the first brake B-1 is fastened as shown in FIG. 8. Then, as shown in FIGs. 7 and 9, the inputted rotation is inputted to the carrier CR2 as the second clutch C-2 engages. Further, because the first brake B-1 is fastened, the rotation of the sun gear S2 is fixed. Then, the carrier CR2 rotates at an over-driven rotation whose speed is higher than that of the forward fifth speed stage due to the fixed sun gear S2 and the output shaft 15 outputs the normal rotation of the forward sixth speed stage.

In case of the reverse first speed stage, the third clutch C-3 engages and the second brake B-2 is fastened as shown in FIG. 8. Then, as shown in FIGs. 7 and 9, the rotation of the ring gear R1 at the reduced rotation reduced by the fixed sun gear S1 and the carrier CR1 rotating at the inputted rotation is inputted to the sun gear S2 via the third clutch C-3. Further, because the second brake B-2 is fastened, the rotation of the carrier CR2 is fixed. Then, the reduced rotation inputted to the sun gear S2 is outputted to the ring gear R3 via the fixed carrier CR2 and the output shaft 15 outputs the reverse rotation of the reverse first speed stage.

It is noted that in P (parking) and N (neutral) ranges, the first clutch C-1, the second clutch C-2, and the third clutch C-3 are disengaged. Then, the transmission of power among the ring gear R1, the sun gear S2 and the sun gear S3, i.e., the transmission of power between the planetary gear DP and the planetary gear unit PU, is disconnected. Still more, the transmission of power between the input shaft 12 (the intermediate shaft 13) and the carrier CR2 is disconnected. Thereby, the transmission of power between the input shaft 12 and the planetary gear unit PU is disconnected. That is, the transmission of power between the input shaft 12 and the output shaft 15 is disconnected.

As described above, according to the second embodiment of the invention, even though the fourth clutch C-4 of the vehicular automatic transmission 1₁ is removed, the components other than the fourth clutch C-4 may be used as they are. That is, it is possible to provide the automatic transmission 1₁ capable of attaining the forward sixth speed stage and the reverse first speed stage for example while commonly using the components and the production line and while lowering the cost. Accordingly, it becomes possible to line up the automatic transmission 1₁ having the fourth clutch C-4 and capable of attaining the forward eighth speed stage and the reverse second speed stage and the automatic transmission 1₂ that requires no fourth clutch C-4 and capable of attaining the forward sixth speed stage and the reverse first speed stage without increasing their cost.

### <Third Embodiment>

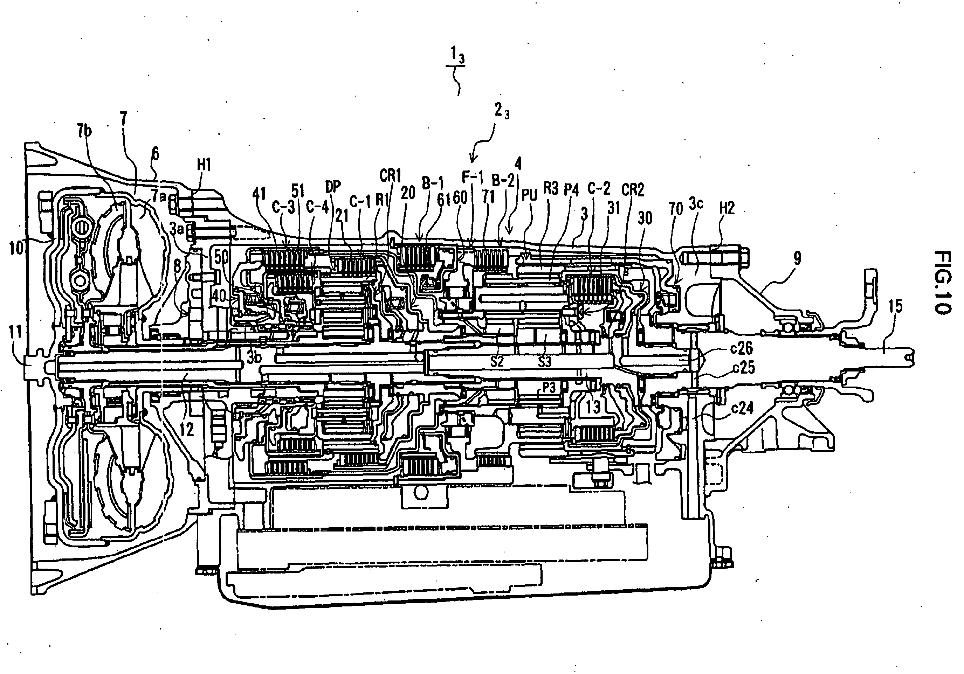

A third embodiment, which is a partial modification of the first embodiment described above, will be explained with reference to FIGs. 10 and 11. FIG. 10 is a section view showing an automatic transmission 1₃ according to the third embodiment and FIG. 11 is an enlarged section view showing a part of a transmission mechanism 2₃.

The automatic transmission 1₃ of the third embodiment is provided with the transmission mechanism 2₃. As compared to the transmission mechanism 2₁ of the automatic transmission 1₁ of the first embodiment, the transmission mechanism 2₃ is characterized in that the third clutch C-3 is disposed on the outer peripheral side of the fourth clutch C-4, the friction plate 21 of the first clutch C-1 is disposed on the outer peripheral side of the ring gear R1 of the planetary gear DP and the first brake B-1 is disposed axially between the first clutch C-1 and the planetary gear unit PU. It is noted that the members other than those components -are built almost in the same manner with those in the automatic transmission 1₁ of the first embodiment, so that they are denoted by the same reference numerals and their explanation will be omitted here. Still more, the operations in the forward 1st through eighth speed stages and in the reverse lst and second speed stages are the same, their explanation will be also omitted here (see FIGs. 3 through 5).

The planetary gear DP disposed within the mission case 3 is provided with the sun gear S1, the carrier CR1 and the ring gear R1 as shown in FIGs . 10 and 11 in the same manner with the first embodiment. Among them, the sun gear S1 is fixed to the sleeve member 100 as shown in detail in FIG. 11. This sleeve member 100 fits around the outer peripheral face of the input shaft 12 and extends forward to be fixed in a body with the inner peripheral face of the boss portion 3b that extends to the rear from the inner diametric side of the rear face of the partition member 3a of the mission case 3 described above. That is, it is a part of the boss portion 3b in a broad sense and the sun gear S1 is fixed to the boss portion 3b so as not to be rotatable. The carrier CR1 has the rear carrier plate CRla and the front carrier plate CR1b to rotatably support the pinions P1 and P2. While these pinions P1 and P2 engage each other, the pinion P1 engages with the sun gear S1 and the pinion P2 engages with the ring gear R1, respectively. The rear carrier plate CRla is linked in a body with the flange portion 12a that is formed in the shape of a flange so as to extend from the outer peripheral face of the rear part of the input shaft 12 to the outer diametric side by welding for example. Meanwhile, the front carrier plate CR1b is formed in the shape of a ring and is linked with a hub member 112 by its front side. An inner friction plate 51b of the fourth clutch C-4 described later is spline-coupled with the outer peripheral face of the hub member 112. The inner friction plate 21b of the first clutch C-1 described later is spline-coupled with the outer peripheral side of the ring gear R1. A hub member 113 is spline-coupled with the outer peripheral side of the front end of the ring gear R1 and an inner friction plate 41b of the third clutch C-3 described later is spline-coupled with the outer peripheral side of the hub member 113. The flange-like positioning member 106 is disposed on the inner peripheral side of the rear end of the ring gear R1 and the ring gear R1 is rotatably supported by the input shaft 12 through an intermediary of the positioning member 106.

The fourth clutch C-4 is disposed on the boss portion 3b just in front of the planetary gear DP described above. The fourth clutch C-4 is provided with the friction plate 51 composed of the outer friction plate 51a and the inner friction plate 51b and the hydraulic servo 50 for engaging/disengaging the friction plate 51. The hydraulic servo 50 has the clutch drum 52, the sleeve member 111 linked with the clutch drum 52, the piston member 53, the cancel plate 54 and the return spring 55 and composes thereby the oil chamber 56 and the cancel oil chamber 57. The clutch drum 52 has the flange portion 52a extending from the inner diametric side to the outer diametric side, the drum portion 52b extending from the outer periphery of the flange portion 52a to the rear and a link portion 52c disposed on the inner peripheral side of the flange portion 52a and is linked with the sleeve member 111 rotatably provided on the boss portion 3b. A clutch drum is formed in a broad sense by the rear part of the sleeve member 111 and the clutch drum 52. The drum portion 52b is disposed on the outer diametric side of a hub member 112 linked with the front carrier plate CR1b described above and the outer friction plate 51a is spline-coupled with the inner peripheral face thereof. The piston member 53 is disposed behind the flange portion 52a of the clutch drum 52 and a flange portion 111a of the sleeve member 111 so as to be reciprocal in the longitudinal direction and composes the oil-tight oil chamber 56 between the clutch drum 52 and the sleeve member 111 by two seal rings a1 and a2. Still more, the cancel plate 54 is blocked from moving to the rear by the snap ring 59 fitted on the outer peripheral side of the rear end of the sleeve member 111. The cancel plate 54 is provided with the return spring 55 in contraction between the piston member 53 disposed in front of it and composes the oil-tight cancel oil chamber 57 by the seal rings a3.

It is noted that because the fourth clutch C-4 is built as described above, the inputted rotation of the carrier CR1 is inputted to the clutch drum 52 when the fourth clutch C-4 engages. The rotation is not inputted to the clutch drum 52 and the hydraulic servo 50 will not rotate when the fourth clutch C-4 is not engaged especially in Neutral and Parking ranges.

The third clutch C-3 is built so as to generally surround the front side and the outer peripheral side of the fourth clutch C-4 and is disposed on the boss portion 3b through an intermediary of the fourth sleeve member 111 described above . The third clutch C-3 is provided with the friction plate 41 comprising the outer friction plate 41a and the inner friction plate 41b and the hydraulic servo 40 for engaging/disengaging the friction plate 41. The hydraulic servo 40 has the clutch drum 42, the piston member 43, a cylinder member 44 formed separately from the clutch drum 42, and the return spring 45 and composes the oil chamber 46 and the cancel oil chamber 47 with them as described later in detail. The clutch drum 42 has the flange portion 42a, the hub portion 42c extending to the rear from the inner periphery of the flange portion 42a and the drum portion 42b extending to the rear from the outer periphery of the flange portion 42a. The hub portion 42c is linked to the side face of the flange portion 52a of the clutch drum 52 of the fourth clutch C-4 by means of welding for example. The boss portion 3b extends from the rear face of the partition member 3a described above. A plurality of holes 42d is perforated through the flange portion 42a in the circumferential direction. Meanwhile, the drum portion 42b of the clutch drum 42 extends to the outer diametric side of the friction plate 41 of the third clutch C-3 disposed on the outer diametric side of the fourth clutch C-4 and is spline-coupled with an outer friction plate 41a at the part corresponding to the hub member 113. A drum-like member 101 having a shape of encompassing the first clutch C-1 described later is linked to the rear end of the drum portion 42b. The drum-like member 101 is linked with the sun gear S2 (see FIG. 10) of the planetary gear unit PU via the sleeve member 104. That is, the clutch drum 52 of the fourth clutch C-4 and the clutch drum 42 of the third clutch C-3 are linked with the sun gear S2 of the planetary gear unit PU through that.

The piston member 43 of the third clutch C-3 has the flange portion 43a whose inner peripheral side faces to the cylinder member 44 and the drum portion 43b extending to the rear from the outer periphery of the flange portion 43a and formed in the shape of a comb. Among them, the flange portion 43a is disposed so as to be movable on the sleeve member 111 described above in the longitudinal direction and composes the oil-tight oil chamber 46 between the cylinder member 44, positioned by the snap ring 48, by three seal rings a5, a6 and as. Still more, the drum portion 43b penetrates through and crosses with the hole 42d perforated through the flange portion 42a of the clutch drum 42 and its edge faces to the friction plate 41. The return spring 45 is disposed between the rear side of the flange portion 43a of the piston member 43 and the front side of the clutch drum 52 of the fourth clutch C-4. That is, because the return spring 45 is disposed as against the clutch drum 52, the clutch drum 52 is used in common also as a cancel plate. That is, the hydraulic servo 40 of the third clutch C-3 is disposed in linkage with the clutch drum 52 of the fourth clutch C-4. Still more, the oil-tight cancel oil chamber 47 is formed between the clutch drum 52 and the piston member 43 by sealing by two seal rings a6 and a7. It is noted that a force urging to the front side always acts on the cylinder member 44 based on operating and centrifugal hydraulic pressures of the oil chamber 46, centrifugal hydraulic pressure of the cancel oil chamber 47 and a biasing force of the return spring 45. That is, it takes a form of being fixed to the sleeve member 111 by one snap ring 48.

It is noted that because the third clutch C-3 is built as described above, the reduced rotation of the ring gear R1 is inputted to the clutch drum 42 when the third clutch C-3 engages. The rotation is not inputted to the clutch drum 42 and the hydraulic servo 40 will not rotate when the third clutch C-3 is not engaged specially in Neutral and Parking ranges.

The first clutch C-1 is disposed on the input shaft 12 behind the planetary gear DP and is provided with the friction plate 21 comprising the outer friction plate 21a and the inner friction plate 21b and the hydraulic servo 20 for engaging/disengaging the friction plate 21. The hydraulic servo 20 has the clutch drum 22, the second sleeve member 105 linked with the clutch drum 22, the piston member 23, the cancel plate 24 and the return spring 25 and composes the oil chamber 26 and the cancel oil chamber 27 with them. The clutch drum 22 has the flange portion 22a extending from the inner diametric side to the outer diametric side, the drum portion 22b extending to the outer peripheral side of the ring gear R1 from the outer periphery of the flange portion 22a, and a link portion 22c linked with the sleeve member 105 rotatably provided around the input shaft 12 on the inner peripheral side of the flange portion 22a and composes the clutch drum in a broad sense with the front part of the sleeve member.105 and the clutch drum 22. The drum portion 22b is disposed on the outer diametric side of the ring gear R1 as described above and the outer friction plate 21a is spline-coupled on the inner peripheral side thereof (the inner friction plate 21b is spline-coupled with the outer peripheral side of the ring gear R1 as described above) . The piston member 23 is disposed on the front side of the flange portion 22a of the clutch drum 22 and a flange portion 105a of the sleeve member 105 so as to be movable in the longitudinal direction and composes the oil-tight oil chamber 26 between the clutch drum 22 and the sleeve member 105 by two seal rings a9 and a10. The cancel plate 24 is blocked from moving to the front side by the snap ring 29 fitted to the outer peripheral side of the front end of the sleeve member 105. The cancel plate 24 is provided with the return spring 25 in contraction between the piston member 23 disposed behind thereof and composes the oil-tight cancel oil chamber 27 by two seal rings a9 and a11. The rear side of the sleeve member 105 is linked with the sun gear S3 via the sleeve member 107 (see FIG. 10).

It is noted that because the first clutch C-1 is built as described above, the reduced rotation of the ring gear R1 is inputted to the clutch drum 22 when the first clutch C-1 engages. The rotation is not inputted to the clutch drum 22 and the hydraulic servo 20 will not rotate when the first clutch C-1 is not engaged specially in Neutral and Parking ranges.

The first brake B-1 is disposed axially between the first clutch C-1 and the planetary gear unit PU. More specifically, it is disposed on the outer peripheral side of the rear part of the hydraulic servo 20 of the first clutch C-1, on the front side of the one-way clutch F-1 and in the vicinity of the inner peripheral side nearly at the center of the mission case 3 (see FIG. 10). The first brake B-1 is provided with the friction plate 61 composed of the outer friction plate 61a and the inner friction plate 61b and the hydraulic servo 60 for engaging/disengaging the friction plate 61. the hydraulic servo 60 has the drum member 62, the piston member 63, the cancel plate 64 and the return spring 65. The drum member 62 has a flange portion 62a extending from the inner diametric side to the outer diametric side, a drum portion 62b extending from the outer periphery of the flange portion 62a along the inner peripheral face of the mission case 3 and a hub portion 62c extending to the inner peripheral side of the flange portion 62a. The drum portion 62b is disposed along the inner peripheral face of the mission case 3 as described above and its outer peripheral side is spline-coupled with the inner peripheral face of the mission case 3. The front end of the drum portion 62b abuts against a snap ring 68 so as to be stopped from moving to the front side and the outer peripheral side of the flange portion 62a abuts against a stepped portion 3d of the mission case 3 so as to be stopped from moving to the rear side. That is, the drum member 62 is positioned and fixed with respect to the mission case 3. Meanwhile, the piston member 63 is disposed at the front side of the flange portion 62a of the drum member 62 so as to be movable in the longitudinal direction and composes the oil-tight oil chamber 66 between the drum member 62 by two seal rings a12 and a13. Further, the cancel plate 64 is blocked from moving to the front side by a snap ring 69 fitted around the outer peripheral side of the front end of the hub portion 62c of the drum member 62. The cancel plate 64 is provided with a return spring 65 in contraction between the piston member 63 disposed behind thereof. Then, the outer friction plate 61a is spline-coupled with the inner peripheral side of the drum portion 62b of the drum member 62 and the inner friction plate 61b is spline-coupled with the hub member 103. The hub member 103 is linked to the drum member 101 by means of welding for example. That is, the hub member 103 is linked to the sun gear S2 via the sleeve member 104 (see FIG. 10).

Next, the structure for supporting each component,i.e., bearings, will be explained.

The bearing b5 is interposed between the inner peripheral face of the rear end of the sleeve member 100, which is combined in a body with the boss portion 3b of the partition member 3a, and the outer peripheral face of the input shaft 12. Thereby, the input shaft 12 is rotatably supported to the mission case 3. The bearing b1 is interposed between the flange portion 12a of the input shaft 12 and the rear face of the sleeve member 100 (sun gear S1), the bearing b2 is interposed between the front side of the positioning member 106 and the rear side of the rear carrier plate CR1a, and the bearing b3 is interposed between the rear side of the inner periphery of the positioning member 106 and the front end of the sleeve member 105, respectively. Thereby, the carrier CR1, the ring gear R1 and the sleeve member 105 are rotatably supported to the input shaft 12 through the intermediary of the positioning member 106. Still more, bearings b4 and b6 are interposed between the outer peripheral side of the boss portion 3b and the inner peripheral side of the sleeve member 111. Thereby, the sleeve member 111 is rotatably supported to the boss portion 3b.

Next, the structure of oil passages of each component will be explained.

The input shaft 12 is provided with three perforated oil passages in the axial direction, i.e., the oil passage c1 heading from the front end to the rear and the oil passages c2 and c3 heading from the rear end to the front. The oil passage c1 communicates with the outer peripheral face of the input shaft 12 through the oil passages c4 and c5 in the radial direction, the oil passage c2 communicates through the oil passages c6 and c7 in the radial direction and the oil passage c3 communicates through the oil passages c8 through c11 in the radial direction, respectively. Four oil passages c13, c14, c16 and c17 are perforated through the boss portion 3b of the partition member 3a in the radial direction in order from the front side. Oil passages c19, c20, c21 and c22 are perforated radially through the sleeve member 111 positioned on the outer peripheral side of the boss portion 3b. It is noted that the oil passages c19 and c20 are perforated so as to intersect each other in three-dimensions within the sleeve member 111. Further, oil passages c23 and c30 are perforated so as to penetrate through the sleeve member 105 positioned on the outer peripheral side of the rear part of the input shaft 12. Still more, an oil groove not shown is formed on the outer peripheral side of the sleeve member 100 and composes an oil passage between the boss portion 3b. That is, the oil passage is formed within the boss portion 3b in a broad sense (hereinafter referred to 'the oil passage within the boss portion 3b'). The seal rings d2 through d4 for sealing the boss portion 3b (sleeve member 100) and the oil passages c4, c5, c8 and c6 are provided on the outer peripheral side of the input shaft 12 and the seal rings d5 and d6 for sealing the oil passages c7 and c23 are provided on the outer peripheral side of the rear part of the input shaft 12. Still more, the seal rings d7 through d9 for sealing the oil passages c13 and c16 of the boss portion 3b and the oil passages c19 and c21 of the sleeve member 111 are provided on the outer peripheral side of the boss portion 3b. It is noted that the hydraulic servo 60 of the first brake B-1 is provided, in the drum member 62 thereof, with an oil passage not shown communicating with the hydraulic control unit (indicated by a dashed line in abbreviation in the figure) located under the automatic transmission 1₃.

Next, the supply of lubricant oil will be explained.

When lubricant oil is supplied to the oil passages within the boss portion 3b based on hydraulic pressure generated by the oil pump 8 described above, the lubricant oil is supplied to the oil passages c14 and c17 of the boss portion 3b and is splashed to the outer peripheral side of the boss portion 3b. Further, the lubricant oil supplied to the oil passages within the boss portion 3b by the oil pump 8 is supplied to the oil passage c8 of the input shaft 12 in a manner of being sealed by the seal rings d2 and d3. Then, it is supplied to the rear side via the oil passage c3 and is splashed to the outer peripheral side of the input shaft 12 from the oil passages c9, c10 and c11. Thereby, each member within the mission case 3, i.e., each gear of the planetary gear DP, each member of the first clutch C-1, each member of the third clutch C-3, each member of the fourth clutch C-4, each member of the first brake B-1 and specifically the friction plates 21, 41, 51 and 61 as well as the bearings b1 through b6 are lubricated. It is noted that oil within the cancel oil chambers 27, 47 and 57 of the first clutch C-1, the third and fourth clutches C-3 and C-4 for example is also supplied in the same manner with the lubricant oil via the oil passages c20, c22, c11 and c30 and lubricates each member within the mission case 3 in a manner of joining with other lubricant oil when it is emitted.

Next, the supply of operating fluid will be explained.

The hydraulic control unit not shown generates and controls engaging pressure of the first clutch C-1, the second clutch C-2, the third clutch C-3, the fourth clutch C-4, the first brake B-1, the second brake B-2 and the lockup clutch 10 based on the hydraulic pressure caused by the oil pump 8 for example. Each operating fluid is supplied to each oil passage provided separately within the boss portion 3b (within the sleeve member 100) from around the joint of the boss portion 3b on the front side based on the engaging hydraulic pressure of the lockup clutch 10, the first clutch C-1, the third and fourth clutches C-3 and C-4 among them.

When the operating fluid for engaging the lockup clutch 10 is supplied to the oil passage within the boss portion 3b, it is supplied from the oil passage within the boss portion 3b to the oil passages c4 and c5. The operating fluid supplied to the oil passages c4 and c5 is supplied to the friction plate of the lockup clutch 10 via the oil passage c1 and acts on the friction plate. Then, a flange-like member provided around the input shaft 11 presses the friction plate and the lockup clutch 10 engages as a result. It is noted that the operating fluid is emitted in reverse via the oil passages c1, c4 and c5 when the lockup clutch 10 is disengaged based on the hydraulic control made by the hydraulic control unit.

When the operating fluid for engaging the third clutch C-3 is supplied to the oil passage within the boss portion 3b, it is supplied to the oil passage c13 from the oil passage in the axial direction not shown within the boss portion 3b. The operating fluid supplied to the oil passage c13 is supplied to the oil passage c19 in a manner of being sealed by the seal rings d7 and d8, i.e., from the oil passage c13 in the boss portion 3b to the oil passage c19 of the sleeve member 111 which are mutually and relatively rotatable. Then, the operating fluid is supplied to the oil chamber 46 of the hydraulic servo 40 of the third clutch C-3 via the oil passage c19. Thus, the piston member 43 is pressed backward and the friction plate 41 is pressed by the drum portion 43b, i.e., the third clutch C-3 engages. It is noted that when the third clutch C-3 is disengaged based on the hydraulic control made by the hydraulic control unit, the piston member 43 is pressed forward by a biasing force of the return spring 45 and thereby, the operating fluid of the oil chamber 46 is emitted in reverse via the oil passages c19, c13 and the oil passage in the axial direction within the boss portion 3b.

When the operating fluid for engaging the fourth clutch C-4 is supplied to the oil passage within the boss portion 3b, it is supplied to the oil passage c16 from the oil passage in the axial direction not shown within the boss portion 3b. The operating fluid supplied to the oil passage c16 is supplied to the oil passage c21 in a manner of being sealed by the seal rings d8 and d9, i.e., from the oil passage c16 in the boss portion 3b to the oil passage c21 of the sleeve member 111 which are mutually and relatively rotatable. Then, the operating fluid is supplied to the oil chamber 56 of the hydraulic servo 50 of the fourth clutch C-4 via the oil passage c21. Thus, the piston member 53 is pressed backward and the friction plate 51 is pressed, i.e., the fourth clutch C-4 engages. It is noted that when the fourth clutch C-4 is disengaged based on the hydraulic control made by the hydraulic control unit, the piston member 53 is pressed forward by a biasing force of the return spring 55 and thereby, the operating fluid of the oil chamber 56 is emitted in reverse via the oil passages c21, c16 and the oil passage in the axial direction within the boss portion 3b.

When the operating fluid for engaging the first clutch C-1 is supplied to the oil passage within the boss portion 3b, it is supplied to the oil passage c6 from the oil passage in the axial direction not shown within the boss portion 3b in a manner of being sealed by the seal rings d3 and d4. That is, it is supplied from the oil passage within the boss portion 3b to the oil passage c6 of the input shaft 12, which are mutually and relatively rotatable. Further, the operating fluid supplied to the oil passage c6 is supplied to the rear side to the oil passage c7 via the oil passage c2 within the input shaft 12. The operating fluid supplied to the oil passage c7 is then supplied to the oil passage c23 of the sleeve member 105 from the oil passage c7 of the input shaft 12 which are mutually and relatively rotatable in a manner of being sealed by the seal rings d5 and d6. Then, the operating fluid is supplied to the oil chamber 26 of the hydraulic servo 20 of the first clutch C-1 via the oil passage c23. Thus, the piston member 23 is pressed backward and the friction plate 21 is pressed, i.e. , the first clutch C-1 engages. It is noted that when the first clutch C-1 is disengaged based on the hydraulic control made by the hydraulic control unit, the piston member 23 is pressed forward by a biasing force of the return spring 25 and thereby, the operating fluid in the oil chamber 26 is emitted in reverse via the oil passages c23, c7, c2, c26 and the oil passage in the axial direction within the boss portion 3b.

It is noted that operating fluid for fastening the first brake B-1 is supplied directly to the oil chamber 66 via an oil passage in the drum member 62 not shown communicating with the hydraulic control unit of the automatic transmission 1₃ described above and is emitted via that oil passage.

According to the inventive automatic transmission 1₃ described above, the fourth clutch C-4 is linked with the sun gear S2 of the planetary gear unit PU through an intermediary of the output side members (the clutch drum 42 and the drum-like member 101 and the sleeve member 104 which turn out to be link members) of the third clutch C-3, so that the output side members turn out to be output side members of the two clutches that transmit different rotations, i.e., they may be shared in common as one rotary member. Thereby, the automatic transmission 1₃ may be compactly built.

Still more, because the hydraulic servo 50 of the fourth clutch C-4 is disposed axially on the opposite side of the planetary gear DP from the planetary gear unit PU and on the boss portion 3b extending from the case 4 to supply the operating fluid to the hydraulic servo 50 of the fourth clutch C-4 from the oil passage within the boss portion 3b, a number of seal rings may be cut as compared to a case of disposing the hydraulic servo 50 of the fourth clutch C-4 on the input shaft 12 through an intermediary of a member that does not reduce a rotation or that does not rotate, i.e., as compared to a case of supplying the operating fluid via the other member for example. Thereby, it becomes possible to prevent the drop of the efficiency and controllability of the automatic transmission 1₃.

By the way, the clutch that enables the transmission of the reduced rotation described above has a problem that it is required to transmit a relatively large torque because the rotation is reduced as compared to the clutch that enables the transmission of the inputted rotation inputted to the input shaft.

However, according to the inventive automatic transmission 1₃, because the planetary gear DP, the first clutch C-1, the third and fourth clutches C-3 and C-4 are disposed axially on one side of the planetary gear unit PU and the planetary gear DP and the fourth clutch C-4 are disposed on the inner peripheral side of the clutch drum 42 of the third clutch C-3, it becomes possible to increase the area of the friction plates 21 and 41 of the first and third clutches C-1 and C-3. That is, even though the capacity of the first and third clutches C-1 and C-3 for transmitting the reduced rotation may be increased, the fourth clutch C-4 and the planetary gear DP whose transmittable torque capacity can be relatively small for transmitting the inputted rotation may be disposed on the inner peripheral side of the clutch drum 42 of the third clutch C-3. Accordingly, the automatic transmission 1₃ that is capable of attaining the multi-stage shift such as the forward eighth speed stage and the reverse second speed stage may be compactly built.

Still more, because the hydraulic servo 40 of the third clutch C-3, the hydraulic servo 50 of the fourth clutch C-4 and the planetary gear DP are disposed on the boss portion 3b extending from the case 4 from the side of the joint of the boss portion 3b with the case 4 in order in the axial direction and operating fluid is supplied from the oil passages provided within the boss portion 3b to the hydraulic servo 40 of the third clutch C-3 and the hydraulic servo 50 of the fourth clutch C-4, the operating fluid may be supplied just by providing pairs of seal rings d7, d8 and d9 between the hydraulic servos 40 and 50 of the third and fourth clutches C-3 and C-4 and the boss portion 3b, respectively and a number of seal rings may be cut as compared to a case of supplying operating fluid to the hydraulic servos 40 and 50 of the third and fourth clutches C-3 and C-4 from the oil passage within the input shaft 12 via the boss portion 3b. Thereby, it becomes possible to prevent the drop of the efficiency and controllability of the automatic transmission 1₃.

Further, because the hydraulic servo 20 of the first clutch C-1 is disposed on the input shaft 12 and adjacent to the planetary gear DP and operating fluid is supplied to the hydraulic servo 20 of the first clutch C-1 from the oil passage provided within the input shaft 12, the operating fluid may be supplied just by providing the respective pairs of seal rings d3, d4, d5 and d6 along the oil passage for supplying the operating fluid from the hydraulic control unit, i.e., between the oil passage within the boss portion 3b and the input shaft 12 and between the hydraulic servo 20 of the first clutch C-1 and the input shaft 12. Accordingly, a number of seal rings may be cut as compared to a case of supplying operating fluid via other members for example. Thereby, it becomes possible to prevent the drop of the efficiency and controllability of the vehicular automatic transmission.

Still more, although the increase of radial size of the first clutch C-1 to the outer peripheral side is limited because the third and fourth clutches C-3 and C-4 are linked to the sun gear S2 of the planetary gear unit PU through the outer peripheral side of the first clutch .C-1 and the link member 101 and others for linking the third and fourth clutches C-3 and C-4 with the sun gear S2 of the planetary gear unit PU pass through the outer peripheral side of the first clutch C-1, the capacity of the first clutch C-1 may be maintained by increasing the size in the inner diametric direction because the first clutch C-1 is disposed on the input shaft 12 as compared to a case of disposing it on the boss portion 3b.

Still more, because the sun gear S2 of the planetary gear unit PU is capable of transmitting the inputted rotation in connection with the fourth clutch C-4, is capable of transmitting the reduced rotation in connection with the third clutch C-3 and is capable of fixing the rotation in connection with the first brake B-1, the sun gear S3 is capable of transmitting the reduced rotation in connection with the first clutch C-1, the carrier CR2 is capable of transmitting the inputted rotation in connection with the second clutch C-2 and is capable of fixing the rotation in connection with the second brake B-2 and the ring gear R3 is linked to the output shaft 15, the multi-stage shift such as the forward eighth speed stage and the reverse second speed stage may be attained.

Because the friction plate 41 of the third clutch C-3 is disposed on the outer peripheral side of the fourth clutch C-4 and the friction plate 21 of the first clutch C-1 is disposed on the outer peripheral side of the ring gear R1, i.e., because the friction plate 41 of the third clutch C-3 that relatively often changes over clamping (see FIG. 4) during traveling is disposed on the outer peripheral side of the fourth clutch C-4 which can be readily lubricated as compared to a case of disposing it on the outer peripheral side of the planetary gear DP, heat of the friction plate 41 of the third clutch C-3 may be readily radiated and the durability of the third clutch C-3 may be improved. Meanwhile, because the friction plate 21 of the first clutch C-1 that is kept engaging from the forward first speed stage to the forward fifth speed stage and that relatively less changes over clamping (see FIG. 4) is disposed on the outer peripheral side of the planetary gear DP, the vehicular automatic transmission 1₃ may be shortened in the axial direction.

Still more, because the automatic transmission 1₃ is built so that the clutch drum 42 of the third clutch C-3 is disposed in linkage on the outer peripheral side of the clutch drum 52 of the fourth clutch C-4 and the hydraulic servo 40 of the third clutch C-3 is disposed in linkage with the clutch drum 52 of the fourth clutch C-4, so as to have the cancel plate 44, the piston member 43 and the oil chamber 46 formed between the cylinder member 44 and the piston member 43 separately from the clutch drum 42 of the third clutch C-3, and so that the piston member 43 of the hydraulic servo 40 of the third clutch C-3 is disposed so as to penetrate through and intersect with the clutch drum 42 of the third clutch C-3 and to face to the friction plate 41 of the third clutch C-3, the clutch drum 42 of the third clutch C-3 for transmitting the rotation of the clutch drum 52 of the fourth clutch C-4 may be relatively shortened and lightened, even though the third clutch C-3 is removable.

Because the return spring 45 of the hydraulic servo 40 of the third clutch C-3 is disposed in the clutch drum 52 of the fourth clutch C-4, i.e. , because the clutch drum 52 of the fourth clutch C-4 may be commonly used also as a cancel plate of the hydraulic servo 40 of the third clutch C-3, it is possible to cut a number of parts and to compactly build the automatic transmission 1₃.

Because the first brake B-1 is disposed axially between the first clutch C-1 and the planetary gear unit PU, the friction plate 41 of the third clutch C-3 may be disposed on the outer peripheral side of the fourth clutch C-4.

Still more, because the automatic transmission 1₃ is built so that the reduced rotation of the ring gear R1 is inputted to the clutch drum 22 of the first clutch C-1 forming the hydraulic servo 20 of the first clutch C-1 when the first clutch C-1 engages, the reduced rotation is not inputted to the clutch drum 22 of the first clutch C-1 when the first clutch C-1 is not engaged even if the driver races the engine in Neutral or Parking range for example and the input shaft 12 rotates. Accordingly, it is possible to prevent the whole hydraulic servo 20 of the first clutch C-1 from rotating and to prevent dragging of the first clutch C-1 which is otherwise caused by a centrifugal hydraulic pressure generated in the oil chamber 26.

Because the automatic transmission 1₃ is built so that the reduced rotation of the ring gear R1 is inputted to the clutch drum 42 of the third clutch C-3 forming the hydraulic servo 40 of the third clutch C-3 when the third clutch C-3 engages, the reduced rotation is not inputted to the clutch drum 42 of the third clutch C-3 when the third clutch C-3 is not engaged even if the driver races the engine in Neutral or Parking range for example and the input shaft 12 rotates. Accordingly, it is possible to prevent the whole hydraulic servo 40 of the third clutch C-3 from rotating and to prevent dragging of the third clutch C-3 which is otherwise caused by a centrifugal hydraulic pressure generated in the oil chamber 46.

Because the automatic transmission 1₃ is built so that the inputted rotation is inputted to the clutch drum 52 of the fourth clutch C-4 forming the hydraulic servo 50 of the fourth clutch C-4 via the carrier CR1 when the fourth clutch C-4 engages, the inputted rotation is not inputted to the clutch drum 52 of the fourth clutch C-4 when the fourth clutch C-4 is not engaged even if the driver races the engine in Neutral or Parking range for example and the input shaft rotates. Accordingly, it is possible to prevent the whole hydraulic servo 50 of the fourth clutch C-4 from rotating and to prevent dragging of the fourth clutch C-4 which is otherwise caused by a centrifugal hydraulic pressure generated in the oil chamber 56.

Still more, because the second clutch C-2 is disposed axially on the opposite side of the planetary gear unit PU from the planetary gear DP, the second clutch C-2 may be linked with the carrier CR2 without entangling with the member for linking the first clutch C-1 with the sun gear S3 and the member for linking the third clutch C-3 with the sun gear S2 for example.

Further, because planetary gear unit PU is the Ravigneaux type planetary gear in which the ring gear R3 is disposed at one side of the outer peripheral side and the friction plate 71 of the second brake B-2 is disposed on the other side of the outer peripheral side of the planetary gear unit PU, the friction plate 71 of the second brake B-2 may be disposed at the position radially overlapping with the planetary gear unit PU while assuring its capacity and decreasing the diameter thereof. Accordingly, the automatic transmission 1₃ may be built both compactly in the radial direction and shortly in the axial direction.

### <Fourth Embodiment>

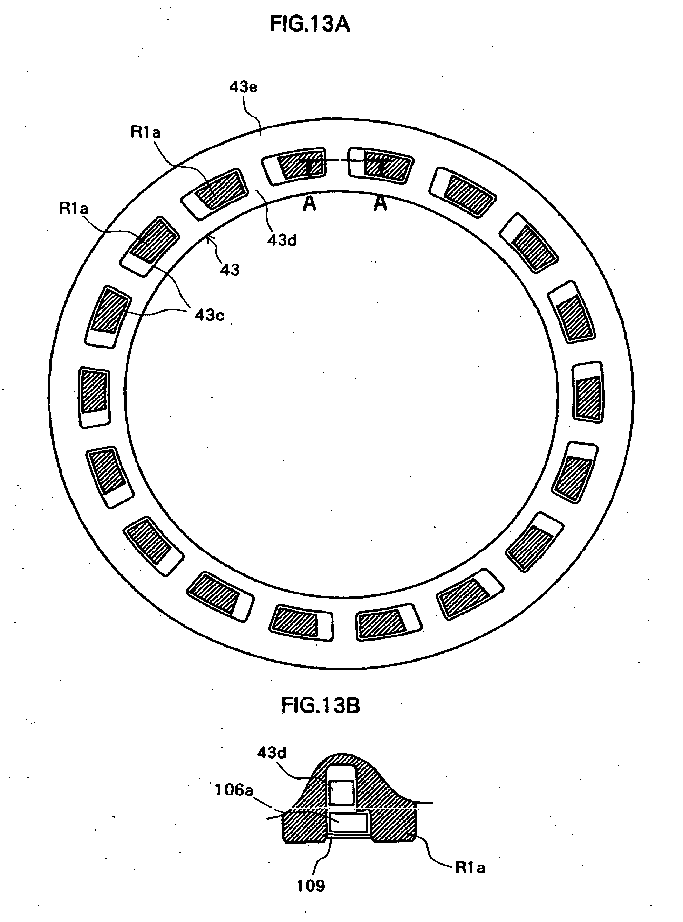

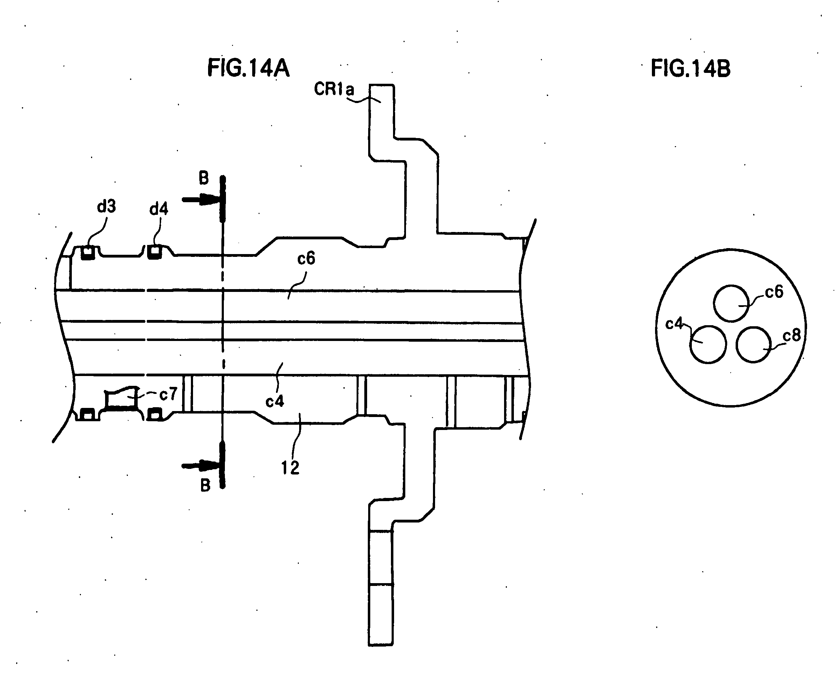

A fourth embodiment, which is a partial modification of the first and third embodiments described above, will be explained with reference to FIGs. 12 through 14. FIG. 12 is an enlarged section view showing a part of an automatic transmission 1₄ of the fourth embodiment, FIGs. 13A and 13B show the ring gear R1 and the piston member 43, wherein FIG. 13A is an enlarged section view seen from its axial direction and FIG. 13B is a section view taken along an arrow A-A in FIG. 13A and FIG. 14A and 14B are section views showing the input shaft, wherein FIG. 14A is a partially enlarged section view thereof and FIG. 14B is a section view taken along an arrow B-B in FIG. 14A.

The automatic transmission 1₄ of the fourth embodiment is provided with a transmission mechanism 2₄. The transmission mechanism 2₄ is different from the transmission mechanisms 2₁ and 2₃ of the first and third embodiments in that the hydraulic servo 20 of the first clutch C-1 and the hydraulic servo 40 of the third clutch C-3 are disposed axially between the planetary gear DP and the planetary gear unit PU, or more specifically, the hydraulic servo 40 of the third clutch C-3 is disposed axially on the side of the planetary gear DP and the hydraulic servo 20 of the first clutch C-1 is disposed on the side of the planetary gear unit PU.

Specifically, the planetary gear unit PU is disposed on the intermediate shaft 13 within the mission case 3 and the fourth clutch C-4, the planetary gear DP, the first clutch C-1 and the third clutch C-3 are disposed axially within the front half of the mission case 3, i.e., on the front side (on one side) of the planetary gear unit PU as shown in FIG. 12. The hydraulic servo 50 of the fourth clutch C-4 is disposed on the front side of the planetary gear DP, i.e., axially on the opposite side of the planetary gear DP from the planetary gear unit PU, and the hydraulic servo 20 of the first clutch C-1 and the hydraulic servo 40 of the third clutch C-3 are disposed axially between the planetary gear DP and the planetary gear unit PU.

Further, the friction plate 61 of the first brake B-1, the friction plate 51 of the fourth clutch C-4, the friction plate 41 of the third clutch C-3 and the friction plate 21 of the first clutch C-1 are disposed relatively on the outer diametric side within the mission case 3 on the input shaft 12 in order from the front side. The friction plate 51 of the fourth clutch C-4 and the hydraulic servo 50 of the fourth clutch C-4 are disposed on the inner peripheral side of the friction plate 61. That is, the friction plate 61 is disposed so as to overlap radially with the outside of the fourth clutch C-4. The planetary gear DP is disposed on the inner diametric side of the friction plate 41 and the friction plate 21 is disposed behind the friction plate 41. The hydraulic servo 40 of the third clutch C-3 and the hydraulic servo 20 of the first clutch C-1 are disposed from the rear side of the planetary gear DP to the inner peripheral side of the friction plate 21.

The planetary gear DP disposed within the mission case 3 is provided with the sun gear S1, the carrier CR1 and the ring gear R1 as described above. Among them, the sun gear S1 is fixed to the first sleeve member 100. This first sleeve member 100 fits around the outer peripheral face of the input shaft 12 and extends forward to be fixed in a body with the inner peripheral face of the boss portion 3b that extends to the rear from the inner diametric side of the rear face of the partition member 3a of the mission case 3 described above. That is, it is a part of the boss portion 3b in a broad sense and the sun gear S1 is fixed to the boss portion 3b so as not to be rotatable.

The carrier CR1 has the rear carrier plate CR1a and the front carrier plate CR1b to rotatably support the pinions P1 and P2. While these pinions P1 and P2 engage from each other, the former pinion P1 engages with the sun gear S1 and the latter pinion P2 engages with the ring gear R1, respectively. The rear carrier plate CR1a is formed so as to extend from the outer peripheral face of the rear part of the input shaft 12 to the outer diametric side in the shape of a flange. Meanwhile, the front carrier plate CR1b is formed in the shape of a ring and has the hub portion CR1c extending forward from its outer periphery. The inner friction plate 51b of the fourth clutch C-4 described later is spline-coupled with the outer peripheral face of the ring gear R1.

The inner friction plate 41b of the third clutch C-3 described later is spline-coupled with the outer peripheral face of the ring gear R1. The hub portion R1a extending to the rear is linked with the rear end of the ring gear R1 as described later in detail. A supporting plate 106 nearly having the shape of a disc for supporting the ring gear R1 is connected to the hub portion R1a. The inner peripheral side of the supporting plate 106 is connected with the second sleeve member 105, the outer peripheral side of the supporting plate 106 is connected with the drum member 108 described later and the outer friction plate 21a of the first clutch C-1 is spline-coupled with the inner peripheral side of the drum member 108.

The fourth clutch C-4 is disposed on the boss portion 3b through an intermediary of the clutch drum 52 just in front of the planetary gear DP described above. The fourth clutch C-4 is provided with the friction plate 51 composed of the outer friction plate 51a and the inner friction plate 51b and the hydraulic servo 50 for engaging/disengaging the friction plate 51. The hydraulic servo 50 has the clutch drum 52, the piston member 53, the cancel plate 54 and the return spring 55 and composes thereby the oil chamber 56 and the cancel oil chamber 57. The clutch drum 52 has the flange portion 52a extending from the inner diametric side to the outer diametric side, the drum portion 52b extending from the outer periphery of the flange portion 52a to the rear part of the almost whole third clutch C-3, and a hub portion 52c whose inner diametric side is rotatably supported by the boss portion 3b.

The inner peripheral side of the front side of the drum portion 52b is disposed on the outer diametric side of the hub portion CR1c of the front carrier plate CR1b of the planetary gear DP described above and the outer friction plate 51a of the friction plate 51 is spline-coupled with the inner peripheral face thereof. The inner friction plate, 51b of the friction plate 51 is spline-coupled with the hub portion CR1c of the carrier CR1 as described above. Still more, the inner friction plate 61b of the first brake B-1 is spline-coupled with the outer peripheral side of the front side of the drum portion 52b. The rear side of the drum portion 52b extends to the outer peripheral side of the third clutch C-3 to be spline-coupled with the outer friction plate 41a of the friction plate 41. The rear end of the drum portion 52b is spline-coupled with the drummember (output side member, link member) 101. The drum member 101 is linked with the fourth sleeve member 111 that is rotatably supported by the third sleeve member 110 that is also rotatably supported on the intermediate shaft 13. The sun gear S2 is formed as a part of the fourth sleeve member 111. That is, the drum member 101 is linked to the sun gear S2 of the planetary gear unit PU. Accordingly, the clutch drum 52 to which the rotation of the fourth clutch C-4 is outputted is linked to the sun gear S2 of the planetary gear unit PU via the drummember 101 which is capable of transmitting the reduced rotation in connection with the third clutch C-3.

Meanwhile, the piston member 53 of the hydraulic servo 50 of the fourth clutch C-4 is disposed behind the flange portion 52a of the clutch drum 52 so as to be movable in the longitudinal direction and composes an oil-tight oil chamber 56 between the clutch drum 52 by two seal rings d1 and d2. Still more, the cancel plate 54 is blocked from moving to the rear side by the snap ring 59 fitted to the hub portion 52c described above. The cancel plate 54 is provided with the return spring 55 in contraction between the piston member 53 disposed in front thereof and composes the oil-tight oil chamber 57 with a seal rings a3.

The third clutch C-3 is provided with the friction plate 41 composed of the outer friction plate 41a and the inner friction plate 41b and the hydraulic servo 40 for engaging/disengaging the friction plate 41. The hydraulic servo 40 has the clutch drum 42 formed by the front side of the supporting plate 106 of the ring gear R1 and the inner peripheral side of the front part of the second sleeve member 105, the piston member 43, the cancel plate 44 and the return spring 45 and thereby forms the oil chamber 46 and the cancel oil chamber 47.

The drum portion R1a of the ring gear R1 is formed in the shape of a comb as shown in FIGs . 13A and 13B and is constructed so as to penetrate through and intersect with a plurality of through holes 43c perforated through the piston member 43. Still more, as shown in FIGS. 12 and 13B, an outer peripheral end 106a of the supporting plate 106 is formed also in the shape of a comb and fits in a manner of engaging with the drum portion R1a of the ring gear R1 from each other. Further, the ring gear R1 is fixed to the supporting plate 106 in the longitudinal direction, i.e., in the axial direction, by a tapered snap ring 109. That is, the clutch drum of the hydraulic servo 40 of the third clutch C-3 is formed by the ring gear R1, the supporting plate 106 and the second sleeve member 105.

Further, as shown in FIGs. 12 and FIG. 13A, the piston member 43 slidably penetrates through and intersects with the ring gear R1 through the through hole 43c as described above. That is, the piston member 43 is capable of pressing the friction plate 41 because an abutting portion 43e for abutting and pressing the friction plate 41 through an intermediary of a link portion 43d becomes movable in the axial direction.

Thus, the piston member 43 of the third clutch C-3 is disposed to be movable in the longitudinal direction as against the positioning member (hereinafter referred to as the supporting plate) 106 and the second sleeve member 105 as shown in FIG. 12 and composes the oil-tight oil chamber 46 between the supporting plate 106 and the second sleeve member 105, i.e., between the cylinder portion 42, by two seal rings a5 and a6. Still more, the cancel plate 44 is blocked from moving to the rear side by the snap ring 49 fitted to the second sleeve member 105 described above. The cancel plate 44 is provided with the return spring 45 in contraction between the piston member 43 disposed behind it and composes the oil-tight cancel oil chamber 47 by the seal ring a4.

The first clutch C-1 is disposed behind the third clutch C-3, i.e., on the rear side on the opposite side of the supporting plate 106 from the third clutch C-3, and has the friction plate 21 composed of the outer friction plate 21a and the inner friction plate 21b and the hydraulic servo 20 for engaging/disengaging the friction plate 21. The outer friction plate 21a is spline-coupled with the drum member 108 connected to an outer peripheral end 106a of the supporting plate 106 by means of welding for example. That is, the clutch drum of the hydraulic servo 20 of the first clutch C-1 is formed by the drum member 108, the supporting plate 106 and the second sleeve member 105. Further, because the drum member 108 is connected to the outer peripheral end 106a of the supporting plate 106, it is connected to the ring gear R1 through an intermediary of the supporting plate 106. Meanwhile, the inner friction plate 21b is spline-coupled with a drum portion 102b of the link member 102. The link member 102 has the sleeve-like hub portion 102a extending to the rear on the inner peripheral side thereof and is connected to the third sleeve member 110 rotatably supported on the intermediate shaft 13. The sun gear S3 is formed as a part of the third sleeve member 110. That is, the link member 102 is linked to the sun gear S3 through an intermediary of the third sleeve member 110.

The hydraulic servo 20 has the cylinder portion 22 formed by the rear side of the supporting plate 106 of the ring gear R1 and the inner peripheral side of the rear part of the second sleeve member 105, the piston member 23, the cancel plate 24 and the return spring 25 and composes the oil chamber 26 and the cancel oil chamber 27 with them. The piston member 23 is disposed so as to be movable in the longitudinal direction as against the positioning member 106 and the second sleeve member 105 and composes the oil-tight oil chamber 26 between the positioning member 106 and the second sleeve member 105, i.e., between the cylinder portion 22, by two seal rings a7 and a8. The cancel plate 24 is blocked from moving to the rear by the snap ring 29 fitted to the second sleeve member 105 described above. The cancel plate 24 is provided with the return spring 25 in contraction between the piston member 23 disposed behind thereof and composes the oil-tight cancel oil chamber 27 by the seal ring a9.

Meanwhile, the carrier CR2 of the planetary gear unit PU supported through an intermediary of the hub portion CR2a is disposed on the outer peripheral side of the fourth sleeve member 111 described above and the one-way clutch F-1 is disposed further on the outer peripheral side of the hub portion CR2a. The one-way clutch F-1 is provided with, in order from the inner peripheral side to the outer peripheral side, an inner race 112 supported by the hub portion CR2a, a sprag mechanism 113 and an outer race 114 spline-coupled with the inner peripheral side of the mission case 3. The second brake B-2 provided with the friction plate 31 composed of an outer friction plate 31a and an inner friction plate 31b is disposed behind the outer race 114 such that the outer friction plate 31a is spline-coupled with the inner peripheral side of the mission case 3 and the inner friction plate 31b is spline-coupled with the hub portion CR2b of the carrier CR2, respectively.

Next, the structure of oil passages of each component will be explained. The input shaft 12 is provided with four oil passages c2, c4, c6 and c8 perforated in the axial direction. Specifically, the oil passages c4, c6 and c8 which are parallel with the axial direction are perforated in the nearly rear half part of the input shaft 12 at the positions almost equal distance in the circumferential direction such that the center axes of the oil passages form an equilateral triangle as shown in FIGs. 14A and 14B. Then, the oil passage c2 communicates with the outer peripheral face of the input shaft 12 through the oil passage c1 in the radial direction, the oil passage c6 communicates with it through the oil passages c5 and c14 in the radial direction, the oil passage c8 communicates with it through the oil passages c7 and c13 and the oil passage c4 communicates with it through the oil passage c3 and the oil passages c9 through c12 in the radial direction, respectively.

The oil passages c15 and c17 are perforated through the boss portion 3b of the partition member 3a in the radial direction in order from the front side. The oil passages c16 and c18 are perforated radially through the hub portion 52c of the clutch drum 52 of the fourth clutch C-4 positioned on the outer peripheral side of the boss portion 3b in order from the front side. The oil passages c19, c20, c21 and c22 are perforated radially through the second sleeve member 105 positioned on the outer peripheral side of the rear part of the input shaft 12. Further, the oil passage c23 is perforated at the position corresponding to the oil passage c22 of the second sleeve member 105 on the rear side of the input shaft 12. The oil passage c23 communicates with the oil passage c30 perforated through the intermediate shaft 13.

Meanwhile, an oil groove not shown is formed on the outer peripheral side of the sleeve member 100 and composes the oil passage between the boss portion 3b. That is, the oil passage is formed within the boss portion 3b in a broad sense (hereinafter referred to as 'the oil passage within the boss portion 3b'). The seal rings d1 through d4 for sealing the boss portion 3b (sleeve member 100) and the oil passages c1, c3, c5 and c7 are provided on the outer peripheral side of the input shaft 12 and the seal rings d7, d8 and d9 for sealing the oil passages c13 and c20 of the second sleeve member 105 and the oil passages c14 and c21 are provided on the outer peripheral side of the rear part of the input shaft 12. Still more, the seal rings d5 and d6 for sealing the oil passages c15 of the boss portion 3b and the oil passage c16 of the hub portion 52c of the clutch drum 52 are provided on the outer peripheral side of the boss portion 3b.

It is noted that although a plurality of oil passages for supplying lubricant oil are perforated through the intermediate shaft 13, the third sleeve member 110 and the fourth sleeve member 111, their explanation will be omitted here because their structure is ordinary one. Operating fluid is supplied from the hydraulic control unit to the hydraulic servo 30 of the second clutch C-2 via the oil passage c24 provided in the partition wall 3c of the mission case 3, the oil passage c25 provided within the output shaft 15 and the oil passage c26 provided within the intermediate (input) shaft 13 (see FIG. 15 or 16 for example).

Next, the supply of lubricant oil will be explained. When lubricant oil is supplied to the oil passages within the boss portion 3b based on a hydraulic pressure generated by the oil pump 8 described above, the lubricant oil is splashed to the outer peripheral side of the boss portion 3b via the oil passage c17. Similarly to that, the lubricant oil supplied to the oil passages within the boss portion 3b by the oil pump 8 is supplied to the oil passages c3 and c4 of the input shaft 12 in a manner of being sealed by the seal rings d1 and d2. It is then supplied to the rear side via the oil passage c4 and is splashed to the outer peripheral side of the input shaft 12 from the oil passages c9, c10, c11 and c12. Thereby, each member within the mission case 3, i.e., each gear of the planetary gear DP, each member of the first clutch C-1, each member of the third clutch C-3, each member of the fourth clutch C-4, each member of the first brake B-1 and specifically the friction plates 21, 41, 51 and 61 are lubricated. It is noted that oil within the cancel oil chambers 47 and 57 of the third and fourth clutches C-3 and C-4 for example is also supplied in the same manner with the lubricant oil via the oil passages c18 and c19 and lubricates each member within the mission case 3 in a manner of joining with other lubricant oil when it is to be emitted. Still more, oil within the cancel oil chamber 27 of the first clutch C-1 for example is lubricant oil, which has been supplied to the oil passage c30 of the intermediate shaft 13, and which is to be supplied via the oil passages c23 and c22. It lubricates each member within the mission case 3 in a manner of joining with other lubricant oil when it is to be emitted.

Next, the supply of operating fluid will be explained. The hydraulic control unit not shown generates and controls engaging pressures of the first clutch C-1, the second clutch C-2, the third clutch C-3, the fourth clutch C-4, the first brake B-1, the second brake B-2 and the lockup clutch 10 based on the hydraulic pressure caused by the oil pump 8 for example. Each operating fluid is supplied to each oil passage provided separately within the boss portion 3b (within the first sleeve member 100) from around the joint of the boss portion 3b on the front side based on the engaging hydraulic pressure of the lockup clutch 10, the first clutch C-1, the third and fourth clutches C-3 and C-4 among them.

When the operating fluid for engaging the lockup clutch 10 is supplied to the oil passage within the boss portion 3b, it is supplied from the oil passage within the boss portion 3b to the oil passage c1 in a manner of being sealed by seal rings not shown. The operating fluid supplied to the oil passage c1 is supplied to the friction plate of the lockup clutch 10 via the oil passage c2 and acts on the friction plate. Then, the flange-like member provided around the input shaft 11 presses the friction plate and the lockup clutch 10 engages as a result (see FIG. 15 or 16 for example). It is noted that the operating fluid is emitted in reverse via the oil passages c2 and c1 when the lockup clutch 10 is disengaged based on the hydraulic control made by the hydraulic control unit.

When the operating fluid for engaging the fourth clutch C-4 is supplied to the oil passage within the boss portion 3b, it is supplied to the oil passage c15 from the oil passage in the axial direction not shown within the boss portion 3b. The operating fluid supplied to the oil passage c15 is supplied to the oil passage c16 in a manner of being sealed by the seal rings d5 and d6, i.e., from the oil passage c15 in the boss portion 3b to the oil passage c16 of the clutch drum 52 which are mutually and relatively rotatable. Then, the operating fluid is supplied to the oil chamber 56 of the hydraulic servo 50 of the fourth clutch C-4 via the oil passage c16. Thus, the piston member 53 is pressed backward and the friction plate 51 is pressed, i.e., the fourth clutch C-4 engages. It is noted that when the fourth clutch C-4 is disengaged based on the hydraulic control made by the hydraulic control unit, the piston member 53 is pressed forward by an urging force of the return spring 55 and thereby, the operating fluid of the oil chamber 56 is emitted in reverse via the oil passages c16, c15 and the oil passage in the axial direction within the boss portion 3b.

When the operating fluid for engaging the third clutch C-3 is supplied to the oil passage within the boss portion 3b, it is supplied to the oil passage c7 of the input shaft 12 from the oil passage in the axial direction not shown within the boss portion 3b in a manner of being sealed by seal rings d3 and d4. The operating fluid supplied to the oil passage c7 is supplied to the outer peripheral part on the rear side of the input shaft 12. The operating fluid supplied to the oil passage c13 is supplied to the oil passage c20 of the second sleeve member 105 in a manner of being sealed by the seal rings d7 and d8, i.e., from the oil passage c13 of the input shaft 12 to the oil passage c20 of the second sleeve member 105 which are mutually and relatively rotatable. Then, the operating fluid is supplied to the oil chamber 46 of the hydraulic servo 40 of the third clutch C-3 via the oil passage c20. Thus, the piston member 43 is pressed forward and the friction plate 41 is pressed by the drum portion 43b, i.e., the third clutch C-3 engages. It is noted that when the third clutch C-3 is disengaged based on the hydraulic control made by the hydraulic control unit, the piston member 43 is pressed forward by an urging force of the return spring 45 and thereby, the operating fluid in the oil chamber 46 is emitted in reverse via the oil passages c20, c13, c8, c7 and the oil passage in the axial direction within the boss portion 3b.

When the operating fluid for engaging the first clutch C-1 is supplied to the oil passage within the boss portion 3b, it is supplied to the oil passage c5 in the input shaft 12 from the oil passage in the axial direction not shown within the boss portion 3b in a manner of being sealed by the seal rings d2 and d3 similarly to the operating fluid of the third clutch C-3. The operating fluid supplied to the oil passage c5 is supplied to the outer peripheral part on the rear side of the input shaft 12 via the oil passages c6 and c14. The operating fluid supplied to the oil passage c14 is supplied to the oil passage c21 of the second sleeve member 105 in a manner of being sealed by the seal rings d8 and d9, i.e., the operating fluid is supplied from the oil passage c14 within the input shaft 12 to the oil passage c21 of the second sleeve member 105 which are mutually and relatively rotatable. Then, the operating fluid is supplied to the oil chamber 26 of the hydraulic servo 20 of the first clutch C-1 via the oil passage c21. Thus, the piston member 23 is pressed backward and the drum portion 23b presses the friction plate 21, i.e., the first clutch C-1 engages. It is noted that when the first clutch C-1 is disengaged based on the hydraulic control made by the hydraulic control unit, the piston member 23 is pressed forward by an urging force of the return spring 25 and thereby, the operating fluid in the oil chamber 26 is emitted in reverse via the oil passages c21, c14, c5 and the oil passage in the axial direction within the boss portion 3b.

According to the inventive automatic transmission 1₄ described above, the fourth clutch C-4 is linked with the sun gear S2 of the planetary gear unit PU via the output side members (the clutch drum 42 and the drum-like member 101 and the sleeve member 104 which turn out to be link members) of the third clutch C-3, so that the output side members turn out to be output side members of the two clutches transmitting different rotations, i.e., they may be shared in common as one rotary member. Thereby, the automatic transmission 1₄ may be compactly built.

Still more, because the hydraulic servo 50 of the fourth clutch C-4 is disposed axially on the opposite side of the planetary gear DP from the planetary gear unit PU and on the boss portion 3b extending from the case 4 to supply the operating fluid to the hydraulic servo 50 of the fourth clutch C-4 from the oil passage within the boss portion 3b, a number of seal rings may be cut as compared to a case of disposing the hydraulic servo 50 of the fourth clutch C-4 on the input shaft 12 through an intermediary of a member having another speed of rotation , i.e., as compared to a case of supplying the operating fluid via the other member for example. Thereby, it becomes possible to prevent the drop of the efficiency and controllability of the automatic transmission 1₄.

By the way, although it is necessary to provide a number of clutches for example in order to build the automatic transmission capable of attaining the multi-stage shift as described above, there is a problem on the other hand that the automatic transmission is required to be compact from the aspect of mountability in mounting the automatic transmission in a vehicle. While the boss portion extending from the case is generally disposed on the outer peripheral side of the input shaft on the front side of the transmission mechanism of the automatic transmission to pass lubricant oil of oil pumps and operating fluid from the hydraulic control unit to the input shaft, there is a problem to dispose a plurality of clutches on the outer peripheral side on the boss portion located on the outer peripheral side of the input shaft that it hampers the compactness of the automatic transmission in the radial direction.

However, according to the inventive vehicular automatic transmission 1₄, the planetary gear DP, the first and third clutches C-1 and C-3, the fourth clutch C-4 are disposed axially on one side of the planetary gear unit PU, the hydraulic servo 50 of the fourth clutch C-4 is disposed axially on the opposite side of the planetary gear DP from the planetary gear unit PU and the hydraulic servos 20 and 40 of the first and third clutches C-1 and C-3 are disposed axially between the planetary gear unit PU and the planetary gear DP, so that the vehicular automatic transmission 1₄ may be compactly built in the radial direction as compared to a case of disposing the hydraulic servos of the plurality of clutches on the boss portion 3b extending from the case 4 for example even though it is capable of attaining the forward eighth speed and reverse second speed stages for example.

Still more, because the friction plate 61 of the first brake B-1 is disposed so as to overlap with the outside in the radial direction of the fourth clutch C-4, i.e., because the friction plate 61 of the first brake B-1 is disposed on the outer peripheral side of the fourth clutch C-4 whose capacity is relatively small as compared to the clutch that transmits reduced rotation, the axial seize of the vehicular automatic transmission 1₄ may be reduced without increasing the radial size thereof by disposing the friction plate 61 of the first brake B-1 so as to overlap with the fourth clutch C-4.

Further, because the second clutch C-2 is disposed on the opposite side of the planetary gear unit PU from the planetary gear DP, the first and third clutches C-1 and C-3 may be disposed adjacent to the planetary gear DP without interposing the second clutch C-2 between the planetary gear DP and the planetary gear unit PU and the planetary gear DP may be disposed relatively closely to the planetary gear unit PU, the transmitting members, e.g., the ring gear R1, the link member 101, the link member 102 and the drum member 108, for transmitting a reduced rotation, i.e., for transmitting a large torque, may be shortened. Thereby, the vehicular automatic transmission 1₄ may be lightened and the controllability thereof may be improved by cutting its inertia.

Still more, because the fourth clutch C-4 and the planetary gear DP are disposed on the boss portion 3b extending from the wall 3a on one side of the case 4, oil is supplied to the hydraulic servo 50 of the fourth clutch C-4 from the oil passage c15 provided within the boss portion 3b and oil is supplied to the hydraulic servo 20 of the second clutch C-2 from the oil passage c50 provided in the wall 3c on the other side of the case 4, the fourth clutch C-4 and the second clutch C-2 may be disposed separately from the planetary gear unit PU. Accordingly, it becomes possible to prevent the oil passages from concentrating within the case 4 and to improve the freedom of design. Further, oil may be supplied to the hydraulic servos 30 and 50 of the second and fourth clutches C-2 and C-4 just by providing a pair (the least) of seal rings. Accordingly, it becomes possible to improve the power transmitting efficiency of the vehicular automatic transmission 1₄ by reducing sliding resistance of the seal rings.

Still more, because the link member 101 for linking the third clutch C-3 with the sun gear S2. is disposed so as to pass through the outer peripheral side of the first clutch C-1, the fourth clutch C-4 and the output side members 52 and 101 of the third clutch C-3 disposed on the opposite sides of the planetary gear DP may be linked without complicating the members and the vehicular automatic transmission 1₄ may be compactly built.

Because the friction plate 41 of the third clutch C-3 is disposed on the outer peripheral side of the ring gear R1 of the planetary gear DP, the supporting plate 106s for supporting the ring gear R1 of the planetary gear DP and the second sleeve member 105 are disposed on the input shaft 12, the cylinder portion 22 of the hydraulic servo 20 of the first clutch C-1 and the clutch drum 42 of the hydraulic servo 40 of the third clutch C-3 are disposed axially on the both sides of the supporting plate 106 and the piston member 43 of the hydraulic servo 40 of the third clutch C-3 and the ring gear R1 of the planetary gear DP are built so that they penetrate through and intersect with each other and so that the piston member 43 is slidable against the ring gear R1, the supporting plate 106 and the second sleeve member 105, the supporting plate 106 and the second sleeve member 105 may be used in common as the cylinder portions 22 and 42 of the first and third clutches C-1 and C-3. Accordingly, the vehicular automatic transmission may be built so that the third clutch C-3 is removable while compacting in the axial direction.

Further, because the hydraulic servo 50 of the fourth clutch C-4 and the hydraulic servos 20 and 40 of the first and third clutches C-1 and C-2 are separately disposed and the hydraulic servos 20 and 40 of the first and third clutches C-1 and C-3 are disposed on the supporting plate 106 and the second sleeve member 105, it becomes possible to prevent the clutch drums and pistons, e.g., the piston member 23, the piston member 43, the second sleeve member 105, the positioning member 106, the drum member 108 and the ring gear R1, of the hydraulic servos 20 and 40 of the first and third clutches C-1 and C-3 from rotating due to the inputted rotation of the input shaft 12 and to prevent the seal rings d7, d8 and d9 provided for the hydraulic servos 20 and 40 of the first and third clutches C-1 and C-3 from causing unnecessary sliding resistance. Accordingly, it becomes possible to prevent the drop of the power transmitting efficiency of the vehicular automatic transmission 1₄.

Further, because the second sleeve member 105 becomes the cylinder portions 22 and 42 of the hydraulic servos 20 and 40 of the first and third clutches C-1 and C-3, i.e., because the oil chambers 26 and 46 of their hydraulic servos 20 and 40 are provided on the second sleeve member 105, seal rings d7, d8 an d9 need to be provided just between the input shaft 12 and the second sleeve member 105 to supply operating fluid to those oil chambers 26 and 46. Accordingly, the diameter of the seal rings d7, d8 and d9 may be cut and the sliding resistance of those seal rings d7, d8 and d9 may be cut as compared to a case of providing the seal rings on the boss portion 3b. Thereby, the power transmitting efficiency of the vehicular automatic transmission 1₄ may be improved.

Still more, because the second sleeve member 105 composing the hydraulic servos 20 and 40 is disposed on the input shaft 12, i.e., because the second sleeve member 105 is disposed directly on the input shaft 12 without interposing a member such as the boss portion 3b between the second sleeve member 105, which turns out to be the clutch drum, and the input shaft 12, a pressure receiving area of the oil chamber 26 and 46 of the hydraulic servos 20 and 40 of the first and third clutches C-1 and C-3 may be increased as compared to a case of disposing the hydraulic servos of the clutches on the boss portion 3b. That is, the capacity of the first and third clutches C-1 and C-3 that transmit the reduced rotation, i.e., a higher torque than that of the rotation of the input shaft 12, may be increased.

Because the end portion R1a of the ring gear R1 of the planetary gear DP is formed in the shape of a comb and a plurality of through holes 43c to which the comb-like end portion R1a of the ring gear R1 of the planetary gear DP penetrates through and intersects are formed through the piston member 4 3 of the hydraulic servo 40 of the third clutch C-3, it becomes possible to arrange so that the piston member 43 of the hydraulic servo 40 of the third clutch C-3 is slidable against the ring gear R1, the supporting plate 106 and the second sleeve member 105 and so that the third clutch is removable.

Because the outer peripheral end portion 106a of the supporting plate 106 is formed in the shape of a comb, the comb-like end portion R1a of the ring gear R1 of the planetary gear DP is fitted into the comb-like outer peripheral end portion 106a of the supporting plate 106 and the ring gear R1 of the planetary gear DP is fixed to the supporting plate 106 in the axial direction by the tapered snap ring 109, the ring gear R1 may be fixed to and supported by the supporting plate 106 and the second sleeve member 105.

Because the hydraulic servo 20 of the first clutch C-1 and the hydraulic servo 40 of the third clutch C-3 are disposed on the input shaft 12 and operating fluid is supplied to the hydraulic servo 20 of the first clutch C-1 and the hydraulic servo 40 of the third clutch C-3 via oil passages c7, c8 and c13 provided within the input shaft 12, operating fluid may be supplied to the hydraulic servos 20 and 40 of the first and third clutches C-1 and C-3 just by providing two pairs of seal rings d1, d2, d3, d4, d7, d8 and d9 between the boss portion 3b and the input shaft 12 and between the hydraulic servos 20 and 40 and the input shaft 12. Because the diameter of the seal rings may be reduced as compared to a case of disposing the first and third clutches C-1 and C-3 on the boss portion 3b, the sliding resistance caused by the seal rings may be cut and the power transmitting efficiency of the vehicular automatic transmission1₄ may be improved.

Still more, because the first oil passage c6 for supplying operating fluid to the hydraulic servo 20 of the first clutch C-1 in the axial direction, the second oil passage c8 for supplying operating fluid to the hydraulic servo 40 of the third clutch C-3 in the axial direction and the third oil passage c4 for supplying lubricant oil in the axial direction are formed within the input shaft 12 in parallel with the axial direction, lubricant oil may be supplied from the input shaft 12 even though operating fluid may be supplied to the hydraulic servos 20 and 40 of the first and third clutches C-1 and C-3.

Further, because it is arranged so that the reduced rotation of the ring gear R1 is inputted to the clutch drum 42 of the third clutch C-3 forming the hydraulic servo 40 of the third clutch C-3 when the third clutch C-3 engages, the reduced rotation is not inputted to the clutch drum 42 of the third clutch C-3 when the third clutch C-3 is not engaged even if the driver races the engine in Neutral or Parking range and the input shaft rotates for example. Accordingly, it is possible to prevent the whole hydraulic servo 40 of the third clutch C-3 from rotating and to prevent dragging of the third clutch C-3 which is otherwise caused by a centrifugal hydraulic pressure generated in the oil chamber 46.

Still more, because it is arranged so that the inputted rotation is inputted to the clutch drum 52 of the fourth clutch C-4 forming the hydraulic servo 50 of the fourth clutch C-4 via the carrier CR1 when the fourth clutch C-4 engages, the inputted rotation is not inputted to the clutch drum 52 of the fourth clutch C-4 when the fourth clutch C-4 is not engaged even if the driver races the engine in Neutral or Parking range and the input shaft rotates for example. Accordingly, it is possible to prevent the whole hydraulic servo 50 of the fourth clutch C-4 from rotating and to prevent dragging of the fourth clutch C-4 which is otherwise caused by a centrifugal hydraulic pressure generated in the oil chamber 56.

### <5th Embodiment>

A 5th embodiment, which is a partial modification of the 4th embodiment described above, will be explained with reference to FIG. 15. FIG. 15 is a section view showing an automatic transmission 1₅ of the 5th embodiment. It is noted that in the 5-th embodiment explained below, components having the same structure with those of the automatic transmission 1₄ of the 4-th embodiment will be denoted by the same reference characters and an explanation thereof will be omitted here.

The automatic transmission 1₅ of the 5th embodiment has a transmission mechanism 2₅ which is different from the automatic transmission 1₄ of the 4th embodiment in that the disposition of the hydraulic servo 20 of the first clutch C-1 and the hydraulic servo 40 of the third clutch C-3 is reversed, i.e., the hydraulic servo 20 of the first clutch C-1 is disposed axially on the side of the planetary gear DP and the hydraulic servo 40 of the third clutch C-3 is disposed on the side of the planetary gear unit PU. Still more, the ringed support wall 120 is disposed between the planetary gear unit PU and the first and third clutches C-1 and C-3, or more specifically, between the one-way clutch F-1 and the hydraulic servo 40 of the third clutch C-3.

That is, the friction plate 41 of the third clutch C-3 is disposed on the outer peripheral side of the ring gear R1 of the planetary gear DP and the outer peripheral side of the friction plate 41 is spline-coupled with the drum member 101 for linking the clutch drum 52 of the fourth clutch C-4 with the sun gear S2 of the planetary gear unit PU via the fourth sleeve member 111. That is, the drum member 101 becomes a clutch drum of the third clutch C-3. Then, the hydraulic servo 40 of the third clutch C-3 is disposed on the inner peripheral side of the rear part of the drum member 101.

The ring gear R1 is connected with the supporting plate 106 by means of welding for example to be fixed and supported. A drum member 108 spline-coupled with the outer friction plate of the friction plate 21 of the first clutch C-1 is connected on the outer peripheral side of the supporting plate 106. That is, the supporting plate 106 and the drum member 108 form a clutch drum of the first clutch C-1. Then, the hydraulic servo 20 of the first clutch C-1 is disposed on the inner peripheral side of the rear part of the supporting plate 106.

Meanwhile, the support wall 120 having a sleeve portion 120a on the inner peripheral side thereof is disposed on the outer peripheral side of the fourth sleeve member 111. The outer peripheral side of the support wall 120 is spline-coupled with the inner peripheral side of the mission case 3 so as not to be rotatable. An oil passage c40 communicating with the hydraulic control unit is perforated in the radial direction within the support wall 120. An oil passage c41 is perforated at the position corresponding to the inner peripheral side of the oil passage c40 of the support wall 120 and the oil passage c40 communicates with the oil passage c 41 in a manner of being sealed by the seal rings d10 and d11. Then, an oil passage c42 communicating with the oil passage c41 and an oil passage c43 communicating with the oil passage c42 are perforated in the fourth sleeve member 111. The oil passage c43 communicates with the operating oil chamber 46 of the hydraulic servo 40 of the third clutch C-3. That is, the oil passage c40 within the support wall 120 communicates with the oil chamber 46 of the hydraulic servo 40 of the third clutch C-3.

That is, when operating fluid for engaging the third clutch C-3 is supplied to the oil passage c40 of the support wall 120, it is supplied to the oil passage c41 of the fourth sleeve member 111 in a manner of being sealed by the seal rings d10 and d11 from the oil passage c40. That is, operating fluid is supplied from the oil passage c40 of the support wall 120 to the oil passage c41 of the fourth sleeve member 111 which relatively rotate each other. The operating fluid supplied to the oil passage c41 is supplied to the operating oil chamber of the hydraulic servo 40 of the third clutch C-3 via oil passages c42 and c43. Then, the piston member is pressed forward and the friction plate 41 is pressed, thus engaging the third clutch C-3. It is noted that when the third clutch C-3 is disengaged based on hydraulic control made by the hydraulic control unit, the piston member is pressed forward by being urged by the return spring and thereby the operating fluid in the operating oil chamber is emitted in reverse via the oil passages c43, c42, c41 and c40.

It is noted that the operating fluid supplied to the hydraulic servo 40 of the third clutch C-3 is supplied not via the oil passage within the input shaft 12 as described above but via the oil passages within the support wall 120 and the fourth sleeve member 111, so that no oil passage for the hydraulic servo 40 of the third clutch C-3 needs to be perforated in the input shaft 12. Therefore, only the oil passages c5, c6 and c14 for supplying operating fluid to the hydraulic servo 20 of the first clutch C-1 described above and the oil passages c3, c4 and c9 through c12 for supplying lubricant oil are perforated in the input shaft 12 of the automatic transmission 1₅ of the fifth embodiment. That is, only the two oil passages c4 and c6 in the axial direction are perforated in parallel.

According to the inventive vehicular automatic transmission 1₅ described above, the fourth clutch C-4 is linked to the sun gear S2 of the planetary gear unit PU through an intermediary of the output side members (the clutch drum 42 and the drum member 101 and the sleeve member 104 which turn out to be the link member) of the third clutch C-3, so that the output side members become the output side members of the two clutches that transmit different rotations. That is, they may be commonly used as one rotary member. Thereby, the vehicular automatic transmission 1₅ may be compactly built.

Still more, the hydraulic servo 50 of the fourth clutch C-4 is disposed axially on the opposite side of the planetary gear DP from the planetary gear unit PU and is disposed on the boss portion 3b extending from the case 4 and operating fluid is supplied to the hydraulic servo 50 of the fourth clutch C-4 from the oil passage within the boss portion 3b, so that a number of seal rings may be cut as compared to a case of disposing the hydraulic servo 50 of the fourth clutch C-4 on the input shaft 12 through an intermediary of a member having another speed of rotation, i.e., as compared to a case of supplying operating fluid through an intermediary of another member. Thereby, it becomes possible to prevent the drop of the efficiency and controllability of the vehicular automatic transmission 1₅.

By the way, although it is necessary to provide a number of clutches for example in order to build the automatic transmission capable of attaining the multi-stage shift as described above, there is a problem on the other hand that the automatic transmission is required to be compact from the aspect of mountability in mounting the automatic transmission in a vehicle. While the boss portion extending from the case is generally disposed on the outer peripheral side of the input shaft on the front side of the transmission mechanism of the automatic transmission to pass lubricant oil of the oil pump and operating fluid from the hydraulic control unit to the input shaft, it is a problem to dispose a plurality of clutches on the outer peripheral side on the boss portion located on the outer peripheral side of the input shaft because it hampers the compactness of the automatic transmission in the radial direction.

However, according to the inventive vehicular automatic transmission 1₅, the planetary gear DP, the first and third clutches C-1 and C-3 and the fourth clutch C-4 are disposed axially on one side of the planetary gear unit PU, the hydraulic servo 50 of the fourth clutch C-4 is disposed axially on the opposite side of the planetary gear DP from the planetary gear unit PU and the hydraulic servos 20 and 40 of the first and third clutches C-1 and C-3 are disposed axially between the planetary gear unit PU and the planetary gear DP, so that the vehicular automatic transmission 1₅ may be compactly built in the radial direction, as compared to a case of disposing the hydraulic servos of the plurality of clutches on the boss portion 3b extending from the case 4 for example, even though it is capable of attaining the forward eighth speed and reverse second speed stages for example.

Still more, because the friction plate 61 of the first brake B-1 is disposed so as to overlap with the outside in the radial direction of the fourth clutch C-4, i.e., because the friction plate 61 of the first brake B-1 is disposed on the outer peripheral side of the fourth clutch C-4 whose capacity is relatively small as compared to the clutch that transmits a reduced rotation, .the axial size of the vehicular automatic transmission 1₅ may be reduced.without increasing the radial size thereof by disposing the friction plate 61 of the first brake B-1 so as to overlap with the fourth clutch C-4.

Further, the second clutch C-2 is disposed axially on the opposite side of the planetary gear unit PU from the planetary gear DP, the first and third clutches C-1 and C-3 may be disposed adjacent to the planetary gear DP without interposing the second clutch C-2 between the planetary gear DP and the planetary gear unit PU and the planetary gear DP may be disposed relatively closely with the planetary gear unit PU, so that the transmitting members, e.g., the ring gear R1, the link member 101, the link member 102 and the drum member 108, for transmitting reduced rotation, i.e., for transmitting a large torque, may be shortened. Thereby, the vehicular automatic transmission 1₅ may be lightened and the controllability thereof may be improved by cutting its inertia.

Still more, the fourth clutch C-4 and the planetary gear DP are disposed on the boss portion 3b extending from the wall 3a on one side of the case 4, oil is supplied to the hydraulic servo 50 of the fourth clutch C-4 from the oil passage c15 provided within the boss portion 3b and oil is supplied to the hydraulic servo 20 of the second clutch C-2 from the oil passage c50 provided in the wall 3c on the other side of the case 4, so that the fourth clutch C-4 and the second clutch C-2 may be disposed separately from the planetary gear unit PU. Accordingly, it becomes possible to prevent the oil passages from concentrating within the case 4 and to improve the freedom of design. Further, oil may be supplied to the hydraulic servos 30 and 50 of the second and fourth clutches C-2 and C-4 just by providing a pair (the least) of seal rings. Accordingly, it becomes possible to improve the power transmitting efficiency of the vehicular automatic transmission 1₅ by reducing sliding resistance of the seal rings.

Still more, because the hydraulic servo 20 of the first clutch C-1 is disposed on the side of the planetary gear DP and the hydraulic servo 40 of the third clutch C-3 is disposed on the side of the planetary gear unit PU, it becomes possible to dispose the hydraulic servos 20 and 40 of the first and third clutches C-1 and C-3 axially between the planetary gear unit PU and the planetary gear DP.

Furthermore, because the friction plate 41 of the third clutch C-3 is disposed on the outer peripheral side of the ring gear R1 of the planetary gear DP and the first clutch C-1 is disposed on the inner peripheral side of the clutch drum (drum member) 101 of the third clutch C-3, the hydraulic servo 20 and/or the friction plate 21 of the first clutch C-1 may be relatively enlarged in the radial direction and thereby the capacity of the first clutch C-1 may be increased, as compared to a case of disposing the friction plate 41 of the third clutch C-3 on the outer peripheral side of the first clutch C-1, even though the vehicular automatic transmission 1₅ may be compactly built in the radial direction.

Still more, the hydraulic servo 50 of the fourth clutch C-4 is disposed on the boss portion-3b extending from the case 4, the hydraulic servo 20 of the first clutch C-1 and the hydraulic servo 40 of the third clutch C-3 are disposed on the input shaft 12, the support wall 120 fixed to the case 4 is disposed axially between the planetary gear unit PU and the first clutch C-1 and the third clutch C-3, operating fluid is supplied to the hydraulic servo 50 of the fourth clutch C-4 via the oil passage c15 provided within the boss portion 3b, operating fluid is supplied to the hydraulic servo 20 of the first clutch C-1 via the oil passages c5, c6 and c14 provided within the input shaft 12 and operating fluid is supplied to the hydraulic servo 40 of the third clutch C-3 via the oil passage c40 provided within the support wall 120, so that operating fluid may be supplied to the hydraulic servo 50 of the fourth clutch C-4 by providing the pair of seal rings d5 and d6 between the hydraulic servo 50 and the boss portion 3b, to the hydraulic servo 20 of the first clutch C-1 by providing the two pairs of seal rings d2, d3, d8 and d9 between the boss portion 3b and the input shaft 12 and between the hydraulic servo 20 and the input shaft 12 and to the hydraulic servo 40 of the third clutch C-3 by providing the pair of seal rings d10 and d11 between the hydraulic servo 40 and the support wall 120. Thereby, a number of seal rings may be cut as compared to a case of supplying operating fluid to the both of the hydraulic servos 20 and 40 of the first and third clutches C-1 and C-3 from the input shaft 12. Accordingly, it becomes possible to reduce sliding resistance of the seal rings and to improve the power transmitting efficiency of the vehicular automatic transmission 1₅.

Further, because it is arranged so that the reduced rotation of the ring gear R1 is inputted to the clutch drum 42 of the third clutch C-3 forming the hydraulic servo 40 of the third clutch C-3 when the third clutch C-3 engages, the reduced rotation is not inputted to the clutch drum 42 of the third clutch C-3 when the third clutch C-3 is not engaged even if the driver races the engine in Neutral or Parking range and the input shaft rotates for example. Accordingly, it is possible to prevent the whole hydraulic servo 40 of the third clutch C-3 from rotating and to prevent dragging of the third clutch C-3 which is otherwise caused by a centrifugal hydraulic pressure generated in the oil chamber 46.

Still more, because it is arranged so that the inputted rotation is inputted to the clutch drum 52 of the fourth clutch C-4 forming the hydraulic servo 50 of the fourth clutch C-4 via the carrier CR1 when the fourth clutch C-4 engages, the inputted rotation is not inputted to the clutch drum 52 of the fourth clutch C-4 when the fourth clutch C-4 is not engaged even if the driver races the engine in Neutral or Parking range and the input shaft rotates for example. Accordingly, it is possible to prevent the whole hydraulic servo 50 of the fourth clutch C-4 from rotating and to prevent dragging of the fourth clutch C-4 which is otherwise caused by a centrifugal hydraulic pressure generated in the oil chamber 56.

### <6th Embodiment>

A 6th embodiment, which is a partial modification of the 4th and 5th embodiments described above, will be explained with reference to FIG. 16. FIG. 16 is a section view showing an automatic transmission 1₆ of the 6th embodiment. It is noted that in the 6th embodiment explained below, components having the same structure with those of the automatic transmissions 1₄ and 1₅ of the 4th and 5th embodiments will be denoted by the same reference characters and an explanation thereof will be omitted here.

The automatic transmission 1₆ of the 6th embodiment has a transmission mechanism 2₆ which is different from the transmission mechanism 2₄ of the automatic transmission 1₄ of the 4th embodiment in that the disposition of the hydraulic servo 20 of the first clutch C-1 and the hydraulic servo 40 of the third clutch C-3 is reversed, i.e., the hydraulic servo 20 of the first clutch C-1 is disposed axially on the side of the planetary gear DP and the hydraulic servo 40 of the third clutch C-3 is disposed on the side of the planetary gear unit PU similarly to the transmission mechanism 2₅ of the automatic transmission 1₅ of the 5th embodiment.

Still more, the support wall 120 is disposed between the planetary gear unit PU and the first and third clutches C-1 and C-3, or more specifically, between the one-way clutch F-1 and the hydraulic servo 40 of the third clutch C-3 similarly to the transmission mechanism 2₅ of the automatic transmission 1₅ of the 5th embodiment. Still more, the friction plate 51 of the fourth clutch C-4 is disposed on the outer peripheral side of the planetary gear DP and the friction plate 41 of the third clutch C-3 is disposed on the outer peripheral side of the first clutch C-1.

That is, the drum portion CR1c connected to the carrier CR1 of the planetary gear DP is formed in a manner of folding back from the front side of the planetary gear DP to the outer peripheral side thereof and the friction plate 51 of the fourth clutch C-4 is spline-coupled with the outer peripheral side of the drum portion CR1c. Still more, the clutch drum 52 of the fourth clutch C-4 passes through the outer peripheral side of the friction plate 51 and is spline-coupled with an outer friction plate of the friction plate 51 and is connected to the drum member 101 that turns out to be the clutch drum of the third clutch C-3.

The inner peripheral side of the friction plate 41 of the third clutch C-3 is spline-coupled with the outer peripheral side of the first clutch C-1, or more specifically, with the outer peripheral side of the drum member 108 forming the clutch drum of the first clutch C-1 and the outer peripheral side of the friction plate 41 is spline-coupled with the drum member 101 for linking the clutch drum 52 of the fourth clutch C-4 with the sun gear S2 of the planetary gear unit PU through an intermediary of the fourth sleeve member 111. Then, the hydraulic servo 40 of the third clutch C-3 is disposed on the inner peripheral side of the rear part of the drum member 101.

The ring gear R1 is connected with the supporting plate 106 by means of welding for example to be fixed and supported and the drum member 108 is connected to the outer peripheral side of the supporting plate 106 similarly by means of welding for example. The outer friction plate of the friction plate 21 of the first clutch C-1 is spline-coupled with the inner peripheral side of the drum member 108 and the inner friction plate of the friction plate 41 of the third clutch C-3 is also spline-coupled with the outer friction plate of the friction plate 21 of the first clutch C-1. Then, the hydraulic servo 20 of the first clutch C-1 is disposed on the inner peripheral side of the rear part of the supporting plate 106.

Meanwhile, the support wall 120 having the sleeve portion 120a is disposed on the outer peripheral side of the fourth sleeve member 111 similarly to the automatic transmission 1₅ of the fifth embodiment. The outer peripheral side of the support wall 120 is spline-coupled with the inner peripheral side of the mission case 3 so as not to be rotatable.

It is noted that because the structure of the oil passages for supplying operating fluid to the hydraulic servo 50 of the fourth clutch C-4, the hydraulic servo 20 of the first clutch C-1 and the hydraulic servo 40 of the third clutch C-3 are almost the same with that of the fifth embodiment, an explanation thereof will be omitted here.

According to the inventive vehicular automatic transmission 1₅ described above, the fourth clutch C-4 is linked to the sun gear S2 of the planetary gear unit PU via the output side members (the clutch drum 42 and the drum member 101 and the sleeve member 104 which turn out to be the link member) of the third clutch C-3, so that the output side members become the output sidemembers of the two clutches that transmit different rotations. That is, they may be commonly used as one rotary member. Thereby, the vehicular automatic transmission 1₅ may be compactly built.

Still more, the hydraulic servo 50 of the fourth clutch C-4 is disposed axially on the opposite side of the planetary gear DP from the planetary gear unit PU and is disposed on the boss portion 3b extending from the case 4 and operating fluid is supplied to the hydraulic servo 50 of the fourth clutch C-4 from the oil passage within the boss portion 3b, so that a number of seal rings may be cut as compared to a case of disposing the hydraulic servo 50 of the fourth clutch C-4 on the input shaft 12 through an intermediary of a member having another speed of rotation, i . e. , as compared to a case of supplying operating fluid through an intermediary of another member. Thereby, it becomes possible to prevent the drop of the efficiency and controllability of the vehicular automatic transmission 1₆.

By the way, although it is necessary to provide a number of clutches for example in order to build the automatic transmission capable of attaining the multi-stage shift as described above, there is a problem on the other hand that the automatic transmission is required to be compact from the aspect of mountability inmounting the automatic transmission in a vehicle. While the boss portion extending from the case is generally disposed on the outer peripheral side of the input shaft on the front side of the transmission mechanism of the automatic transmission to pass lubricant oil of the oil pump and operating fluid from the hydraulic control unit to the input shaft, there is a problem to dispose a plurality of clutches on the outer peripheral side on the boss portion located on the outer peripheral side of the input shaft because it hampers the compactness of the automatic transmission in the radial direction.

However, according to the inventive vehicular automatic transmission 1₆, the planetary gear DP, the first and third clutches C-1 and C-3 and the fourth clutch C-4 are disposed axially on one side of the planetary gear unit PU, the hydraulic servo 50 of the fourth clutch C-4 is disposed axially on the opposite side of the planetary gear DP from the planetary gear unit PU and the hydraulic servos 20 and 40 of the first and third clutches C-1 and C-3 are disposed axially between the planetary gear unit PU and the planetary gear DP, so that the vehicular automatic transmission 1₆ may be compactly built in the radial direction as compared to a case of disposing the hydraulic servos of the plurality of clutches on the boss portion 3b extending from the case 4 for example, even though it is capable of attaining the forward eighth speed and reverse second speed stages for example.

Still more, because (at least a part of) the friction plate 61 of the first brake B-1 is disposed so as to overlap with the outside in the radial direction of the fourth clutch C-4, i.e., because the friction plate 61 of the first brake B-1 is disposed on the outer peripheral side of the fourth clutch C-4 whose capacity is relatively small as compared to the clutch for transmitting reduced rotation, the axial size of the vehicular automatic transmission 1₅ may be reduced without increasing the radial size thereof by disposing the friction plate 61 of the first brake B-1 so as to overlap with the fourth clutch C-4.

Further, the second clutch C-2 is disposed on the opposite side of the planetary gear unit PU from the planetary gear DP, the first and third clutches C-1 and C-3 may be disposed adjacent to the planetary gear DP without interposing the second clutch C-2 between the planetary gear DP and the planetary gear unit PU and the planetary gear DP may be disposed relatively closely with the planetary gear unit PU, so that the transmitting members, e.g., the ring gear R1, the link member 101; the link member 102 and the drum member 108, for transmitting a reduced rotation, i.e., for transmitting a large torque, may be shortened. Thereby, the vehicular automatic transmission 1₆ may be lightened and the controllability thereof may be improved by cutting its inertia.

Still more, because the fourth clutch C-4 and the planetary gear DP are disposed on the boss portion 3b extending from the wall 3a on one side of the case 4, oil is supplied to the hydraulic servo 50 of the fourth clutch C-4 from the oil passage c15 provided within the boss portion 3b and oil is supplied to the hydraulic servo 20 of the second clutch C-2 from the oil passage c50 provided in the wall 3c on the other side of the case 4, the fourth clutch C-4 and the second clutch C-2 may be disposed separately from the planetary gear unit PU. Accordingly, it becomes possible to prevent the oil passages from concentrating within the case 4 and to improve the freedom of design. Further, oil may be supplied to the hydraulic servos 30 and 50 of the second and fourth clutches C-2 and C-4 just by providing a pair (the least) of seal rings. Accordingly, it becomes possible to improve the power transmitting efficiency of the vehicular automatic transmission 1₅ by cutting sliding resistance of the seal rings.

Still more, because the hydraulic servo 20 of the first clutch C-1 is disposed on the side of the planetary gear DP and the hydraulic servo 40 of the third clutch C-3 is disposed on the side of the planetary gear unit PU, it becomes possible to dispose the hydraulic servos 20 and 40 of the first and third clutches C-1 and C-3 axially between the planetary gear unit PU and the planetary gear DP.

Furthermore, because the friction plate 51 of the fourth clutch C-4 is disposed on the outer peripheral side of the ring gear R1 of the planetary gear DP and the friction plate 41 of the third clutch C-3 is disposed on the outer peripheral side of the clutch drum (drum member) 101d of the first clutch C-1, the hydraulic servo 50 and the friction plate 51 of the fourth clutch C-4 may be relatively enlarged in the radial direction and thereby the capacity of the fourth clutch C-4 may be increased as compared to a case of disposing the friction plate 41 of the third clutch C-3 on the outer peripheral side of the planetary gear DP, even though the vehicular automatic transmission 1₆ may be compactly built in the axial direction.

Still more, the hydraulic servo 50 of the fourth clutch C-4 is disposed on the boss portion 3b extending from the case 4, the hydraulic servo 20 of the first clutch C-1 and the hydraulic servo 40 of the third clutch C-3 are disposed on the input shaft 12, the support wall 120 fixed to the case 4 is disposed axially between the planetary gear unit PU and the first clutch C-1 and the third clutch C-3, operating fluid is supplied to the hydraulic servo 50 of the fourth clutch C-4 via the oil passage c15 provided within the boss portion 3b, operating fluid is supplied to the hydraulic servo 20 of the first clutch C-1 via the oil passages c5, c6 and c14 provided within the input shaft 12 and operating fluid is supplied to the hydraulic servo 40 of the third clutch C-3 via the oil passage c40 provided within the support wall 120, so that operating fluid may be supplied to the hydraulic servo 50 of the fourth clutch C-4 by providing the pair of seal rings d5 and d6 between the hydraulic servo 50 and the boss portion 3b, to the hydraulic servo 20 of the first clutch C-1 by providing the two pairs of seal rings d2, d3, d8 and d9 between the boss portion 3b and the input shaft 12 and between the hydraulic servo 20 and the input shaft 12, and to the hydraulic servo 40 of the third clutch C-3 by providing the pair of seal rings d10 and d11 between the hydraulic servo 40 and the support wall 120. Thereby, a number of seal rings may be cut as compared to a case of supplying operating fluid to the both of the hydraulic servos 20 and 40 of the first and third clutches C-1 and C-3 from the input shaft 12. Accordingly, it becomes possible to cut sliding resistance of the seal rings and to improve the power transmitting efficiency of the vehicular automatic transmission 1₆.

Further, because it is arranged so that the reduced rotation of the ring gear R1 is inputted to the clutch drum 42 of the third clutch C-3 forming the hydraulic servo 40 of the third clutch C-3 when the third clutch C-3 engages, the reduced rotation is not inputted to the clutch drum 42 of the third clutch C-3 when the third clutch C-3 is not engaged even if the driver races the engine in Neutral or Parking range and the input shaft rotates for example. Accordingly, it is possible to prevent the whole hydraulic servo 40 of the third clutch C-3 from rotating and to prevent dragging of the third clutch C-3 which is otherwise caused by a centrifugal hydraulic pressure generated in the oil chamber 46.

Still more, because it is arranged so that the inputted rotation is inputted to the clutch drum 52 of the fourth clutch C-4 forming the hydraulic servo 50 of the fourth clutch C-4 via the carrier CR1 when the fourth clutch C-4 engages, the inputted rotation is not inputted to the clutch drum 52 of the fourth clutch C-4 when the fourth clutch C-4 is not engaged even if the driver races the engine in Neutral or Parking range and the input shaft rotates for example. Accordingly, it is possible to prevent the whole hydraulic servo 50 of the fourth clutch C-4 from rotating and to prevent dragging of the fourth clutch C-4 which is otherwise caused by a centrifugal hydraulic pressure generated in the oil chamber 56.

### <7th Embodiment>

A 7th embodiment, which is a partial modification of the first embodiment described above, will be explained with reference to FIG. 17. FIG. 17 is a diagrammatic section view showing an automatic transmission 1₇ of the 7th embodiment. It is noted that in the 7th embodiment explained below, components having the same structure with those of the automatic transmission 1₁ of the first embodiment will be denoted by the same reference characters and an explanation thereof will be omitted here, except of partial components such as oil passages, seal rings and hub members.

The automatic transmission 1₇ of the 7th embodiment has a transmission mechanism 2₇ which is different from the automatic transmission 1₁ of the first embodiment in that the disposition of the hydraulic servo 20 of the first clutch C-1, the hydraulic servo 40 of the third clutch C-3 and the hydraulic servo 50 of the fourth clutch C-4 is changed. That is, the hydraulic servo 50 of the fourth clutch C-4 and the hydraulic servo 20 of the first clutch C-1 are disposed axially on the opposite side of the planetary gear DP from the planetary gear unit PU and the hydraulic servo 40 of the third clutch C-3 is disposed between the planetary gear DP and the planetary gear unit PU.

Still more, the support wall 120 is disposed between the planetary gear unit PU and the third clutch C-3, or more specifically, between the one-way clutch F-1 and the hydraulic servo 40 of the third clutch C-3. Further, the first brake B-1 is disposed on the outer peripheral side of the one-way clutch F-1, the hydraulic servo 60 of the first brake B-1 is disposed on the outer peripheral side of the rear part of the support wall 120 and the hydraulic servo 70 of the second brake B-2 is disposed between the planetary gear unit PU and the partitioning portion 3c.

Further, the friction plate 51 of the fourth clutch C-4 is disposed on the outer peripheral side of the hydraulic servo 50 of the fourth clutch C-4, the friction plate 21 of the first clutch C-1 is disposed on the outer peripheral side of the planetary gear DP, the friction plate 41 of the third clutch C-3 is disposed on the outer peripheral side of the hydraulic servo 40 of the third clutch C-3, the friction plate 61 of the first brake B-1 is disposed on the outer peripheral side of the one-way clutch F-1, the friction plate 71 of the second brake B-2 is disposed on the outer peripheral side of the planetary gear unit PU and the friction plate 31 of the second clutch C-2 is disposed on the outer peripheral side of the hydraulic servo 30 of the second clutch C-2, respectively.

Next, transmission routes of the transmission mechanism 2₇ will be briefly explained. The carrier CR1 of the planetary gear DP is linked to the clutch drum 52 of the fourth clutch C-4 through the inner peripheral side of the first clutch C-1 and a hub member 154 spline-coupled with the inner friction plate of the friction plate 51 of the fourth clutch C-4 is linked to the clutch drum 42 of the third clutch C-3 through the outer peripheral side of the first clutch C-1, Still more, the clutch drum 42 is linked to the sun gear S2 of the planetary gear unit PU through an intermediary of the link member 101 and a hub member 157 spline-coupled with the inner friction plate of the friction plate 61 of the first brake B-1 is linked to the link member 101.

Meanwhile, the ring gear R1 of the planetary gear DP is linked to the clutch drum 22 of the first clutch C-1 and a hub member 153 spline-coupled with the inner friction plate of the friction plate 41 of the third clutch C-3 is linked to the clutch drum 22. A hub member 151 spline-coupled with the inner friction plate of the friction plate 21 of the first clutch C-1 is linked to the sun gear S3 of the planetary gear unit PU through an intermediary of the link member 102.

Still more, the carrier CR2 of the planetary gear unit PU is linked to the inner race 112 of the one-way clutch F-1 and is also linked to a hub member 158 spline-coupled with the inner friction plate of the friction plate 71 of the second brake B-2. Further, it is linked to a hub member 152 spline-coupled with the inner friction plate of the friction plate 31 of the second clutch C-2 on the rear side. It is noted that an outer race 114 of the one-way clutch F-1 is connected to the inner peripheral side of the mission case 3 through an intermediary of the flange-like member 115. Then, the ring gear R3 of the planetary gear unit PU is linked to the output shaft 15.

Next, the structures of each oil passage and the supply of operating fluid will be briefly explained. The oil chamber 56 of the hydraulic servo 50 of the fourth clutch C-4, i.e., the oil chamber 56 formed by sealing the part between the clutch drum 52 and the piston member 53 by the seal rings a1 and a2, is arranged so as to communicate with an oil passage c54 within the boss portion 3b by sealing the part between the clutch drum 52 and the boss portion 3b by the seal rings d3 and d4 and operating fluid is supplied thereto from the oil passage c54. It is noted that oil is supplied from an oil passage not shown to the cancel oil chamber 57 formed by sealing the part between the piston member 53 and the cancel plate 54 by the seal rings a1 and a3.

The oil chamber 26 of the hydraulic servo 20 of the first clutch C-1, i.e., the oil chamber 26 formed by sealing the part between the clutch drum 22 and the piston member 23 by the seal rings a4 and a5, is arranged so as to communicate with an oil passage c51 within the boss portion 3b by sealing the part between the boss portion 3b and the clutch drum 52 by seal rings d5 and d6 and the part between the clutch drum 22 and the clutch drum 52 by seal rings d7 and d8, respectively, and operating fluid is supplied thereto from the oil passage c51. It is noted that oil is supplied from an oil passage not shown to the cancel oil chamber 27 formed by sealing the part between the piston member 23 and the cancel plate 24 by the seal rings a4 and a6.

The oil chamber 46 of the hydraulic servo 40 of the third clutch C-3, i.e., the oil chamber 46 formed by sealing the part between the clutch drum 42 and the piston member 43 by the seal rings a7 and a8, is arranged so as to communicate with an oil passage c53 within the support wall 120 by sealing the part between the support wall 120 and the clutch drum 42 by the seal rings d9 and d10 and operating fluid is supplied thereto from the oil passage c53. It is noted that oil is supplied from an oil passage not shown to the cancel oil chamber 47 formed by sealing the part between the piston member 43 and the cancel plate 44 by the seal rings a7 and a9.

The oil chamber 36 of the hydraulic servo 30 of the second clutch C-2, i.e., the oil chamber 36 formed by sealing the part between the clutch drum 32 and the piston member 33 by the seal rings a12 and a14, is arranged so as to communicate with oil passages c52 and c80 within the input shaft (intermediate shaft 13) and operating fluid is supplied thereto from the oil passages c52 and c80. It is noted that oil is supplied from an oil passage not shown to the cancel oil chamber 37 formed by sealing the part between the piston member 33 and the cancel plate 34 by the seal rings a12 and a13.

Still more, operating fluid is supplied from an oil passage not shown within the support wall 120 to the oil chamber 66 of the hydraulic servo 60 of the first brake B-1, i.e., to the oil chamber 66 formed by sealing the part between the support wall 120 and the piston member 63 by the seal rings a10 and a11.

Further, operating fluid is supplied from an oil passage not shown within the partitioning portion 3c to the oil chamber 76 of the hydraulic servo 70 of the second brake B-2, i.e., to the oil chamber 76 formed by sealing the part between the partitioning portion 3c of the mission case 3 and the piston member 73 by the seal rings a15 and a16.

Still more, while oil passages c60 and c70 within the input shaft 12 are arranged so as to communicate with an oil passage not shown within the boss portion 3b by sealing by the seal rings d1 and d2, lubricant oil is splashed from the oil passage c70 to the outer peripheral side of the input shaft 12 via the oil passage not shown.

According to the inventive vehicular automatic transmission 1₇ described above, the fourth clutch C-4 is linked to the sun gear S2 of the planetary gear unit PU via the output side members (the clutch drum 42 and the link member 101) of the third clutch C-3, so that the output side members become the output side members of the two clutches that transmit different rotations. That is, they may be commonly used as one rotary member. Thereby, the vehicular automatic transmission 1₇ may be compactly built.

Still more, the hydraulic servo 50 of the fourth clutch C-4 is disposed axially on the opposite side of the planetary gear DP from the planetary gear unit PU and is also disposed on the boss portion 3b extending from the case 4 and operating fluid is supplied to the hydraulic servo 50 of the fourth clutch C-4 from the oil passage within the boss portion 3b, so that a number of seal rings may be cut as compared to a case of disposing the hydraulic servo 50 of the fourth clutch C-4 on the input shaft 12 through an intermediary of a member having another speed of rotation, i.e., as compared to a case of supplying operating fluid through an intermediary of another member. Thereby, it becomes possible to prevent the drop of the efficiency and controllability of the vehicular automatic transmission 1₇.

Still more, because the first brake B-1 is disposed axially between the third clutch C-3 and the planetary gear unit PU, the hydraulic servo 50 and the friction plate 51 of the fourth clutch C-4 may be enlarged in the radial direction and thereby, the capacity of the fourth clutch C-4 may be increased.

Further, because the support wall 120 fixed to the case 4 is disposed axially between the planetary gear unit PU and the third clutch C-3 and operating fluid is supplied to the hydraulic servo 40 of the third clutch C-3 via the oil passage c53 provided in the support wall 120, operating fluid may be supplied to the hydraulic servo 40 of the third clutch C-3 just by providing the pair of seal rings d9 and d10 between the hydraulic servo 40 and the support wall 120. Thereby, it becomes possible to cut a number of seal rings as compared to a case of supplying operating fluid to the hydraulic servo 40 of the third clutch C-3 from the input shaft 12. Accordingly, it becomes possible to cut sliding resistance of the seal rings and to improve the power transmitting efficiency of the vehicular automatic transmission 1₇.

Still more, because the hydraulic servo 60 of the first brake B-1 is disposed on the outer peripheral side of the support wall 120, it becomes possible to use the support wall 120 in common as the cylinder member of the hydraulic servo 60 of the first brake B-1 and to cut a number of parts.

Further, because the second clutch C-2 is disposed axially on the opposite side of the planetary gear unit PU from the planetary gear DP, the second clutch C-2 may be linked with the carrier CR2 without being entangled with the members for linking the first and third clutches C-1 and C-3 with the sun gear S2 and the sun gear S3 of the planetary gear unit PU. Still more, because the planetary gear DP may be disposed relatively closely with the planetary gear unit PU, the transmitting members for transmitting a reduced rotation, i.e., a large torque, may be shortened. Thereby, it becomes possible to lighten the vehicular automatic transmission 1₇ and to improve the controllability thereof by cutting its inertia.

Further, because the vehicular automatic transmission 1₇ is arranged so that the reduced rotation of the ring gear R1 is inputted to the clutch drum 42 of the third clutch C-3 forming the hydraulic servo 40 of the third clutch C-3 when the third clutch C-3 engages, the reduced rotation is not inputted to the clutch drum 42 of the third clutch C-3 when the third clutch C-3 is not engaged even if the driver races the engine in Neutral or Parking range and the input shaft rotates for example. Accordingly, it is possible to prevent the whole hydraulic servo 40 of the third clutch C-3 from rotating and to prevent dragging of the third clutch C-3 which is otherwise caused by a centrifugal hydraulic pressure generated in the oil chamber 46.

### <8th Embodiment>

An 8th embodiment, which is a partial modification of the 7th embodiment described above, will be explained with reference to FIG. 18. FIG. 18 is a diagrammatic section view showing an automatic transmission 1₈ of the 8th embodiment. It is noted that in the 8th embodiment explained below, components having the same structure with those of the automatic transmission 1₇ of the 7th embodiment will be denoted by the same reference characters and an explanation thereof will be omitted here, except of partial components such as oil passages, seal rings and hub members.

The automatic transmission 1₈ of the 8th embodiment has a transmission mechanism 2₈ which is different from the automatic transmission 1₇ of the 7th embodiment in that the disposition of the hydraulic servo 40 of the third clutch C-3 is changed. That is, the hydraulic servo 40 of the third clutch C-3, the hydraulic servo 50 of the fourth clutch C-4 and the hydraulic servo 20 of the first clutch C-1 are disposed axially on the opposite side of the planetary gear DP from the planetary gear unit PU. Further, the first brake B-1 is disposed on the outer peripheral side of the one-way clutch F-1 and the hydraulic servo 70 of the second brake B-2 is disposed between the planetary gear unit PU and the partitioning portion 3c.

Further, the friction plate 51 of the fourth clutch C-4 is disposed on the outer peripheral side of the hydraulic servo 50 of the fourth clutch C-4, the friction plate 21 of the first clutch C-1 is disposed on the outer peripheral side of the planetary gear DP, the friction plate 41 of the third clutch C-3 is disposed on the outer peripheral side of the hydraulic servo 20 of the first clutch C-1 and the friction plate 51 of the fourth clutch C-4, the friction plate 61 of the first brake B-1 is disposed on the outer peripheral side of the one-way clutch F-1, the friction plate 71 of the second brake B-2 is disposed on the outer peripheral side of the planetary gear unit PU and the friction plate 31 of the second clutch C-2 is disposed on the outer peripheral side of the hydraulic servo 30 of the second clutch C-2, respectively.

Next, transmission routes of the transmission mechanism 2₈ will be briefly explained. The carrier CR1 of the planetary gear DP is linked to the hub member 154 of the fourth clutch C-4. The clutch drum 52 spline-coupled with the outer friction plate of the friction plate 51 of the fourth clutch C-4 is linked to the clutch drum 42 of the third clutch C-3 through the inner peripheral side of the first clutch C-1. Still more, the clutch drum 42 is linked to the sun gear S2 of the planetary gear unit PU through an intermediary of the link member 101 bypassing through the outer peripheral side of the first clutch C-1. The hub member 157 spline-coupled with the inner friction plate of the friction plate 61 of the first brake B-1 is linked to the link member 101.

Meanwhile, the ring gear R1 of the planetary gear DP is linked to the clutch drum 22 of the first clutch C-1 through the outer peripheral side of the fourth clutch C-4 and the inner friction plate of the friction plate 41 of the third clutch C-3 is spline-coupled with the outer peripheral side of the clutch drum 22. Further, the hub member 151 spline-coupled with the inner friction plate of the friction plate 21 of the first clutch C-1 is linked to the sun gear S3 of the planetary gear unit PU through an intermediary of the link member 102.

Still more, the carrier CR2 of the planetary gear unit PU is linked to the inner race 112 of the one-way clutch F-1 and is also linked to the hub member 158 spline-coupled with the inner friction plate of the friction plate 71 of the second brake B-2. Further, it is linked to the hub member 152 spline-coupled with the inner friction plate of the friction plate 31 of the second clutch C-2 on the rear side. It is noted that the outer race 114 of the one-way clutch F-1 is connected to the inner peripheral side of the mission case 3 through an intermediary of the flange-like member 115. Then, the ring gear R3 of the planetary gear unit PU is linked to the output shaft 15.

Next, the structures of each oil passage and the supply of operating fluid will be briefly explained. The oil chamber 46 of the hydraulic servo 40 of the third clutch C-3, i.e., the oil chamber 46 formed by sealing the part between the clutch drum 42 and the piston member 43 by the seal rings a1 and a2, is arranged so as to communicate with the oil passage c53 within the boss portion 3b by sealing the part between the clutch drum 42 and the boss portion 3b by the seal rings d3 and d4 and operating fluid is supplied thereto from the oil passage c53. It is noted that operating fluid is supplied from an oil passage not shown to the cancel oil chamber 47 formed by sealing the part between the piston member 43 and the cancel plate 44 by the seal rings a1 and a3.

The oil chamber 26 of the hydraulic servo 20 of the first clutch C-1, i.e., the oil chamber 26 formed by sealing the part between the clutch drum 22 and the piston member 23 by the seal rings a4 and a5, is arranged so as to communicate with the oil passage c51 within the boss portion 3b by sealing the part between the boss portion 3b and the clutch drum 42 by seal rings d5 and d6 and the part between the clutch drum 22 and the clutch drum 42 by the seal rings d7 and d8, respectively, and operating fluid is supplied thereto from the oil passage c51. It is noted that oil is supplied from an oil passage not shown to the cancel oil chamber 27 formed by sealing the part between the piston member 23 and the cancel plate 24 by the seal rings a4 and a6.

The oil chamber 56 of the hydraulic servo 50 of the fourth clutch C-4, i.e., the oil chamber 56 formed by sealing the part between the clutch drum 52 and the piston member 53 by the seal rings a7 and a8, is arranged so as to communicate with the oil passage c54 within the boss portion 3b by sealing the part between the clutch drum 52 and the boss portion 3b by the seal rings d9 and d10 and operating fluid is supplied thereto from the oil passage c54. It is noted that oil is supplied from an oil passage not shown to the cancel oil chamber 57 formed by sealing the part between the piston member 53 and the cancel plate 54 by the seal rings a7 and a9.

The oil chamber 36 of the hydraulic servo 30 of the second clutch C-2, i.e., the oil chamber 36 formed by sealing the part between the clutch drum 32 and the piston member 33 by the seal rings a12 and a13, is arranged so as to communicate with oil passages c52 and c80 within the input shaft (intermediate shaft 13) and operating fluid is supplied thereto from the oil passages c52 and c80. It is noted that oil is supplied from an oil passage not shown to the cancel oil chamber 37 formed by sealing the part between the piston member 33 and the cancel plate 34 by the seal rings a12 and a14.

Still more, operating fluid is supplied from an oil passage not shown within the mission case 3 to the oil chamber 66 of the hydraulic servo 60 of the first brake B-1, i.e., to the oil chamber 66 formed by sealing the part between the cylinder member 62 and the piston member 63 by the seal rings a10 and a11.

Further, operating fluid is supplied from an oil passage not shown within the partitioning portion 3c of the mission case 3 to the oil chamber 76 of the hydraulic servo 70 of the second brake B-2, i.e., to the oil chamber 76 formed by sealing the part between the partitioning portion 3c and the piston member 73 by the seal rings a15 and a16.

Still more, while the oil passages c60 and c70 within the input shaft 12 are arranged so as to communicate with an oil passage not shown within the boss portion 3b by sealing by the seal rings d1 and d2, lubricant oil is splashed from the oil passage c70 to the outer peripheral side of the input shaft 12 via the oil passage not shown.

According to the inventive vehicular automatic transmission 1₈ described above, the fourth clutch C-4 is linked to the sun gear S2 of the planetary gear unit PU via the output side members (the clutch drum 42 and the link member 101) of the third clutch C-3, so that the output side members become the output sidemembers of the two clutches that transmit different rotations. That is, they may be commonly used as one rotary member. Thereby, the vehicular automatic transmission 1₈ may be compactly built.

Still more, the hydraulic servo 50 of the fourth clutch C-4 is disposed axially on the opposite side of the planetary gear DP from the planetary gear unit PU and is also disposed on the boss portion 3b extending from the case 4 and operating fluid is supplied to the hydraulic servo 50 of the fourth clutch C-4 from the oil passage within the boss portion 3b, so that a number of seal rings may be cut as compared to a case of disposing the hydraulic servo 50 of the fourth clutch C-4 on the input shaft 12 through an intermediary of a member having another speed of rotation, i.e. , as compared to a case of supplying operating fluid through an intermediary of another member. Thereby, it becomes possible to prevent the drop of the efficiency and controllability of the vehicular automatic transmission 1₈.

Still more, the hydraulic servo 40 of the third clutch C-3, the hydraulic servo 20 of the first clutch C-1, the hydraulic servo 50 of the fourth clutch C-4 and the planetary gear DP are disposed on the boss portion 3b extending from the case 4 in order from the side of the joint of the boss portion 3b to the case 4 in the axial direction and operating fluid is supplied to the hydraulic servo 40 of the third clutch C-3, the hydraulic servo 20 of the first clutch C-1 and the hydraulic servo 50 of the fourth clutch C-4 from the oil passages c53, c51 and c54 provided within the boss portion 3b, respectively, so that operating fluid may be supplied to the hydraulic servo 40 of the third clutch C-3 and the hydraulic servo 50 of the fourth clutch C-4 just by providing a pair of seal rings d3, d4, d9 and d10 between the hydraulic servos 40 and 50 and the boss portion 3b and to the hydraulic servo 20 of the first clutch C-1 by providing two pairs of seal rings d5, d6, d7 and d8 between the hydraulic servo 20 and the boss portion 3b.

Still more, because the first brake B-1 is disposed axially between the planetary gear DP and the planetary gear unit PU, it becomes possible to dispose the friction plate 41 of the third clutch C-3 on the outer peripheral side of the fourth clutch C-4.

Further, because the second clutch C-2 is disposed axially on the opposite side of the planetary gear unit PU from the planetary gear DP, the second clutch C-2 may be linked with the carrier CR2 without being entangled with the members for linking the first and third clutches C-1 and C-3 with the sun gear S2 and the sun gear S3 of the planetary gear unit PU. Still more, because the planetary gear DP may be disposed relatively closely with the planetary gear unit PU, the transmitting members for transmitting reduced rotation, i.e., a large torque, may be shortened. Thereby, it becomes possible to lighten the vehicular automatic transmission 1₈ and to improve the controllability thereof by cutting its inertia.

Further, because the vehicular automatic transmission 1₈ is arranged so that the reduced rotation of the ring gear R1 is inputted to the clutch drum 42 of the third clutch C-3 forming the hydraulic servo 40 of the third clutch C-3 when the third clutch C-3 engages, the reduced rotation is not inputted to the clutch drum 42 of the third clutch C-3 when the third clutch C-3 is not engaged even if the driver races the engine in Neutral or Parking range and the input shaft rotates for example. Accordingly, it is possible to prevent the whole hydraulic servo 40 of the third clutch C-3 from rotating and to prevent dragging of the third clutch C-3 which is otherwise caused by a centrifugal hydraulic pressure generated in the oil chamber 46.

Still more, because it is arranged so that the inputted rotation is inputted to the clutch drum 52 of the fourth clutch C-4 forming the hydraulic servo 50 of the fourth clutch C-4 via the carrier CR1 when the fourth clutch C-4 engages, the inputted rotation is not inputted to the clutch drum 52 of the fourth clutch C-4 when the fourth clutch C-4 is not engaged even if the driver races the engine in Neutral or Parking range and the input shaft rotates for example. Accordingly, it is possible to prevent the whole hydraulic servo 50 of the fourth clutch C-4 from rotating and to prevent dragging of the fourth clutch C-4 which is otherwise caused by a centrifugal hydraulic pressure generated in the oil chamber 56.

### <9th Embodiment>

A 9th embodiment, which is a partial modification of the first embodiment described above, will be explained with reference to FIG. 19. FIG. 19 is a diagrammatic section view showing an automatic transmission 19 of the 9th embodiment. It is noted that in the 9th embodiment explained below, components having the same structure with those of the automatic transmission 1₁ of the first embodiment will be denoted by the same reference characters and an explanation thereof will be omitted here, except of partial components such as oil passages, seal rings and hub members.

The automatic transmission 1₉ of the 9th embodiment has a transmission mechanism 2₉ which is different from the automatic transmission 1₁ of the first embodiment in that the disposition of the hydraulic servo 30 of the second clutch C-2 is changed. That is, the hydraulic servo 40 of the third clutch C-3 and the hydraulic servo 50 of the fourth clutch C-4 are disposed axially on the opposite side of the planetary gear DP from the planetary gear unit PU and the hydraulic servo 20 of the first clutch C-1 and the hydraulic servo 30 of the second clutch C-2 are disposed between the planetary gear DP and the planetary gear unit PU.

Further, the first brake B-1 is disposed on the outer peripheral side of the second clutch C-2 and the hydraulic servo 70 of the second brake B-2 is disposed between the planetary gear unit PU and the partitioning portion 3c.

Further, the friction plate 51 of the fourth clutch C-4 is disposed on the outer peripheral side of the hydraulic servo 50 of the fourth clutch C-4, the friction plate 41 of the third clutch C-3 is disposed on the outer pen pheral side of the planetary gear DP, the friction plate 21 of the first clutch C-1 is disposed on the outer peripheral side of the hydraulic servo 20 of the first clutch C-1, the friction plate 31 of the second clutch C-2 is disposed on the outer peripheral side of the hydraulic servo 30 of the second clutch C-2, the friction plate 61 of the first brake B-1 is disposed on the outer peripheral side of the friction plate 31 of the second clutch C-2 and the friction plate 71 of the second brake B-2 is disposed on the front side of the outer peripheral side of the planetary gear unit PU, respectively.

Next, transmission routes of the transmissionmechanism 2₉ will be briefly explained. The carrier CR1 of the planetary gear DP is linked to the hub member 154 of the fourth clutch C-4. The clutch drum 52 spline-coupled with the outer friction plate of the friction plate 51 of the fourth clutch C-4 is linked to the clutch drum 42 on the inner peripheral side of the third clutch C-3. Still more, the clutch drum 42 is linked to the sun gear S2 of the planetary gear unit PU through an intermediary of the link member 101 by passing through the outer peripheral side of the first clutch C-1. The hub member 157 spline-coupled with the inner friction plate of the friction plate 61 of the first brake B-1 is linked to the link member 101.

Meanwhile, the ring gear R1 of the planetary gear DP is spline-coupled with the inner friction plate of the friction plate 41 of the third clutch C-3 and is linked to the clutch drum 22 of the first clutch C-1. Further, the hub member 151 spline-coupled with the inner friction plate of the friction plate 21 of the first clutch C-1 is linked to the sun gear S3 of the planetary gear unit PU through an intermediary of the link member 102. The clutch drum 32 of the second clutch C-2 is linked to the input shaft 12 and the hub member 152 spline-coupled with the inner friction plate of the friction plate 31 of the second clutch C-2 is linked to the intermediate shaft 13.

Still more, the carrier CR2 of the planetary gear unit PU is linked to the inner race 112 of the one-way clutch F-1 on the front side and is also linked to the hub member 158 spline-coupled with the inner friction plate of the friction plate 71 of the second brake B-2. It is linked to the intermediate shaft 13 on the rear side. It is noted that the outer race 114 of the one-way clutch F-1 is connected to the inner peripheral side of the mission case 3 through an intermediary of the flange-like member 115. Then, the ring gear R3 of the planetary gear unit PU is linked to the output shaft 15. It is noted that in the automatic transmission 1₉ in the 9th embodiment, the intermediate shaft 13 does not always rotate equally with the input shaft 12 and rotates at the inputted rotation only when the second clutch C-2 engages.

Next, the structures of each oil passage and the supply of operating fluid will be briefly explained. The oil chamber 46 of the hydraulic servo 40 of the third clutch C-3, i.e., the oil chamber 46 formed by sealing the part between the clutch drum 42 and the piston member 43 by the seal rings a1 and a2, is arranged so as to communicate with the oil passage c53 within the boss portion 3b by sealing the part between the boss portion 3b and the clutch drum 42 by the seal rings d7 and d8 and operating fluid is supplied thereto from the oil passage c53. It is noted that operating fluid is supplied from an oil passage not shown to the cancel oil chamber 47 formed by sealing the part between the piston member 43 and the cancel plate 44 by the seal rings a1 and a3.

The oil chamber 56 of the hydraulic servo 50 of the fourth clutch C-4, i.e., the oil chamber 56 formed by sealing the part between the clutch drum 52 and the piston member 53 by the seal rings a4 and a5, is arranged so as to communicate with the oil passage c54 within the boss portion 3b by sealing the part between the clutch drum 52 and the boss portion 3b by the seal rings d9 and d10 and operating fluid is supplied thereto from the oil passage c54. It is noted that oil is supplied from an oil passage not shown to the cancel oil chamber 57 formed by sealing the part between the piston member 53 and the cancel plate 54 by the seal rings a4 and a6.

Further, oil passages not shown within the boss portion 3b communicate with oil passages c61, c71 and c51 within the input: shaft 12 by sealing the part between the boss portion 3b and the input shaft 12 by the seal rings d3 and d4. The oil chamber 26 of the hydraulic servo 20 of the first clutch C-1, i.e., the oil chamber 26 formed by sealing the part between the clutch drum 22 and the piston member 23 by the seal rings a7 and a8, is arranged so as to communicate with the oil passage c51 by sealing the part between the input shaft 12 and the clutch drum 22 by the seal rings d11 and d12 and operating fluid is supplied thereto from the oil passage c51. It is noted that oil is supplied from an oil passage not shown to the cancel oil chamber 27 formed by sealing the part between the piston member 23 and the cancel plate 24 by the seal rings a7 and a9.

Further, oil passages not shown within the boss portion 3b communicate with the oil passage c62 within the12 by sealing the part between the boss portion 3b and the input shaft 12 by the seal rings d5 and d6, with an oil passage perforated in parallel with the c71 not shown, and with the oil passage c52. The oil chamber 36 of the hydraulic servo 30 of the second clutch C-2, i.e., the oil chamber 36 formed by sealing the part between the clutch drum 32 and the piston member 33 by the seal rings a10 and a11, is arranged so as to communicate with the oil passage c52 and operating fluid is supplied thereto from the oil passage c52. It is noted that oil is supplied from an oil passage not shown to the cancel oil chamber 37 formed by sealing the part between the piston member 33 and the cancel plate 34 by the seal rings a10 and a12.

Still more, operating fluid is supplied from an oil passage not shown within the mission case 3 to the oil chamber 66 of the hydraulic servo 60 of the first brake B-1, i.e., to the oil chamber 66 formed by sealing the part between the cylinder member 62 and the piston member 63 by the seal rings a13 and a14.

Further, operating fluid is supplied from an oil passage not shown within the partitioning portion 3c of the mission case 3 to the oil chamber 76 of the hydraulic servo 70 of the second brake B-2, i.e., to the oil chamber 76 formed by sealing the part between the partitioning portion 3c and the piston member 73 by the seal rings a15 and a16..

While oil the passages c60 and c70 within the input shaft 12 are arranged so as to communicate with an oil passage not shown within the boss portion 3b by sealing by the seal rings d1 and d2, lubricant oil is splashed from the oil passage c70 to the outer peripheral side of the input shaft 12 via the oil passage not shown.

According to the inventive vehicular automatic transmission 1₉ described above, the fourth clutch C-4 is linked to the sun gear S2 of the planetary gear unit PU via the output side members (the clutch drum 42 and the link member 101) of the third clutch C-3, so that the output side members become the output side members of the two clutches that transmit different rotations. That is, they may be commonly used as one rotary member. Thereby, the vehicular automatic transmission 1₉ may be compactly built.

Still more, the hydraulic servo 50 of the fourth clutch C-4 is disposed axially on the opposite side of the planetary gear DP from the planetary gear unit PU and is also disposed on the boss portion 3b extending from the case 4 and operating fluid is supplied to the hydraulic servo 50 of the fourth clutch C-4 from the oil passage within the boss portion 3b, so that a number of seal rings may be cut as compared to a case of disposing the hydraulic servo 50 of the fourth clutch C-4 on the input shaft 12 through an intermediary of a member having another speed of rotation, i.e., as compared to a case of supplying operating fluid through an intermediary of another member. Thereby, it becomes possible to prevent the drop of the efficiency and controllability of the vehicular automatic transmission 1₉.

Still more, the hydraulic servo 40 of the third clutch C-3 is disposed axially on the opposite side of the planetary gear DP from the planetary gear unit PU and the hydraulic servo 20 of the first clutch C-1 is disposed axially between the planetary gear DP and the planetary gear unit PU, so that the fourth clutch C-4 may be disposed on the inner peripheral side of the clutch drum 42 of the third clutch C-3. Accordingly, the vehicular automatic transmission 1₉ may be compactly built while increasing the capacity of the third clutch C-3.

Further, because the planetary gear DP and the fourth clutch C-4 are disposed on the inner peripheral side of the clutch drum 42 of the third clutch C-3, an area of the friction plate 41 of the third clutch C-3 may be increased. Accordingly, the fourth clutch C-4 and the planetary gear DP whose capacity for transmitting-inputted rotation can be relatively small may be disposed on the inner peripheral side of the clutch drum 42 and the vehicular automatic transmission 1₉ capable of attaining the multi-stage shift may be compactly built while increasing the capacity for transmitting reduced rotation.

Further, the hydraulic servo 40 of the third clutch C-3, the hydraulic servo 50 of the fourth clutch C-4 and the planetary gear DP are disposed on the boss portion 3b extending from the case 4 in order from the side of the joint of the boss portion 3b to the case 4 in the axial direction and operating fluid is supplied to the hydraulic servo 40 of the third clutch C-3, the hydraulic servo 50 of the fourth clutch C-4 from the oil passages provided within the boss portion 3b, respectively, so that operating fluid may be supplied to the hydraulic servo 40 of the third clutch C-3 and the hydraulic servo 50 of the fourth clutch C-4 just by providing the pair of seal rings d7, d8, d9 and d10 between the hydraulic servos 40 and 50 of the third and fourth clutches C-3 and C-4 and the boss portion 3b, respectively. Accordingly, it becomes possible to cut a number of seal rings as compared to a case of supplying operating fluid to the hydraulic servos 40 and 50 of the third and fourth clutches C-3 and C-4 from the oil passages within the input shaft 12 and thereby, to prevent the drop of the efficiency and controllability of the vehicular automatic transmission 1₉.

Still more, although the increase of size of the first clutch C-1 to the outer peripheral side is limited because the third and fourth clutches C-3 and C-4 are linked to the sun gear S2 of the planetary gear unit PU through the outer peripheral side of the first clutch C-1 and the link member 101 for linking the third and fourth clutches C-3 and C-4 with the sun gear S2 of the planetary gear unit PU passes through the outer peripheral side of the first clutch C-1, the capacity of the first clutch C-1 may be maintained by increasing the size of the first clutch C-1 in the inner diametric direction as compared to a case of disposing the first clutch C-1 on the boss portion 3b, because the first clutch C-1 is disposed on the input shaft 12.

Further, because the friction plate 41 of the third clutch C-3 is disposed on the outer peripheral side of the ring gear R1 and the fourth clutch C-4 is disposed axially between the hydraulic servo 40 of the third clutch C-3 and the friction plate 41 of the third clutch C-3, it becomes possible to prevent the fourth clutch C-4 from radially overlapping with the hydraulic servo 40 or the friction plate 41 of the third clutch C-3 and to increase the size of the fourth clutch C-4 as compared to a case of disposing the fourth clutch C-4 on the inner peripheral side of the third clutch C-3. Accordingly, the vehicular automatic transmission 1₉ may be compactly built in the radial direction.

Still more, because the first brake B-1 is disposed axially between the planetary gear DP and the planetary gear unit PU, it becomes possible to dispose the friction plate 41 of the third clutch C-3 on the outer peripheral side of the fourth clutch C-4.

Further, because the second clutch C-2 is disposed axially between the planetary gear DP and the planetary gear unit PU, the first through fourth clutches may be disposed collectively on one side of the planetary gear unit PU. The planetary gear unit PU may be disposed closely to the output shaft 15 especially when the vehicular automatic transmission is mounted in an FR-type vehicle, so that the member for linking the planetary gear unit PU with the output shaft 15, i.e., the member for transmitting a large torque, may be shortened. Thereby, it becomes possible to lighten the vehicular automatic transmission 1₉ and to improve the controllability thereof by cutting its inertia.

Further, because the vehicular automatic transmission 1₉ is arranged so that the reduced rotation of the ring gear R1 is inputted to the clutch drum 42 of the third clutch C-3 forming the hydraulic servo 40 of the third clutch C-3 when the third clutch C-3 engages, the reduced rotation is not inputted to the clutch drum 42 of the third clutch C-3 when the third clutch C-3 is not engaged even if the driver races the engine in Neutral or Parking range and the input shaft rotates for example. Accordingly, it is possible to prevent the whole hydraulic servo 40 of the third clutch C-3 from rotating and to prevent dragging of the third clutch C-3 which is otherwise caused by a centrifugal hydraulic pressure generated in the oil chamber 46.

Still more, because the vehicular automatic transmission 1₉ is arranged so that the inputted rotation is inputted to the clutch drum 52 of the fourth clutch C-4 forming the hydraulic servo 50 of the fourth clutch C-4 via the carrier CR1 when the fourth clutch C-4 engages, the inputted rotation is not inputted to the clutch drum 52 of the fourth clutch C-4 when the fourth clutch C-4 is not engaged even if the driver races the engine in Neutral or Parking range and the input shaft rotates for example. Accordingly, it is possible to prevent the whole hydraulic servo 50 of the fourth clutch C-4 from rotating and to prevent dragging of the fourth clutch C-4 which is otherwise caused by a centrifugal hydraulic pressure generated in the oil chamber 56.

Further, because the planetary gear unit PU is the Ravigneaux type planetary gear in which the ring gear R3 is disposed at one side of the outer peripheral side and the friction plate 71 of the second brake B-2 is disposed on the other side of the outer peripheral side of the planetary gear unit PU, the friction plate 71 of the second brake B-2 may be disposed at the position radially overlapping with the planetary gear unit PU while assuring its capacity and decreasing the size thereof. Accordingly, the automatic transmission 1₉ may be built both compactly in the radial direction and shortly in the axial direction.

### <10th Embodiment>

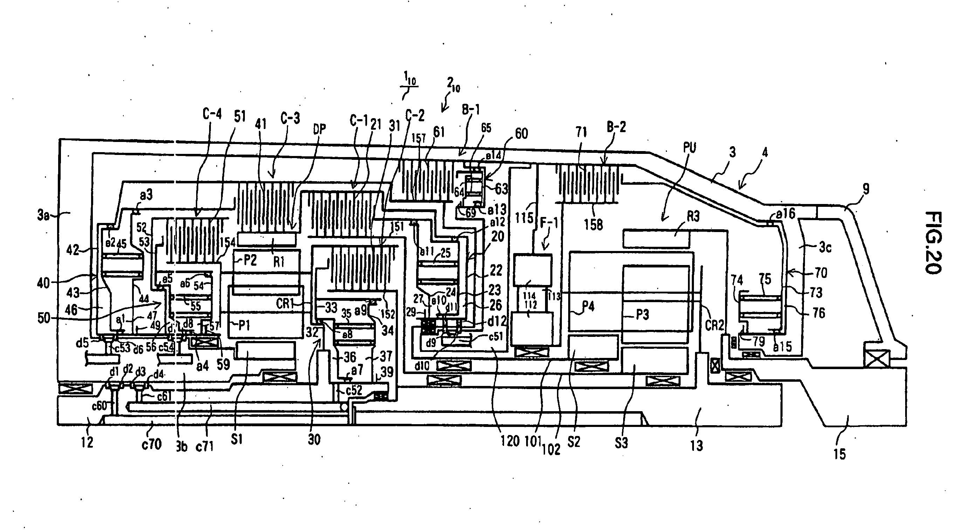

A 10th embodiment, which is a partial modification of the ninth embodiment described above, will be explained with reference to FIG. 20. FIG. 20 is a diagrammatic section view showing an automatic transmission 1₁₀ of the 10th embodiment. It is noted that in the 10th embodiment explained below, components having the same structure with those of the automatic transmission 1₉ of the ninth embodiment will be denoted by the same reference characters and an explanation thereof will be omitted here, except of partial components such as oil passages, seal rings and hub members.

The automatic transmission 1₁₀ of the 10th embodiment has a transmission mechanism 2₁₀ which is different from the automatic transmission 1₉ of the ninth embodiment in that the disposition of the hydraulic servo 20 of the first clutch C-1 and the hydraulic servo 30 of the second clutch C-2 is changed. That is, the hydraulic servo 40 of the third clutch C-3 and the hydraulic servo 50 of the fourth clutch C-4 are disposed axially on the opposite side of the planetary gear DP from the planetary gear unit PU and the hydraulic servo 30 of the second clutch C-2 and the hydraulic servo 20 of the first clutch C-1 are disposed between the planetary gear DP and the planetary gear unit PU.

The support wall 120 is disposed between the planetary gear unit PU and the first clutch C-1, or more specifically, between the one-way clutch F-1 and the hydraulic servo 20 of the first clutch C-1. Further, the first brake B-1 is disposed on the outer peripheral side of the hydraulic servo 20 of the first clutch C-1, the hydraulic servo 60 of the first brake B-1 is disposed on the outer peripheral side of the front part of the support wall 120 and the hydraulic servo 70 of the second brake B-2 is disposed between the planetary gear unit PU and the partitioning portion 3c.

Further, the friction plate 51 of the fourth clutch C-4 is disposed on the outer peripheral side of the hydraulic servo 50 of the fourth clutch C-4, the friction plate 41 of the third clutch C-3 is disposed on the outer peripheral side of the planetary gear DP, the friction plate 21 of the first clutch C-1 is disposed on the outer peripheral side of the friction plate 31 of the second clutch C-2, the friction plate 31 of the second clutch C-2 is disposed on the outer peripheral side of the hydraulic servo 30 of the second clutch C-2, the friction plate 61 of the first brake B-1 is disposed on the outer peripheral side of the hydraulic servo 20 of the first clutch C-1 and the friction plate 71 of the second brake B-2 is disposed on the front side of the outer peripheral side of the planetary gear unit PU, respectively.

Next, transmission routes of the transmission mechanism 2₁₀ will be briefly explained. The carrier CR1 of the planetary gear DP is linked to the hub member 154 of the fourth clutch C-4. The clutch drum 52 spline-coupled with the outer friction plate of the friction plate 51 of the fourth clutch C-4 is linked to the clutch drum 42 on the inner peripheral side of the third clutch C-3. Still more, the clutch drum 42 is linked to the link member 101 through the outer peripheral side of the fourth clutch C-4 and the first clutch C-1 and is linked to the sun gear S2 of the planetary gear unit PU through an intermediary of the link member 101. The hub member 157 spline-coupled with the inner friction plate of the friction plate 61 of the first brake B-1 is linked to the link member 101.

Meanwhile, the ring gear R1 of the planetary gear DP is spline-coupled with the inner friction plate of the friction plate 41 of the third clutch C-3 and is linked to the clutch drum 22 of the first clutch C-1. Further, the hub member 151 spline-coupled with the inner friction plate of the friction plate 21 of the first clutch C-1 is linked to the sun gear S3 of the planetary gear unit PU through an intermediary of the link member 102. The clutch drum 32 of the second clutch C-2 is linked to the carrier CR1, i.e., the input shaft 12, and the hub member 152 spline-coupled with the inner friction plate of the friction plate 31 of the second clutch C-2 is linked to the intermediate shaft 13.

Still more, the carrier CR2 of the planetary gear unit PU is linked to the inner race 112 of the one-way clutch F-1 on the front side and is also linked to the hub member 158 spline-coupled with the inner friction plate of the friction plate 71 of the second brake B-2. It is linked to the intermediate shaft 13 on the rear side. It is noted that the outer race 114 of the one-way clutch F-1 is connected to the inner peripheral side of the mission case 3 through an intermediary of the flange-like member 115. Then, the ring gear R3 of the planetary gear unit PU is linked to the output shaft 15. It is noted that in the automatic transmission 1₁₀ in the 10th embodiment, the intermediate shaft 13 does not always rotate equally with the input shaft 12 and rotates at the inputted rotation only when the second clutch C-2 engages.

Next, the structures of each oil passage and the supply of operating fluid will be briefly explained. The oil chamber 46 of the hydraulic servo 40 of the third clutch C-3, i.e., the oil chamber 46 formed by sealing the part between the clutch drum 42 and the piston member 43 by the seal rings a1 and a2, is arranged so as to communicate with the oil passage c53 within the boss portion 3b by sealing the part between the boss portion 3b and the clutch drum 42 by the seal rings d5 and d6 and operating fluid is supplied thereto from the oil passage c53. It is noted that operating fluid is supplied from an oil passage not shown to the cancel oil chamber 47 formed by sealing the part between the piston member 43 and the cancel plate 44 by the seal rings a1 and a3.

The oil chamber 56 of the hydraulic servo 50 of the fourth clutch C-4, i.e., the oil chamber 56 formed by sealing the part between the clutch drum 52 and the piston member 53 by the seal rings a4 and a5, is arranged so as to communicate with the oil passage c54 within the boss portion 3b by sealing the part between the clutch drum 52 and the boss portion 3b by the seal rings d7 and d8 and operating fluid is supplied thereto from the oil passage c54. It is noted that oil is supplied from an oil passage not shown to the cancel oil chamber 57 formed by sealing the part between the piton member 53 and the cancel plate 54 by the seal rings a4 and a6.

Further, oil passages not shown within the boss portion 3b communicate with the oil passages c61, c71 and c51 within the input shaft 12 by sealing the part between the boss portion 3b and the input shaft 12 by the seal rings d3 and d4 . The oil chamber 36 of the hydraulic servo 30 of the second clutch C-2, i.e., the oil chamber 36 formed by sealing the part between the clutch drum 32 and the piston member 33 by the seal rings a7 and a8, is arranged so as to communicate with the oil passage c52 within the input shaft 12 and operating fluid is supplied thereto from the oil passage c52. It is noted that oil is supplied from an oil passage not shown to the cancel oil chamber 37 formed by sealing the part between the piston member 33 and the cancel plate 34 by the seal rings a7 and a9.

The oil chamber 26 of the hydraulic servo 20 of the first clutch C-1, i.e., the oil chamber 26 formed by sealing the part between the clutch drum 22 and the piston member 23 by the seal rings a10 and a11, is arranged so as to communicate with the oil passage c51 within the support wall 120 by sealing the part between the support wall 120 and the link member 101 by the seal rings d9 and d10 and by sealing the part between the link member 101 and the clutch drum 22 by the seal rings d11 and d12, and operating fluid is supplied thereto from the oil passage c51. It is noted that oil is supplied from an oil passage not shown to the cancel oil chamber 27 formed by sealing the part between the piston member 23 and the cancel plate 24 by the seal rings a10 and a11.

Still more, operating fluid is supplied from an oil passage not shown within the support wall 120 to the oil chamber 66 of the hydraulic servo 60 of the first brake B-1, i.e., to the oil chamber 66 formed by sealing the part between the support wall 120 and the piston member 63 by the seal rings a13 and a14.

Further, operating fluid is supplied from an oil passage not shown within the partitioning portion 3c of the mission case 3 to the oil chamber 76 of the hydraulic servo 70 of the second brake B-2, i.e., to the oil chamber 76 formed by sealing the part between the partitioning portion 3c and the piston member 73 by the seal rings a15 and a16.

While the oil passages c60 and c70 within the input shaft 12 are arranged so as to communicate with the oil passage not shown within the boss portion 3b by sealing by the seal rings d1 and d2, lubricant oil is splashed from the oil passage c70 to the outer peripheral side of the input shaft 12 via the oil passage not shown.

According to the inventive vehicular automatic transmission 1₁₀ described above, the fourth clutch C-4 is linked to the sun gear S2 of the planetary gear unit PU through an intermediary of the output side members (the clutch drum 42 and the link member 101) of the third clutch C-3, so that the output side members become the output side members of the two clutches that transmit different rotations. That is, they may be commonly used as one rotary member. Thereby, the vehicular automatic transmission 1₁₀ may be compactly built.

Still more, the hydraulic servo 50 of the fourth clutch C-4 is disposed axially on the opposite side of the planetary gear DP from the planetary gear unit PU and is also disposed on the boss portion 3b extending from the case 4 and operating fluid is supplied to the hydraulic servo 50 of the fourth clutch C-4 from the oil passage within the boss portion 3b, so that a number of seal rings may be cut as compared to a case of disposing the hydraulic servo 50 of the fourth clutch C-4 on the input shaft 12 through an intermediary of a member having another speed of rotation, i.e., as compared to a case of supplying operating fluid through an intermediary of another member. Thereby, it becomes possible to prevent the drop of the efficiency and controllability of the vehicular automatic transmission 1₁₀.

Still more, the hydraulic servo 40 of the third clutch C-3 is disposed axially on the opposite side of the planetary gear DP from the planetary gear unit PU and the hydraulic servo 20 of the first clutch C-1 is disposed axially between the planetary gear DP and the planetary gear unit PU, so that the fourth clutch C-4 may be disposed on the inner peripheral side of the clutch drum 42 of the third clutch C-3. Accordingly, the vehicular automatic transmission 1₁₀ may be compactly built while increasing the capacity of the third clutch C-3.

Further, because the planetary gear DP and the fourth clutch C-4 are disposed on the inner peripheral side of the clutch drum 42 of the third clutch C-3, an area of the friction plate 41 of the third clutch C-3 may be increased. Accordingly, the fourth clutch C-4 and the planetary gear DP whose capacity for transmitting inputted rotation can be relatively small may be disposed on the inner peripheral side of the clutch drum 42 and the vehicular automatic transmission 1₁₀ capable of attaining the multi-stage shift may be compactly built while increasing the capacity for transmitting a reduced rotation.

Further, the hydraulic servo 40 of the third clutch C-3, the hydraulic servo 50 of the fourth clutch C-4 and the planetary gear DP are disposed on the boss portion 3b extending from the case 4 in order from the side of the joint of the boss portion 3b to the case 4 in the axial direction and operating fluid is supplied to the hydraulic servo 40 of the third clutch C-3, the hydraulic servo 50 of the fourth clutch C-4 from the oil passages provided within the boss portion 3b, respectively, so that operating fluid may be supplied to the hydraulic servo 40 of the third clutch C-3 and the hydraulic servo 50 of the fourth clutch C-4 just by providing the pair of seal rings d7, d8, d9 and d10 between the hydraulic servos 40 and 50 of the third and fourth clutches C-3 and C-4 and the boss portion 3b, respectively. Accordingly, it becomes possible to cut a number of seal rings as compared to a case of supplying operating fluid to the hydraulic servos 40 and 50 of the third and fourth clutches C-3 and C-4 from the oil passages within the input shaft 12 and thereby, to prevent the drop of the efficiency and controllability of the vehicular automatic transmission 1₁₀.

Still more, although the increase of size of the first clutch C-1 to the outer peripheral side is limited because the third and fourth clutches C-3 and C-4 are linked to the sun gear S2 of the planetary gear unit PU through the outer peripheral side of the first clutch C-1 and the link member 101 for linking the third and fourth clutches C-3 and C-4 with the sun gear S2 of the planetary gear unit PU passes through the outer peripheral side of the first clutch C-1, the capacity of the first clutch C-1 may be maintained by increasing the size of the first clutch C-1 in the inner diametric direction as compared to a case of disposing the first clutch C-1 on the boss portion 3b, because the first clutch C-1 is disposed on the input shaft 12.

Further, because the friction plate 41 of the third clutch C-3 is disposed on the outer peripheral side of the ring gear R1 and the fourth clutch C-4 is disposed axially between the hydraulic servo 40 of the third clutch C-3 and the friction plate 41 of the third clutch C-3, it becomes possible to prevent the fourth clutch C-4 from radially overlapping with the hydraulic servo 40 or the friction plate 41 of the third clutch C-3 and to increase the size of the fourth clutch C-4 as compared to a case of disposing the fourth clutch C-4 on the inner peripheral side of the third clutch C-3. Accordingly, the vehicular automatic transmission 1₁₀ may be compactly built in the radial direction.

Still more, because the first brake B-1 is disposed axially between the planetary gear DP and the planetary gear unit PU, it becomes possible to dispose the friction plate 41 of the third clutch C-3 on the outer peripheral side of the fourth clutch C-4.

Further, because the second clutch C-2 is disposed axially between the planetary gear DP and the planetary gear unit PU, the first through fourth clutches may be disposed collectively on one side of the planetary gear unit PU. The planetary gear unit PU may be disposed closely to the output shaft 15 especially when the vehicular automatic transmission is mounted in the FR-type vehicle, so that the member for linking the planetary gear unit PU with the output shaft 15, i.e., the member for transmitting a large torque, may be shortened. Thereby, it becomes possible to lighten the vehicular automatic transmission 1₁₀ and to improve the controllability thereof by cutting its inertia.

Further, because the vehicular automatic transmission 1₁₀ is arranged so that the reduced rotation of the ring gear R1 is inputted to the clutch drum 42 of the third clutch C-3 forming the hydraulic servo 40 of the third clutch C-3 when the third clutch C-3 engages, the reduced rotation is not inputted to the clutch drum 42 of the third clutch C-3 when the third clutch C-3 is not engaged even if the driver races the engine in Neutral or Parking range and the input shaft rotates for example. Accordingly, it is possible to prevent the whole hydraulic servo 40 of the third clutch C-3 from rotating and to prevent dragging of the third clutch C-3 which is otherwise caused by a centrifugal hydraulic pressure generated in the oil chamber 46.

Still more, because the vehicular automatic transmission 1₁₀ is arranged so that the inputted rotation is inputted to the clutch drum 52 of the fourth clutch C-4 forming the hydraulic servo 50 of the fourth clutch C-4 via the carrier. CR1 when the fourth clutch C-4 engages, the inputted rotation is not inputted to the clutch drum 52 of the fourth clutch C-4 when the fourth clutch C-4 is not engaged even if the driver races the engine in Neutral or Parking range and the input shaft rotates for example. Accordingly, it is possible to prevent the whole hydraulic servo 50 of the fourth clutch C-4 from rotating and to prevent dragging of the fourth clutch C-4 which is otherwise caused by a centrifugal hydraulic pressure generated in the oil chamber 56.

Further, because the planetary gear unit PU is the Ravigneaux type planetary gear in which the ring gear R3 is disposed at one side of the outer peripheral side and the friction plate 71 of the second brake B-2 is disposed on the other side of the outer peripheral side of the planetary gear unit PU, the friction plate 71 of the second brake B-2 may be disposed at the position radially overlapping with the planetary gear unit PU while assuring its capacity and decreasing the size thereof. Accordingly, the automatic transmission 1₁₀ may be built both compactly in the radial direction and shortly in the axial direction.

### <11th Embodiment>

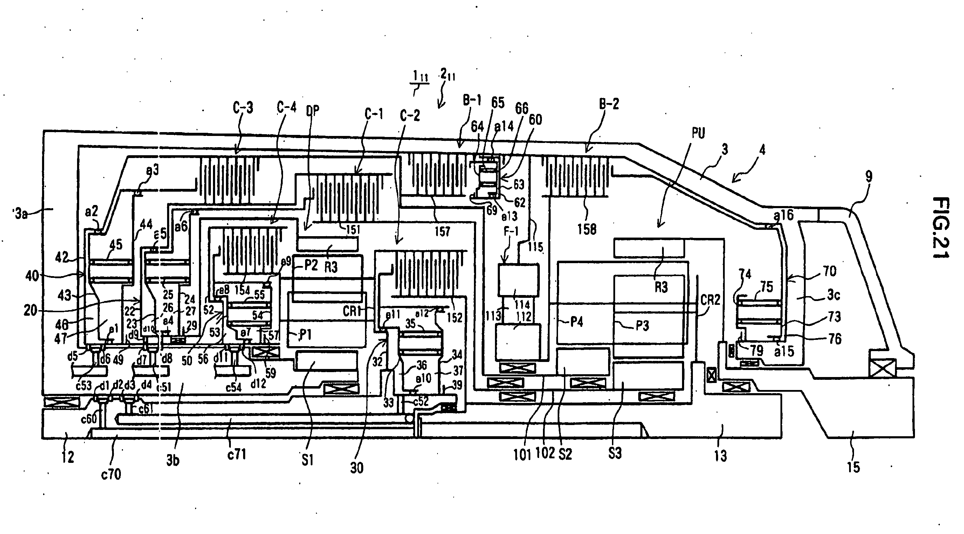

An 11th embodiment, which is a partial modification of the eighth embodiment described above, will be explained with reference to FIG. 21. FIG. 21 is a diagrammatic section view showing an automatic transmission 1₁₁ of the 11th embodiment. It is noted that in the 11th embodiment explained below, components having the same structure with those of the automatic transmission 1₉ of the ninth embodiment will be denoted by the same reference characters and an explanation thereof will be omitted here, except of partial components such as oil passages, seal rings and hub members.

The automatic transmission 1₁₁ of the 11th embodiment has a transmission mechanism 2₁₁ which is different from the automatic transmission 1₈ of the eighth embodiment in that the disposition of the hydraulic servo 30 of the second clutch C-2 is changed. That is, the hydraulic servo 40 of the third clutch C-3, the hydraulic servo 20 of the first clutch C-1 and the hydraulic servo 50 of the fourth clutch C-4 are disposed axially on the opposite side of the planetary gear DP from the planetary gear unit PU and the hydraulic servo 30 of the second clutch C-2 is disposed between the planetary gear DP and the planetary gear unit PU.

Further, the first brake B-1 is disposed on the outer peripheral side of the second clutch C-2 and the hydraulic servo 70 of the second brake B-2 is disposed between the planetary gear unit PU and the partitioning portion 3c.

Further, the friction plate 41 of the third clutch C-3 is disposed on the outer peripheral side of the hydraulic servo 20 of the first clutch C-1 and the friction plate 51 of the fourth clutch C-4, the friction plate 51 of the fourth clutch C-4 is disposed on the outer peripheral side of the hydraulic servo 50 of the fourth clutch C-4, the friction plate 21 of the first clutch C-1 is disposed on the outer peripheral side of the planetary gear DP, the friction plate 31 of the second clutch C-2 is disposed on the outer peripheral side of the hydraulic servo 30 of the second clutch C-2, the friction plato 61 of the first brake B-1 is disposed on the outer peripheral side of the second clutch C-2 and the friction plate 71 of the second brake B-2 is disposed on the front side of the outer peripheral side of the planetary gear unit PU, respectively.

Next, transmission routes of the transmission mechanism 2₁₁ will be briefly explained. The carrier CR1 of the planetary gear DP is linked to the hub member 154 of the fourth clutch C-4. The clutch drum 52 spline-coupled with the outer friction plate of the friction plate 51 of the fourth clutch C-4 is linked to the clutch drum 42 of the third clutch C-3 through the inner peripheral side of the hydraulic servo 20 of the first clutch C-1. Still more, the clutch drum 42 is linked to the link member 101 through the outer peripheral side of the first clutch C-1 and is linked to the sun gear S2 of the planetary gear unit PU through an intermediary of the link member 101. The hub member 157 spline-coupled with the inner friction plate of the friction plate 61 of the first brake B-1 is linked to the link member 101.

Meanwhile, the ring gear R1 of the planetary gear DP is linked to the clutch drum 22 of the first clutch C-1 through the outer peripheral side of the fourth clutch C-4 and the inner friction plate of the friction plate 41 of the third clutch C-3 is spline-coupled with the outer peripheral side of the clutch drum 22. Further, the hub member 151 spline-coupled with the inner friction plate of the friction plate 21 of the first clutch C-1 is linked to the sun gear S3 of the planetary gear unit PU through an intermediary of the link member 102. The clutch drum 32 of the second clutch C-2 is linked to the carrier CR1, i.e., the input shaft 12, and the hub member 152 spline-coupled with the inner friction plate of the friction plate 31 of the second clutch C-2 is linked to the intermediate shaft 13.

Still more, the carrier CR2 of the planetary gear unit PU is linked to the inner race 112 of the one-way clutch F-1 on the front side and is also linked to the hub member 158 spline-coupled with the inner friction plate of the friction plate 71 of the second brake B-2. It is linked to the intermediate shaft 13 on the rear side. It is noted that the outer race 114 of the one-way clutch F-1 is connected to the inner peripheral side of the mission case 3 through an intermediary of the flange-like member 115. Then, the ring gear R3 of the planetary gear unit PU is linked to the output shaft 15. It is noted that in the automatic transmission 1₁₁ in the 11th embodiment, the intermediate shaft 13 does not always rotate equally with the input shaft 12 and rotates at the inputted rotation only when the second clutch C-2 engages.

Next, the structures of each oil passage and the supply of operating fluid will be briefly explained. The oil chamber 46 of the hydraulic servo 40 of the third clutch C-3, i.e., the oil chamber 46 formed by sealing the part between the clutch drum 42 and the piston member 43 by the seal rings a1 and a2, is arranged so as to communicate with the oil passage c53 within the boss portion 3b by sealing the part between the boss portion 3b and the clutch drum 42 by the seal rings d5 and d6 and operating fluid is supplied thereto from the oil passage c53. It is noted that operating fluid is supplied from an oil passage not shown to the cancel oil chamber 47 formed by sealing the part between the piston member 43 and the cancel plate 44 by the seal rings a1 and a3.

The oil chamber 26 of the hydraulic servo 20 of the first clutch C-1, i.e., the oil chamber 26 formed by sealing the part between the clutch drum 22 and the piston member 23 by the seal rings a4 and a5, is arranged so as to communicate with the oil passage c51 within the boss portion 3b by sealing the part between the boss portion 3b and the clutch drum 42 by the seal rings d7 and d8 and by sealing the part between the clutch drum 22 and the clutch drum 42 by the seal rings d9 and d10, and operating fluid is supplied thereto from the oil passage c51. It is noted that oil is supplied from an oil passage not shown to the cancel oil chamber 27 formed by sealing the part between the piston member 23 and the cancel plate 24 by the seal rings a4 and a6.

The oil chamber 56 of the hydraulic servo 50 of the fourth clutch C-4, i.e., the oil chamber 56 formed by sealing the part between the clutch drum 52 and the piston member 53 by the seal rings a7 and a8, is arranged so as to communicate with the oil passage c54 within the boss portion 3b by sealing the part between the clutch drum 52 and the boss portion 3b by the seal rings d11 and d12 and operating fluid is supplied thereto from the oil passage c54. It is noted that oil is supplied from an oil passage not shown to the cancel oil chamber 57 formed by sealing the part between the piston member 53 and the cancel plate 54 by the seal rings a7 and a9.

Further, oil passages not shown within the boss portion 3b communicate with the oil passages c61, c71 and c52 within the input shaft 12 by sealing the part between the boss portion 3b and the input shaft 12 by the seal rings d3 and d4. The oil chamber 36 of the hydraulic servo 30 of the second clutch C-2, i.e., the oil chamber 36 formed by sealing the part between the clutch drum 32 and the piston member 33 by the seal rings a10 and d11, is arranged so as to communicate with the oil passage c52 within the input shaft 12 and operating fluid is supplied thereto from the oil passage c52. It is noted that oil is supplied from an oil passage not shown to the cancel oil chamber 37 formed by sealing the part between the piston member 33 and the cancel plate 34 by the seal rings a10 and a12.

Still more, operating fluid is supplied from an oil passage not shown within the mission case 3 to the oil chamber 66 of the hydraulic servo 60 of the first brake B-1, i.e., to the oil chamber 66 formed by sealing the part between the cylinder member 62 and the piston member 63 by the seal rings a10 and a11.

Further, operating fluid is supplied from an oil passage not shown within the partitioning portion 3c to the oil chamber 76 of the hydraulic servo 70 of the second brake B-2, i.e., to the oil chamber 76 formed by sealing the part between the partitioning portion 3c and the piston member 73 by the seal rings a15 and a16.

While the oil passages c60 and c70 within the input shaft 12 are arranged so as to communicate with the oil passage not shown within the boss portion 3b by sealing by the seal rings d1 and d2, lubricant oil is splashed from the oil passage c70 to the outer peripheral side of the input shaft 12 via the oil passage not-shown.

According to the inventive vehicular automatic transmission 1₁₁ described above, the fourth clutch C-4 is linked to the sun gear S2 of the planetary gear unit PU through an intermediary of the output side members (the clutch drum 42 and the link member 101) of the third clutch C-3, so that the output side members become the output side members of the two clutches that transmit different rotations. That is, they may be commonly used as one rotary member. Thereby, the vehicular automatic transmission 1₁₁ may be compactly built.

Still more, the hydraulic servo 50 of the fourth clutch C-4 is disposed axially on the opposite side of the planetary gear DP from the planetary gear unit PU and is also disposed on the boss portion 3b extending from the case 4 and operating fluid is supplied to the hydraulic servo 50 of the fourth clutch C-4 from the oil passage within the boss portion 3b, so that a number of seal rings may be cut as compared to a case of disposing the hydraulic servo 50 of the fourth clutch C-4 on the input shaft 12 through an intermediary of a member having another speed of rotation, i.e., as compared to a case of supplying operating fluid through an intermediary of another member. Thereby, it becomes possible to prevent the drop of the efficiency and controllability of the vehicular automatic transmission 1₁₁.

Further, the hydraulic servo 40 of the third clutch C-3, the hydraulic servo 20 of the first clutch C-1, the hydraulic servo 50 of the fourth clutch C-4 and the planetary gear DP are disposed on the boss portion 3b extending from the case 4 in order from the side of the joint of the boss portion 3b to the case 4 in the axial direction and operating fluid is supplied to the hydraulic servo 40 of the third clutch C-3, the hydraulic servo 20 of the first clutch C-1 and the hydraulic servo 50 of the fourth clutch C-4 from the oil passages c53, c51 and c54 provided within the boss portion 3b, respectively, so that operating fluid may be supplied to the hydraulic servo 40 of the third clutch C-3 and the hydraulic servo 50 of the fourth clutch C-4 just by providing the pair of seal rings d5, d6, d11 and d12 between the hydraulic servos 40 and 50 and the boss portion 3b and to the hydraulic servo 20 of the first clutch C-1 by providing two pair of seal rings d7, d8, d9 and d10 between the hydraulic servo 20 and the boss portion 3b, respectively.

Still more, because the first brake B-1 is disposed axially between the planetary gear DP and the planetary gear unit PU, it becomes possible to dispose the friction plate 41 of the third clutch C-3 on the outer peripheral side of the fourth clutch C-4.

Further, because the second clutch C-2 is disposed axially.between the planetary gear DP and the planetary gear unit PU, the first through fourth clutches may be disposed collectively on one side of the planetary gear unit PU. The planetary gear unit PU may be disposed closely to the output shaft 15 especially when the vehicular automatic transmission is mounted in the FR-type vehicle, so that the member for linking the planetary gear unit PU with the output shaft 15, i.e., the member for transmitting a large torque, may be shortened. Thereby, it becomes possible to lighten the vehicular automatic transmission 1₁₁ and to improve the controllability thereof by cutting its inertia.

Further, because the vehicular automatic transmission 1₁₁ is arranged so that the reduced rotation of the ring gear R1 is inputted to the clutch drum 42 of the third clutch C-3 forming the hydraulic servo 40 of the third clutch C-3 when the third clutch C-3 engages, the reduced rotation is not inputted to the clutch drum 42 of the third clutch C-3 when the third clutch C-3 is not engaged even if the driver races the engine in Neutral or Parking range and the input shaft rotates for example. Accordingly, it is possible to prevent the whole hydraulic servo 40 of the third clutch C-3 from rotating and to prevent dragging of the third clutch C-3 which is otherwise caused by a centrifugal hydraulic pressure generated in the oil chamber 46.

Still more, because the vehicular automatic transmission 1₁₁ is arranged so that the inputted rotation is inputted to the clutch drum 52 of the fourth clutch C-4 forming the hydraulic servo 50 of the fourth clutch C-4 via the carrier CR1 when the fourth clutch C-4 engages, the inputted rotation is not inputted to the clutch drum 52 of the fourth clutch C-4 when the fourth clutch C-4 is not engaged even if the driver races the engine in Neutral or Parking range and the input shaft rotates for example. Accordingly, it is possible to prevent the whole hydraulic servo 50 of the fourth clutch C-4 from rotating and to prevent dragging of the fourth clutch C-4 which is otherwise caused by a centrifugal hydraulic pressure generated in the oil chamber 56.

Further, because the planetary gear unit PU is the Ravigneaux type planetary gear in which the ring gear R3 is disposed at one side of the outer peripheral side of the planetary gear unit PU and the friction plate 71 of the second brake B-2 is disposed on the other side of the outer peripheral side thereof, the friction plate 71 of the second brake B-2 may be disposed at the position radially overlapping with the planetary gear unit PU while assuring its capacity and decreasing the size thereof. Accordingly, the automatic transmission 1₁₁ may be built both compactly in the radial direction and shortly in the axial direction.

### <12th Embodiment>

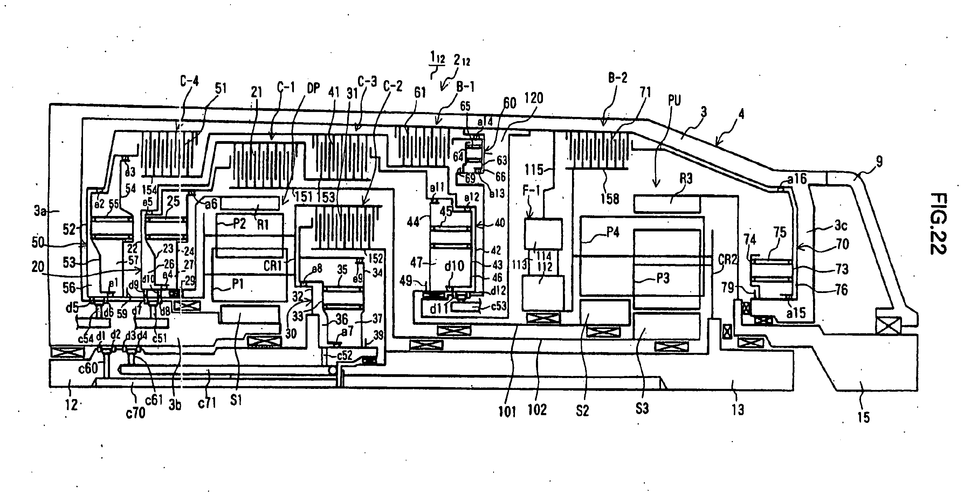

A 12th embodiment, which is a partial modification of the seventh embodiment described above, will be explained with reference to FIG. 22. FIG. 22 is a diagrammatic section view showing an automatic transmission 1₁₂ of the 12th embodiment. It is noted that in the 12th embodiment explained below, components having the same structure with those of the automatic transmission 1₇ of the seventh embodiment will be denoted by the same reference characters and an explanation thereof will be omitted here, except of partial components such as oil passages, seal rings and hub members.

The automatic transmission 1₁₂ of the 12th embodiment has a transmission mechanism 2₁₂ that is different from the automatic transmission 1₇ of the seventh embodiment in that the disposition of the hydraulic servo 30 of the second clutch C-2 is changed. That is, the hydraulic servo 50 of the fourth clutch C-4 and the hydraulic servo 20 of the first clutch C-1 are disposed axially on the opposite side of the planetary gear DP from the planetary gear unit PU and the hydraulic servo 30 of the second clutch C-2 and the hydraulic servo 40 of the third clutch C-3 are disposed between the planetary gear DP and the planetary gear unit PU.

Further, the support wall 120 is disposed between the planetary gear unit PU and the third clutch C-3, or more specifically, between the one-way clutch F-1 and the hydraulic servo 40 of the third clutch C-3. The first brake B-1 is disposed on the outer peripheral side of the hydraulic servo 40 of the third clutch C-3, the hydraulic servo 60 of the first brake B-1 is disposed on the outer peripheral side at the front part of the support wall 120 and the hydraulic servo 70 of the second brake B-2 is disposed between the planetary gear unit PU and the partitioning portion 3c.

Further, the friction plate 51 of the fourth clutch C-4 is disposed on the outer peripheral side of the hydraulic servo 20 of the first clutch C-1, the friction plate 21 of the first clutch C-1 is disposed on the outer peripheral side of the planetary gear DP, the friction plate 41 of the third clutch C-3 is disposed on the outer peripheral side of the hydraulic servo 30 of the second clutch C-2, the friction plate 31 of the second clutch C-2 is disposed on the outer peripheral side of the hydraulic servo 30 of the second clutch C-2, the friction plate 61 of the first brake B-1 is disposed on the outer peripheral side of the hydraulic servo 40 of the third clutch C-3 and the friction plate 71 of the second brake B-2 is disposed on the front side of the outer peripheral side of the planetary gear unit PU, respectively.

Next, transmission routes of the transmission mechanism 2₁₂ will be briefly explained. The carrier CR1 of the planetary gear DP is linked to the clutch drum 52 of the fourth clutch C-4 through the inner peripheral side of the first clutch C-1 and the hub member 154 spline-coupled with the inner friction plate of the friction plate 51 of the fourth clutch C-4 is linked to the clutch drum 42 of the third clutch C-3 through the outer peripheral side of the first clutch C-1. Still more, the clutch drum 42 is spline-coupled with the inner friction plate of the friction plate 61 of the first brake B-1 and is linked to the sun gear S2 of the planetary gear unit PU through an intermediary of the link member 101.

Meanwhile, the ring gear R1 of the planetary gear DP is linked to the clutch drum 22 of the first clutch C-1 and the hub member 153 spline-coupled with the inner friction plate of the friction plate 41 of the third clutch C-3 is linked to the clutch drum 22. Further, the hub member 151 spline-coupled with the inner friction plate of the friction plate 21 of the first clutch C-1 is linked to the sun gear S3 of the planetary gear unit PU through an intermediary of the link member 102. The clutch drum 32 of the second clutch C-2 is linked to the carrier CR1, i.e., the input shaft 12, and the hub member 152 spline-coupled with the inner friction plate of the friction plate 31 of the second clutch C-2 is linked to the intermediate shaft 13.

Still more, the carrier CR2 of the planetary gear unit PU is linked to the inner race 112 of the one-way clutch F-1 on the front side and is also linked to the hub member 158 spline-coupled with the inner friction plate of the friction plate 71 of the second brake B-2. It is linked to the intermediate shaft 13 on the rear side. It is noted that the outer race 114 of the one-way clutch F-1 is connected to the inner peripheral side of the mission case 3 through an intermediary of the flange-like member 115. Then, the ring gear R3 of the planetary gear unit PU is linked to the output shaft 15. It is noted that in the automatic transmission 1₁₂ in the 12th embodiment, the intermediate shaft 13 does not always rotate equally with the input shaft 12 and rotates at the inputted rotation only when the second clutch C-2 engages.

Next, the structures of each oil passage and the supply of operating fluid will be briefly explained. The oil chamber 56 of the hydraulic servo 50 of the fourth clutch C-4, i.e., the oil chamber 56 formed by sealing the part between the clutch drum 52 and the piston member 53 by the seal rings a1 and a2, is arranged so as to communicate with the oil passage c54 within the boss portion 3b by sealing the part between the clutch drum 52 and the boss portion 3b by the seal rings d5 and d6 and operating fluid is supplied thereto from the oil passage c54. It is noted that oil is supplied from an oil passage not shown to the cancel oil chamber 57 formed by sealing the part between the piston member 53 and the cancel plate 54 by the seal rings a1 and a3.

The oil chamber 26 of the hydraulic servo 20 of the first clutch C-1, i.e., the oil chamber 26 formed by sealing the part between the clutch drum 22 and the piston member 23 by the seal rings a4 and a5, is arranged so as to communicate with the oil passage c51 within the boss portion 3b by sealing the part between the boss portion 3b and the clutch drum 42 by the seal rings d7 and d8 and by sealing the part between the clutch drum 22 and the clutch drum 52 by the seal rings d9 and d10, and operating fluid is supplied thereto from the oil passage c51. It is noted that oil is supplied from an oil passage not shown to the cancel oil chamber 27 formed by sealing the part between the piston member 23 and the cancel plate 24 by the seal rings a4 and a6.

Further, oil passages not shown within the boss portion 3b communicate with the oil passages c61, c71 and c52 within the input shaft 12 by sealing the part between the boss portion 3b and the input shaft 12 by the seal rings d3 and d4 . The oil chamber 36 of the hydraulic servo 30 of the second clutch C-2, i.e., the oil chamber 36 formed by sealing the part between the clutch drum 32 and the piston member 33 by the seal rings a7 and a8, is arranged so as to communicate with the oil passage c52 within the input shaft 12 and operating fluid is supplied thereto from the oil passage c52. It is noted that oil is supplied from an oil passage not shown to the cancel oil chamber 37 formed by sealing the part between the piston member 33 and the cancel plate 34 by the seal rings a7 and a9.

Further, the oil chamber 46 of the hydraulic servo 40 of the third clutch C-3, i.e., the oil chamber 46 formed by sealing the part between the clutch drum 42 and the piston member 43 by the seal rings a10 and a12, is arranged so as to communicate with the oil passage c53 within the support wall 120 by sealing the part between the support wall 120 and the clutch drum 42 by the seal rings d511and d12 and operating fluid is supplied thereto from the oil passage c53. It is noted that operating fluid is supplied from an oil passage not shown to the cancel oil chamber 47 formed by sealing the part between the piston member 43 and the cancel plate 44 by the seal rings a10 and a11.

Still more, operating fluid is supplied from an oil passage not shown within the support wall 120 to the oil chamber 66 of the hydraulic servo 60 of the first brake B-1, i.e., to the oil chamber 66 formed by sealing the part between the cylinder member 62 and the piston member 63 by the seal rings a13 and a14.

Further, operating fluid is supplied from an oil passage not shown within the partitioning portion 3c to the oil chamber 76 of the hydraulic servo 70 of the second brake B-2, i.e., to the oil chamber 76 formed by sealing the part between the partitioning portion 3c of the mission case 3 and the piston member 73 by the seal rings a15 and a16.

While the oil passages c60 and c70 within the input shaft 12 are arranged so as to communicate with the oil passage not shown within the boss portion 3b by sealing by the seal rings d1 and d2, lubricant oil is splashed from the oil passage c70 to the outer peripheral side of the input shaft 12 via the oil passage not shown.

According to the inventive vehicular automatic transmission 1₁₂ described above, the fourth clutch C-4 is linked to the sun gear S2 of the planetary gear unit PU through an intermediary of the output side members (the clutch drum 42 and the link member 101) of the third clutch C-3, so that the output side members become the output side members of the two clutches that transmit different rotations. That is, they may be commonly used as one rotary member. Thereby, the vehicular automatic transmission 1₁₂ may be compactly built.

Still more, the hydraulic servo 50 of the fourth clutch C-4 is disposed axially on the opposite side of the planetary gear DP from the planetary gear unit PU and is also disposed on the boss portion 3b extending from the case 4 and operating fluid is supplied to the hydraulic servo 50 of the fourth clutch C-4 from the oil passage within the boss portion 3b, so that a number of seal rings may be cut as compared to a case of disposing the hydraulic servo 50 of the fourth clutch C-4 on the input shaft 12 through an intermediary of a member having another speed of rotation, i.e. , as compared to a case of supplying operating fluid through an intermediary of another member. Thereby, it becomes possible to prevent the drop of the efficiency and controllability of the vehicular automatic transmission 1₁₂.

Still more, because the first brake B-1 is disposed axially between the third clutch C-3 and the planetary gear unit PU, it becomes possible to increase the size of the hydraulic servo 50 and the friction plate 51 of the fourth clutch C-4 relatively in the radial direction and thereby to increase the capacity of the fourth clutch C-4.

Because the support wall 120 fixed to the case 4 is disposed axially between the planetary gear unit PU and the third clutch C-3 and operating fluid is supplied to the hydraulic servo 40 of the third clutch C-3 via the oil passage c53 provided within the support wall 120, operating fluid may be supplied to the hydraulic servo 40 of the third clutch C-3 by providing a pair of seal rings d11 and d12 between the hydraulic servo 40 and the support wall 120. Thereby, it becomes possible to cut a number of seal rings, to reduce sliding resistance of the seal rings and to improve the power transmitting efficiency of the vehicular automatic transmission 1₁₂.

Still more, because the hydraulic servo 60 of the first brake B-1 is disposed on the outer peripheral side of the support wall 120, it becomes possible to use the support wall 120 in common as the cylinder member of the hydraulic servo 60 of the first brake B-1 and to cut a number of parts.

Further, because the second clutch C-2 is disposed axially between the planetary gear DP and the planetary gear unit PU, the first through fourth clutches may be disposed collectively on one side of the planetary gear unit PU. Still more, the planetary gear unit PU may be disposed closely to the output shaft 15 especially when the vehicular automatic transmission is mounted in the FR-type vehicle, so that the member for linking the planetary gear unit PU with the output shaft 15, i.e., the member for transmitting a large torque, may be shortened. Thereby, it becomes possible to lighten the vehicular automatic transmission 1₁₂ and to improve the controllability thereof by cutting its inertia.

Further, because the vehicular automatic transmission 1₁₂ is arranged so that the reduced rotation of the ring gear R1 is inputted to the clutch drum 42 of the third clutch C-3 forming the hydraulic servo 40 of the third clutch C-3 when the third clutch C-3 engages, the reduced rotation is not inputted to the clutch drum 42 of the third clutch C-3 when the third clutch C-3 is not engaged even if the driver races the engine in Neutral or Parking range and the input shaft rotates for example. Accordingly, it is possible to prevent the whole hydraulic servo 40 of the third clutch C-3 from rotating and to prevent dragging of the third clutch C-3 which is otherwise caused by a centrifugal hydraulic pressure generated in the oil chamber 46.

Further, because the planetary gear unit PU is the Ravigneaux type planetary gear in which the ring gear R3 is disposed at one side of the outer peripheral side and the friction plate 71 of the second brake B-2 is disposed on the other side of the outer peripheral side of the planetary gear unit PU, the friction plate 71 of the second brake B-2 may be disposed at the position radially overlapping with the planetary gear unit PU while assuring its capacity and decreasing the size thereof. Accordingly, the automatic transmission 1₁₂ may be built both compactly in the radial direction and shortly in the axial direction.

### <13th Embodiment>

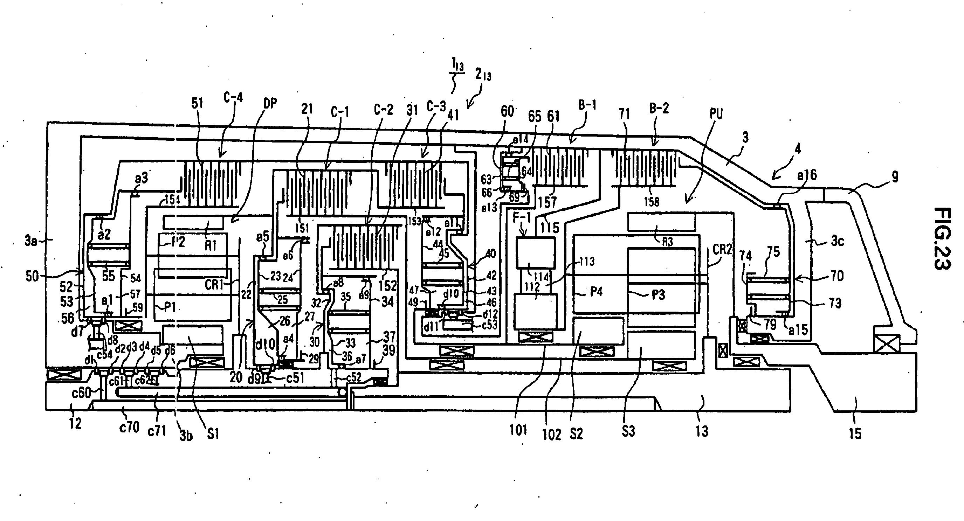

A 13th embodiment, which is a partial modification of the fifth and sixth embodiments described above, will be explained with reference to FIG. 23. FIG. 23 is a diagrammatic section view showing an automatic transmission 1₁₃ of the 13th embodiment. It is noted that in the 13th embodiment explained below, components having the same structure with those of the automatic transmissions 1₅ and 1₆ of the fifth and sixth embodiments will be denoted by the same reference characters and an explanation thereof will be omitted here, except of partial components such as oil passages, seal rings and hub members.

The automatic transmission 1₁₃ of the 13th embodiment has a transmission mechanism 2₁₃ which is different from the automatic transmissions 1₅ and 1₆ of the fifth and sixth embodiments in that the disposition of the hydraulic servo 30 of the second clutch C-2 is changed. That is, the hydraulic servo 50 of the fourth clutch C-4 is disposed axially on the opposite side of the planetary gear DP from the planetary gear unit PU and the hydraulic servo 20 of the first clutch C-1, the hydraulic servo 30 of the second clutch C-2 and the hydraulic servo 40 of the third clutch C-3 are disposed between the planetary gear DP and the planetary gear unit PU.

Still more, the support wall 120 is disposed between the planetary gear unit PU and the third clutch C-3, or more specifically, between the one-way clutch F-1 and the hydraulic servo 40 of the third clutch C-3. Further, the first brake B-1 is disposed on the outer peripheral side of the one-way clutch F-1, the hydraulic servo 60 of the first brake B-1 is disposed on the outer peripheral side of the rear part of the support wall 120 and the hydraulic servo 70 of the second brake B-2 is disposed between the planetary gear unit PU and the partitioning portion 3c.

Further, the friction plate 51 of the fourth clutch C-4 is disposed on the outer peripheral side of the planetary gear DP, the friction plate 21 of the first clutch C-1 is disposed on the outer peripheral side of the hydraulic servo 20 of the first clutch C-1 and the second clutch C-2, the friction plate 31 of the second clutch C-2 is disposed on the outer peripheral side of the hydraulic servo 30 of the second clutch C-2, the friction plate 41 of the third clutch C-3 is disposed on the outer peripheral side of the hydraulic servo 40 of the third clutch C-3 and the friction plate 31 of the second clutch C-2, the friction plate 61 of the first brake B-1 is disposed on the outer peripheral side of the one-way clutch F-1 and the friction plate 71 of the second brake B-2 is disposed on the outer peripheral side of the planetary gear unit PU, respectively.

Next, transmission routes of the transmission mechanism 2₁₃ will be briefly explained. The carrier CR1 of the planetary gear DP is linked to the hub member 154 spline-coupled with the inner friction plate of the friction plate 51 of the fourth clutch C-4. The clutch drum 52 of the fourth clutch C-4 is linked to the clutch drum 42 of the third clutch C-3 through the outer peripheral side of the first clutch C-1. Still more, the clutch drum 42 is linked to the sun gear S2 of the planetary gear unit PU through an intermediary of the link member 101 and the hub member 157 spline-coupled with the inner friction plate of the friction plate 61 of the first brake B-1 is linked to the link member 101.

Meanwhile, the ring gear R1 of the planetary gear DP is linked to the clutch drum 22 of the first clutch C-1 and the hub member 153 spline-coupled with the inner friction plate of the friction plate 41 of the third clutch C-3 is linked to the clutch drum 22. The hub member 151 spline-coupled with the inner friction plate of the friction plate 21 of the first clutch C-1 is linked to the sun gear S3 of the planetary gear unit PU through an intermediary of the link member 102. Still more, the clutch drum 32 of the second clutch C-2 is linked to the input shaft 12 and the hub member 152 spline-coupled with the inner friction plate of the friction plate 31 of the second clutch C-2 is linked to the intermediate shaft 13.

Still more, the carrier CR2 of the planetary gear unit PU is linked with the inner race 112 of the one-way clutch F-1 at the front side and is also linked to the hub member 158 spline-coupled with the inner friction plate of the friction plate 71 of the second brake B-2. It is also linked to the intermediate shaft 13 on the rear side. It is noted that the outer race 114 of the one-way clutch F-1 is connected to the inner peripheral side of the mission case 3 through an intermediary of the flange-like member 115. Then, the ring gear R3 of the planetary gear unit PU is linked to the output shaft 15. It is also noted that in the vehicular automatic transmission 1₁₃ of the 13th embodiment that the intermediate shaft 13 does not always rotate equally with the input shaft 12 and rotates at the inputted rotation only when the second clutch C-2 engages.

Next, the structures of each oil passage and the supply of operating fluid will be briefly explained. The oil chamber 56 of the hydraulic servo 50 of the fourth clutch C-4, i.e. , the oil chamber 56 formed by sealing the part between the clutch drum 52 and the piston member 53 by seal rings a1 and a2, is arranged so as to communicate with the oil passage c54 within the boss portion 3b by sealing the part between the clutch drum 52 and the boss portion 3b by the seal rings d7 and d8 and operating fluid is supplied thereto from the oil passage c54. It is noted that oil is supplied from an oil passage not shown to the cancel oil chamber 57 formed by sealing the part between the piston member 53 and the cancel plate 54 by the seal rings a1 and a3.

The oil passages not shown within the boss portion 3b are arranged so as to communicate with the oil passages c61, c71 and c51 within the input shaft 12 by sealing the part between the boss portion 3b and the input shaft 12 by the seal rings d3 and d4. Still more, the oil chamber 26 of the hydraulic servo 20 of the first clutch C-1, i.e., the oil chamber 26 formed by sealing the part between the clutch drum 22 and the piston member 23 by the seal rings a4 and a5, is arranged so as to communicate with the oil passage c51 by sealing the part between the input shaft 12 and the clutch drum 22 by the seal rings d9 and d10 and operating fluid is supplied thereto from the oil passage c51. It is noted that oil is supplied from an oil passage not shown to the cancel oil chamber 27 formed by sealing the part between the piston member 23 and the cancel plate 24 by the seal rings a4 and a6.

The oil passages not shown within the boss portion 3b are arranged so as to communicate with the oil passage c62, an oil passage not shown perforated in parallel with the oil passage c71 and the c52 within the input shaft 12 by sealing the part between the boss portion 3b and the input shaft 12 by the seal rings d5 and d6. Still more, the oil chamber 36 of the hydraulic servo 30 of the second clutch C-2, i.e., the oil chamber 36 formed by sealing the part between the clutch drum 32 and the piston member 33 by the seal rings a7 and a8, is arranged so as to communicate with the oil passage c52 and operating fluid is supplied thereto from the oil passage c52. It is noted that oil is supplied from an oil passage not shown to the cancel oil chamber 37 formed by sealing the part between the piston member 33 and the cancel plate 34 by the seal rings a7 and a9.

The oil chamber 46 of the hydraulic servo 40 of the third clutch C-3, i.e., the oil chamber 46 formed by sealing the part between the clutch drum 42 and the piston member 43 by the seal rings a10 and a11, is arranged so as to communicate with the oil passage c53 within the support wall 120 by sealing the part between the support wall 120 and the clutch drum 42 by the seal rings d11 and d12 and operating fluid is supplied thereto from the oil passage c53. It is noted that oil is supplied from the oil passage not shown to the cancel oil chamber 47 formed by sealing the part between the piston member 43 and the cancel plate 44 by the seal rings a10 and a12.

Still more, operating fluid is supplied from the oil passage not shown within the support wall 120 to the oil chamber 66 of the hydraulic servo 60 of the first brake B-1, i.e., to the oil chamber 66 formed by sealing the part between the support wall 120 and the piston member 63 by the seal rings a13 and a14.

Further, operating fluid is supplied from the oil passage not shown within the partitioning portion 3c to the oil chamber 76 of the hydraulic servo 70 of the second brake B-2, i.e., to the oil chamber 76 formed by sealing the part between the partitioning portion 3c of the mission case 3 and the piston member 73 by the seal rings a15 and a16.

Still more, while oil passages c60 and c70 within the input shaft 12 are arranged so as to communicate with the oil passage not shown within the boss portion 3b by sealing by the seal rings d1 and d2, lubricant oil is splashed from the oil passage c70 to the outer peripheral side of the input shaft 12 via the oil passage not shown.

According to the inventive vehicular automatic transmission 1₁₃ described above, the fourth clutch C-4 is linked to the sun gear S2 of the planetary gear unit PU via the output side members (the clutch drum 42 and the link member 101) of the third clutch C-3, so that the output side members become the output sidemembers of the two clutches that transmit different rotations. That is, they may be commonly used as one rotary member. Thereby, the vehicular automatic transmission 1₁₃ may be compactly built.

Still more, the hydraulic servo 50 of the fourth clutch C-4 is disposed axially on the opposite side of the planetary gear DP from the planetary gear unit PU and is also disposed on the boss portion 3b extending from the case 4 and operating fluid is supplied to the hydraulic servo 50 of the fourth clutch C-4 from the oil passage within the boss portion 3b, so that a number of seal rings may be cut as compared to a case of disposing the hydraulic servo 50 of the fourth clutch C-4 on the input shaft 12 through an intermediary of a member having another speed of rotation, i.e. , as compared to a case of supplying operating fluid through an intermediary of another member. Thereby, it becomes possible to prevent the drop of the efficiency and controllability of the vehicular automatic transmission 1₁₃.

Still more, because the hydraulic servo 60 of the first brake B-1 is disposed on the outer peripheral side of the support wall 120, it becomes possible to use the support wall 120 in common as the cylinder member of the hydraulic servo 60 of the first brake B-1 and thereby to reduce a number of parts.

Still more, because the hydraulic servo 20 of the first clutch C-1 and the hydraulic servo 40 of the third clutch C-3 are disposed axially between the planetary gear unit PU and the planetary gear DP, the vehicular automatic transmission 1₁₃ may be compactly built especially in the radial direction, even though it is capable of attaining the multi-stage shift, as compared to a case of disposing the hydraulic servos of the plurality of clutches on the boss portion 3b extending from the case 4 for example.

Further, because the link member 102 linking the first clutch C-1 with the sun gear S2 of the planetary gear unit PU is disposed through the inner peripheral side of the third clutch C-3, the output side members, i.e., the clutch drum 42 and the link member 101, of the third clutch C-3 may be provided on the outer peripheral side of the link member 102 of the first clutch C-1. Accordingly, it becomes possible to link the fourth clutch C-4 disposed on the opposite side of the planetary gear DP with the output side members, i.e., the clutch drum 42 and the link member 101, of the third clutch C-3 without complicating the members and thereby to build the vehicular automatic transmission 1₁₃ compactly.

Because the friction plate 51 of the fourth clutch C-4 is disposed on the outer peripheral side of the ring gear R1 of the planetary gear DP, it becomes possible to increase the size of the hydraulic servo 50 and the friction plate 51 of the fourth clutch C-4 relatively in the radial direction and thereby to increase the capacity of the fourth clutch C-4.

Further, because the hydraulic servo 20 of the first clutch C-1 is disposed on the input shaft 12, the support wall 120 fixed to the case 4 is disposed axially between the planetary gear unit PU and the third clutch C-3, operating fluid is supplied to the hydraulic servo 20 of the first clutch C-1 via the oil passage c52 provided within the input shaft 12 and operating fluid is supplied to the hydraulic servo 40 of the third clutch C-3 via the oil passage c53 provided within the support wall 120, the operating fluid may be supplied to the hydraulic servo 20 of the first clutch C-1 by providing the pair of seal rings d5, d6, d9 and d10 between the boss portion 3b and the input shaft 12 and between the hydraulic servo 20 and the input shaft 12, respectively, and to the hydraulic servo 40 of the third clutch C-3 by providing the pair of seal rings d11 and d12 between the hydraulic servo 40 and the support wall 120. Thereby, it becomes possible to cut a number of seal rings, to cut sliding resistance of the seal rings and to improve the power transmitting efficiency of the vehicular automatic transmission 1₁₃ as compared to the case of supplying operating fluid to the both of the hydraulic servos 20 and 40 of the first and third clutches C-1 and C-3 from the input shaft 12.

Because the second clutch C-2 is disposed axially between the planetary gear DP and the planetary gear unit PU, the first through fourth clutches may be disposed collectively on one side of the planetary gear unit PU. Still more, the planetary gear unit PU may be disposed closely to the output shaft 15 in mounting the vehicular automatic transmission in an FR-type vehicle in particular, so that the member for linking the planetary gear unit PU with the output shaft 15, i.e., the member transmitting a large torque, may be shortened. Thereby, it becomes possible to lighten the vehicular automatic transmission 1₁₃ and to improve the controllability thereof by cutting its inertia.

Further, because the vehicular automatic transmission 1₁₃ is arranged so that the reduced rotation of the ring gear R1 is inputted to the clutch drum 42 of the third clutch C-3 forming the hydraulic servo 40 of the third clutch C-3 when the third clutch C-3 engages, the reduced rotation is not inputted to the clutch drum 42 of the third clutch C-3 when the third clutch C-3 is not engaged even if the driver races the engine in Neutral or Parking range and the input shaft rotates for example. Accordingly, it is possible to prevent the whole hydraulic servo 40 of the third clutch C-3 from rotating and to prevent dragging of the third clutch C-3 which is otherwise caused by a centrifugal hydraulic pressure generated in the oil chamber 46.

Further, because the vehicular automatic transmission 1₁₃ is arranged so that the inputted rotation is inputted to the clutch drum 52 of the fourth clutch C-4 forming the hydraulic servo 50 of the fourth clutch C-4 when the fourth clutch C-4 engages, the inputted rotation is not inputted to the clutch drum 52 of the fourth clutch C-4 when the fourth clutch C-4 is not engaged even if the driver races the engine in Neutral or Parking range and the input shaft rotates for example. Accordingly, it is possible to prevent the whole hydraulic servo 50 of the fourth clutch C-4 from rotating and to prevent dragging of the fourth clutch C-4 which is otherwise caused by a centrifugal hydraulic pressure generated in the oil chamber 56.

### <14th Embodiment>

A 14th embodiment, which is a partial modification of the first through 13th embodiments described above, will be explained with reference to FIG. 24. FIG. 24 is a diagrammatic section view showing an automatic transmission 1₁₄ of the 14th embodiment. It is noted that in the 14th embodiment explained below, components having the same structure with those of the automatic transmissions 1 of the first through 13th embodiments will be denoted by the same reference characters and an explanation thereof will be omitted here, except of partial components such as oil passages, seal rings and hub members.

The automatic transmission 1₁₄ that is suitably mounted in an FF-type (front engine front drive) vehicle has the case 4 formed by connecting the mission case 3, the housing case for housing the torque converter not shown and others. A transmission mechanism 2₁₄, a counter shaft and a differential unit not shown are disposed within the mission case 3. The transmission mechanism 2₁₄ is disposed on the shafts centering on the input shaft 12 and the intermediate shaft 13 which are coaxial with the output shaft of the engine not shown. The counter shaft not shown is disposed on the axis in parallel with the input shaft 12 and the intermediate shaft 13 and the differential gear unit not shown is disposed on the axis in parallel with the counter shaft in a manner of having left and right axles. It is noted that the input shaft 12, the intermediate shaft 13, the counter shaft and the left and right axles have a positional relationship in the shape of L when seen from the side thereof.

It is noted that although the lateral direction in the drawings has been actually the longitudinal direction in the automatic transmission suitably mounted to the FR-type vehicle in the first through 13th embodiments described above, the lateral direction in the drawings will be the actual lateral direction of the vehicle in the automatic transmission suitably mounted to the FF-type vehicle described hereinbelow. However, the right side in the drawings is the left side in the actual vehicle and the left side in the drawings is the right side in the actual vehicle depending on the direction in which the automatic transmission is mounted, "the right side" or "the left side" mentioned in the explanation below will denote "the right side" or "the left side" in the drawings.

As shown in FIG. 24, within the mission case 3, the planetary gear unit PU is disposed on the intermediate shaft 13 and the third clutch C-3, the fourth clutch C-4, the planetary gear DP, the first clutch C-1 and the counter gear (output member) 150 are disposed axially on the right side (input side) of the planetary gear unit PU in order from the right side. The fourth clutch C-4 and the planetary gear DP are disposed on the inner peripheral side of the clutch drum 42 of the third clutch C-3 described later in detail. Further, the first brake B-1 comprising the band brake is disposed on the outer peripheral side of the clutch drum 42 of the third clutch C-3.

Meanwhile, the second clutch C-2 is disposed axially on the left side of the planetary gear unit PU. The second brake B-2 and the one-way clutch F-1 are disposed on the outer peripheral side of the planetary gear unit PU.

This will be explained in detail. The friction plate 51 of the fourth clutch C-4, the friction plate 41 of the third clutch C-3 and the friction plate 21 of the first clutch C-1 are disposed relatively on the outer diametric side within the mission case 3 on the input shaft 12 in order from the right side within the inner right part of the mission case 3, i.e., on the right side of the counter gear 150. Still more, the brake band 161 of the first brake B-1 is disposed so as to overlap with the outer diametric side of the friction plate 41 of the third clutch C-3 and a part of the friction plate 21 of the first clutch C-1. It is noted that although the brake band 161 is a band-type brake, it will be explained as one type of a friction plate in the present specification. That is, it is assumed that the "friction plates of the brake" encompasses the friction plate of the multi-plate brake and the braking band of the band brake.

Still more, the partition member 3a for partitioning the mission case 3 from the housing case not shown is secured to the mission case 3 as a part of the case 4 and the hydraulic servo 40 of the third clutch C-3 is disposed on the boss portion 3b extending from the partition member 3a. Further, the hydraulic servo 50 of the fourth clutch C-4 is disposed on the left side of the hydraulic servo 40, the planetary gear DP is disposed on the inner diametric side of the friction plate 41 and the hydraulic servo 20 of the first clutch C-1 is disposed nearly on the inner diametric side of the friction plate 21. That is, the hydraulic servo 40, the hydraulic servo 50 and the planetary gear DP are disposed in order (in order from the side of the joint of the boss portion 3b with the case 4 in the axial direction) on the boss portion 3b on the right side of the mission case 3 and the hydraulic servo 20 is disposed on the input shaft 12 in a manner of adjoining with the planetary gear DP.

The flange-like support wall 130 is disposed on the left side of the hydraulic servo 20 of the first clutch C-1 by being secured to the inner peripheral face of the mission case 3 and the counter gear 150 connected to the ring gear R2 of the planetary gear unit PU described later via a ball bearing 131 is disposed and rotatably supported by the support wall 130 on the inner diametric side of the support wall 130.

Meanwhile, the planetary gear unit PU is disposed on the intermediate shaft 13 on the left side of the mission case 3 in the drawing, i.e., on the left side of the counter gear 150. The friction plate 71 of the second brake B-2 and the one-way clutch F-1 are disposed on right part of the outer peripheral side of the planetary gear unit PU and the friction plate 31 of the second clutch C-2 is disposed on the left part of the outer diametric side of the planetary gear unit PU. The hydraulic servo 30 of the second clutch C-2 is disposed from the left side to the inner diametric side of the friction plate 31 and the hydraulic servo 70 of the second brake B-2 is disposed on the outer peripheral side of the hydraulic servo 30.

As described above, the hydraulic servo 40 of the third clutch C-3 and the hydraulic servo 50 of the fourth clutch C-4 are disposed axially on the opposite side of the planetary gear DP from the planetary gear unit PU, the hydraulic servo 20 of the first clutch C-1 and the counter gear 150 are disposed axially between the planetary gear DP and the planetary gear unit PU and the hydraulic servo 30 of the second clutch C-2 is disposed axially on the opposite side of the planetary gear unit PU from the planetary gear DP.

Next, the structure within the mission case 3 will be explained in detail with reference to FIG. 24. It is noted that the structure of each oil passage will be collectively explained later.

The planetary gear DP disposed within the mission case 3 is provided with the sun gear S1, the carrier CR1 and the ring gear R1. Among them, the sun gear S1 is fixed to the boss portion 3b so as not to be rotatable. The carrier CR1 has two carrier plates in the lateral direction to rotatably support the pinions P1 and P2. While these pinions P1 and P2 engage from each other, the pinion P1 engages with the sun gear S1 and the pinion P2 engages with the ring gear R1, respectively. The left carrier plate is connected to the input shaft 12 and the right carrier plate is connected to the hub member 154 spline-coupled with the inner friction plate of the friction plate 51 of the fourth clutch C-4. The inner friction plate of the friction plate 41 of the third clutch C-3 is spline-coupled with the outer peripheral face of the ring gear R1. The hub portion 151 is linked on the left side of the ring gear R1 and is spline-coupled with the inner friction plate of the friction plate 21 of the first clutch C-1.

The fourth clutch C-4 is disposed on the boss portion 3b through an intermediary of the clutch drum 42 of the third clutch C-3 on the right side of the planetary gear DP described above. The fourth clutch C-4 is provided with the friction plate 51 and the hydraulic servo 50 for engaging/disengaging the friction plate 51. The hydraulic servo 50 has the clutch drum 52, the piston member 53, the cancel plate 54 and the return spring 55 and composes thereby the oil chamber 56 and the cancel oil chamber 57. The clutch drum 52 is fixed to the hub portion 42c of the clutch drum 42 of the third clutch C-3 and the outer friction plate 51a of the friction plate 51 is spline-coupled with the inner peripheral face of the outer diametric portion thereof. The piston member 53 is disposed on the left side of the clutch drum 52 so as to be movable in the axial direction and composes the oil-tight oil chamber 56 between the clutch drum 52 by the seal rings a4 and a5. Still more, the cancel plate 54 is blocked from moving to the left by the snap ring 59 fitted to the clutch drum 42 described above. The cancel plate 54 is provided with the return spring 55 in contraction between the piston member 53 disposed on the right side thereof and composes the oil-tight cancel oil chamber 57 by the seal rings a4 and a6.

It is noted that because the fourth clutch C-4 is built as described above, the inputted rotation of the carrier CR1 is inputted to the clutch drum 52 when the fourth clutch C-4 engages. The rotation is not inputted to the clutch drum 52 and the hydraulic servo 50 will not rotate when the fourth clutch C-4 is not engaged in Neutral and Parking ranges in particular.

The third clutch C-3 is built so as to surround the inner peripheral side, the right side and the outer peripheral side of the fourth clutch C-4 described above and is disposed on the boss portion 3b. The third clutch C-3 is provided with the friction plate 41 and the hydraulic servo 40 for engaging/disengaging the friction plate 41. The hydraulic servo 40 has the clutch drum 42, the piston member 43, the cancel plate 44 and the return spring 45 and composes the oil chamber 46 and the cancel oil chamber 47 with them. The clutch drum 42 has the flange portion 42a disposed on the left side of the partition member 3a, the hub portion 42c extending to the left from the inner periphery of the flange portion 42a and the drum portion 42b extending to the left from the outer periphery of the flange portion 42a. Among them, the outer peripheral face of the boss portion 3b extending from the partition member 3a described above to the left side rotatably supports the hub portion 42c. The end of the hub portion 42c of the clutch drum 42 is positioned on the left side of the fourth clutch C-4 and the hydraulic servo 50 of the fourth clutch C-4 is disposed on the outer peripheral side thereof. The drum portion 42b of the clutch drum 42 extends to the outer diametric side of the first clutch C-1 by passing through the outer diametric side of the fourth clutch C-4. The brake band 161 of the first brake B-1 comprising the band brake is disposed on the outer peripheral face of the drum portion 42b of the clutch drum 42, the outer friction plate of the friction plate 41 is spline-coupled with the part corresponding to the ring gear R1 described above and the link member 101 is linked at the left part thereof. The link member 101 extends to the inner diametric side via the outer diametric side and the left side of the first clutch C-1 and is linked to the sun gear S2.

The piston member 43 of the third clutch C-3 is disposed so as to be movable from the clutch drum 42 and composes the oil-tight oil chamber 46 between the clutch drum 42 by the seal rings a1 and a2. Still more, the outer diametric portion of the piston member 43 extends to the left by passing the outer peripheral side of the clutch drum 52 and the inner peripheral side of the clutch drum 42 of the third clutch C-3 so that its end faces to the friction plate 41. The cancel plate 44 is blocked from moving to the left side by the snap ring 49 fitted to the outer peripheral face of the hub portion 42c of the clutch drum 42. The cancel plate 44 is provided with the return spring 45 in contraction between the piston member 43 disposed on the right side thereof and composes the oil-tight cancel oil chamber 47 by the seal rings a1 and a3.

It is noted that because the third clutch C-3 is built as described above, the reduced rotation of the ring gear R1 is inputted to the clutch drum 42 when the third clutch C-3 engages. Accordingly, the rotation is not inputted to the clutch drum 42 and the hydraulic servo 40 will not rotate when the third clutch C-3 is not engaged specially in Neutral and Parking ranges.

The first clutch C-1 is disposed on the input shaft 12 on the left side of the planetary gear DP and the friction plate 41 of the third clutch C-3 and is provided with the friction plate 21 and the hydraulic servo 20 for engaging/disengaging the friction plate 21. The inner friction plate of the friction plate 21 is spline-coupled with the outer peripheral face of the hub member 151 linked to the ring gear R1 described above. The outer friction plate of the friction plate 21 is spline-coupled with the inner peripheral side of the clutch drum 22 described later and the clutch drum 22 is linked to the link member 102. This link member 102 is then linked to the sun gear S3.

The hydraulic servo 20 has the clutch drum 22, the piston member 23, the cancel plate 24 and the return spring 25 and composes the oil chamber 26 and the cancel oil chamber 27 with them. The clutch drum 22 is attached to the outer peripheral face of the left side of the input shaft 12 so as to be relatively rotatable. The piston member 23 is disposed in the clutch drum 22 so as to be movable in the axial direction and composes the oil-tight oil chamber 26 between the clutch drum 22 by seal rings a7 and a8. A part of the piston member 23 on the outer peripheral side faces to the front face of the friction plate 21. The cancel plate 24 is blocked from moving to the right side by the snap ring 29 fitted around the outer peripheral face on the inner diametric side of the clutch drum 22 described above. The cancel plate 24 is provided with the return spring 25 in contraction between the piston member 23 disposed on the left side thereof and composes the oil-tight cancel oil chamber 27 by the seal rings a7 and a9.

The first brake B-1 is disposed on the outer diametric side of the clutch drum 42 and is provided with a hydraulic servo not shown and set so as not to be rotatable with respect to the mission case 3 and the brake band 161 for fastening and releasing the outer peripheral part of the clutch drum 42 by the hydraulic servo.

The second brake B-2 is disposed from the outer diametric side of the ring gear R2 of the planetary gear unit PU to the outer diametric side of the second clutch C-2 on the left side described later. The second brake B-2 has the friction plate 71 and the hydraulic servo 70 for engaging/disengaging the friction plate 71. The outer friction plate of the friction plate 71 is spline-coupled with the inner peripheral face of the mission case 3 and the inner friction plate is spline-coupled with the hub member 158 linked to the carrier CR2 of the planetary gear unit PU via the hub member 152 described later.

The hydraulic servo 70 has a piston member 73, a cancel plate 74 and a return spring 75 and composes an oil chamber 76 between the piston member 73 and the mission case 3. The piston member 73 is movably disposed in the axial direction and its right end faces to the friction plate 71. The oil-tight oil chamber 76 is formed between the piston member 73 and the mission case 3 by two seal rings a13 and a14. The cancel plate 74 is blocked from moving to the right side by a snap ring 79 fitted into the inner peripheral face of the mission case 3.

The one-way clutch F-1 is disposed on the outer diametric side of the planetary gear unit PU and on the right side of the second brake B-2 described above and is provided with the inner race 112 linked to the hub member 158, the sprag mechanism 113 and the outer race 114 spline-coupled with the inner peripheral side of the mission case 3 in order from the inner peripheral side to the outer peripheral side.

The second clutch C-2 is disposed on the left side from the outer diametric side of the planetary gear unit PU and on the inner diametric side of the second brake B-2 and is provided with the friction plate 31 and the hydraulic servo 30 for engaging/disengaging the friction plate 31. The inner friction plate of the friction plate 31 is spline-coupled with the hub member 152 that is linked with the inner race 112 and the hub member 158 and with the carrier CR2. The outer friction plate of the friction plate 31 is spline-coupled with the inner peripheral side of the clutch drum 32 and the clutch drum 32 is linked with the intermediate shaft 13. The intermediate shaft 13 is spline-coupled with the input shaft 12 described above. That is, the clutch drum 32 is linked with the input shaft 12 via the intermediate shaft 13.

The hydraulic servo 30 has the clutch drum 32, the piston member 33, the cancel plate 34 and the return spring 35 and composes the oil chamber 36 and the cancel oil chamber 37 with them. The right end on the inner peripheral side of the clutch drum 32 is attached to the intermediate shaft 13 and is rotatably supported on the boss portion 3d extending from the side wall 3c of the mission case 3. The piston member 33 is disposed in the clutch drum 32 movably in the axial direction and composes the oil-tight oil chamber 36 between the clutch drum 32 by the seal rings a10 and a11. The part of the piston member 33 on the outer peripheral side faces to the front face of the friction plate 31. Still more, the cancel plate 34 is blocked from moving to the right side by the snap ring 39 fitted around the outer peripheral face on the inner diametric side of the clutch drum 32 described above. The clutch drum 32 is provided with the return spring 35 in contraction between the piston member 33 disposed on the left side thereof and composes the oil-tight cancel oil chamber 37 by the seal rings a10 and a12.

Then, the support wall 130 is disposed nearly at the center of the inner peripheral side of the mission case 3 so that its outer peripheral side is linked to the mission case 3 and the counter gear 150 is disposed on the boss portion 130a extending in the inner diametric side of the support wall 130 through an intermediary of a ball bearing 131. It is noted that a gear linked to the counter shaft not shown is engaged with the outer peripheral side of the counter gear 150 and the counter shaft is linked with driving wheels through an intermediary of gear mechanisms and differential gears not shown.

Next, the structures of each oil passage and the supply of operating fluid will be briefly explained. The oil chamber 56 of the hydraulic servo 50 of the fourth clutch C-4, i.e., the oil chamber 56 formed by sealing the part between the clutch drum 52 and the piston member 53 by the seal rings a4 and a5, is arranged so as to communicate with the oil passage c54 within the boss portion 3b by sealing the part between the clutch drum 52 and the boss portion 3b by the seal rings d3 and d4 and operating fluid is supplied from the oil passage c54. It is noted that operating fluid is supplied from the oil passage not shown to the cancel oil chamber 57 formed by sealing the part between the piston member 53 and the cancel plate 54 by the seal rings a4 and a6.

The oil chamber 46 of the hydraulic servo 40 of the third clutch C-3, i.e., the oil chamber 46 formed by sealing the part between the clutch drum 42 and the piston member 43 by the seal rings a1 and a2, is arranged so as to communicate with the oil passage c53 within the boss portion 3b by sealing the part between the clutch drum 42 and the boss portion 3b by the seal rings d1 and d2 and operating fluid is supplied thereto from the oil passage c53. It is noted that operating fluid is supplied from the oil passage not shown to the cancel oil chamber 47 formed by sealing the part between the piston member 43 and the cancel plate 44 by the seal rings a1 and a3.

The oil chamber 26 of the hydraulic servo 20 of the first clutch C-1, i.e., the oil chamber 26 formed by sealing the part between the clutch drum 22 and the piston member 23 by the seal rings a7 and a8, is arranged so as to communicate with the oil passage c60 within the boss portion 3b by sealing the part between the boss portion 3b and the input shaft 12 by the seal rings d5 and d6 and the part between the input shaft 12 and the clutch drum 22 by the seal rings d7 and d8, respectively, via the oil passages c61, c70, c62 within the input shaft 12 and the oil passage c51 and operating fluid is supplied thereto from the oil passage c51. It is noted that operating fluid is supplied from the oil passage not shown to the cancel oil chamber 27 formed by sealing the part between the piston member 23 and the cancel plate 24 by the seal rings a7 and a9.

The oil chamber 36 of the hydraulic servo 30 of the second clutch C-2, i.e., the oil chamber 36 formed by sealing the part between the clutch drum 32 and the piston member 33 by the seal rings a10 and a11, is arranged so as to communicate with the oil passage c52 within the boss portion 3b by sealing the part between the clutch drum 32 and the boss portion 3d by the seal rings d9 and d10 and operating fluid is supplied thereto from the oil passage c52. It is noted that operating fluid is supplied from the oil passage not shown to the cancel oil chamber 37 formed by sealing the part between the piston member 33 and the cancel plate 34 by the seal rings a10 and a12.

Still more, operating fluid is supplied from the oil passage within the partitioning portion 3c not shown to the oil chamber 76 of the hydraulic servo 70 of the second brake B-2, i.e., to the oil chamber 76 formed by sealing the part between the side wall 3c of the mission case 3 and the piston member 73 by the seal rings a13 and a14.

According to the inventive automatic transmission 1₁₄ described above, the fourth clutch C-4 is linked with the sun gear S2 of the planetary gear unit PU via the output side members (clutch drum 42 and the link member 102) of the third clutch C-3, so that the output side members turn out to be output side members of the two clutches transmitting different rotations, i.e., they may be shared in common as one rotary member. Thereby, the automatic transmission 1₁₄ may be compactly built.

Still more, because the hydraulic servo 50 of the fourth clutch C-4 is disposed axially on the opposite side of the planetary gear DP from the planetary gear unit PU and on the boss portion 3b extending from the case 4 to supply the operating fluid to the hydraulic servo 50 of the fourth clutch C-4 from the oil passage within the boss portion 3b, a number of seal rings may be cut as compared to a case of disposing the hydraulic servo 50 of the fourth clutch C-4 on the input shaft 12 through an intermediary of a member having another speed of rotation, i.e., as compared to a case of supplying the operating fluid via the other member for example. Thereby, it is possible to prevent the drop of the efficiency and controllability of the automatic transmission 1₁₄.

Still more, because the planetary gear DP, the first clutch C-1, the third and fourth clutches C-3 and C-4 are disposed axially on one side of the planetary gear unit PU and the planetary gear DP and the fourth clutch C-4 are disposed on the inner peripheral side of the clutch drum 42 of the third clutch C-3, it becomes possible to increase an area of the friction plates 21 and 41 of the first and third clutches C-1 and C-3. That is, even though a capacity of the first clutch C-1 and the third clutch C-3 for transmitting the reduced rotation may be increased (although the "capacity" is a meaning including a capacity of torque, thermal capacity and the like that can be transmitted, it will be abbreviated and referred to simply as "capacity" hereinafter), the fourth clutch C-4 and the planetary gear DP whose transmittable torque capacity can be relatively small for transmitting the inputted rotation may be disposed on the inner peripheral side of the clutch drum 42 of the third clutch C-3. Accordingly, the automatic transmission 1₁₄ that is capable of attaining the multi-stage shift such as the forward eighth speed stage and the reverse second speed stage may be compactly built.

Still more, because the hydraulic servo 20 of the first clutch C-1 is disposed on the input shaft 12 and adjacent to the planetary gear DP and the operating fluid is supplied to the hydraulic servo 20 of the first clutch C-1 from the oil passage provided within the input shaft 12, the operating fluid may be supplied just by providing pairs of seal rings d5, d6, d7 and d8 along the oil passage for supplying the operating fluid from the hydraulic control unit, i.e. , between the oil passage within the boss portion 3b and the input shaft 12 and between the hydraulic servo 20 of the first clutch C-1 and the input shaft 12. Accordingly, a number of seal rings may be cut as compared to a case of supplying operating fluid via another member for example. Thereby, it becomes possible to prevent the drop of the efficiency and controllability of the vehicular automatic transmission 1₁₄.

Still more, although the increase of radial size of the first clutch C-1 to the outer peripheral side is limited because the third and fourth clutches C-3 and C-4 are linked to the sun gear S2 of the planetary gear unit PU through the outer peripheral side of the first clutch C-1 and the link member 101 and others for linking the third and fourth clutches C-3 and C-4 with the sun gear S2 of the planetary gear unit PU pass through the outer peripheral side of the first clutch C-1, the capacity of the first clutch C-1 may be maintained by increasing the size in the inner radial direction because the first clutch C-1 is disposed on the input shaft 12 as compared to a case of disposing it on the boss portion 3b.

Still more, because the sun gear S2 of the planetary gear unit PU is capable of transmitting the inputted rotation in connection with the fourth clutch C-4, is capable of transmitting the reduced rotation in connection with the third clutch C-3 and is capable of fixing the rotation in connection with the first brake B-1, the sun gear S3 is capable of transmitting the reduced rotation in connection with the first clutch C-1, the carrier CR2 is capable of transmitting the inputted rotation in connection with the second clutch C-2 and is capable of fixing the rotation in connection with the second brake B-2 and the ring gear R2 is linked to the counter gear 150, the multi-stage shift such as the forward eighth speed stage and the reverse second speed stage may be attained.

Further, because the friction plate 41 of the third clutch C-3 is disposed on the outer peripheral side of the ring gear R1 and the fourth clutch C-4 is disposed axially between the hydraulic servo 40 of the third clutch C-3 and the friction plate 41 of the third clutch C-3, it is possible to prevent the fourth clutch C-4 from radially overlapping with the hydraulic servo 40 or the friction plate 41 of the third clutch C-3. Accordingly, because the radial size of the fourth clutch C-4 may be increased as compared to a case of disposing it on the inner peripheral side of the third clutch C-3, the capacity of the fourth clutch C-4 may be maintained and the vehicular automatic transmission 1₁₄ may be compactly built in the axial direction as a result.

Still more, although the first brake B-1 is disposed on the outer peripheral side of the friction plate 41 of the third clutch C-3 in the present embodiment, it is also possible to dispose the first brake B-1 on the outer peripheral side of the hydraulic servo 40 of the third clutch C-3. Accordingly, it is possible to build the vehicular automatic transmission 1₁₄ compactly in the radial direction while maintaining the capacity of the first brake B-1 and reducing the size thereof by disposing the first brake B-1 at the position overlapping with the third clutch C-3.

Further, because the automatic transmission 1₁₄ is built so that the reduced rotation of the ring gear R1 is inputted to the clutch drum 42 of the third clutch C-3 forming the hydraulic servo 40 of the third clutch C-3 when the third clutch C-3 engages, the reduced rotation is not inputted to the clutch drum 42 of the third clutch C-3 when the third clutch C-3 is not engaged even if the driver races the engine in Neutral or Parking range for example and the input shaft rotates. Accordingly, it is possible to prevent the whole hydraulic servo 40 of the third clutch C-3 from rotating and to prevent dragging of the third clutch C-3 which is otherwise caused by a centrifugal hydraulic pressure generated in the oil chamber 46.

Still more, because the automatic transmission 1₁₄ is built so that the inputted rotation is inputted to the clutch drum 52 of the fourth clutch C-4 forming the hydraulic servo 50 of the fourth clutch C-4 via the carrier CR1 when the fourth clutch C-4 engages, the inputted rotation is not inputted to the clutch drum 52 of the fourth clutch C-4 when the fourth clutch C-4 is not engaged even if the driver races the engine in Neutral or Parking range for example and the input shaft rotates. Accordingly, it is possible to prevent the rotation of the whole hydraulic servo 50 of the fourth clutch C-4 and to prevent dragging of the fourth clutch C-4 which is otherwise caused by a centrifugal hydraulic pressure generated in the oil chamber 56.

Because the second clutch C-2 is disposed axially on the opposite side of the planetary gear unit PU from the planetary gear DP, the second clutch C-2 may be linked with the carrier CR2 without entangling with the member for linking the first clutch C-1 with the sun gear S3 and the member for linking the third clutch C-3 with the sun gear S2 for example.

It is noted that an automatic transmission 1₅₉ of a 59th embodiment described later may be built by inverting the transmission mechanism 2₁₄ of the automatic transmission 1₁₄ of the 15th embodiment in the lateral direction (axial direction) almost as it is.

### <15th Embodiment>

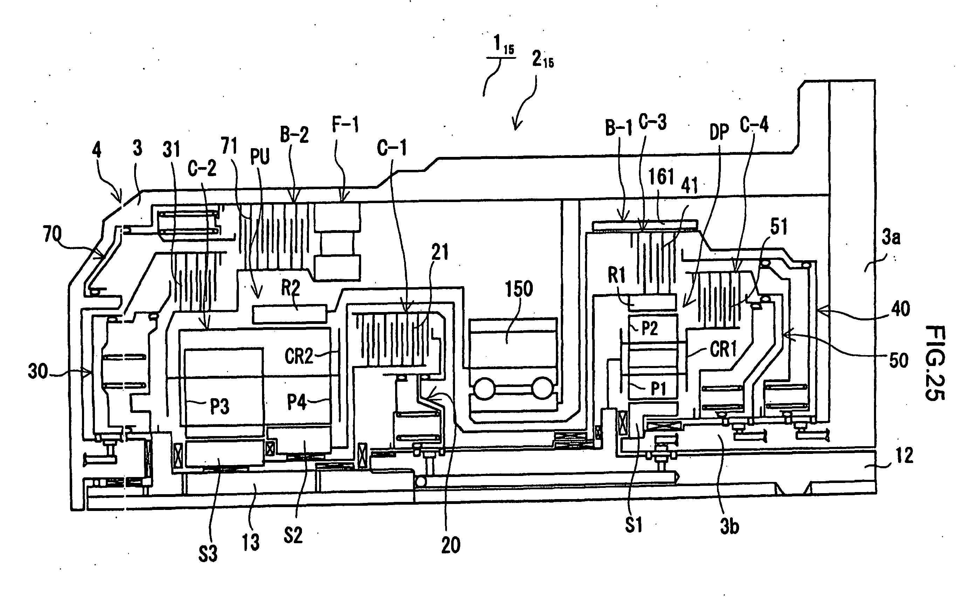

A 15th embodiment, which is a partial modification of the 14th embodiment described above, will be explained with reference to FIG. 25. FIG. 25 is a diagrammatic section view showing an automatic transmission 1₁₅ of the 15th embodiment. It is noted that in the 15th embodiment explained below, only structures or components different from those of the automatic transmission 1₁₄ of the 14th embodiment will be explained and an explanation of the structures or components other than that will be omitted here because they are almost the same.

As compared to the automatic transmission 1₁₄ of the 14th embodiment, the automatic transmission 1₁₅ of the 15th embodiment is characterized in that it is arranged by switching the lateral (axial) disposition of the hydraulic servo 20 of the first clutch C-1 and the counter gear 150.

It is noted that an automatic transmission 1₆₀ of a 60th embodiment described later may be built by inverting a transmission mechanism 2₁₅ of the automatic transmission 1₁₅ of the 15th embodiment in the lateral direction (axial direction) almost as it is.

### <16th Embodiment>

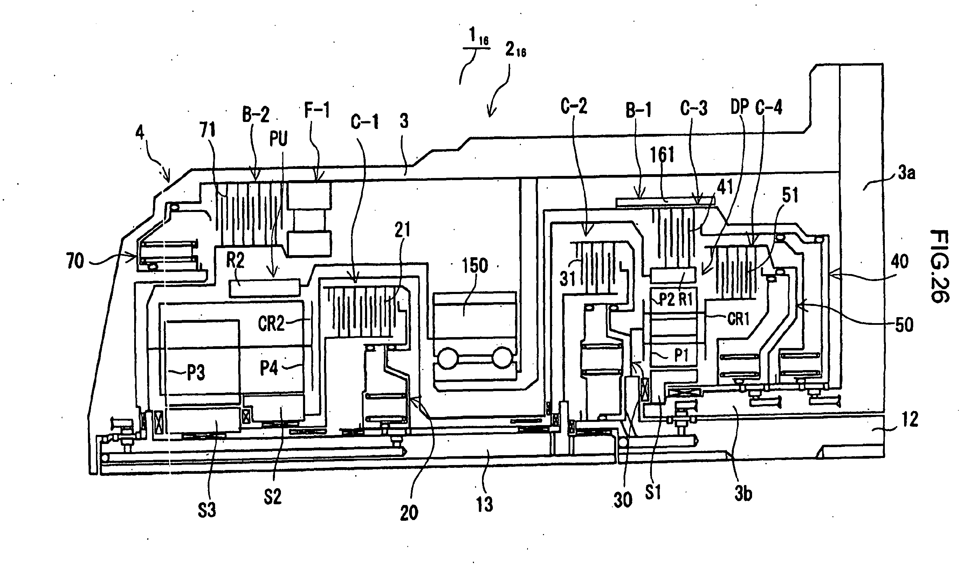

A 16th embodiment, which is a partial modification of the 14th embodiment described above, will be explained with reference to FIG. 26. FIG. 26 is a diagrammatic section view showing an automatic transmission 1₁₆ of the 16th embodiment. It is noted that in the 16th embodiment explained below, only structures or components different from those of the automatic transmission 1₁₄ of the 14th embodiment will be explained and an explanation of the structures or components other than that will be omitted here because they are almost the same.

As compared to the automatic transmission 1₁₄ of the 14th embodiment, the automatic transmission 1₁₆ of the 16th embodiment is arranged so that the hydraulic servo 30 of the second clutch C-2 is disposed axially between the planetary gear unit PU and the planetary gear DP, or more specifically, axially between the planetary gear DP and the counter gear 150. Further, the hydraulic servo 20 of the first clutch C-1 is disposed axially between the planetary gear unit PU and the planetary gear DP, or more specifically, axially between the planetary gear unit PU and the counter gear 150.

Because this arrangement allows the second clutch C-2 to be disposed on the input shaft 12, it becomes possible to eliminate the necessity of always transmitting the inputted rotation to the intermediate shaft 13 and to use the intermediate shaft 13 as a power transmitting member for transmitting the output (rotation) from the second clutch C-2.

It is noted that an automatic transmission 1₆₁ of a 61st embodiment described later may be built by inverting a transmission mechanism 2₁₆ of the automatic transmission 1₁₆ of the 16th embodiment in the lateral direction (axial direction) almost as it is and by adding a transmitting member from the second clutch C-2 to the planetary gear unit.

### <17th Embodiment>

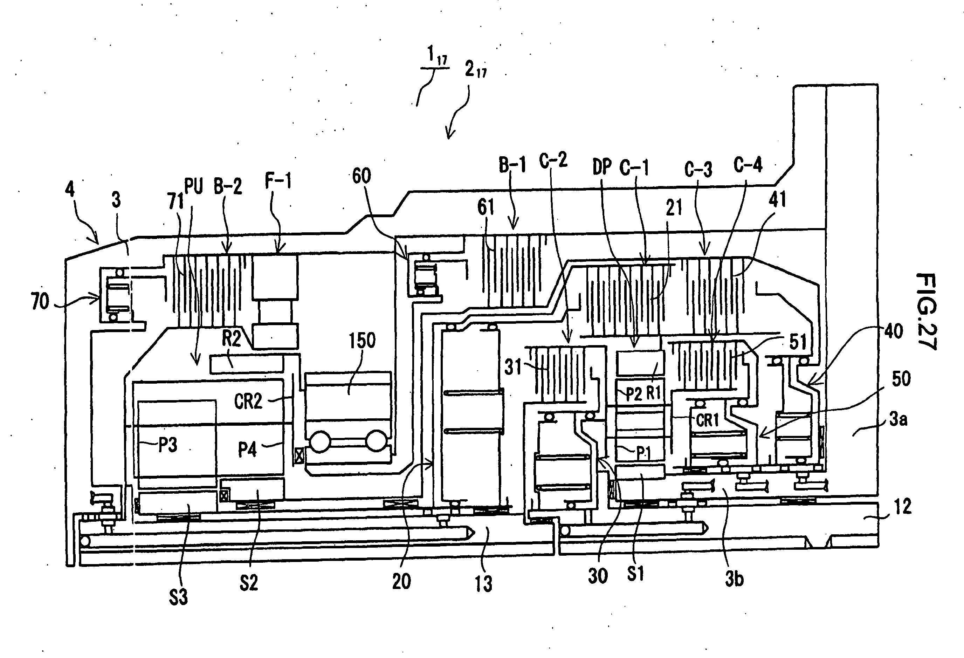

A 17th embodiment, which is a partial modification of the 14th embodiment described above, will be explained with reference to FIG. 27. FIG. 27 is a diagrammatic section view showing an automatic transmission 1₁₇ of the 17th embodiment. It is noted that in the 17th embodiment explained below, only structures or components different from those of the automatic transmission 1₁₄ of the 14th embodiment will be explained and an explanation of the structures or components other than that will be omitted here because they are almost the same.

As compared to the automatic transmission 1₁₄ of the 14th embodiment, the automatic transmission 1₁₇ of the 17th embodiment is arranged so that the hydraulic servo 30 of the second clutch C-2 is disposed axially between the planetary gear unit PU (specifically the counter gear 150.) and the planetary gear DP, or more specifically, axially between the hydraulic servo 20 of the first clutch C-1 and the planetary gear DP. Still more, the multi-plate type brake similar to that of the first embodiment is used for the first brake B-1 instead of the band brake. Further, a part of the support wall is used as the cylinder member of the first brake B-1, thus reducing a number of parts, in the present embodiment.

It is noted that an automatic transmission 1₆₂ of a 62nd embodiment described later may be built by inverting a transmission mechanism 2₁₇ of the automatic transmission 1₁₇ of the 17th embodiment in the lateral direction (axial direction) almost as it is and by adding the transmitting member from the second clutch C-2 to the planetary gear unit.

### <18th Embodiment>

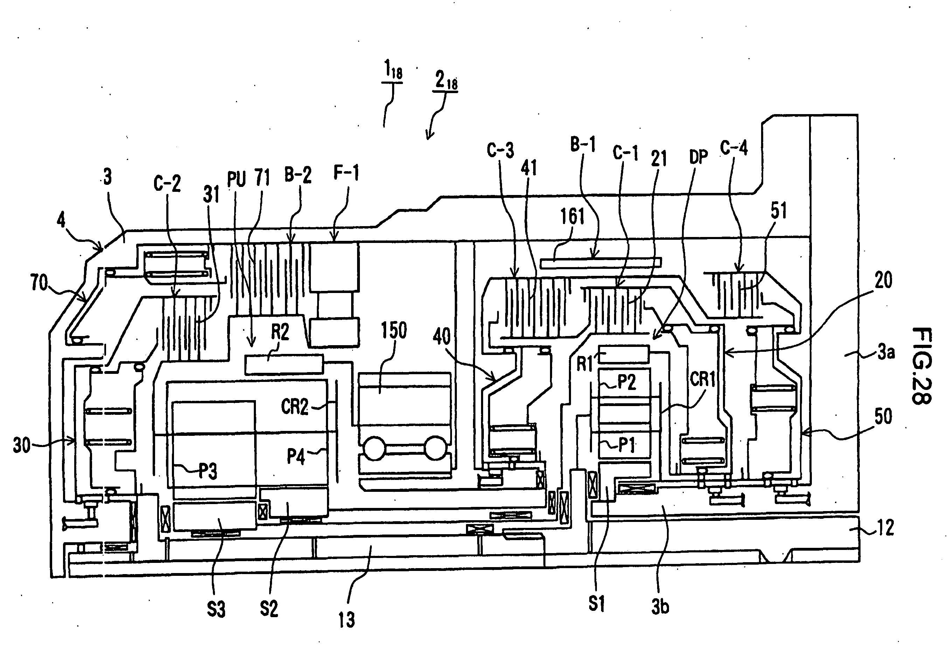

An 18th embodiment, which is a partial modification of the 14th embodiment described above, will be explained with reference to FIG. 28. FIG. 28 is a diagrammatic section view showing an automatic transmission 1₁₈ of the 18th embodiment. It is noted that in the 18th embodiment explained below, only structures or components different from those of the automatic transmission 1₁₄ of the 14th embodiment will be explained and an explanation of the structures or components other than that will be omitted here because they are almost the same.

As compared to the automatic transmission 1₁₄ of the 14th embodiment, the automatic transmission 1₁₈ of the 18th embodiment is arranged so that the hydraulic servo 40 of the third clutch C-3 is disposed axially between the planetary gear unit PU (specifically the counter gear 150) and the planetary gear DP and the hydraulic servo 20 of the first clutch C-1 is disposed axially on the opposite side of the planetary gear DP from the planetary gear unit PU, or more specifically, the hydraulic servo 20 of the first clutch C-1 is disposed axially between the planetary gear DP and the hydraulic servo 50 of the fourth clutch C-4.

It is noted that the disposition of the first clutch C-1 and the third clutch C-3 may be switched. That is, the hydraulic servo 20 of the first clutch C-1 may be disposed axially between the planetary gear unit PU (the counter gear 150) and the planetary gear DP and the hydraulic servo 40 of the third clutch C-3 may be disposed axially between the planetary gear DP and the hydraulic servo 50 of the fourth clutch C-4.

Further, an automatic transmission 1₆₃ of a 63rd embodiment described later may be built by inverting a transmission mechanism 2₁₈ of the automatic transmission 1₁₈ of the 18th embodiment in the lateral direction (axial direction) almost as it is.

### <19th Embodiment>

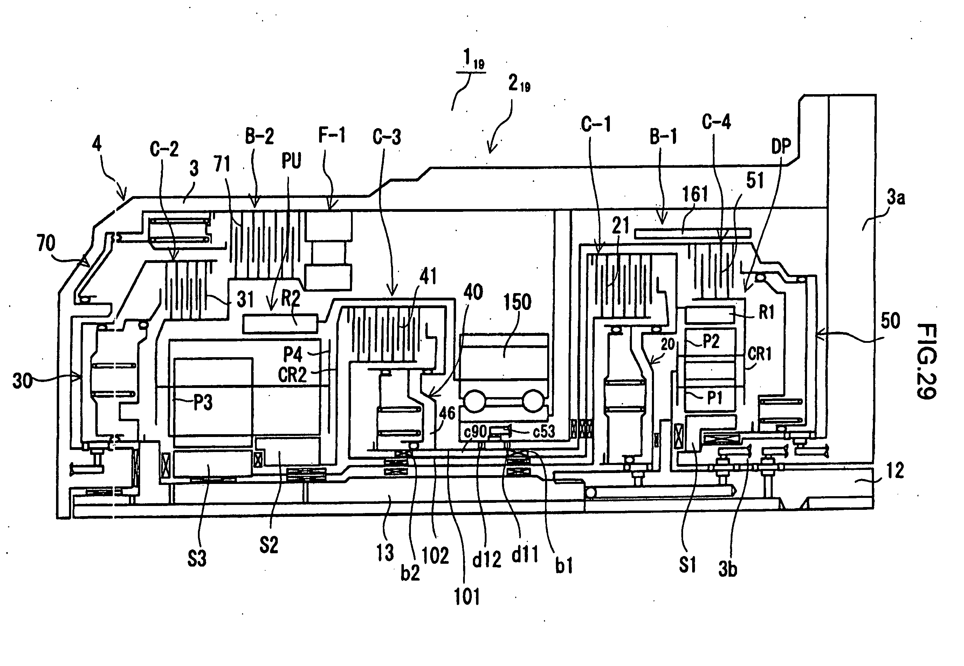

A 19th embodiment, which is a partial modification of the 14th embodiment described above, will be explained with reference to FIG. 29. FIG. 29 is a diagrammatic section view showing an automatic transmission 1₁₉ of the 19th embodiment. It is noted that in the 19th embodiment explained below, only structures or components different from those of the automatic transmission 1₁₄ of the 14th embodiment will be explained and an explanation of the structures or components other than that will be omitted here because they are almost the same.

As compared to the automatic transmission 1₁₄ of the 14th embodiment, the automatic transmission 1₁₉ of the 19th embodiment is arranged so that the hydraulic servo 40 of the third clutch C-3 is disposed axially between the planetary gear unit PU and the planetary gear DP, or more specifically, axially between the planetary gear unit PU and the counter gear 150. Still more, an oil passage c90 is formed by sealing the part between the support wall and the link member 101 by the seal rings d11 and d12 and by providing the bushes b1 and b2 between the link member 101 and the link member 102 to supply operating fluid to the oil chamber 46 of the hydraulic servo 40 of the third clutch C-3 from an oil passage c53 within the support wall via the oil passage c90.

It is noted that an automatic transmission 1₆₄ of a 64th embodiment described later maybe built by inverting a transmission mechanism 2₁₉ of the automatic transmission 1₁₉ of the 19th embodiment in the lateral direction (axial direction) almost as it is.

### <20th Embodiment>

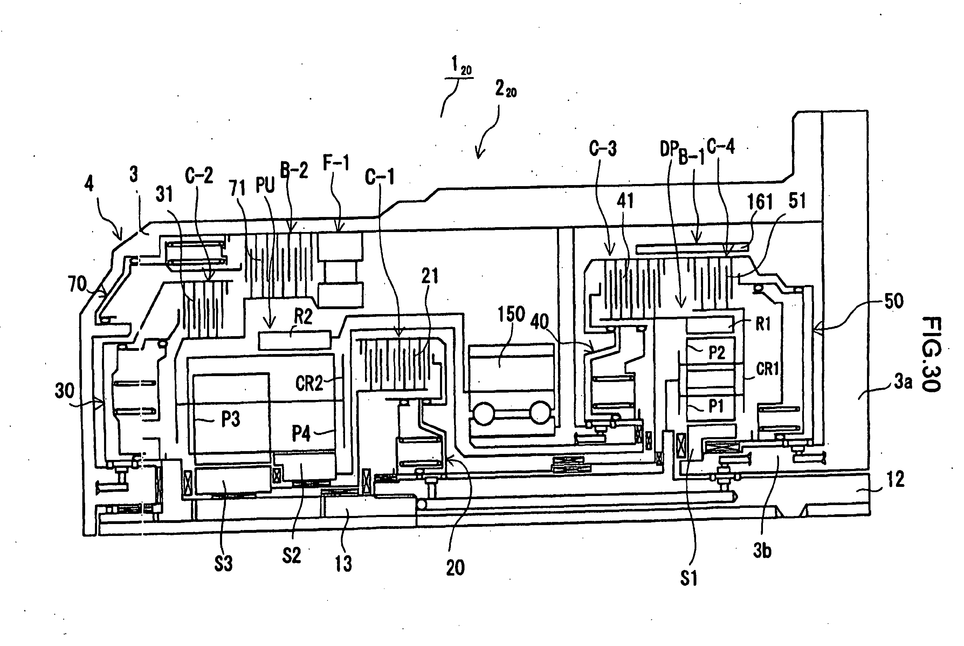

A 20th embodiment, which is a partial modification of the 14th embodiment described above, will be explained with reference to FIG. 30. FIG. 30 is a diagrammatic section view showing an automatic transmission 1₂₀ of the 20th embodiment. It is noted that in the 20th embodiment explained below, only structures or components different from those of the automatic transmission 1₁₄ of the 14th embodiment will be explained and an explanation of the structures or components other than that will be omitted here because they are almost the same.

As compared to the automatic transmission 1₁₄ of the 14th embodiment, the automatic transmission 1₂₀ of the 20th embodiment is arranged so that the 20of the first clutch C-1 and the hydraulic servo 40 of the third clutch C-3 are disposed axially between the planetary gear unit PU and the planetary gear DP, or more specifically, the hydraulic servo 20 of the first clutch C-1 is disposed axially between the planetary gear unit PU and the counter gear 150 and the hydraulic servo 40 of the third clutch C-3 is disposed axially between the counter gear 150 and the planetary gear DP.

It is noted that an automatic transmission 1₆₅ of a 65th embodiment described later may be built by inverting a transmission mechanism 2₂₀ of the automatic transmission 1₂₀ of the 20th embodiment in the lateral direction (axial direction) almost as it is.

### <21st Embodiment>

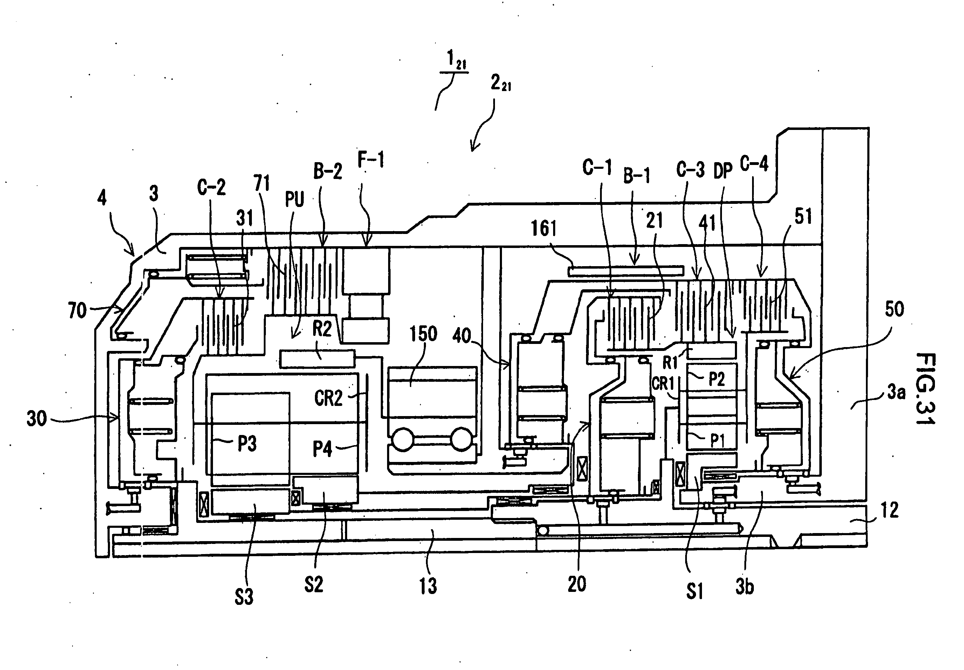

A 21st embodiment, which is a partial modification of the 14th embodiment described above, will be explained with reference to FIG. 31. FIG. 31 is a diagrammatic section view showing an automatic transmission 1₂₁ of the 21st embodiment. It is noted that in the 21st embodiment explained below, only structures or components different from those of the automatic transmission 1₁₄ of the 14th embodiment will be explained and an explanation of the structures or components other than that will be omitted here because they are almost the same.

As compared to the automatic transmission 1₁₄ of the 14th embodiment, the automatic transmission 1₂₁ of the 21st embodiment is arranged so that the hydraulic servo 40 of the third clutch C-3 is disposed axially between the planetary gear unit PU and the planetary gear DP, or more specifically, axially between the counter gear 150 and the planetary gear DP (or more specifically the hydraulic servo 20 of the first clutch C-1).

It is noted that an automatic transmission 1₆₅ of a 65th embodiment described later may be built by inverting a transmission mechanism 2₂₁ of the automatic transmission 1₂₁ of the 21st embodiment in the lateral direction (axial direction) almost as it is.

### <22nd Embodiment>

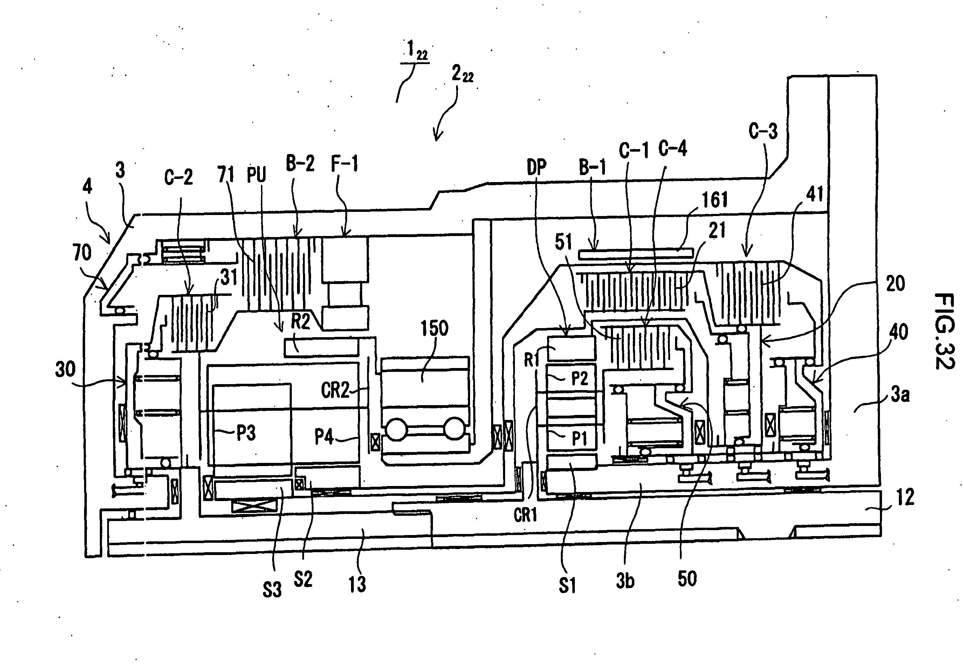

A 22nd embodiment, which is a partial modification of the 14th embodiment described above, will be explained with reference to FIG. 32. FIG. 32 is a diagrammatic section view showing an automatic transmission 1₂₂ of the 22nd embodiment. It is noted that in the 22nd embodiment explained below, only structures or components different from those of the automatic transmission 1₁₄ of the 14th embodiment will be explained and an explanation of the structures or components other than that will be omitted here because they are almost the same.

As compared to the automatic transmission 1₁₄ of the 14th embodiment, the automatic transmission 1₂₂ of the 22nd embodiment is arranged so that the hydraulic servo 20 of the first clutch C-1 is disposed axially on the opposite side of the planetary gear DP from the planetary gear unit PU, or more specifically, axially between the hydraulic servo 50 of the fourth clutch C-4 and the hydraulic servo 40 of the third clutch C-3.

It is noted that an automatic transmission 1₆₇ of a 67th embodiment described later may be built by inverting a transmission mechanism 2₂₂ of the automatic transmission 1₂₂ of the 22nd embodiment in the lateral direction (axial direction) almost as it is.

### <23rd Embodiment>

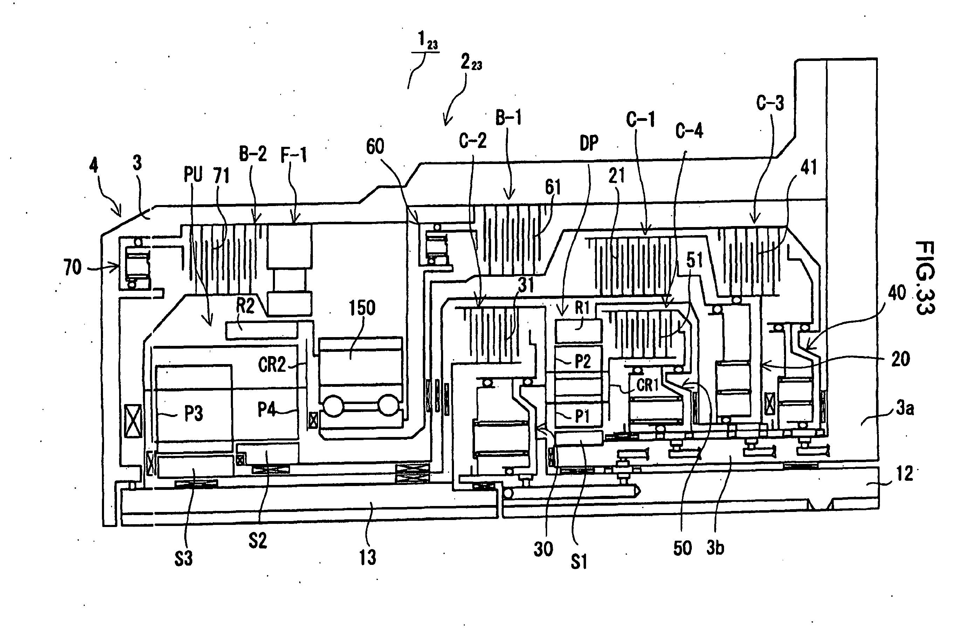

A 23rd embodiment, which is a partial modification of the 14th embodiment described above, will be explained with reference to FIG. 33. FIG. 33 is a diagrammatic section view showing an automatic transmission 1₂₃ of the 23rd embodiment. It is noted that in the 23rd embodiment explained below, only structures or components different from those of the automatic transmission 1₁₄ of the 14th embodiment will be explained and an explanation of the structures or components other than that will be omitted here because they are almost the same.

As compared to the automatic transmission 1₁₄ of the 14th embodiment, the automatic transmission 1₂₃ of the 23rd embodiment is arranged so that the hydraulic servo 20 of the first clutch C-1 is disposed axially on the opposite side of the planetary gear DP from the planetary gear unit PU and the hydraulic servo 30 of the second clutch C-2 is disposed axially between the planetary gear unit PU and the planetary gear DP. More specifically, the hydraulic servo 20 of the first clutch C-1 is disposed axially between the hydraulic servo 50 of the fourth clutch C-4 and the hydraulic servo 40 of the third clutch C-3 and the hydraulic servo 30 of the second clutch C-2 is disposed axially between the counter gear 150 and the planetary gear DP. Still more, the multi-plate type brake is used for the first brake B-1 instead of the band brake similarly to the first embodiment.

It is noted that an automatic transmission 1₆₈ of a 68th embodiment described later may be built by inverting a transmission mechanism 2₂₃ of the automatic transmission 1₃ of the 23rd embodiment in the lateral direction (axial direction) almost as it is and by adding a link member from the second clutch C-2 to the carrier of the planetary gear unit.

### <24th Embodiment>

A 24th embodiment, which is a partial modification of the 14th embodiment described above, will be explained with reference to FIG. 34. FIG. 34 is a diagrammatic section view showing an automatic transmission 1₂₄ of the 24th embodiment. It is noted that in the 24th embodiment explained below, only structures or components different from those of the automatic transmission 1₁₄ of the 14th embodiment will be explained and an explanation of the structures or components other than that will be omitted here because they are almost the same.

As compared to the automatic transmission 1₁₄ of the 14th embodiment, the automatic transmission 1₂₄ of the 24th embodiment is arranged so that the hydraulic servo 40 of the third clutch C-3 is disposed axially between the planetary gear unit PU and the planetary gear DP and the hydraulic servo 20 of the first clutch C-1 is disposed axially on the opposite side of the planetary gear unit PU from the planetary gear DP. More specifically, the hydraulic servo 40 of the third clutch C-3 is disposed axially between the counter gear 150 and the planetary gear DP and the hydraulic servo 20 of the first clutch C-1 is disposed axially between the planetary gear unit PU and the hydraulic servo 30 of the second clutch C-2.

It is noted that an automatic transmission 1₆₉ of a 69th embodiment described later may be built by inverting a transmission mechanism 2₂₄ of the automatic transmission 1₂₄ of the 24th embodiment in the lateral direction (axial direction) almost as it is.

### <25th Embodiment>

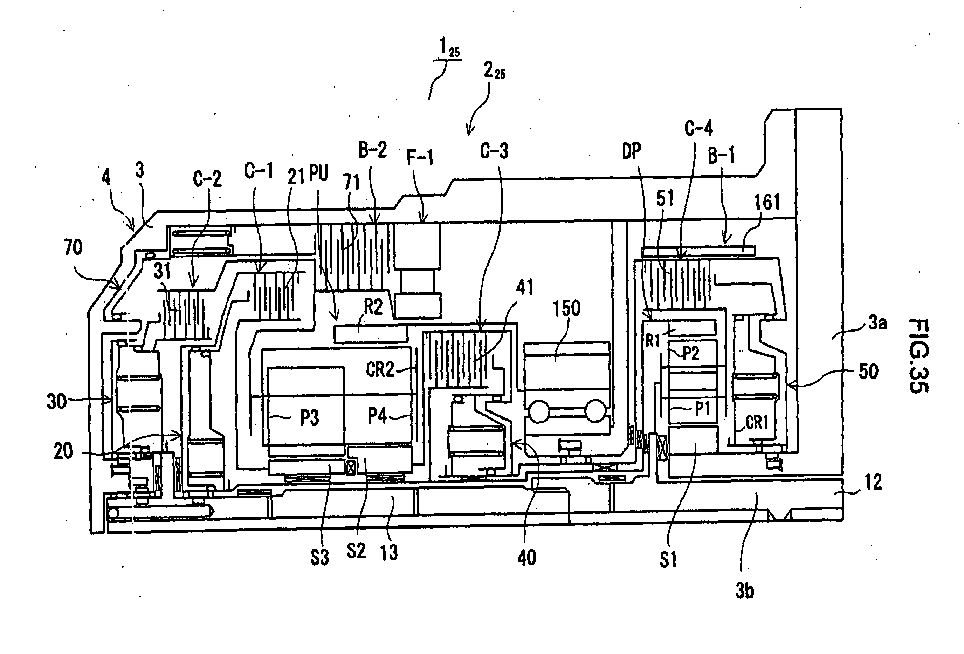

A 25th embodiment, which is a partial modification of the 14th embodiment described above, will be explained with reference to FIG. 35. FIG. 35 is a diagrammatic section view showing an automatic transmission 1₂₅ of the 25th embodiment. It is noted that in the 25th embodiment explained below, only structures or components different from those of the automatic transmission 1₁₄ of the 14th embodiment will be explained and an explanation of the structures or components other than that will be omitted here because they are almost the same.

As compared to the automatic transmission 1₁₄ of the 14th embodiment, the automatic transmission 1₂₅ of the 25th embodiment is arranged so that the hydraulic servo 40 of the second clutch C-2 is disposed axially between the planetary gear unit PU and the planetary gear DP and the hydraulic servo 20 of the first clutch C-1 is disposed axially on the opposite side of the planetary gear unit PU from the planetary gear DP. More specifically, the hydraulic servo 40 of the third clutch C-3 is disposed axially between the counter gear 150 and the planetary gear unit PU and the hydraulic servo 20 of the first clutch C-1 is disposed axially between the planetary gear unit PU and the hydraulic servo 30 of the second clutch C-2.

It is noted that an automatic transmission 1₇₀ of a 70th embodiment described later may be built by inverting a transmission mechanism 2₂₅ of the automatic transmission 1₂₅ of the 25th embodiment in the lateral direction (axial direction) almost as it is.

### <26th Embodiment>

A 26th embodiment, which is a partial modification of the 14th embodiment described above, will be explained with reference to FIG. 36. FIG. 36 is a diagrammatic section view showing an automatic transmission 1₂₆ of the 26th embodiment. It is noted that in the 26th embodiment explained below, only structures or components different from those of the automatic transmission 1₁₄ of the 14th embodiment will be explained and an explanation of the structures or components other than that will be omitted here because they are almost the same.

As compared to the automatic transmission 1₁₄ of the 14th embodiment, the automatic transmission 1₂₆ of the 26th embodiment is arranged so that the hydraulic servo 20 of the first clutch C-1 is disposed axially on the opposite side of the planetary gear unit PU from the planetary gear DP, or more specifically, the hydraulic servo 20 of the first clutch C-1 is disposed axially between the planetary gear unit PU and the hydraulic servo 30 of the second clutch C-2.

It is noted that an automatic transmission 1₇₁ of the 71-th embodiment described later may be built by inverting a transmission mechanism 2₂₆ of the automatic transmission 1₂₆ of the 26th embodiment in the lateral direction (axial direction) almost as it is.

### <27th Embodiment>

A 27th embodiment, which is a partial modification of the first through 26th embodiments described above, will be explained with reference to FIG. 37. FIG. 37 is a diagrammatic section view showing an automatic transmission 1₂₇ of the 27th embodiment. It is noted that in the 27th embodiment explained below, components having the same structure with those of the automatic transmissions 1 of the first through 26th embodiments will be denoted by the same reference characters and an explanation thereof will be omitted here, except of partial components such as oil passages, seal rings and hub members.

As shown in FIG. 37, the automatic transmission 1₂₇ that is suitably mounted in an FF-type (front engine front drive) vehicle has the case 4 formed by connecting the mission case 3, the housing case for housing the torque converter not shown and others. A transmission mechanism 2₂₇, the counter shaft and the differential unit not shown are disposed within the mission case 3. The transmission mechanism 2₂₇ is disposed on the axis centering on the input shaft 12 and the intermediate shaft 13 which are coaxial with the output shaft of the engine not shown. The intermediate shaft 13 is composed of a first intermediate shaft 13a linked with the input shaft 12 on the right side and a second intermediate shaft 13b linked with the first intermediate shaft 13a on the left side. That is, the intermediate shaft 13 is composed of the two partial shafts.

As shown in FIG. 37, within the mission case 3, the planetary gear unit PU is disposed on the intermediate shaft 13 and the third clutch C-3, the fourth clutch C-4, the planetary gear DP and the first clutch C-1 are disposed axially on the right side (input side) of the planetary gear unit PU in order from the right side. The fourth clutch C-4 and the planetary gear DP are disposed on the inner peripheral side of the clutch drum 42 of the third clutch C-3 described later in detail. Further, the first brake B-1 comprising the band brake is disposed on the outer peripheral side of the clutch drum 42 of the third clutch C-3.

Meanwhile, the second clutch C-2 and the counter gear 150 are disposed axially on the left side of the planetary gear unit PU in order from the right side. The second brake B-2 and the one-way clutch F-1 are disposed on the outer peripheral side of the planetary gear unit PU.

This will be explained in detail. The friction plate 51 of the fourth clutch C-4, the friction plate 41 of the third clutch C-3 and the friction plate 21 of the first clutch C-1 are disposed relatively on the outer diametric side within the mission case 3 on the input shaft 12 in order from the right side within the inner right part of the mission case 3, i.e., on the right side of the planetary gear unit PU. Still more, the brake band 161 of the first brake B-1 is disposed so as to overlap with the outer diametric side of the friction plate 41 of the third clutch C-3 and a part of the friction plate 21 of the first clutch C-1.

Still more, the partition member 3a for partitioning the mission case 3 from the housing case not shown is secured to the mission case 3 as a part of the case 4 and the hydraulic servo 40 of the third clutch C-3 is disposed on the boss portion 3b extending from the partition member 3a. Further, the hydraulic servo 50 of the fourth clutch C-4 is disposed on the left side of the hydraulic servo 40, the planetary gear DP is disposed on the inner diametric side of the friction plate 41 and the hydraulic servo 20 of the first clutch C-1 is disposed nearly on the inner diametric side of the friction plate 21. That is, the hydraulic servo 40, the hydraulic servo 50 and the planetary gear DP are disposed in order (in order from the side of the joint of the boss portion 3b in the axial direction) on the boss portion 3b on the right side of the mission case 3 and the hydraulic servo 20 is disposed on the input shaft 12 in a manner of adjoining with the planetary gear DP.

Meanwhile, the planetary gear unit PU is disposed on the intermediate shaft 13 on the left side of the mission case 3 in the drawing, i.e., on the left side of the hydraulic servo 20 of the first clutch C-1. The friction plate 71 of the second brake B-2 is disposed on left part of the outer peripheral side of the planetary gear unit PU and the hydraulic servo 70 of the second brake B-2 is disposed on the right part of the outer diametric side of the planetary gear unit PU. The friction plate 31 of the second clutch C-2 is disposed on the outer diametric side and the hydraulic servo 30 of the second clutch C-2 is disposed on the inner diametric side on the left side of the planetary gear unit PU. Then, the one-way clutch F-1 is disposed in a manner of overlapping from a part on the outer diametric side of the friction plate 31 to a part on the outer diametric side of the planetary gear unit PU.

The boss portion 3d extends from the side wall 3c of the mission case 3 on the left side of the hydraulic servo 30 of the second clutch C-2 and the counter gear 150 connected to the ring gear R3 of the planetary gear unit PU via the ball bearing 131 is disposed on the boss portion 3d and rotatably supported by the boss portion 3d.

As described above, the hydraulic servo 40 of the third clutch C-3 and the hydraulic servo 50 of the fourth clutch C-4 are disposed axially on the opposite side of the planetary gear DP from the planetary gear unit PU, the hydraulic servo 20 of the first clutch C-1 is disposed axially between the planetary gear DP and the planetary gear unit PU and the hydraulic servo 30 of the second clutch C-2 and the counter gear 150 are disposed axially on the opposite side of the planetary gear unit PU from the planetary gear DP.

Next, the structure within the mission case 3 will be explained in detail with reference to FIG. 37. It is noted that the structure of each oil passage will be collectively explained later.

The planetary gear DP disposed within the mission case 3 is provided with the sun gear S1, the carrier CR1 and the ring gear R1. Among them, the sun gear S1 is fixed to the boss portion 3b extending to the left from the partition member 3a described above so as not to be rotatable. The carrier CR1 has the two carrier plates in the lateral direction to rotatably support the pinions P1 and P2. While these pinions P1 and P2 engage from each other, the former pinion P1 engages with the sun gear S1 and the latter pinion P2 engages with the ring gear R1, respectively. The left carrier plate is connected to the input shaft 12 and the right carrier plate is connected to the hub member 154 spline-coupled with the inner friction plate of the friction plate 51 of the fourth clutch C-4. The inner friction plate of the friction plate 41 of the third clutch C-3 is spline-coupled with the outer peripheral face of the ring gear R1. The hub portion 151 is linked on the left side of the ring gear R1 and the inner friction plate of the friction plate 21 of the first clutch C-1 is spline-coupled with the hub member 151.

The fourth clutch C-4 is disposed on the boss portion 3b through an intermediary of the clutch drum 42 of the third clutch C-3 on the right side of the planetary gear DP described above. The fourth clutch C-4 is provided with the friction plate 51 and the hydraulic servo 50 for engaging/disengaging the friction plate 51. The hydraulic servo 50 has the clutch drum 52, the piston member 53, the cancel plate 54 and the return spring 55 and composes thereby the oil chamber 56 and the cancel oil chamber 57. The inner diametric portion of the clutch drum 52 is linked to the clutch drum 42 of the third clutch C-3 and the outer friction plate 51a of the friction plate 51 is spline-coupled with the inner peripheral face of the outer diametric portion thereof. The piston member 53 is disposed on the left side of the clutch drum 52 so as to be movable in the axial direction and composes the oil-tight oil chamber 56 between the clutch drum 52 by the seal rings a4 and a5. Still more, the cancel plate 54 is blocked from moving to the left by the snap ring 59 fitted to the clutch drum 42 described above. The cancel plate 54 is provided with the return spring 55 in contraction between the piston member 53 disposed on the right side thereof and composes the oil-tight cancel oil chamber 57 by the seal rings a4 and a6.

It is noted that because the fourth clutch C-4 is built as described above, the inputted rotation of the carrier CR1 is inputted to the clutch drum 52 when the fourth clutch C-4 engages. The rotation is not inputted to the clutch drum 52 and the hydraulic servo 50 will not rotate when the fourth clutch C-4 is not engaged in Neutral and Parking ranges in particular.

The third clutch C-3 is built so as to surround the right side and the outer peripheral side of the fourth clutch C-4 described above and is disposed on the boss portion 3b. The third clutch C-3 is provided with the friction plate 41 and the hydraulic servo 40 for engaging/disengaging the friction plate 41. The hydraulic servo 40 has the clutch drum 42, the piston member 43, the cancel plate 44 and the return spring 45 and composes the oil chamber 46 and the cancel oil chamber 47 with them. The clutch drum 42 has the flange portion 42a disposed on the left side of the partition member 3a, the hub portion 42c extending to the left from the inner periphery of the flange portion 42a and the drum portion 42b extending to the left from the outer periphery of the flange portion 42a. Among them, the outer peripheral face of the boss portion 3b extending from the partition member 3a described above to the left side rotatably supports the hub portion 42c. The end of the hub portion 42c of the clutch drum 42 is positioned on the left side of the fourth clutch C-4 and the hydraulic servo 50 of the fourth clutch C-4 is disposed on the outer peripheral side thereof. The drum portion 42b of the clutch drum 42 extends to the outer diametric side of the first clutch C-1 by passing through the outer diametric side of the fourth clutch C-4. The brake band 161 of the first brake B-1 comprising the band brake is disposed on the outer peripheral face of the drum portion 42b of the clutch drum 42, the outer friction plate of the friction plate 41 is spline-coupled with the part corresponding to the ring gear R1 described above and the link member 101 is linked at the left part thereof. The link member 101 extends to the inner diametric side via the outer diametric side and the left side of the first clutch C-1 and is linked to the sun gear S2.

The piston member 43 of the third clutch C-3 is disposed so as to be movable with respect to the clutch drum 42 and composes the oil-tight oil chamber 46 between the clutch drum 42 by the seal rings a1 and a2. Still more, the outer diametric portion of the piston member 43 extends to the left by passing the outer peripheral side of the clutch drum 52 and the inner peripheral side of the clutch drum 42 of the third clutch C-3 so that its end faces to the friction plate 41. The cancel plate 44 is blocked from moving to the left side by the snap ring 49 fitted to the outer peripheral face of the inner diametric side of the clutch drum 42. The cancel plate 44 is provided with the return spring 45 in contraction between the piston member 43 disposed on the right side thereof and composes the oil-tight cancel oil chamber 47 by the seal rings a1 and a3.

It is noted that because the third clutch C-3 is built as described above, the reduced rotation of the ring gear R1 is inputted to the clutch drum 42 when the third clutch C-3 engages. Accordingly, the rotation is not inputted to the clutch drum 42 and the hydraulic servo 40 will not rotate when the third clutch C-3 is not engaged specially in Neutral and Parking ranges.

The first clutch C-1 is disposed on the input shaft 12 on the left side of the planetary gear DP and the friction plate 41 of the third clutch C-3 and is provided with the friction plate 21 and the hydraulic servo 20 for engaging/disengaging the friction plate 21. The inner friction plate of the friction plate 21 is spline-coupled with the outer peripheral face of the hub member 151 linked to the ring gear R1 described above. The outer friction plate of the friction plate 21 is spline-coupled with the inner peripheral side of the clutch drum 22 described later and the clutch drum 22 is linked to the link member 102. This link member 102 is then linked to the sun gear S3.

The hydraulic servo 20 has the clutch drum 22, the piston member 23, the cancel plate 24 and the return spring 25 and composes the oil chamber 26 and the cancel oil chamber 27 with them. The clutch drum 22 is attached to the outer peripheral face of the left side of the input shaft 12 so as to be relatively rotatable. The piston member 23 is disposed in the clutch drum 22 so as to be movable in the axial direction and composes the oil-tight oil chamber 26 between the clutch drum 22 by the seal rings a7 and a8. A part of the piston member 23 on the outer peripheral side faces to the front face of the friction plate 21. The cancel plate 24 is blocked from moving to the right side by the snap ring 29 fitted around the outer peripheral face on the inner diametric side of the clutch drum 22 described above. The cancel plate 24 is provided with the return spring 25 in contraction between the piston member 23 disposed on the left side thereof and composes the oil-tight cancel oil chamber 27 by the seal rings a7 and a9.

The first brake B-1 is disposed on the outer diametric side of the clutch drum 42 and is provided with a hydraulic servo not shown and set so as not to be rotatable with respect to the mission case 3 and the brake band 161 for fastening and releasing the outer peripheral part of the clutch drum 42 by the hydraulic servo.

The second brake B-2 is disposed on the outer diametric side of the planetary gear unit PU. The second brake B-2 has the friction plate 71 and the hydraulic servo 70 for engaging/disengaging the friction plate 71. The outer friction plate of the friction plate 71 is spline-coupled with the inner peripheral face of the mission case 3 and the inner friction plate is spline-coupled with the hub member 158 linked to the carrier CR2 of the planetary gear unit PU.

The hydraulic servo 70 has the drum-like cylinder member 72, the piston member 73, the cancel plate 74 and the return spring 75 and composes the oil chamber 76 between the piston member 73 and the cylinder member 72. The piton member 73 is movably disposed in the axial direction and its left end faces to the friction plate 71. Oil-tight oil chambers 76a and 76b are formed between the piston member 73 and the cylinder member 72 by three seal rings a13, a14 and a15. The cancel plate 74 is blocked from moving to the left by a snap ring 79 fitted into the inner peripheral face of the cylinder member 72.

The one-way clutch F-1 is disposed so as to overlap from the outer diametric side of the planetary gear unit PU to the outer diametric side of the second clutch C-2 and on the left side of the second brake B-2 described above and is provided with the inner race 112 linked to the hub member 158, the sprag mechanism 113 and the outer race 114 spline-coupled with the inner peripheral side of the mission case 3 in order from the inner peripheral side to the outer peripheral side.

The second clutch C-2 is disposed on the left side of the planetary gear unit PU and on the inner diametric side of a part of the one-way clutch F-1 and is provided with the friction plate 31 and the hydraulic servo 30 for engaging/disengaging the friction plate 31. The inner friction plate 31b of the friction plate 31 is spline-coupled with the hub member 152 that is linked to the carrier CR2. The outer friction plate 31a of the friction plate 31 is spline-coupled with the inner peripheral side of the clutch drum 32 and the clutch drum 32 is linked with the second intermediate shaft 13b. The second intermediate shaft 13b is spline-coupled with the input shaft 12 through an intermediary of the first intermediate shaft 13a. That is, the clutch drum 32 is linked to the input shaft 12 through an intermediary of the intermediate shaft 13 comprising the first and second intermediate shafts 13a and 13b.

The hydraulic servo 30 has the clutch drum 32, the piston member 33, the cancel plate 34 and the return spring 35 and composes the oil chamber 36 and the cancel oil chamber 37 with them. The inner peripheral side of the clutch drum 32 is attached to and supported by the second intermediate shaft 13b. The piston member 33 is disposed in the clutch drum 32 movably in the axial direction and composes the oil-tight oil chamber 36 between the clutch drum 32 by the seal rings a10 and all. The part of the piston member 33 on the outer peripheral side faces to the front face of the friction plate 31. Still more, the cancel plate 34 is blocked from moving to the right side by the snap ring 39 fitted around the outer peripheral face on the inner diametric side of the clutch drum 32 described above. The clutch drum 32 is provided with the return spring 35 in contraction between the piston member 33 disposed on the left side thereof and composes the oil-tight cancel oil chamber 37 by the seal rings a10 and a12.

Then, the counter gear 150 is disposed on the boss portion 130a extending from the side wall 3c of the mission case 3 through an intermediary of a ball bearing 131. It is noted that the gear linked to the counter shaft not shown is engaged with the outer peripheral side of the counter gear 150 and the counter shaft is linked with driving wheels through an intermediary of gear mechanisms and differential gears not shown.

Next, the structures of each oil passage and the supply of operating fluid will be briefly explained. The oil chamber 56 of the hydraulic servo 50 of the fourth clutch C-4, i.e., the oil chamber 56 formed by sealing the part between the clutch drum 52 and the piston member 53 by the seal rings a4 and a5, is arranged so as to communicate with the oil passage c54 within the boss portion 3b by sealing the part between the clutch drum 52 and the boss portion 3b by the seal rings d3 and d4 and operating fluid is supplied from the oil passage c54. It is noted that operating fluid is supplied from the oil passage not shown to the cancel oil chamber 57 formed by sealing the part between the piston member 53 and the cancel plate 54 by the seal rings a4 and a6.

The oil chamber 46 of the hydraulic servo 40 of the third clutch C-3, i.e., the oil chamber 46 formed by sealing the part between the clutch drum 42 and the piston member 43 by the seal rings a1 and a2, is arranged so as to communicate with the oil passage c53 within the boss portion 3b by sealing the part between the clutch drum 42 and the boss portion 3b by the seal rings d1 and d2 and operating fluid is supplied thereto from the oil passage c53. It is noted that operating fluid is supplied from the oil passage not shown to the cancel oil chamber 47 formed by sealing the part between the piston member 43 and the cancel plate 44 by the seal rings a1 and a3.

The oil chamber 26 of the hydraulic servo 20 of the first clutch C-1, i.e., the oil chamber 26 formed by sealing the part between the clutch drum 22 and the piston member 23 by the seal rings a7 and a8, is arranged so as to communicate with the oil passage c60 within the boss portion 3b by sealing the part between the boss portion 3b and the input shaft 12 by the seal rings d5 and d6 and the part between the input shaft 12 and the clutch drum 22 by the seal rings d7 and d8, respectively, via the oil passages c61, c70, c62 within the input shaft 12 and the oil passage c51 and operating fluid is supplied thereto from the oil passage c51. It is noted that operating fluid is supplied from the oil passage not shown to the cancel oil chamber 27 formed by sealing the part between the piston member 23 and the cancel plate 24 by the seal rings a7 and a9.

The oil chamber 36 of the hydraulic servo 30 of the second clutch C-2, i.e., the oil chamber 36 formed by sealing the part between the clutch drum 32 and the piston member 33 by the seal rings a10 and a11, is arranged so as to communicate with the oil passage c80 within the boss portion 3b by sealing the part between the boss portion 3d and the second intermediate shaft 13b by the seal rings d9 and d10 and operating fluid is supplied thereto from the oil passage c80. It is noted that operating fluid is supplied from the oil passage not shown to the cancel oil chamber 37 formed by sealing the part between the piston member 33 and the cancel plate 34 by the seal rings a10 and a12.

Still more, operating fluid is supplied from two oil passages formed within the mission case 3 not shown to the two oil chambers 76a and 76b of the hydraulic servo 70 of the second brake B-2, i.e., to the oil chambers 76a and 76b formed by sealing the part between the cylinder member 72 and the piston member 73 by the seal rings a13, a14 and a15, respectively. It is noted that the second brake B-2 is allowed to press and control the piston member.73 stepwise based on hydraulic pressure of the operating fluid supplied to the two oil chambers 76a and 76b, so that it is capable of controlling the torque capacity of the second brake B-2 more finely and accurately.

According to the inventive automatic transmission 1₂₇ described above, the fourth clutch C-4 is linked with the sun gear S2 of the planetary gear unit PU via the output side members (clutch drum 42 and the link member 102) of the third clutch C-3, so that the output side members turn out to be output side members of the two clutches transmitting different rotations, i.e., they may be shared in common as one rotary member. Thereby, the automatic transmission 1₂₋₇ may be compactly built.

Still more, because the hydraulic servo 50 of the fourth clutch C-4 is disposed axially on the opposite side of the planetary gear DP from the planetary gear unit PU and on the boss portion 3b extending from the case 4 to supply the operating fluid to the hydraulic servo 50 of the fourth clutch C-4 from the oil passage within the boss portion 3b, a number of seal rings may be cut as compared to a case of disposing the hydraulic servo 50 of the fourth clutch C-4 on the input shaft 12 through an intermediary of a member having another speed of rotation, i.e., as compared to a case of supplying the operating fluid via the other member for example. Thereby, it becomes possible to prevent the drop of the efficiency and controllability of the automatic transmission 1₂₇.

Still more, because the planetary gear DP, the first clutch C-1, the third and fourth clutches C-3 and C-4 are disposed axially on one side of the planetary gear unit PU and the planetary gear DP and the fourth clutch C-4 are disposed on the inner peripheral side of the clutch drum 42 of the third clutch C-3, it becomes possible to increase the area of the friction plates 21 and 41 of the first and third clutches C-1 and C-3. That is, even though the capacity of the first clutch C-1 and the third clutch C-3 for transmitting the reduced rotation may be increased, the fourth clutch C-4 and the planetary gear DP whose transmittable torque capacity can be relatively small for transmitting the inputted rotation may be disposed on the inner peripheral side of the clutch drum 42 of the third clutch C-3. Accordingly, the automatic transmission 1₂₇ that is capable of attaining the multi-stage shift such as the forward eighth speed stage and the reverse second speed stage may be compactly built.

Still more, because the hydraulic servo 20 of the first clutch C-1 is disposed on the input shaft 12 and adjacent to the planetary gear DP and the operating fluid is supplied to the hydraulic servo 20 of the first clutch C-1 from the oil passage provided within the input shaft 12, the operating fluid may be supplied just by providing pairs of seal rings d5, d6, d7 and d8 along the oil passage for supplying the operating fluid from the hydraulic control unit, i.e., between the oil passage within the boss portion 3b and the input shaft 12 and between the hydraulic servo 20 of the first clutch C-1 and the input shaft 12. Accordingly, a number of seal rings may be cut as compared to a case of supplying operating fluid via another member for example. Thereby, it becomes possible to prevent the drop of the efficiency and controllability of the vehicular automatic transmission 1₂₇.

Still more, although the increase of radial size of the first clutch C-1 to the outer peripheral side is limited because the third and fourth clutches C-3 and C-4 are linked to the sun gear S2 of the planetary gear unit PU through the outer peripheral side of the first clutch C-1 and the link member 101 and others for linking the third and fourth clutches C-3 and C-4 with the sun gear S2 of the planetary gear unit PU pass through the outer peripheral side of the first clutch C-1, the capacity of the first clutch C-1 may be maintained by increasing the size in the inner radial direction because the first clutch C-1 is disposed on the input shaft 12 as compared to a case of disposing it on the boss portion 3b.

Still more, because the sun gear S2 of the planetary gear unit PU is capable of transmitting the inputted rotation in connection with the fourth clutch C-4, is capable of transmitting the reduced rotation in connection with the third clutch C-3 and is capable of fixing the rotation in connection with the first brake B-1, the sun gear S3 is capable of transmitting the reduced rotation in connection with the first clutch C-1, the carrier CR2 is capable of transmitting the inputted rotation in connection with the second clutch C-2 and is capable of fixing the rotation in connection with the second brake B-2 and the ring gear R2 is linked to the counter gear 150, the multi-stage shift such as the forward eighth speed stage and the reverse second speed stage may be attained.

Further, because the friction plate 41 of the third clutch C-3 is disposed on the outer peripheral side of the ring gear R1 and the fourth clutch C-4 is disposed axially between the hydraulic servo 40 of the third clutch C-3 and the friction plate 41 of the third clutch C-3, it is possible to prevent the fourth clutch C-4 from radially overlapping with the hydraulic servo 40 or the friction plate 41 of the third clutch C-3. Accordingly, because the radial size of the fourth clutch C-4 may be increased as compared to a case of disposing it on the inner peripheral side of the third clutch C-3, the capacity of the fourth clutch C-4 may be maintained and the vehicular automatic transmission 1₂₇ may be compactly built in the axial direction as a result.

Still more, although the first brake B-1 is disposed on the outer peripheral side of the friction plate 41 of the third clutch C-3 in the present embodiment, it is also possible to dispose the first brake B-1 on the outer peripheral side of the hydraulic servo 40 of the third clutch C-3. Accordingly, it is possible to build the vehicular automatic transmission 1₂₇ compactly in the radial direction while maintaining the capacity of the first brake B-1 and reducing the size thereof by disposing the first brake B-1 at the position overlapping with the third clutch C-3.

Further, because the automatic transmission 1₂₇ is built so that the reduced rotation of the ring gear R1 is inputted to the clutch drum 42 of the third clutch C-3 forming the hydraulic servo 40 of the third clutch C-3 when the third clutch C-3 engages, the reduced rotation is not inputted to the clutch drum 42 of the third clutch C-3 when the third clutch C-3 is not engaged even if the driver races the engine in Neutral or Parking range, for example and the input shaft rotates. Accordingly, it is possible to prevent the whole hydraulic servo 40 of the third clutch C-3 from rotating and to prevent dragging of the third clutch C-3 which is otherwise caused by a centrifugal hydraulic pressure generated in the oil chamber 46.

Still more, because the automatic transmission 1₂₇ is built so that the inputted rotation is inputted to the clutch drum 52 of the fourth clutch C-4 forming the hydraulic servo 50 of the fourth clutch C-4 via the carrier CR1 when the fourth clutch C-4 engages, the inputted rotation is not inputted to the clutch drum 52 of the fourth clutch C-4 when the fourth clutch C-4 is not engaged even if the driver races the engine in Neutral or Parking range for example and the input shaft rotates. Accordingly, it is possible to prevent the rotation of the whole hydraulic servo 50 of the fourth clutch C-4 and to prevent dragging of the fourth clutch C-4 which is otherwise caused by a centrifugal hydraulic pressure generated in the oil chamber 56.

Because the second clutch C-2 is disposed axially on the opposite side of the planetary gear unit PU from the planetary gear DP, the second clutch C-2 may be linked with the carrier CR2 without entangling with the members for linking the first clutch C-1 with the sun gear S3 and for linking the third clutch C-3 with the sun gear S2 for example.

Still more, because the counter gear 150 is disposed axially on the opposite side of the planetary gear unit PU from the planetary gear DP and is disposed axially at the end position (the left side in the figure) on the opposite side from the input shaft 12 in particular, the vehicular automatic transmission 1₂₇ suitably used for the FF-type vehicles may be readily converted to be used for the FR-type vehicles.

It is noted that the nearly similar one with the vehicular automatic transmission 1₂₇ of the 27th embodiment may be built by changing the part of the output shaft 15 of the vehicular automatic transmission 1₁ of the first embodiment with the counter gear 150.

An automatic transmission 1₄₄ of the 44th embodiment described later may be built by inverting the transmission mechanism 2₂₇ of the automatic transmission 1₂₇ of the 27th embodiment in the lateral direction (axial direction) almost as it is.

### <28th Embodiment>

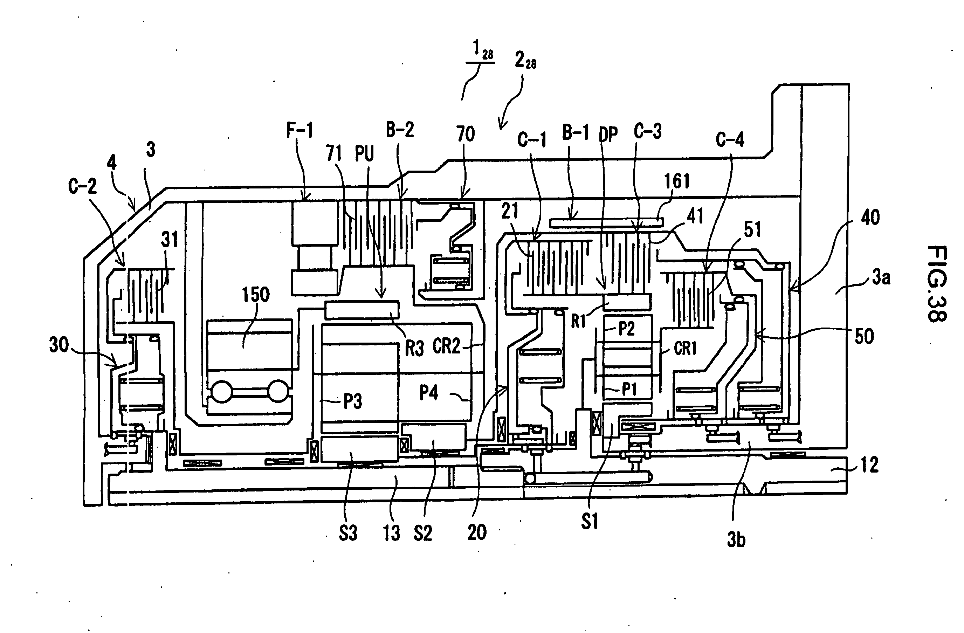

A 28th embodiment, which is a partial modification of the 27th embodiment described above, will be explained with reference to FIG. 38. FIG. 38 is a diagrammatic section view showing an automatic transmission 1₂₈ of the 28th embodiment. It is noted that in the 28th embodiment explained below, only structures or components different from those of the automatic transmission 1₂₇ of the 27th embodiment will be explained and an explanation of the structures or components other than that will be omitted here because they are almost the same.

As compared to the automatic transmission 1₂₇ of the 27th embodiment, the automatic transmission 1₂₈ of the 28th embodiment is arranged so that the lateral (axial) position of the counter gear 150 and the hydraulic servo 30 of the second clutch C-2 is switched.

Although it becomes impossible to readily convert the automatic transmission 1₂₈ of the 28th embodiment into an vehicular automatic transmission for use in FR-type vehicles as compared to the 27th embodiment, a number of seal rings may be cut because the hydraulic servo 30 of the second clutch C-2 is disposed on the boss portion 3d and operating fluid may be supplied from the boss portion just by providing one pair of seal rings.

It is noted that an automatic transmission 1₄₃ of the 43-th embodiment described later may be built by inverting a transmission mechanism 2₂₈ of the automatic transmission 1₂₈ of the 28th embodiment in the lateral direction (axial direction) almost as it is.

### <29th Embodiment>

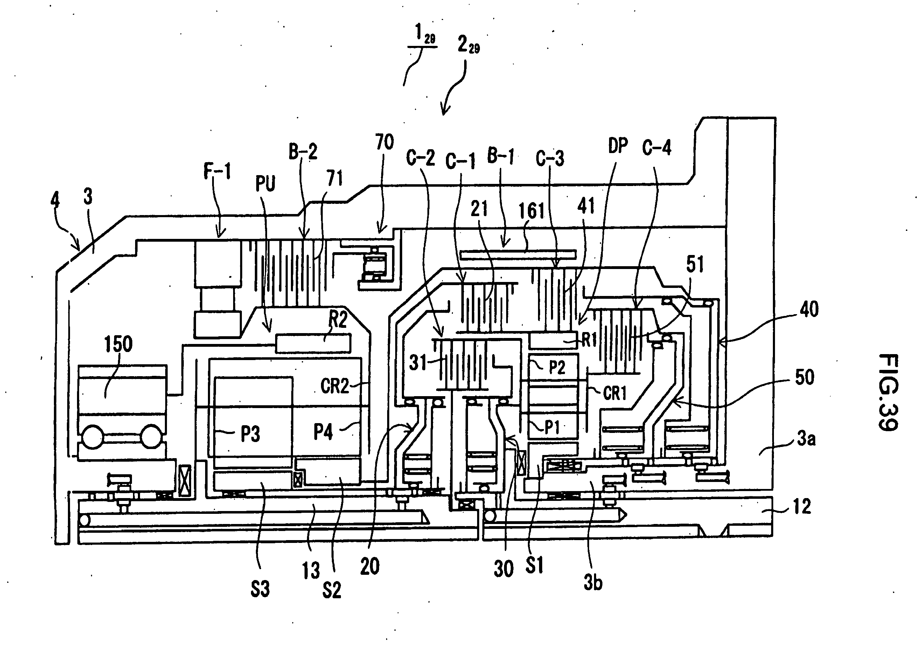

A 29th embodiment, which is a partial modification of the 27th embodiment described above, will be explained with reference to FIG. 39. FIG. 39 is a diagrammatic section view showing an automatic transmission 1₂₉ of the 29th embodiment. It is noted that in the 29th embodiment explained below, only structures or components different from those of the automatic transmission 1₂₇ of the 27th embodiment will be explained and an explanation of the structures or components other than that will be omitted here because they are almost the same.

As compared to the automatic transmission 1₂₇ of the 27th embodiment, the automatic transmission 1₂₉ of the 29th embodiment is arranged so that the hydraulic servo 30 of the second clutch C-2 is disposed axially between the planetary gear unit PU and the planetary gear DP, or more specifically, axially between the planetary gear DP and the hydraulic servo 20 of the first clutch C-1.

It is noted that an automatic transmission 1₄₅ of a 45th embodiment described later may be built by inverting a transmission mechanism 2₂₉ of the automatic transmission 1₂₉ of the 29th embodiment in the lateral direction (axial direction) almost as it is.

### <30th Embodiment> -

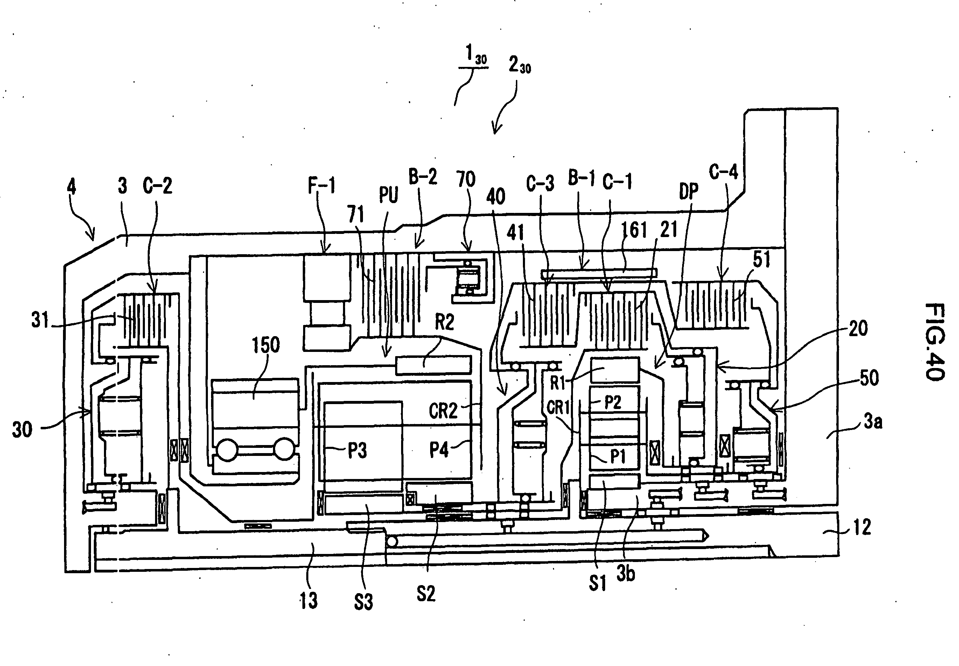

A 30th embodiment, which is a partial modification of the 27th embodiment described above, will be explained with reference to FIG. 40. FIG. 40 is a diagrammatic section view showing an automatic transmission 1₃₀ of the 30th embodiment. It is noted that in the 30th embodiment explained below, only structures or components different from those of the automatic transmission 1₂₇ of the 27th embodiment will be explained and an explanation of the structures or components other than that will be omitted here because they are almost the same.

As compared to the automatic transmission 1₂₇ of the 27th embodiment, the automatic transmission 1₃₀ of the 30th embodiment is arranged so that the lateral (axial) position of the counter gear 150 and the hydraulic servo 30 of the second clutch C-2 is switched and the lateral (axial) position of the hydraulic servo 30 of the second clutch C-2 and the hydraulic servo 40 of the third clutch C-3 is switched. That is, the hydraulic servo 40 of the third clutch C-3 is disposed axially between the planetary gear DP and the planetary gear unit PU and the hydraulic servo 20 of the first clutch C-1 is disposed axially on the opposite side of the planetary gear DP from the planetary gear unit PU. Specifically, the hydraulic servo 20 of the first clutch C-1 is disposed axially between the planetary gear DP and the hydraulic servo 50 of the fourth clutch C-4.

It is noted that an automatic transmission 1₄₆ of a 46th embodiment described later maybe built by inverting a transmission mechanism 2₃₀ of the automatic transmission 1₃₀ of the 30th embodiment in the lateral direction (axial direction) almost as it is.

### <31st Embodiment>

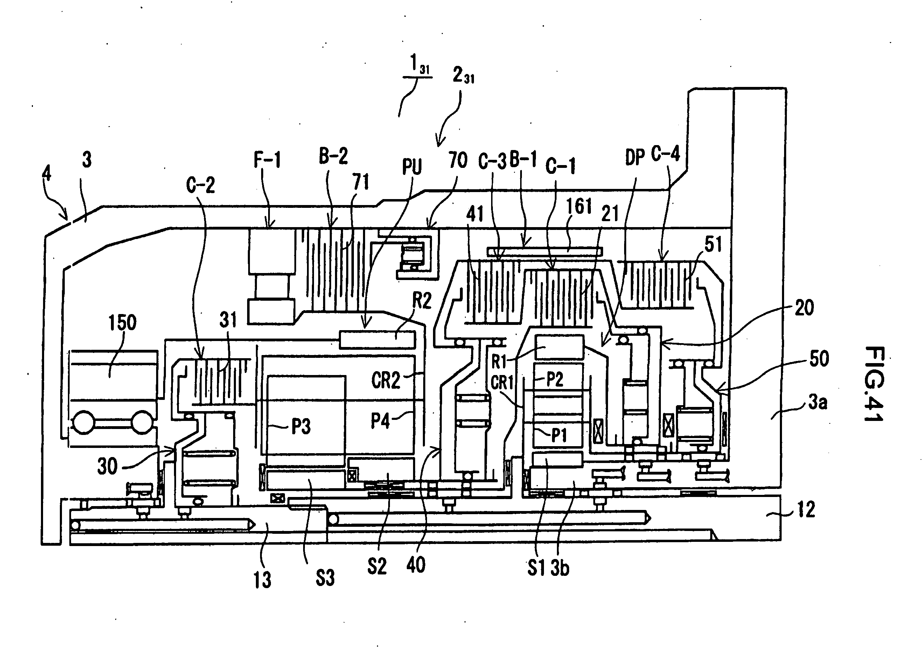

A 31st embodiment, which is a partial modification of the 27th embodiment described above, will be explained with reference to FIG. 41. FIG. 41 is a diagrammatic section view showing an automatic transmission 1₃₁ of the 31st embodiment. It is noted that in the 31st embodiment explained below, only structures or components different from those of the automatic transmission 1₂₇ of the 27th embodiment will be explained and an explanation of the structures or components other than that will be omitted here because they are almost the same.

As compared to the automatic transmission 1₂₇ of the 27th embodiment, the automatic transmission 1₃₁ of the 31st embodiment is arranged so that the lateral (axial) position of the hydraulic servo 20 of the first clutch C-1 and the hydraulic servo 40 of the third clutch C-3 is switched, i.e., the hydraulic servo 40 of the third clutch C-3 is disposed axially between the planetary gear DP and the planetary gear unit PU and the hydraulic servo 20 of the first clutch C-1 is disposed axially on the opposite side of the planetary gear DP from the planetary gear unit PU. Specifically, the hydraulic servo 20 of the first clutch C-1 is disposed axially between the planetary gear DP and the hydraulic servo 50 of the fourth clutch C-4.

It is noted that an automatic transmission 1₄₇ of a 47th embodiment described later may be built by inverting a transmission mechanism 2₃₁ of the automatic transmission 1₃₁ of the 31st embodiment in the lateral direction (axial direction) almost as it is.

### <32nd Embodiment>

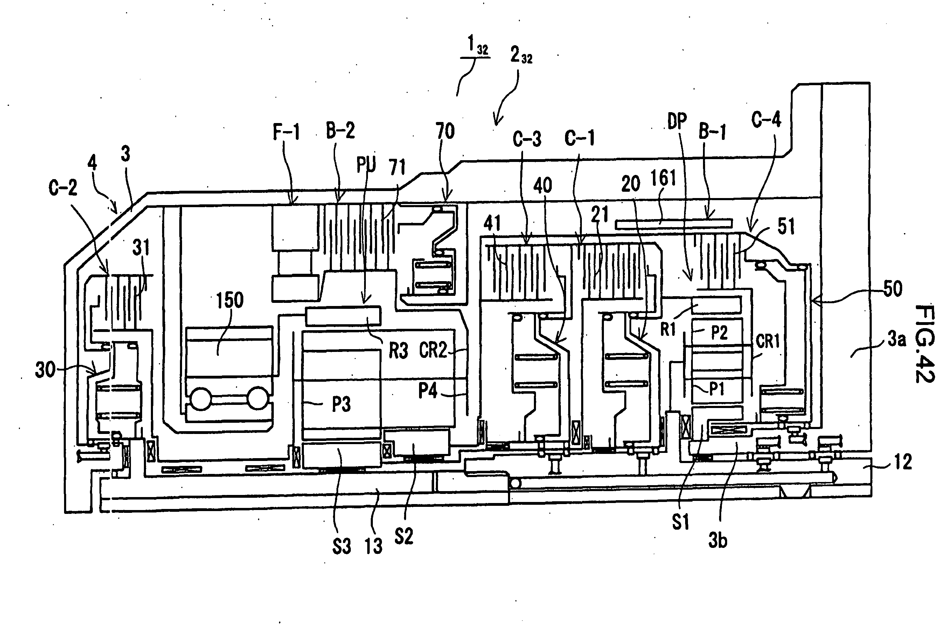

A 32nd embodiment, which is a partial modification of the 27th embodiment described above, will be explained with reference to FIG. 42. FIG. 42 is a diagrammatic section view showing an automatic transmission 1₃₂ of the 32nd embodiment. It is noted that in the 32nd embodiment explained below, only structures or components different from those of the automatic transmission 1₂₇ of the 27th embodiment will be explained and an explanation of the structures or components other than that will be omitted here because they are almost the same.

As compared to the automatic transmission 1₂₇ of the 27th embodiment, the automatic transmission 1₃₂ of the 32nd embodiment is arranged so that the lateral (axial) position of the counter gear 150 and the hydraulic servo 30 of the second clutch C-2 is switched and the hydraulic servo 40 of the third clutch C-3 is disposed axially between the planetary gear DP and the planetary gear unit PU, or more specifically, axially between the hydraulic servo 20 of the first clutch C-1 and the planetary gear unit PU.

It is noted that an automatic transmission 1₄₈ of a 48th embodiment described later may be built by inverting a transmission mechanism 2₃₂ of the automatic transmission 1₃₂ of the 32nd embodiment in the lateral direction (axial direction) almost as it is.

### <33rd Embodiment>

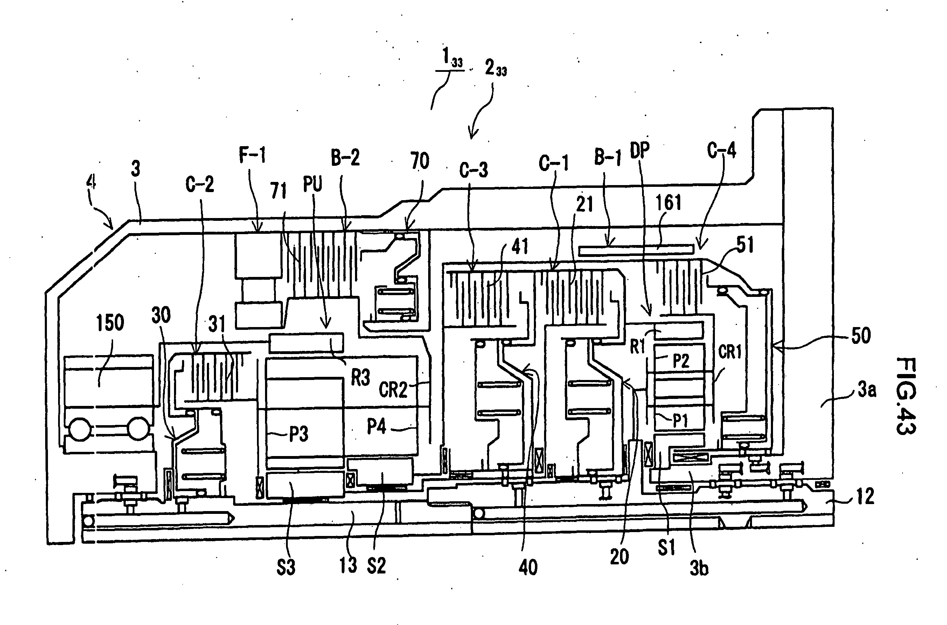

A 33rd embodiment, which is a partial modification of the 27th embodiment described above, will be explained with reference to FIG. 43. FIG. 43 is a diagrammatic section view showing an automatic transmission 1₃₃ of the 33rd embodiment. It is noted that in the 33rd embodiment explained below, only structures or components different from those of the automatic transmission 1₂₇ of the 27th embodiment will be explained and an explanation of the structures or components other than that will be omitted here because they are almost the same.

As compared to the automatic transmission 1₂₇ of the 27th embodiment, the automatic transmission 1₃₃ of the 33rd embodiment is arranged so that the hydraulic servo 40 of the third clutch C-3 is disposed axially between the planetary gear DP and the planetary gear unit PU and between the hydraulic servo 20 of the first clutch C-1 and the planetary gear unit PU.

It is noted that an automatic transmission 1₄₉ of a 49th embodiment described later may be built by inverting a transmission mechanism 2₃₃ of the automatic transmission 1₃₃ of the 33rd embodiment in the lateral direction (axial direction) almost as it is.

### <34th Embodiment>

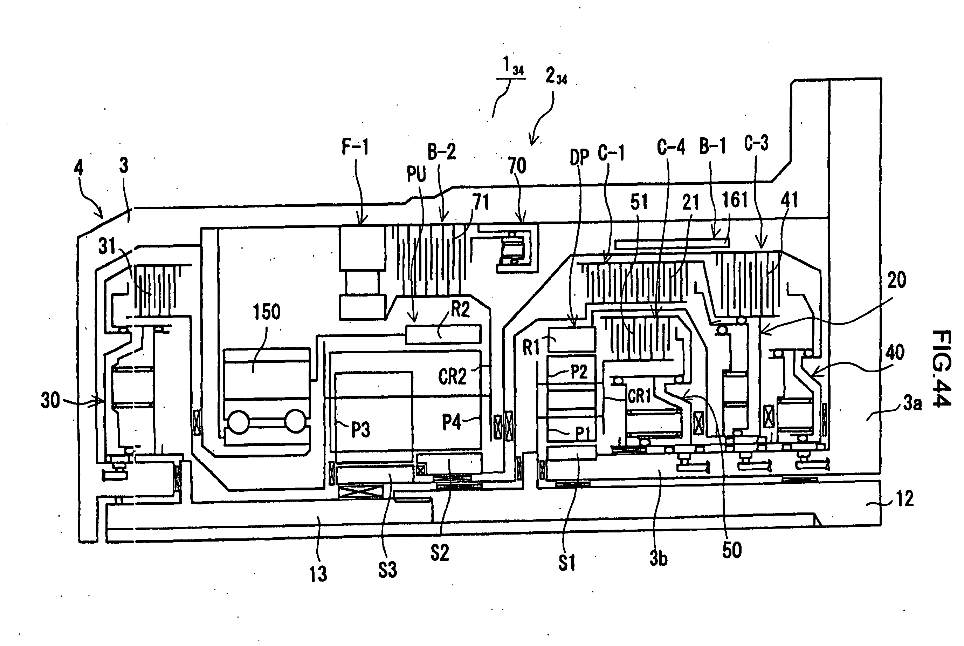

A 34th embodiment, which is a partial modification of the 27th embodiment described above, will be explained with reference to FIG. 44. FIG. 44 is a diagrammatic section view showing an automatic transmission 1₃₄ of the 34th embodiment. It is noted that in the 34th embodiment explained below, only structures or components different from those of the automatic transmission 1₂₇ of the 27th embodiment will be explained and an explanation of the structures or components other than that will be omitted here because they are almost the same.

As compared to the automatic transmission 1₂₇ of the 27th embodiment, the automatic transmission 1₃₄ of the 34th embodiment is arranged so that the lateral (axial) position of the counter gear 150 and the hydraulic servo 30 of the second clutch C-2 is switched and the hydraulic servo 20 of the first clutch C-1 is disposed axially on the opposite side of the planetary gear DP from the planetary gear unit PU, or more specifically, the hydraulic servo 20 of the first clutch C-1 is disposed axially between the hydraulic servo 40 of the third clutch C-3 and the hydraulic servo 50 of the fourth clutch C-4.

It is noted that an automatic transmission 1₅₀ of a 50th embodiment described later may be built by inverting a transmission mechanism 2₃₄ of the automatic transmission 1₃₄ of the 34th embodiment in the lateral direction (axial direction) almost as it is.

### <35th Embodiment>

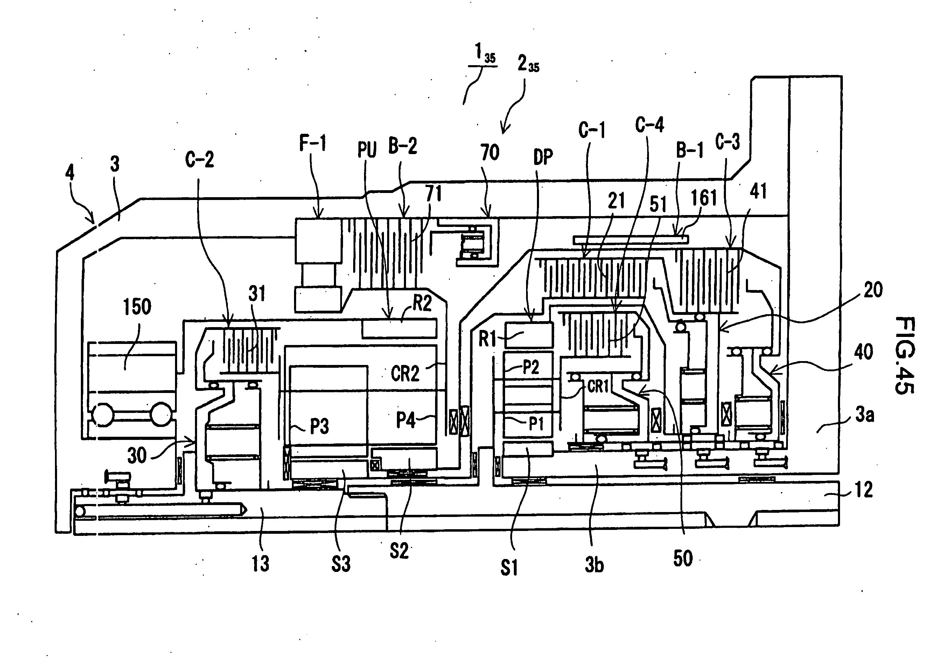

A 35th embodiment, which is a partial modification of the 27th embodiment described above, will be explained with reference to FIG. 45. FIG. 45 is a diagrammatic section view showing an automatic transmission 1₃₅ of the 35th embodiment. It is noted that in the 35th embodiment explained below, only structures or components different from those of the automatic transmission 1₂₇ of the 27th embodiment will be explained and an explanation of the structures or components other than that will be omitted here because they are almost the same.

As compared to the automatic transmission 1₂₇ of the 27th embodiment, the automatic transmission 1₃₅ of the 35th embodiment is arranged so that the hydraulic servo 20 of the first clutch C-1 is disposed axially on the opposite side of the planetary gear DP from the planetary gear unit PU, or more specifically, the hydraulic servo 20 of the first clutch C-1 is disposed axially between the hydraulic servo 40 of the third clutch C-3 and the hydraulic servo 50 of the fourth clutch C-4.

It is noted that an automatic transmission 1₅₁ of a 51st embodiment described later may be built by inverting a transmission mechanism 2₃₅ of the automatic transmission 1₃₅ of the 35th embodiment in the lateral direction (axial direction) almost as it is.

### <36th Embodiment>

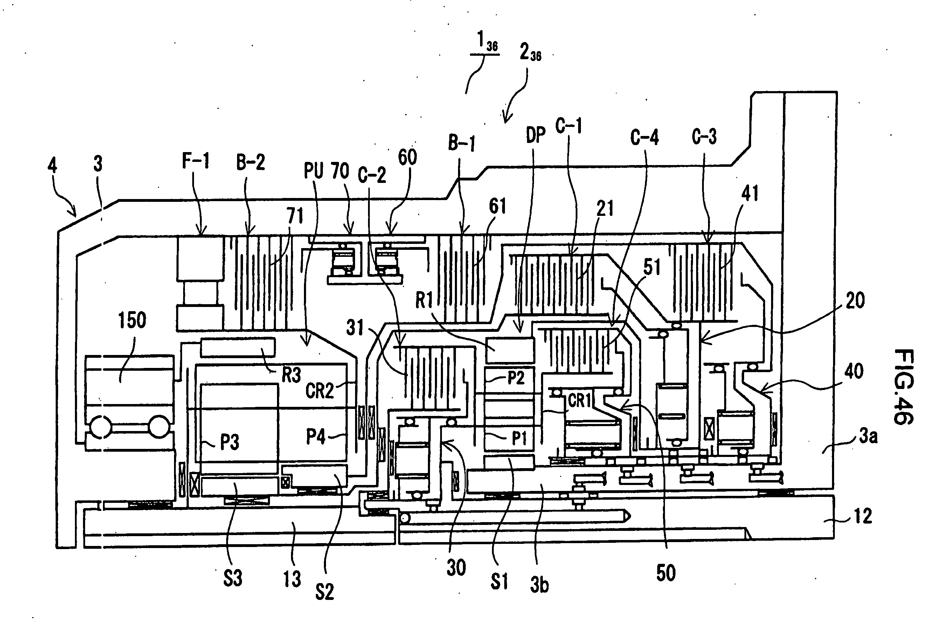

A 36th embodiment, which is a partial modification of the 27th embodiment described above, will be explained with reference to FIG. 46. FIG. 46 is a diagrammatic section view showing an automatic transmission 1₃₆ of the 36th embodiment. It is noted that in the 36th embodiment explained below, only structures or components different from those of the automatic transmission 1₂₇ of the 27th embodiment will be explained and an explanation of the structures or components other than that will be omitted here because they are almost the same.

As compared to the automatic transmission 1₂₇ of the 27th embodiment, the automatic transmission 1₃₆ of the 36th embodiment is arranged so that the hydraulic servo 20 of the first clutch C-1 is disposed axially on the opposite side of the planetary gear DP from the planetary gear unit PU, or more specifically, the hydraulic servo 20 of the first clutch C-1 is disposed axially between the hydraulic servo 40 of the third clutch C-3 and the hydraulic servo 50 of the fourth clutch C-4. Still more, the hydraulic servo 30 of the second clutch C-2 is disposed axially between the planetary gear DP and the planetary gear unit PU. Further, the multi-plate type brake similar to that of the first embodiment is used for the first brake B-1 instead of the band brake. When the multi-plate type brake is used for the first brake B-1, a number of parts may be reduced and lightened by commonly using the cylinder member of each brake by adjoining the first brake B-1 with the second brake B-2.

It is noted that an automatic transmission 1₅₂ of a 52nd embodiment described latermaybe built by inverting a transmission mechanism 2₃₆ of the automatic transmission 1₃₆ of the 36th embodiment in the lateral direction (axial direction) almost as it is.

### <37th Embodiment>

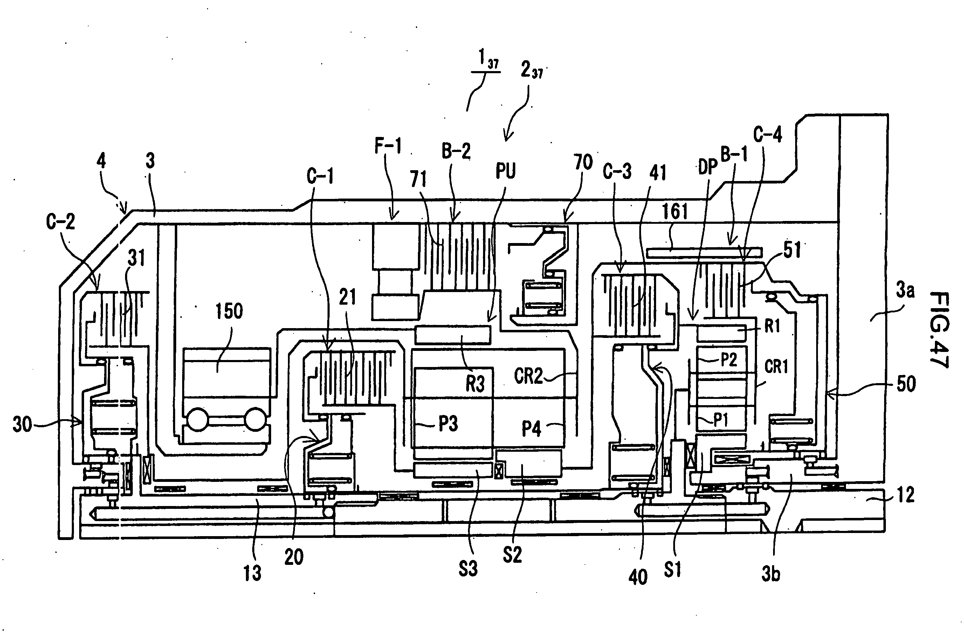

A 37th embodiment, which is a partial modification of the 27th embodiment described above, will be explained with reference to FIG. 47. FIG. 47 is a diagrammatic section view showing an automatic transmission 1₃₇ of the 37th embodiment. It is noted that in the 37th embodiment explained below, only structures or components different from those of the automatic transmission 1₂₇ of the 27th embodiment will be explained and an explanation of the structures or components other than that will be omitted here because they are almost the same.

As compared to the automatic transmission 1₂₇ of the 27th embodiment, the automatic transmission 1₃₇ of the 37th embodiment is arranged so that the lateral (axial) position of the counter gear 150 and the hydraulic servo 30 of the second clutch C-2 is switched. Still more, the hydraulic servo 20 of the first clutch C-1 is disposed axially on the opposite side of the planetary gear unit PU from the planetary gear DP, or more specifically, the hydraulic servo 20 of the first clutch C-1 is disposed axially between the counter gear 150 and the planetary gear unit PU. Further, the hydraulic servo 40 of the third clutch C-3 is disposed axially between the planetary gear DP and the planetary gear unit PU.

It is noted that an automatic transmission 1₅₃ of a 53rd embodiment described later may be built by inverting a transmission mechanism 2₃₇ of the automatic transmission 1₃₇ of the 37th embodiment in the lateral direction (axial direction) almost as it is.

### <38th Embodiment>

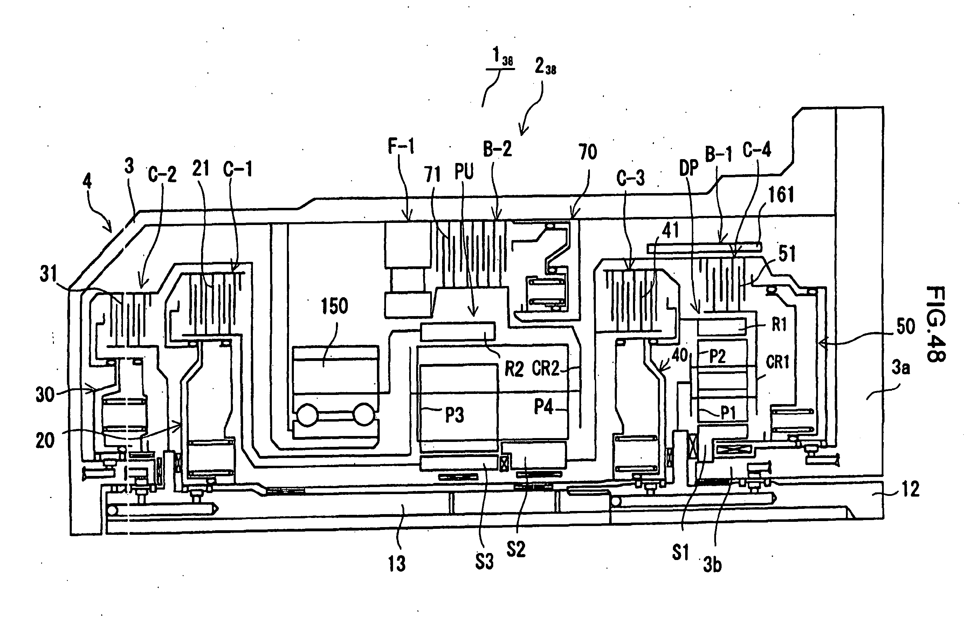

A 38th embodiment, which is a partial modification of the 27th embodiment described above, will be explained with reference to FIG. 48. FIG. 48 is a diagrammatic section view showing an automatic transmission 1₃₈ of the 38th embodiment. It is noted that in the 38th embodiment explained below, only structures or components different from those of the automatic transmission 1₂₇ of the 27th embodiment will be explained and an explanation of the structures or components other than that will be omitted here because they are almost the same.

As compared to the automatic transmission 1₂₇ of the 27th embodiment, the automatic transmission 1₃₈ of the 38th embodiment is arranged so that the lateral (axial) position of the counter gear 150 and the hydraulic servo 30 of the second clutch C-2 is switched and the hydraulic servo 20 of the first clutch C-1 is disposed axially on the opposite side of the planetary gear unit PU from the planetary gear DP, or more specifically, the hydraulic servo 20 of the first clutch C-1 is disposed axially between the counter gear 150 and the hydraulic servo 30 of the second clutch C-2. Still more, the hydraulic servo 40 of the third clutch C-3 is disposed axially between the planetary gear DP and the planetary gear unit PU.

It is noted that an automatic transmission 1₅₄ of a 54th embodiment described later may be built by inverting a transmission mechanism 2₃₈ of the automatic transmission 1₃₈ of the 38th embodiment in the lateral direction (axial direction) almost as it is.

### <39th Embodiment>

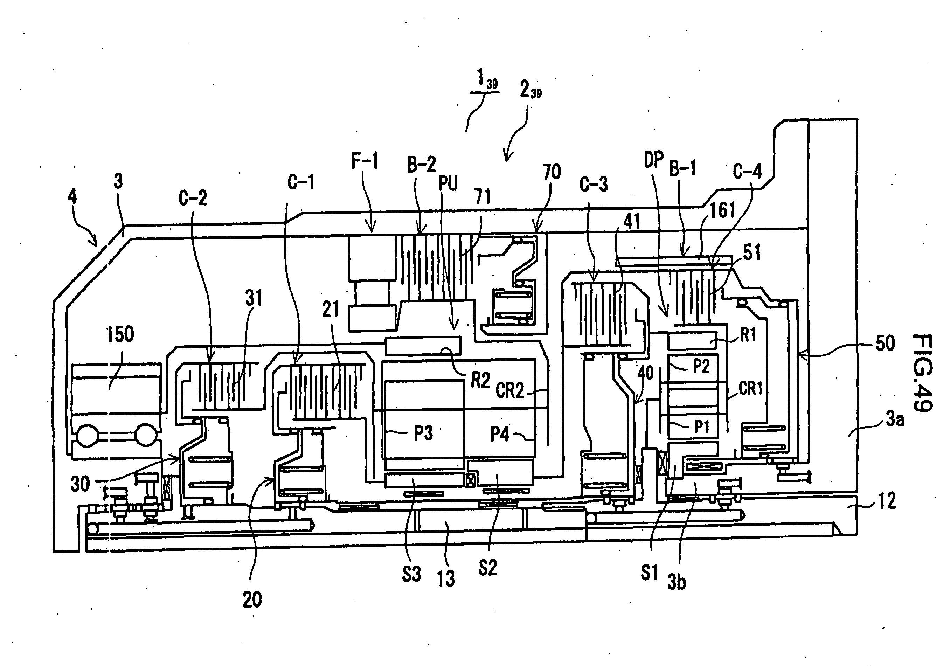

A 39th embodiment, which is a partial modification of the 27th embodiment described above, will be explained with reference to FIG. 49. FIG. 49 is a diagrammatic section view showing an automatic transmission 1₃₉ of the 39th embodiment. It is noted that in the 39th embodiment explained below, only structures or components different from those of the automatic transmission 1₂₇ of the 27th embodiment will be explained and an explanation of the structures or components other than that will be omitted here because they are almost the same.

As compared to the automatic transmission 1₂₇ of the 27th embodiment, the automatic transmission 1₃₉ of the 39th embodiment is arranged so that the hydraulic servo 20 of the first clutch C-1 is disposed axially on the opposite side of the planetary gear unit PU from the planetary gear DP, or more specifically, the hydraulic servo 20 of the first clutch C-1 is disposed axially between the planetary gear unit PU and the hydraulic servo 30 of the second clutch C-2. Still more, the hydraulic servo 40 of the third clutch C-3 is disposed axially between the planetary gear DP and the planetary gear unit PU.

It is noted that an automatic transmission 1₅₅ of a 55th embodiment described latermay be built by inverting a transmission mechanism 2₃₉ of the automatic transmission 1₃₉ of the 39th embodiment in the lateral direction (axial direction) almost as it is.

### <40th Embodiment>

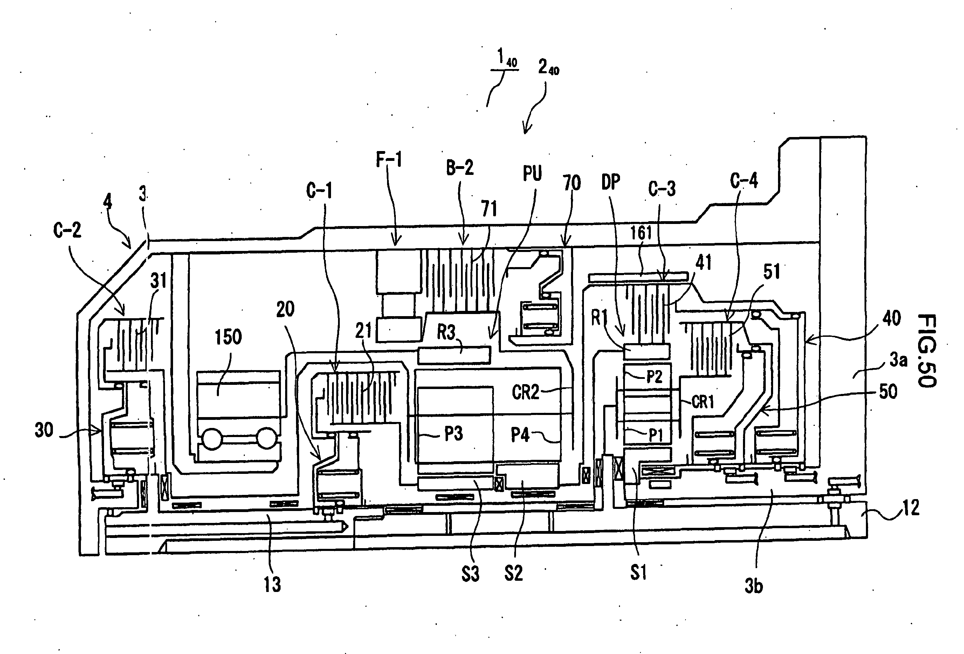

A 40th embodiment, which is a partial modification of the 27th embodiment described above, will be explained with reference to FIG. 50. FIG. 50 is a diagrammatic section view showing an automatic transmission 1₄₀ of the 40th embodiment. It is noted that in the 40th embodiment explained below, only structures or components different from those of the automatic transmission 1₂₇ of the 27th embodiment will be explained and an explanation of the structures or components other than that will be omitted here because they are almost the same.

As compared to the automatic transmission 1₂₇ of the 27th embodiment, the automatic transmission 1₄₀ of the 40th embodiment is arranged so that the lateral (axial) position of the counter gear 150 and the hydraulic servo 30 of the second clutch C-2 is switched and the hydraulic servo 20 of the first clutch C-1 is disposed axially on the opposite side of the planetary gear unit PU from the planetary gear DP, or more specifically, the hydraulic servo 20 of the first clutch C-1 is disposed axially between the planetary gear unit PU and the counter gear 150.

It is noted that an automatic transmission 1₅₆ of a 56th embodiment described later may be built by inverting a transmission mechanism 2₄₀ of the automatic transmission 1₄₀ of the 40th embodiment in the lateral direction (axial direction) almost as it is.

### <41st Embodiment>

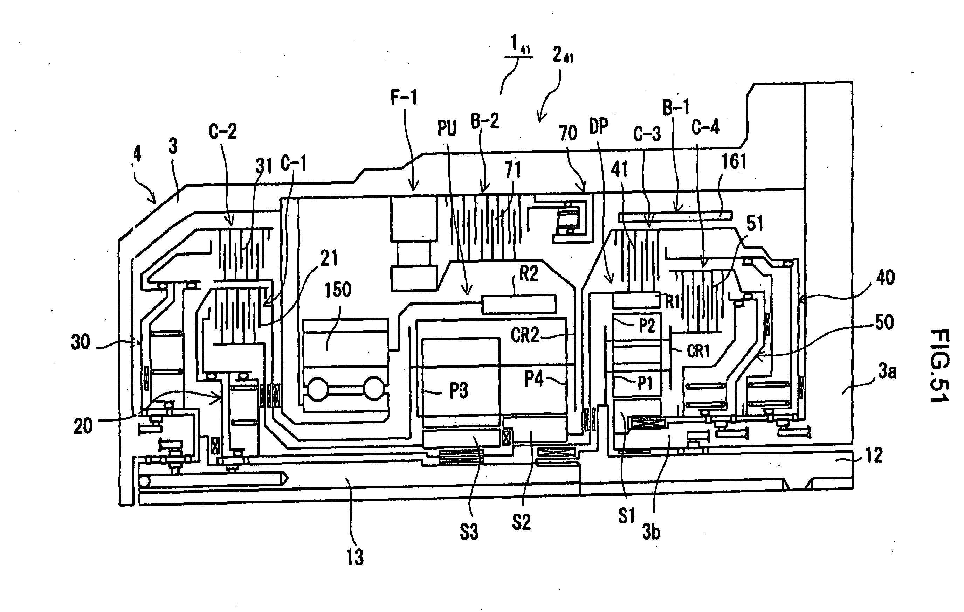

A 41st embodiment, which is a partial modification of the 27th embodiment described above, will be explained with reference to FIG. 51. FIG. 51 is a diagrammatic section view showing an automatic transmission 1₄₁ of the 41st embodiment. It is noted that in the 41st embodiment explained below, only structures or components different from those of the automatic transmission 1₂₇ of the 27th embodiment will be explained and an explanation of the structures or components other than that will be omitted here because they are almost the same.

As compared to the automatic transmission 1₂₇ of the 27th embodiment, the automatic transmission 1₄₁ of the 41st embodiment is arranged so that the lateral (axial) position of the counter gear 150 and the hydraulic servo 30 of the second clutch C-2 is switched and the hydraulic servo 20 of the first clutch C-1 is disposed axially on the opposite side of the planetary gear unit PU from the planetary gear DP, or more specifically, the hydraulic servo 20 of the first clutch C-1 is disposed axially between the counter gear 150 and the hydraulic servo 30 of the second clutch C-2.

It is noted that an automatic transmission 1₅₇ of a 57th embodiment described later may be built by inverting a transmission mechanism 2₄₁ of the automatic transmission 1₄₁ of the 41st embodiment in the lateral direction (axial direction) almost as it is.

### <42nd Embodiment>

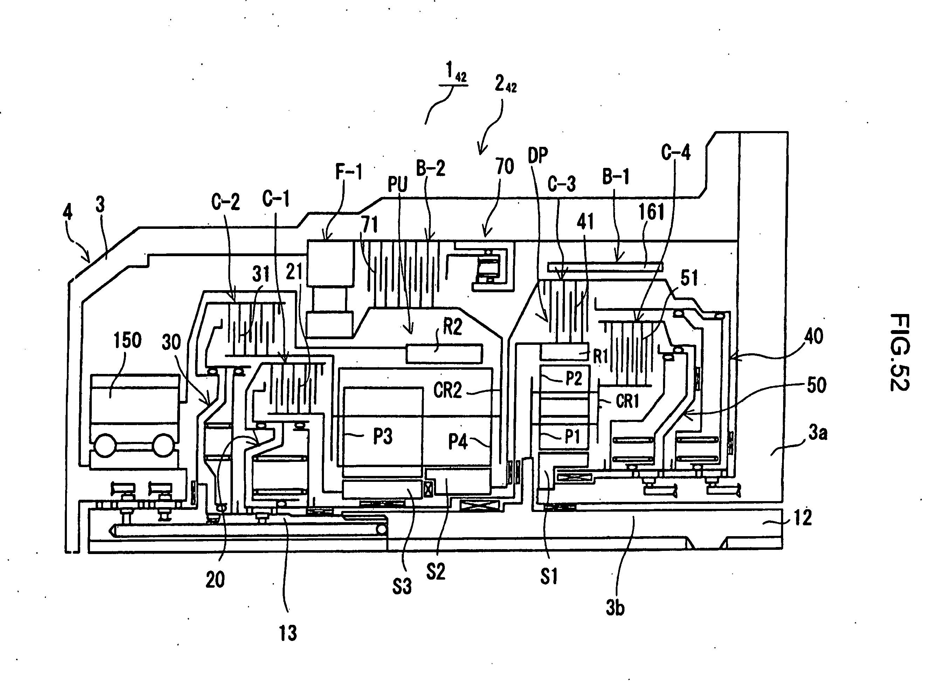

A 42nd embodiment, which is a partial modification of the 27th embodiment described above, will be explained with reference to FIG. 52. FIG. 52 is a diagrammatic section view showing an automatic transmission 1₄₂ of the 42nd embodiment. It is noted that in the 42nd embodiment explained below, only structures or components different from those of the automatic transmission 1₂₇ of the 27th embodiment will be explained and an explanation of the structures or components other than that will be omitted here because they are almost the same.

As compared to the automatic transmission 1₂₇ of the 27th embodiment, the automatic transmission 1₄₂ of the 42nd embodiment is arranged so that the hydraulic servo 20 of the first clutch C-1 is disposed axially on the opposite side of the planetary gear unit PU from the planetary gear DP, or more specifically, the hydraulic servo 20 of the first clutch C-1 is disposed axially between the hydraulic servo 30 of the second clutch C-2 and the planetary gear unit PU.

It is noted that an automatic transmission 1₅₈ of a 58th embodiment described latermay be built by inverting a transmission mechanism 2₄₂ of the automatic transmission 1₄₂ of the 42nd embodiment in the lateral direction (axial direction) almost as it is.

### <43rd Embodiment>

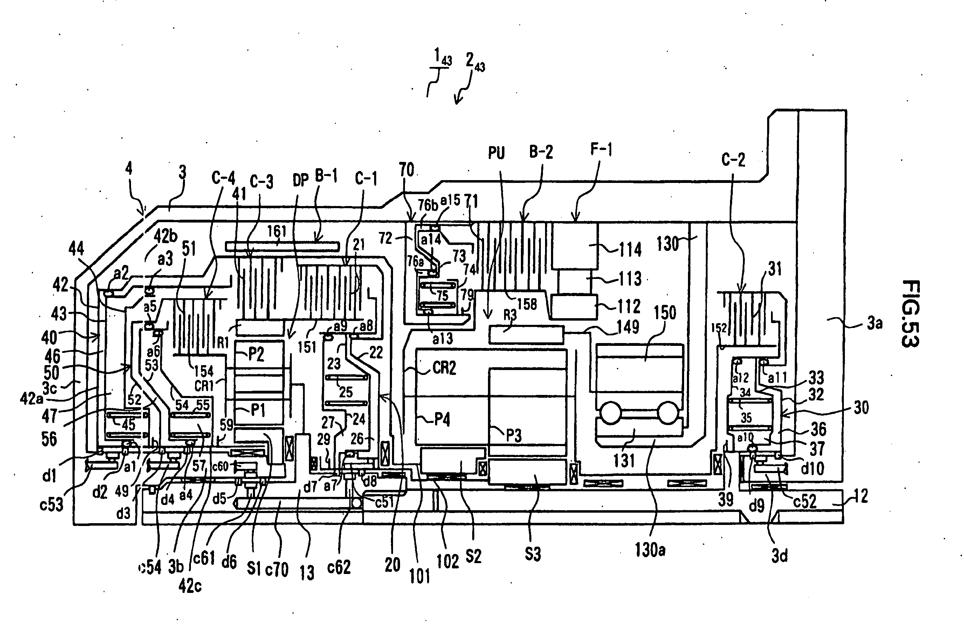

A 43rd embodiment, which is a partial modification of the first through 42nd embodiments described above, will be explained with reference to FIG. 53. FIG. 53 is a diagrammatic section view showing an automatic transmission 1₄₃ of the 43rd embodiment. It is noted that in the 43rd embodiment explained below, components having the same structure with those in the automatic transmission 1 of the first through 42nd embodiments are denoted by the same reference characters and an explanation thereof will be simplified, except of those structural parts such as oil passages, seal rings and hub members.

As shown in FIG. 53, as compared to the automatic transmission 1₂₈ of the 28th embodiment, the automatic transmission 1₄₃ that may be suitably mounted to an FF-type (front engine front drive) vehicle for example is characterized in that the disposition of the first through fourth clutches C-1 through C-4, the first and second brakes B-1 and B-2, the one-way clutch F-1, the planetary gear DP, the planetary gear unit PU and the counter gear 150 is nearly inverted in the lateral (axial) direction while keeping the input shaft 12 and the intermediate shaft 13 as they are, i.e., while keeping the direction in which the engine is disposed as it is. That is, the transmission mechanism 2₄₃ is built by nearly inverting the transmission mechanism 2₂₈ in the lateral (axial) direction.

More specifically, the automatic transmission 1₄₃ has the case 4 formed by connecting the mission case 3, the housing case for housing the torque converter not shown and others. A transmission mechanism 2₄₃, the counter shaft and the differential unit not shown are disposed within the mission case 3. The transmission mechanism 2₄₃ is disposed on the shafts centering on the input shaft 12 and the intermediate shaft 13 which are coaxial with the output shaft of the engine not shown.

As shown in FIG. 53, within the mission case 3, the planetary gear unit PU is disposed on the intermediate shaft 13 and the third clutch C-3, the fourth clutch C-4, the planetary gear DP and the first clutch C-1 are disposed axially on the left side of the planetary gear unit PU in order from the left side. The fourth clutch C-4 and the planetary gear DP are disposed on the inner peripheral side of the clutch drum 42 of the third clutch C-3 described later in detail. Further, the first brake B-1 comprising the band brake is disposed on the outer peripheral side of the clutch drum 42 of the third clutch C-3.

Meanwhile, the second clutch C-2 and the counter gear 150 are disposed axially on the right side (input side) of the planetary gear unit PU in order from the right side. The second brake B-2 and the one-way clutch F-1 are disposed on the outer peripheral side of the planetary gear unit PU.

This will be explained in detail. The friction plate 51 of the fourth clutch C-4, the friction plate 41 of the third clutch C-3 and the friction plate 21 of the first clutch C-1 are disposed relatively on the outer diametric side within the mission case 3 on the input shaft 13 in order from the left side within the inner left part of the mission case 3, i.e., on the left side of the planetary gear unit PU. Still more, the brake band 161 of the first brake B-1 is disposed so as to overlap with the outer diametric side of the friction plate 41 of the third clutch C-3 and a part of the friction plate 21 of the first clutch C-1.

Still more, the hydraulic servo 40 of the third clutch C-3 is disposed on the boss portion 3b extending from the side wall 3c of the mission case 3. Further, the hydraulic servo 50 of the fourth clutch C-4 is disposed on the right side of the hydraulic servo 40, the planetary gear DP is disposed on the inner diametric side of the friction plate 41 and the hydraulic servo 20 of the first clutch C-1 is disposed nearly on the inner diametric side of the friction plate 21. That is, the hydraulic servo 40, the hydraulic servo 50 and the planetary gear DP are disposed in order (in order from the side of the joint of the boss portion 3b axially to the right side) on the boss portion 3b on the left side of the mission case 3 and the hydraulic servo 20 is disposed on the intermediate shaft 13 in a manner of adjoining with the planetary gear DP.

Meanwhile, the planetary gear unit PU is disposed on the input shaft 12 on the right side of the mission case 3 in the drawing, i.e., on the right side of the hydraulic servo 20 of the first clutch C-1. The friction plate 71 of the second brake B-2 is disposed on right part of the outer peripheral side of the planetary gear unit PU and the hydraulic servo 70 of the second brake B-2 is disposed on the left part of the outer diametric side of the planetary gear unit PU. Then, the one-way clutch F-1 is disposed in a manner of overlapping from a part on the outer diametric side of the friction plate 31 to a part on the outer diametric side of the planetary gear unit PU.

The flange-like support wall 130 is disposed on the right side of the planetary gear unit PU by being secured to the inner peripheral face of the mission case 3 and the counter gear 150 connected to the ring gear R2 of the planetary gear unit PU via the ball bearing 131 is disposed on the inner diametric side of the support wall 130 in a manner of being rotatably supported by the support wall 130.

As described above, the hydraulic servo 40 of the third clutch C-3 and the hydraulic servo 50 of the fourth clutch C-4 are disposed axially on the opposite side of the planetary gear DP from the planetary gear unit PU, the hydraulic servo 20 of the first clutch C-1 is disposed axially between the planetary gear DP and the planetary gear unit PU and the hydraulic servo 30 of the second clutch C-2 and the counter gear 150 are disposed axially on the opposite side of the planetary gear unit PU from the planetary gear DP.

Next, the structure within the mission case 3 will be explained in detail with reference to FIG. 53. It is noted that the structure of each oil passage will be collectively explained later.

The planetary gear DP disposed within the mission case 3 is provided with the sun gear S1, the carrier CR1 and the ring gear R1. Among them, the sun gear S1 is fixed to the boss portion 3b extending to the right from the side wall 3a of the mission case 3 so as not to be rotatable. The carrier CR1 has the two carrier plates in the lateral direction to rotatably support the pinions P1 and P2. While these pinions P1 and P2 engage from each other, the former pinion P1 engages with the sun gear S1 and the latter pinion P2 engages with the ring gear R1, respectively. The right carrier plate is connected to the intermediate shaft 13 and the left carrier plate is connected to the hub member 154 spline-coupled with the inner friction plate of the friction plate 51 of the fourth clutch C-4. The inner friction plate of the friction plate 41 of the third clutch C-3 is spline-coupled with the outer peripheral face of the ring gear R1. The hub portion 151 is linked on the right side of the ring gear R1 and the inner friction plate of the friction plate 21 of the first clutch C-1 is spline-coupled with the hub member 151.

The fourth clutch C-4 is disposed on the boss portion 3b through an intermediary of the clutch drum 42 of the third clutch C-3 on the left side of the planetary gear DP described above. The fourth clutch C-4 is provided with the friction plate 51 and the hydraulic servo 50 for engaging/disengaging the friction plate 51. The hydraulic servo 50 has the clutch drum 52, the piston member 53, the cancel plate 54 and the return spring 55 and composes thereby the oil chamber 56 and the cancel oil chamber 57. The inner diametric portion of the clutch drum 52 is linked to the clutch drum 42 of the third clutch C-3 and the outer friction plate 51a of the friction plate 51 is spline-coupled with the inner peripheral face of the outer diametric portion thereof. The piston member 53 is disposed on the right side of the clutch drum 52 so as to be movable in the axial direction and composes the oil-tight oil chamber 56 between the clutch drum 52 by the seal rings a4 and a5. Still more, the cancel plate 54 is blocked from moving to the right by the snap ring 59 fitted to the clutch drum 42 described above. The cancel plate 54 is provided with the return spring 55 in contraction between the piston member 53 disposed on the left side thereof and composes the oil-tight cancel oil chamber 57 by the seal rings a4 and a6.

It is noted that because the fourth clutch C-4 is built as described above, the inputted rotation of the carrier CR1 is inputted to the clutch drum 52 when the fourth clutch C-4 engages. The rotation is not inputted to the clutch drum 52 and the hydraulic servo 50 will not rotate when the fourth clutch C-4 is not engaged in Neutral and Parking ranges in particular.

The third clutch C-3 is built so as to surround the left side and the outer peripheral side of the fourth clutch C-4 described above and is disposed on the boss portion 3b. The third clutch C-3 is provided with the friction plate 41 and the hydraulic servo 40 for engaging/disengaging the friction plate 41. The hydraulic servo 40 has the clutch drum 42, the piston member 43, the cancel plate 44 and the return spring 45 and composes the oil chamber 46 and the cancel oil chamber 47 with them. The clutch drum 42 has the flange portion 42a disposed on the right side of the side wall 3c, the hub portion 42c extending to the right from the inner periphery of the flange portion 42a and the drum portion 42b extending to the right from the outer periphery of the flange portion 42a. Among them, the outer peripheral face of the boss portion 3b extending from the side wall 3c described above to the right side rotatably supports the hub portion 42c. The end of the hub portion 42c of the clutch drum 42 is positioned on the right side of the fourth clutch C-4 and the hydraulic servo 50 of the fourth clutch C-4 is disposed on the outer peripheral side thereof. The drum portion 42b of the clutch drum 42 extends to the outer diametric side of the first clutch C-1 by passing through the outer diametric side of the fourth clutch C-4. The brake band 161 of the first brake B-1 comprising the band brake is disposed on the outer peripheral face of the drum portion 42b of the clutch drum 42, the outer friction plate of the friction plate 41 is spline-coupled with the part corresponding to the ring gear R1 described above and the link member 101 is linked at the right part thereof. The link member 101 extends to the inner diametric side through the outer diametric side and the right side of the first clutch C-1 and is linked to the sun gear S2.

The piston member 43 of the third clutch C-3 is disposed so as to be movable with respect to the clutch drum 42 and composes the oil-tight oil chamber 46 between the clutch drum 42 by the seal rings a1 and a2. Still more, the outer diametric portion of the piston member 43 extends to the right by passing the outer peripheral side of the clutch drum 52 and the inner peripheral side of the clutch drum 42 of the third clutch C-3 so that its end faces to the friction plate 41. The cancel plate 44 is blocked from moving to the right side by the snap ring 49 fitted to the outer peripheral face of the inner diametric side of the clutch drum 42. The cancel plate 44 is provided with the return spring 45 in contraction between the piston member 43 disposed on the left side thereof and composes the oil-tight cancel oil chamber 47 by the seal rings a1 and a3.

It is noted that because the third clutch C-3 is built as described above, the reduced rotation of the ring gear R1 is inputted to the clutch drum 42 when the third clutch C-3 engages. Accordingly, the rotation is not inputted to the clutch drum 42 and the hydraulic servo 40 will not rotate when the third clutch C-3 is not engaged specially in Neutral and Parking ranges.

The first clutch C-1 is disposed on the intermediate shaft 13 linked with the input shaft 12 on the right side of the planetary gear DP and the friction plate 41 of the third clutch C-3 and is provided with the friction plate 21 and the hydraulic servo 20 for engaging/disengaging the friction plate 21. The inner friction plate of the friction plate 21 is spline-coupled with the outer peripheral face of the hub member 151 linked to the ring gear R1 described above. The outer friction plate of the friction plate 21 is spline-coupled with the inner peripheral side of the clutch drum 22 described later and the clutch drum 22 is linked to the link member 102. This link member 102 is then linked to the sun gear S3.

The hydraulic servo 20 has the clutch drum 22, the piston member 23, the cancel plate 24 and the return spring 25 and composes the oil chamber 26 and the cancel oil chamber 27 with them. The clutch drum 22 is attached to the outer peripheral face of the right side of the intermediate shaft 13 so as to be relatively rotatable. The piston member 23 is disposed in the clutch drum 22 so as to be movable in the axial direction and composes the oil-tight oil chamber 26 between the clutch drum 22 by the seal rings a7 and a8. A part of the piston member 23 on the outer peripheral side faces to the front face of the friction plate 21. The cancel plate 24 is blocked from moving to the left side by the snap ring 29 fitted around the outer peripheral face on the inner diametric side of the clutch drum 22 described above. The cancel plate 24 is provided with the return spring 25 in contraction between the piston member 23 disposed on the right side thereof and composes the oil-tight cancel oil chamber 27 by the seal rings a7 and a9.

The first brake B-1 is disposed on the outer diametric side of the clutch drum 42 and is provided with a hydraulic servo not shown and set so as not to be rotatable with respect to the mission case 3 and the brake band 161 for fastening and releasing the outer peripheral part of the clutch drum 42 by the hydraulic servo.

The second brake B-2 is disposed on the outer diametric side of the planetary gear unit PU. The second brake B-2 has the friction plate 71 and the hydraulic servo 70 for engaging/disengaging the friction plate 71. The outer friction plate of the friction plate 71 is spline-coupled with the inner peripheral face of the mission case 3 and the inner friction plate is spline-coupled with the hub member 158 linked to the carrier CR2 of the planetary gear unit PU.

The hydraulic servo 70 has the drum-like cylinder member 72, the piston member 73, the cancel plate 74 and the return spring 75 and composes the oil chamber 76 between the piston member 73 and the cylinder member 72. The piston member 73 is movably disposed in the axial direction and its right end faces to the friction plate 71. The oil-tight oil chambers 76a and 76b are formed between the piston member 73 and the cylinder member 72 by the three seal rings a13, a14 and a15. The cancel plate 74 is blocked from moving to the right by the snap ring 79 fitted into the inner peripheral face of the cylinder member 72.

The one-way clutch F-1 is disposed so as to overlap with the outer diametric side of the planetary gear unit PU on the right side of the second brake B-2 described above and is provided with the inner race 112 linked to the hub member 158, the sprag mechanism 113 and the outer race 114 spline-coupled with the inner peripheral side of the mission case 3 in order from the inner peripheral side to the outer peripheral side.

The second clutch C-2 is disposed on the boss portion 3b extending from the partition member 3a for parting the mission case 3 from the housing case not shown on right side of the planetary gear unit PU .and is provided with the friction plate 31 and the hydraulic servo 30 for engaging/disengaging the friction plate 31. The inner friction plate 31b of the friction plate 31 is spline-coupled with the hub member 152 linked to the carrier CR2. The outer friction plate 31a of the friction plate 31 is spline-coupled with the inner peripheral side of the clutch drum 32 and the clutch drum 32 is linked with the input shaft 12.

The hydraulic servo 30 has the clutch drum 32, the piston member 33, the cancel plate 34 and the return spring 35 and composes the oil chamber 36 and the cancel oil chamber 37 with them. The inner peripheral side of the clutch drum 32 is attached to and supported by the input shaft 12. The piston member 33 is disposed in the clutch drum 32 movably in the axial direction and composes the oil-tight oil chamber 36 between the clutch drum 32 by the seal rings a10 and a11. The part of the piston member 33 on the outer peripheral side faces to the front face of the friction plate 31. Still more, the cancel plate 34 is blocked from moving to the left side by the snap ring 39 fitted around the outer peripheral face on the inner diametric side of the clutch drum 32 described above. The clutch drum 32 is provided with the return spring 35 in contraction between the piston member 33 disposed on the right side thereof and composes the oil-tight cancel oil chamber 37 by the seal rings a10 and a12.

Then, the support wall 130 is disposed so that the outer peripheral side thereof is linked with the mission case 3 on the inner peripheral side of the mission case 3 and on the right side of the planetary gear unit PU and the counter gear 150 is disposed on the boss portion 130a extending on the inner diametric side of the support wall 130 through an intermediary of the ball bearing 131. It is noted that the gear linked to the counter shaft not shown is engaged with the outer peripheral side of the counter gear 150 and the counter shaft is linked with driving wheels through an intermediary of gear mechanisms and differential gears not shown.

Next, the structures of each oil passage and the supply of operating fluid will be briefly explained. The oil chamber 56 of the hydraulic servo 50 of the fourth clutch C-4, i.e., the oil chamber 56 formed by sealing the part between the clutch drum 52 and the piston member 53 by the seal rings a4 and a5, is arranged so as to communicate with the oil passage c54 within the boss portion 3b by sealing the part between the clutch drum 52 and the boss portion 3b by the seal rings d3 and d4 and operating fluid is supplied from the oil passage c54. It is noted that operating fluid is supplied from the oil passage not shown to the cancel oil chamber 57 formed by sealing the part between the piston member 53 and the cancel plate 54 by the seal rings a4 and a6.

The oil chamber 46 of the hydraulic servo 40 of the third clutch C-3, i.e., the oil chamber 46 formed by sealing the part between the clutch drum 42 and the piston member 43 by the seal rings a1 and a2, is arranged so as to communicate with the oil passage c53 within the boss portion 3b by sealing the part between the clutch drum 42 and the boss portion 3b by the seal rings d1 and d2 and operating fluid is supplied thereto from the oil passage c53. It is noted that operating fluid is supplied from the oil passage not shown to the cancel oil chamber 47 formed by sealing the part between the piston member 43 and the cancel plate 44 by the seal rings a1 and a3.

The oil chamber 26 of the hydraulic servo 20 of the first clutch C-1, i.e., the oil chamber 26 formed by sealing the part between the clutch drum 22 and the piston member 23 by the seal rings a7 and a8, is arranged so as to communicate with the oil passage c60 within the boss portion 3b by sealing the part between the boss portion 3b and the intermediate shaft 13 by the seal rings d5 and d6 and the part between the intermediate shaft 13 and the clutch drum 22 by the seal rings d7 and d8, respectively, via the oil passages c61, c70, c62 within the intermediate shaft 13 and the oil passage c51 and operating fluid is supplied thereto from the oil passage c51. It is noted that operating fluid is supplied from the oil passage not shown to the cancel oil chamber 27 formed by sealing the part between the piston member 23 and the cancel plate 24 by the seal rings a7 and a9.

The oil chamber 36 of the hydraulic servo 30 of the second clutch C-2, i.e., the oil chamber 36 formed by sealing the part between the clutch drum 32 and the piston member 33 by the seal rings a10 and a11, is arranged so as to communicate with the oil passage c52 within the boss portion 3d by sealing the part between the boss portion 3d and the clutch drum 32 by the seal rings d9 and d10 and operating fluid is supplied thereto from the oil passage c52. It is noted that operating fluid is supplied from the oil passage not shown to the cancel oil chamber 37 formed by sealing the part between the piston member 33 and the cancel plate 34 by the seal rings a10 and a12.

Still more, operating fluid is supplied from two oil passages within the mission case 3 not shown to the two oil chambers 76a and 76b of the hydraulic servo 70 of the second brake B-2, i.e., to the oil chambers 76a and 76b formed by sealing the part between the cylinder member 72 and the piston member 73 by the seal rings a13, a14 and a15, respectively. It is noted that the second brake B-2 is allowed to press and control the piston member 73 stepwise based on hydraulic pressure of the operating fluid supplied to the two oil chambers 76a and 76b, so that it is capable of controlling the torque capacity of the second brake B-2 more finely and accurately.

According to the inventive automatic transmission 1₄₃ described above, the fourth clutch C-4 is linked with the sun gear S2 of the planetary gear unit PU via the output side members (clutch drum 42 and the link member 102) of the third clutch C-3, so that the output side members turn out to be output side members of the two clutches transmitting different rotations, i . e. , they may be shared in common as one rotary member. Thereby, the automatic transmission 1₄₃ may be compactly built.

Still more, because the hydraulic servo 50 of the fourth clutch C-4 is disposed axially on the opposite side of the planetary gear DP from the planetary gear unit PU and on the boss portion 3b extending from the case 4 to supply the operating fluid to the hydraulic servo 50 of the fourth clutch C-4 from the oil passage within the boss portion 3b, a number of seal rings may be cut as compared to a case of disposing the hydraulic servo 50 of the fourth clutch C-4 on the intermediate shaft 13 through an intermediary of a member having another speed of rotation, i.e., as compared to a case of supplying the operating fluid via the other member for example. Thereby, it becomes possible to prevent the drop of the efficiency and controllability of the automatic transmission 1₄₃.

Still more, because the planetary gear DP, the first clutch C-1, the third and fourth clutches C-3 and C-4 are disposed axially on one side of the planetary gear unit PU and the planetary gear DP and the fourth clutch C-4 are disposed on the inner peripheral side of the clutch drum 42 of the third clutch C-3, it becomes possible to increase the area of the friction plates 21 and 41 of the first and third clutches C-1 and C-3. That is, even though the capacity of the first and third clutches C-1 and C-3 for transmitting the reduced rotation may be increased, the fourth clutch C-4 and the planetary gear DP whose transmittable torque capacity can be relatively small for transmitting the inputted rotation may be disposed on the inner peripheral side of the clutch drum 42 of the third clutch C-3. Accordingly, the automatic transmission 1₄₃ that is capable of attaining the multi-stage shift such as the forward eighth speed stage and the reverse second speed stage may be compactly built.

Still more, because the hydraulic servo 20 of the first clutch C-1 is disposed on the intermediate shaft 13 and adjacent to the planetary gear DP and the operating fluid is supplied to the hydraulic servo 20 of the first clutch C-1 from the oil passage provided within the intermediate shaft 13, the operating fluid may be supplied just by providing two pairs of seal rings d5:, d6, d7 and d8 along the oil passage for supplying the operating fluid from the hydraulic control unit, i.e., between the oil passage within the boss portion 3b and the intermediate shaft 13 and between the hydraulic servo 20 of the first clutch C-1 and the intermediate shaft 13. Accordingly, a number of seal rings may be cut as compared to a case of supplying operating fluid via another member for example. Thereby, it becomes possible to prevent the drop of the efficiency and controllability of the vehicular automatic transmission 1₄₃.

Still more, although the increase of radial size of the first clutch C-1 to the outer peripheral side is limited because the third and fourth clutches C-3 and C-4 are linked to the sun gear S2 of the planetary gear unit PU through the outer peripheral side of the first clutch C-1 and the link member 101 and others for linking the third and fourth clutches C-3 and C-4 with the sun gear S2 of the planetary gear unit PU pass through the outer peripheral side of the first clutch C-1, the capacity of the first clutch C-1 may be maintained by increasing the size in the inner radial direction because the first clutch C-1 is disposed on the intermediate shaft 13 (the input shaft 12 in a broad sense) as compared to a case of disposing it on the boss portion 3b.

Still more, because the sun gear S2 of the planetary gear unit PU is capable of transmitting the inputted rotation in connection with the fourth clutch C-4, is capable of transmitting the reduced rotation in connection with the third clutch C-3 and is capable of fixing the rotation in connection with the first brake B-1, the sun gear S3 is capable of transmitting the reduced rotation in connection with the first clutch C-1, the carrier CR2 is capable of transmitting the inputted rotation in connection with the second clutch C-2 and is capable of fixing the rotation in connection with the second brake B-2 and the ring gear R2 is linked to the counter gear 150, the multi-stage shift such as the forward eighth speed stage and the reverse second speed stage may be attained.

Further, because the friction plate 41 of the third clutch C-3 is disposed on the outer peripheral side of the ring gear R1 and the fourth clutch C-4 is disposed axially between the hydraulic servo 40 of the third clutch C-3 and the friction plate 41 of the third clutch C-3, it is possible to prevent the fourth clutch C-4 from radially overlapping with the hydraulic servo 40 or the friction plate 41 of the third clutch C-3. Accordingly, because the radial size of the fourth clutch C-4 may be increased as compared to a case of disposing it on the inner peripheral side of the third clutch C-3, the capacity of the fourth clutch C-4 may be maintained and the vehicular automatic transmission 1₄₃ may be compactly built in the axial direction as a result.

Still more, although the first brake B-1 is disposed on the outer peripheral side of the friction plate 41 of the third clutch C-3 in the present embodiment, it is also possible to dispose the first brake B-1 on the outer peripheral side of the hydraulic servo 40 of the third clutch C-3. Accordingly, it is possible to build the vehicular automatic transmission 1₄₃ compactly in the radial direction while maintaining the capacity of the first brake B-1 and reducing the size thereof by disposing the first brake B-1 at the position overlapping with the third clutch C-3.

Further, because the automatic transmission 1₄₃ is built so that the reduced rotation of the ring gear R1 is inputted to the clutch drum 42 of the third clutch C-3 forming the hydraulic servo 40 of the third clutch C-3 when the third clutch C-3 engages, the reduced rotation is not inputted to the clutch drum 42 of the third clutch C-3 when the third clutch C-3 is not engaged even if the driver races the engine in Neutral or Parking range for example and the input shaft rotates. Accordingly, it is possible to prevent the whole hydraulic servo 40 of the third clutch C-3 from rotating and to prevent dragging of the third clutch C-3 which is otherwise caused by a centrifugal hydraulic pressure generated in the oil chamber 46.

Still more, because the automatic transmission 1₄₃ is built so that the inputted rotation is inputted to the clutch drum 52 of the fourth clutch C-4 forming the hydraulic servo 50 of the fourth clutch-4 via the carrier CR1 when the fourth clutch C-4 engages, the inputted rotation is not inputted to the clutch drum 52 of the fourth clutch C-4 when the fourth clutch C-4 is not engaged even if the driver races the engine in Neutral or Parking range for example and the input shaft rotates. Accordingly, it is possible to prevent the rotation of the whole hydraulic servo 50 of the fourth clutch C-4 and to prevent dragging of the fourth clutch C-4 which is otherwise caused by a centrifugal hydraulic pressure generated in the oil chamber 56.

Because the second clutch C-2 is disposed axially on the opposite side of the planetary gear unit PU from the planetary gear DP, the second clutch C-2 may be linked with the carrier CR2 without entangling with the members for linking the first clutch C-1 with the sun gear S3 and for linking the third clutch C-3 with the sun gear S2 for example.

Still more, because the support wall 130 is disposed axially on the opposite side of the planetary gear unit PU from the planetary gear DP, the counter gear 150 supported by the support wall 130 may be disposed on the input side (axially on the right side) of the input shaft. Accordingly, the gear engaging with the counter gear 150 disposed in the counter shaft not shown may be disposed on the input side of the input shaft. Thereby, the axial length of the counter shaft may be shortened as a result and the whole automatic transmission may be lightened.

### <44th Embodiment>

Next, a 44th embodiment, which is a partial modification of the 43rd embodiment described above, will be explained with reference to FIG. 54. FIG. 54 is a diagrammatic section view showing an automatic transmission 1₄₄ of the 44th embodiment. It is noted that in the 44-th embodiment explained below, only structures or components different from those of the automatic transmission 1₄₃ of the 43rd embodiment will be explained and an explanation of the structures or components other than that will be omitted here because they are almost the same.

As compared to the automatic transmission 1₄₃ of the 43rd embodiment, the automatic transmission 1₄₄ of the 44th embodiment is arranged so that the lateral (axial) position of the counter gear 150 and the hydraulic servo 30 of the second clutch C-2 is switched.

Because the counter gear 150 may be disposed on the boss extending from the partition member 3a by switching the lateral (axial) position of the counter gear 150 and the hydraulic servo 30 of the second clutch C-2 in the 44th embodiment, it becomes possible to cut the support wall used for supporting the counter gear, to thus reduce a number of parts and to lighten the automatic transmission.

It is noted that the automatic transmission 1₂₇ of the 27th embodiment described above may be built by inverting a transmission mechanism 2₄₄ of the automatic transmission 1₄₄ of the 44th embodiment in the lateral direction (axial direction) almost as it is.

### <45th Embodiment>

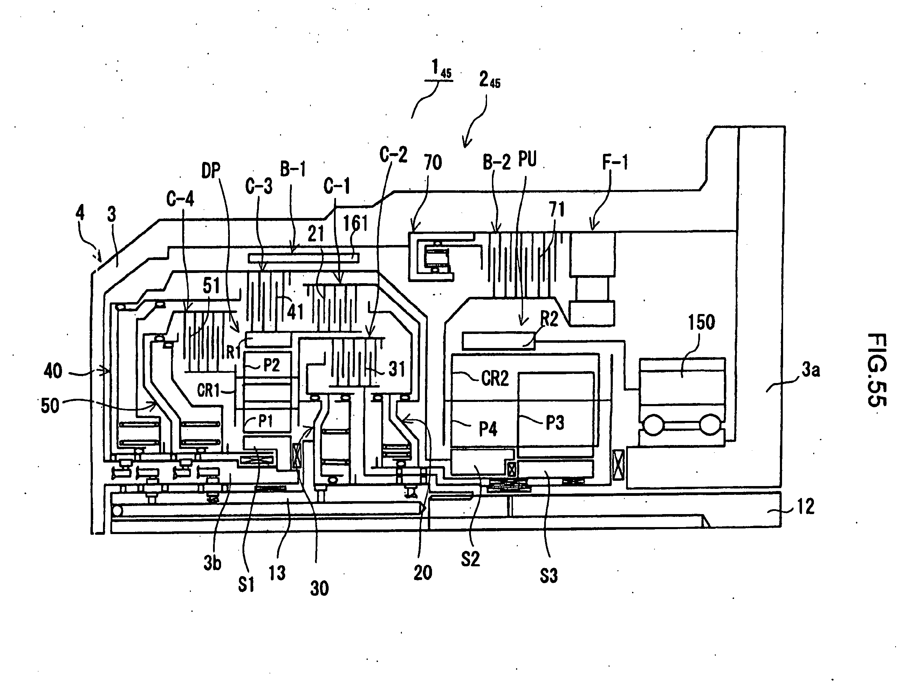

A 45th embodiment, which is a partial modification of the 43rd embodiment described above, will be explained with reference to FIG. 55. FIG. 55 is a diagrammatic section view showing an automatic transmission 1₄₅ of the 45th embodiment. It is noted that in the 45-th embodiment explained below, only structures or components different from those of the automatic transmission 1₄₃ of the 43-rd embodiment will be explained and an explanation of the structures or components other than that will be omitted here because they are almost the same.

As compared to the automatic transmission 1₄₃ of the 43rd embodiment, the automatic transmission 1₄₅ of the 45th embodiment is arranged so that the hydraulic servo 30 of the second clutch C-2 is disposed axially between the planetary gear unit PU and the planetary gear DP, or more specifically, axially between the planetary gear DP and the hydraulic servo 20 of the first clutch C-1.

It is noted that the automatic transmission 1₂₉ of the 29th embodiment described above may be built by inverting a transmission mechanism 2₄₅ of the automatic transmission 1₄₅ of the 45th embodiment in the lateral direction (axial direction) almost as it is.

### <46th Embodiment>

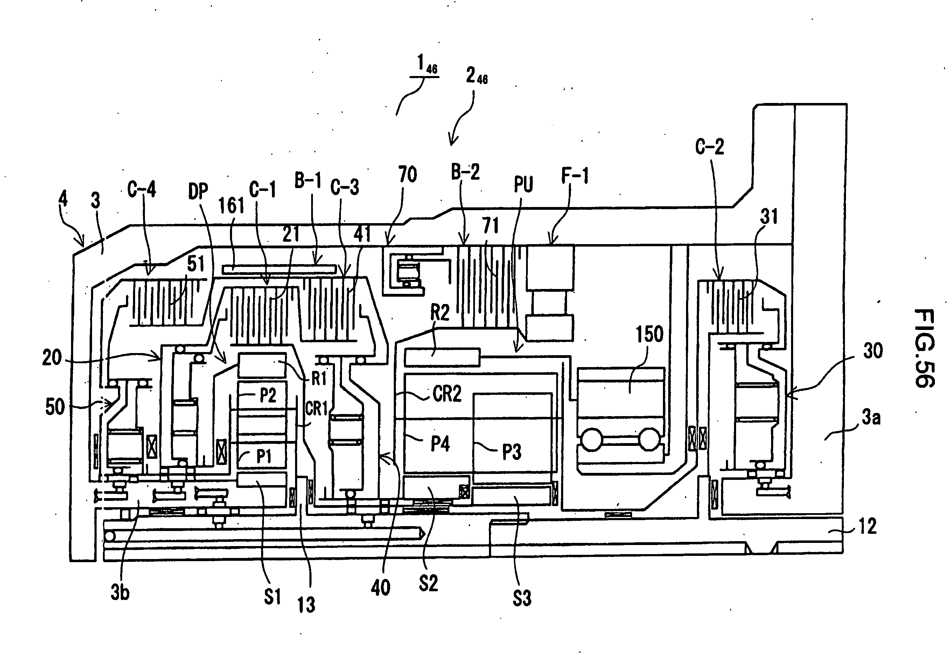

A 46th embodiment, which is a partial modification of the 43rd embodiment described above, will be explained with reference to FIG. 56. FIG. 56 is a diagrammatic section view showing an automatic transmission 1₄₆ of the 46th embodiment. It is noted that in the 46-th embodiment explained below, only structures or components different from those of the automatic transmission 1₄₃ of the 43-rd embodiment will be explained and an explanation of the structures or components other than that will be omitted here because they are almost the same.

As compared to the automatic transmission 1₄₃ of the 43rd embodiment, the automatic transmission 1₄₆ of the 46th embodiment is arranged so that the lateral (axial) position of the hydraulic servo 20 of the first clutch C-1 and the hydraulic servo 40 of the third clutch C-3 is switched. That is, the hydraulic servo 40 of the third clutch C-3 is disposed axially between the planetary gear DP and the planetary gear unit PU and the hydraulic servo 20 of the first clutch C-1 is disposed axially on the opposite side of the planetary gear DP from the planetary gear unit PU. Specifically, the hydraulic servo 20 of the first clutch C-1 is disposed axially between the planetary gear DP and the hydraulic servo 50 of the fourth clutch C-4.

It is noted that the automatic transmission 1₃₀ of the 30th embodiment described above may be built by inverting a transmission mechanism 2₄₆ of the automatic transmission 1₄₆ of the 46th embodiment in the lateral direction (axial direction) almost as it is.

### <47th Embodiment>

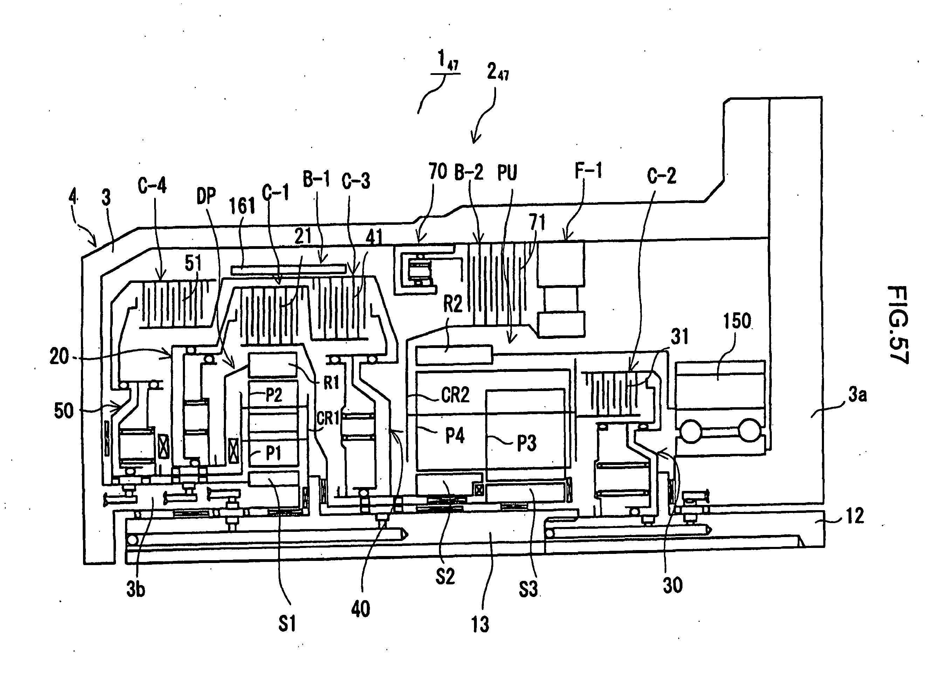

A 47th embodiment, which is a partial modification of the 43rd embodiment described above, will be explained with reference to FIG. 57. FIG. 57 is a diagrammatic section view showing an automatic transmission 1₄₇ of the 47th embodiment. It is noted that in the 47-th embodiment explained below, only structures or components different from those of the automatic transmission 1₄₃ of the 43-rd embodiment will be explained and an explanation of the structures or components other than that will be omitted here because they are almost the same.

As compared to the automatic transmission 1₄₃ of the 43rd embodiment, the automatic transmission 1₄₇ of the 47th embodiment is arranged so that the lateral (axial) position of the hydraulic servo 20 of the first clutch C-1 and the hydraulic servo 40 of the third clutch C-3 is switched and the lateral (axial) position of the hydraulic servo 20 of the first clutch C-1 and the hydraulic servo 40 of the third clutch C-3 is switched. That is, the hydraulic servo 40 of the third clutch C-3 is disposed axially between the planetary gear DP and the planetary gear unit PU and the hydraulic servo 20 of the first clutch C-1 is disposed axially on the opposite side of the planetary gear DP from the planetary gear unit PU. Specifically, the hydraulic servo 20 of the first clutch C-1 is disposed axially between the planetary gear DP and the hydraulic servo 50 of the fourth clutch C-4.

It is noted that the automatic transmission 1₃₁ of the 31st embodiment described above may be built by inverting a transmission mechanism 2₄₇ of the automatic transmission 1₄₇ of the 47th embodiment in the lateral direction (axial direction) almost as it is.

### <48th Embodiment>

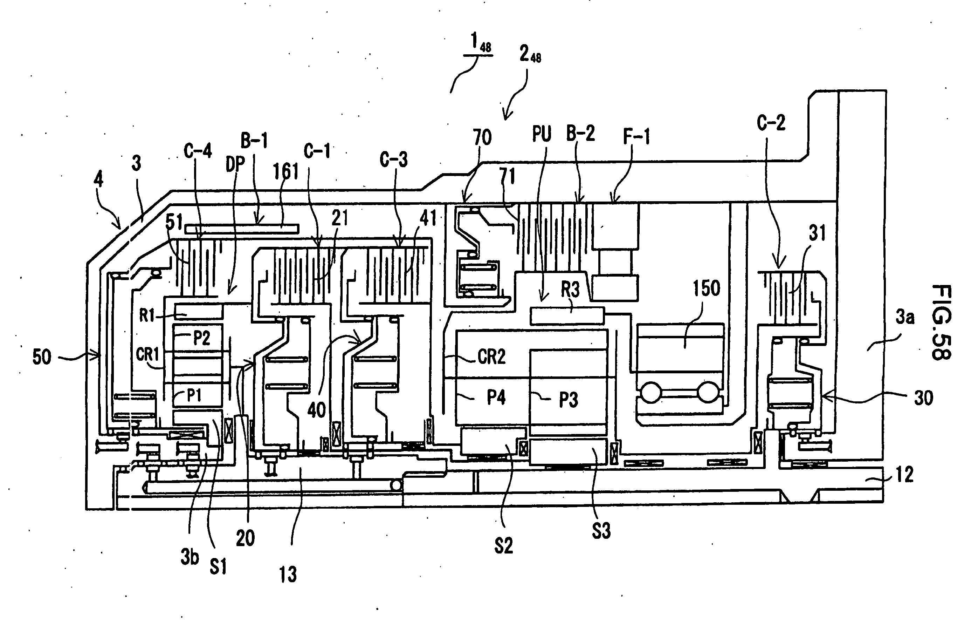

A 48th embodiment, which is a partial modification of the 4 3rd embodiment described above, will be explained with reference to FIG. 58. FIG. 58 is a diagrammatic section view showing an automatic transmission 1₄₈ of the 48th embodiment. It is noted that in the 48th embodiment explained below, only structures or components different from those of the automatic transmission 1₄₃ of the 43rd embodiment will be explained and an explanation of the structures or components other than that will be omitted here because they are almost the same.

As compared to the automatic transmission 1₄₃ of the 43rd embodiment, the automatic transmission 1₄₈ of the 48th embodiment is arranged so that the hydraulic servo 40 of the third clutch C-3 is disposed axially between the planetary gear DP and the planetary gear unit PU, or more specifically, axially between the hydraulic servo 20 of the first clutch C-1 and the planetary gear unit PU.

It is noted that the automatic transmission 1₃₂ of the 32nd embodiment described above may be built by inverting a transmission mechanism 2₄₈ of the automatic transmission 1₄₈ of the 48th embodiment in the lateral direction (axial direction) almost as it is.

### <49th Embodiment>

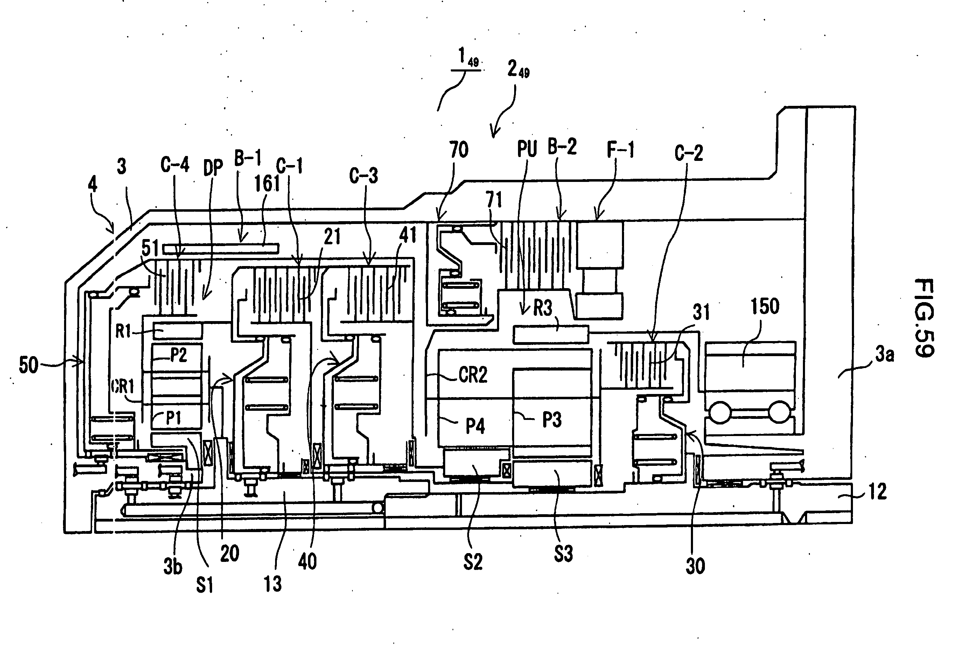

A 49th embodiment, which is a partial modification of the 43rd embodiment described above, will be explained with reference to FIG. 59. FIG. 59 is a diagrammatic section view showing an automatic transmission 1₄₉ of the 49th embodiment. It is noted that in the 49-th embodiment explained below, only structures or components different from those of the automatic transmission 1₄₃ of the 43-rd embodiment will be explained and an explanation of the structures or components other than that will be omitted here because they are almost the same.

As compared to the automatic transmission 1₄₃ of the 43rd embodiment, the automatic transmission 1₄₉ of the 49th embodiment is arranged so that the lateral (axial) directions of the counter gear 150 and the hydraulic servo 30 of the second clutch C-2 are switched and the hydraulic servo 40 of the third clutch C-3 is disposed axially between the planetary gear DP and the planetary gear unit PU, or more specifically, axially between the hydraulic servo 20 of the first clutch C-1 and the planetary gear unit PU.

It is noted that the automatic transmission 1₃₃ of the 33rd embodiment described above may be built by inverting a transmission mechanism 2₄₉ of the automatic transmission 1₄₉ of the 49th embodiment in the lateral direction (axial direction) almost as it is.

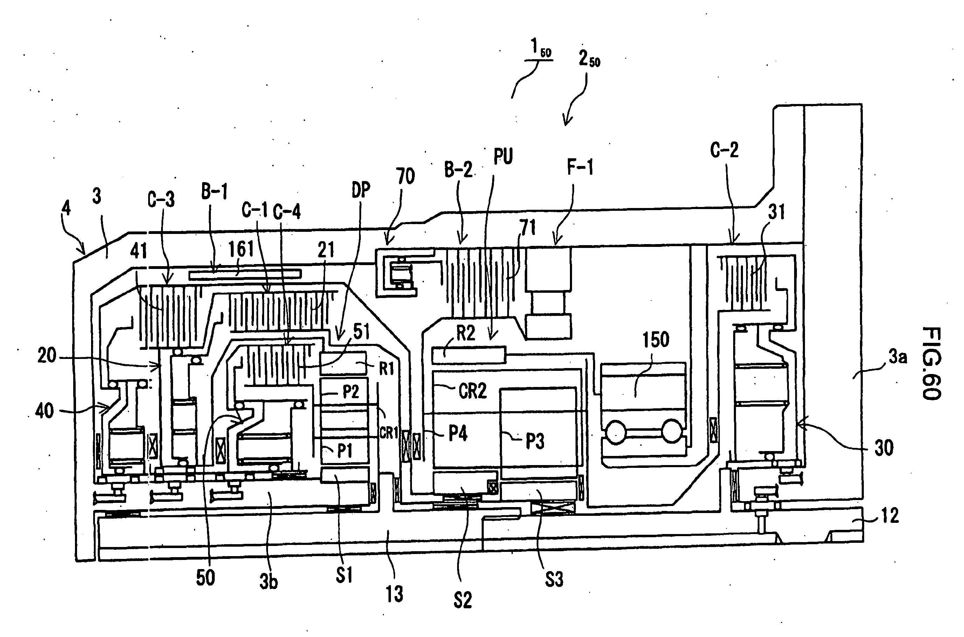

<50th Embodiment> A 50th embodiment, which is a partial modification of the 43rd embodiment described above, will be explained with reference to FIG. 60. FIG. 60 is a diagrammatic section view showing an automatic transmission 1₅₀ of the 50th embodiment. It is noted that in the 50-th embodiment explained below, only structures or components different from those of the automatic transmission 1₄₃ of the 43-rd embodiment will be explained and an explanation of the structures or components other than that will be omitted here because they are almost the same.

As compared to the automatic transmission 1₄₃ of the 43rd embodiment, the automatic transmission 1₅₀ of the 50th embodiment is arranged so that the hydraulic servo 20 of the first clutch C-1 is disposed axially on the opposite side of the planetary gear DP from the planetary gear unit PU, or more specifically, the hydraulic servo 20 of the first clutch C-1 is disposed axially between the hydraulic servo 40 of the third clutch C-3 and the hydraulic servo 50 of the fourth clutch C-4.

It is noted that the automatic transmission 1₃₄ of the 34th embodiment described above may be built by inverting a transmission mechanism 2₅₀ of the automatic transmission 1₅₀ of the 50th embodiment in the lateral direction (axial direction) almost as it is.

### <51st Embodiment>

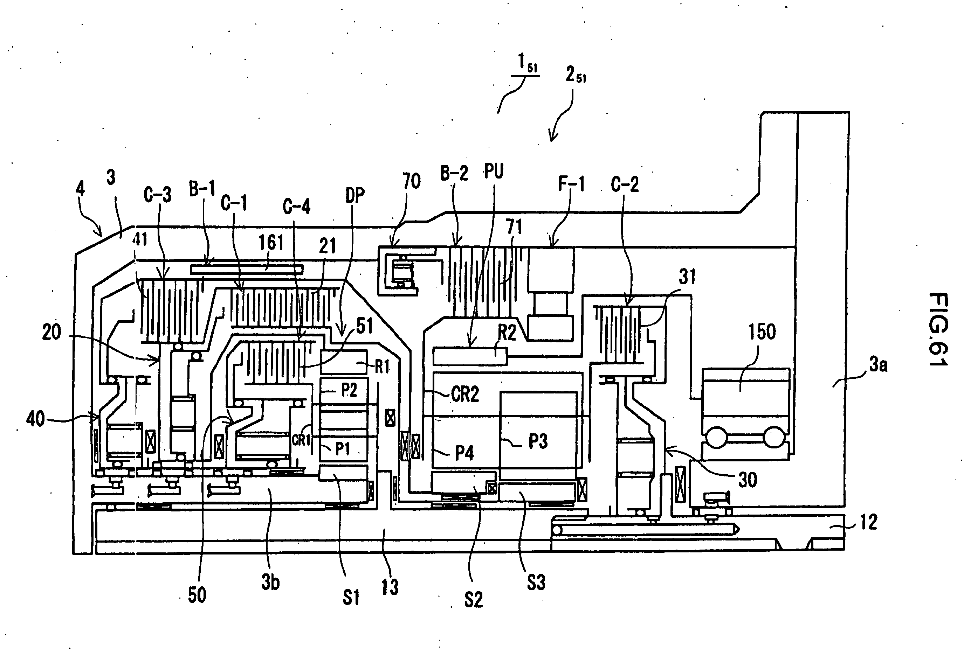

A 51st embodiment, which is a partial modification of the 43rd embodiment described above, will be explained with reference to FIG. 61. FIG. 61 is a diagrammatic section view showing an automatic transmission 1₅₁ of the 51st embodiment. It is noted that in the 51st embodiment explained below, only structures or components different from those of the automatic transmission 1₄₃ of the 43-rd embodiment will be explained and an explanation of the structures or components other than that will be omitted here because they are almost the same.

As compared to the automatic transmission 1₄₃ of the 43rd embodiment, the automatic transmission 1₅₁ of the 51st embodiment is arranged so that the lateral (axial) position of the counter gear 150 and the hydraulic servo 30 of the second clutch C-2 is switched and the hydraulic servo 20 of the first clutch C-1 is disposed axially on the opposite side of the planetary gear DP from the planetary gear unit PU, or more specifically, the hydraulic servo 20 of the first clutch C-1 is disposed axially between the hydraulic servo 40 of the third clutch C-3 and the hydraulic servo 50 of the fourth clutch C-4.

It is noted that the automatic transmission 1₃₅ of the 35th embodiment described above may be built by inverting a transmission mechanism 2₅₁ of the automatic transmission 1₅₁ of the 51st embodiment in the lateral direction (axial direction) almost as it is.

### <52nd Embodiment>

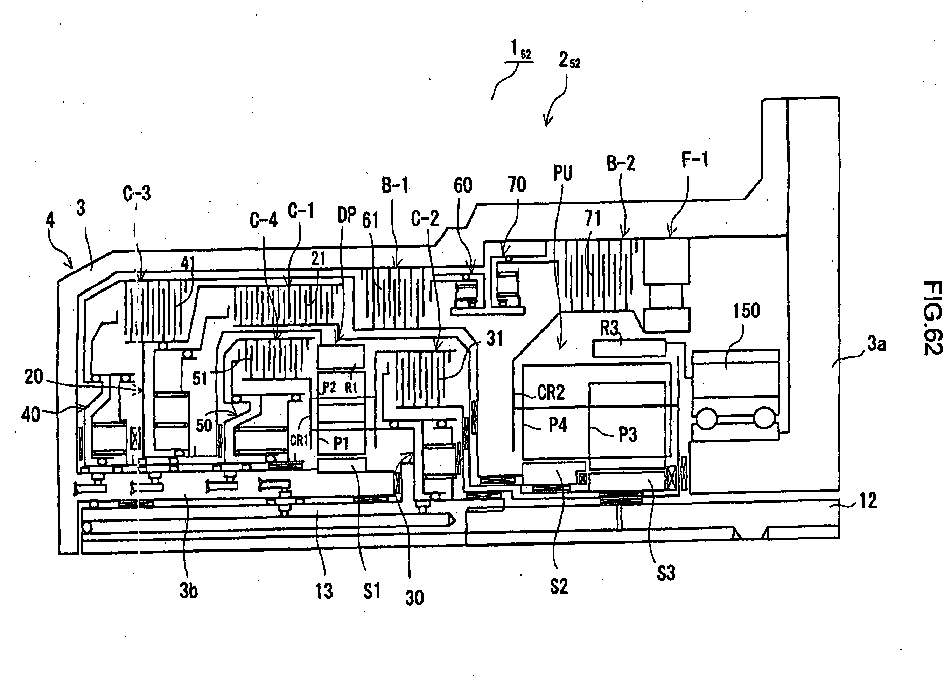

A 52nd embodiment, which is a partial modification of the 43rd embodiment described above, will be explained with reference to FIG. 62. FIG. 62 is a diagrammatic section view showing an automatic transmission 1₅₂ of the 52nd embodiment. It is noted that in the 52-nd embodiment explained below, only structures or components different from those of the automatic transmission 1₄₃ of the 43rd embodiment will be explained and an explanation of the structures or components other than that will be omitted here because they are almost the same.

As compared to the automatic transmission 1₄₃ of the 43rd embodiment, the automatic transmission 1₅₂ of the 52nd embodiment is arranged so that the hydraulic servo 20 of the first clutch C-1 is disposed axially on the opposite side of the planetary gear DP from the planetary gear unit PU, or more specifically, the hydraulic servo 20 of the first clutch C-1 is disposed axially between the hydraulic servo 40 of the third clutch C-3 and the hydraulic servo 50 of the fourth clutch C-4. Still more, the hydraulic servo 30 of the second clutch C-2 is disposed axially between the planetary gear DP and the planetary gear unit PU. The multi-plate type brake similar to that of the first embodiment is used for the first brake B-1 instead of the band brake.

It is noted that the automatic transmission 1₃₆ of the 36th embodiment described above may be built by inverting a transmission mechanism 2₅₂ of the automatic transmission 1₅₂ of the 52nd embodiment in the lateral direction (axial direction) almost as it is.

### <53rd Embodiment>

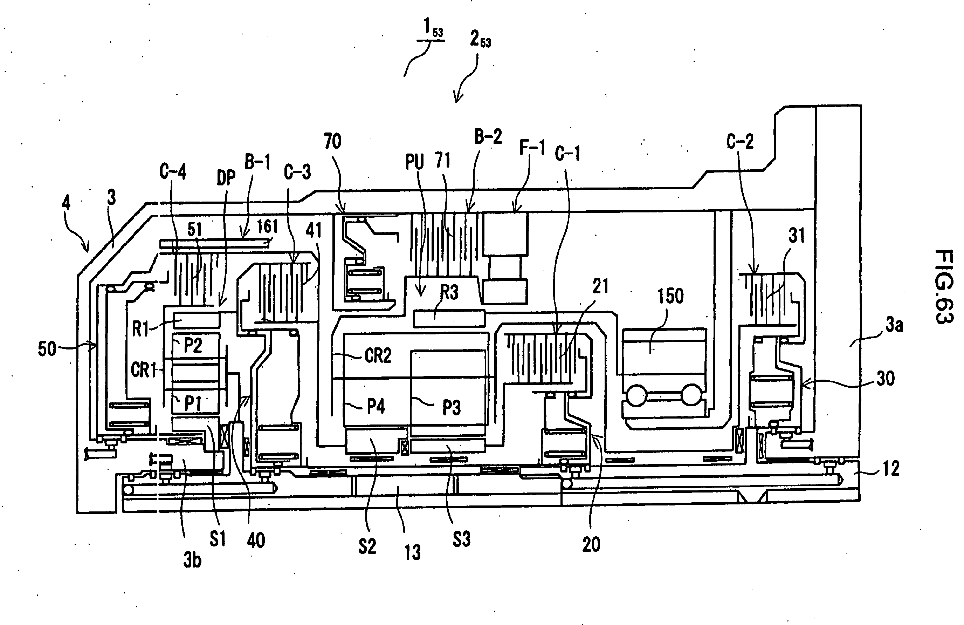

A 53rd embodiment, which is a partial modification of the 43rd embodiment described above, will be explained with reference to FIG. 63. FIG. 63 is a diagrammatic section view showing an automatic transmission 1₅₃ of the 53rd embodiment. It is noted that in the 53rd embodiment explained below, only structures or components different from those of the automatic transmission 1₄₃ of the 43rd embodiment will be explained and an explanation of the structures or components other than that will be omitted here because they are almost the same.

As compared to the automatic transmission 1₄₃ of the 43rd embodiment, the automatic transmission 1₅₃ of the 53rd embodiment is arranged so that the hydraulic servo 20 of the first clutch C-1 is disposed axially on the opposite side of the planetary gear unit PU from the planetary gear DP, or more specifically, the hydraulic servo 20 of the first clutch C-1 is disposed axially between the counter gear 150 and the planetary gear unit PU. Still more, the hydraulic servo 40 of the third clutch C-3 is disposed axially between the planetary gear DP and the planetary gear unit PU.

It is noted that the automatic transmission 1₃₇ of the 37th embodiment described above may be built by inverting a transmission mechanism 2₅₃ of the automatic transmission 1₅₃ of the 53rd embodiment in the lateral direction (axial direction) almost as it is.

### <54th Embodiment>

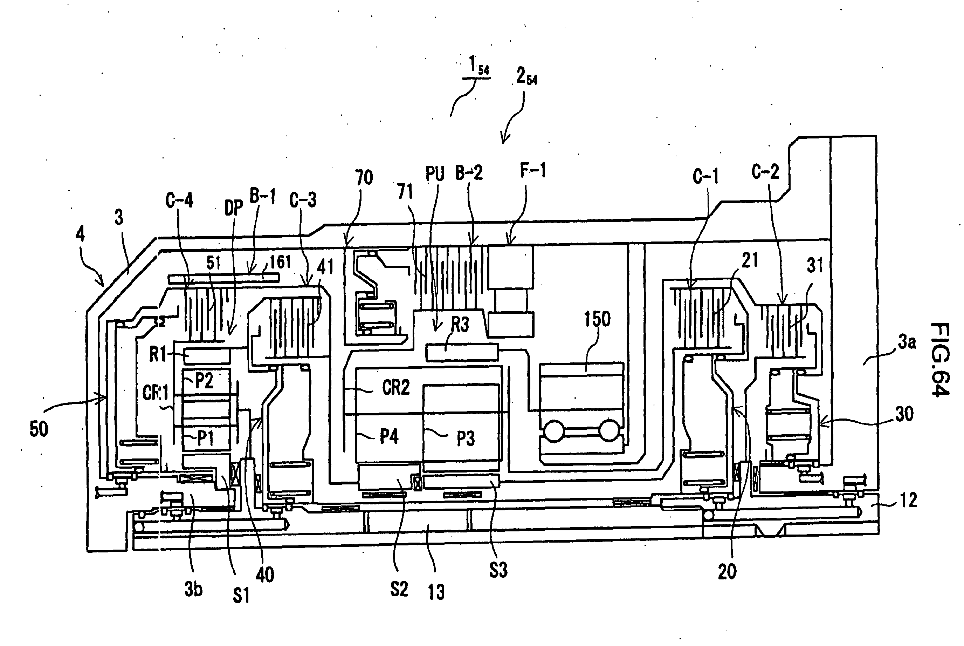

A 54th embodiment, which is a partial modification of the 43rd embodiment described above, will be explained with reference to FIG. 64. FIG. 64 is a diagrammatic section view showing an automatic transmission 1₅₄ of the 54th embodiment. It is noted that in the 54th embodiment explained below, only structures or components different from those of the automatic transmission 1₄₃ of the 43rd embodiment will be explained and an explanation of the structures or components other than that will be omitted here because they are almost the same.

As compared to the automatic transmission 1₄₃ of the 43rd embodiment, the automatic transmission 1₅₄ of the 54th embodiment is arranged so that the hydraulic servo 20 of the first clutch C-1 is disposed axially on the opposite side of the planetary gear unit PU from the planetary gear DP, or more specifically, the hydraulic servo 20 of the first clutch C-1 is disposed axially between the counter gear 150 and the hydraulic servo 30 of the second clutch C-2. Still more, the hydraulic servo 40 of the third clutch C-3 is disposed axially between the planetary gear DP and the planetary gear unit PU.

It is noted that the automatic transmission 1₃₈ of the 38th embodiment described above may be built by inverting a transmission mechanism 2₅₄ of the automatic transmission 1₅₄ of the 54th embodiment in the lateral direction (axial direction) almost as it is.

### <55th Embodiment>

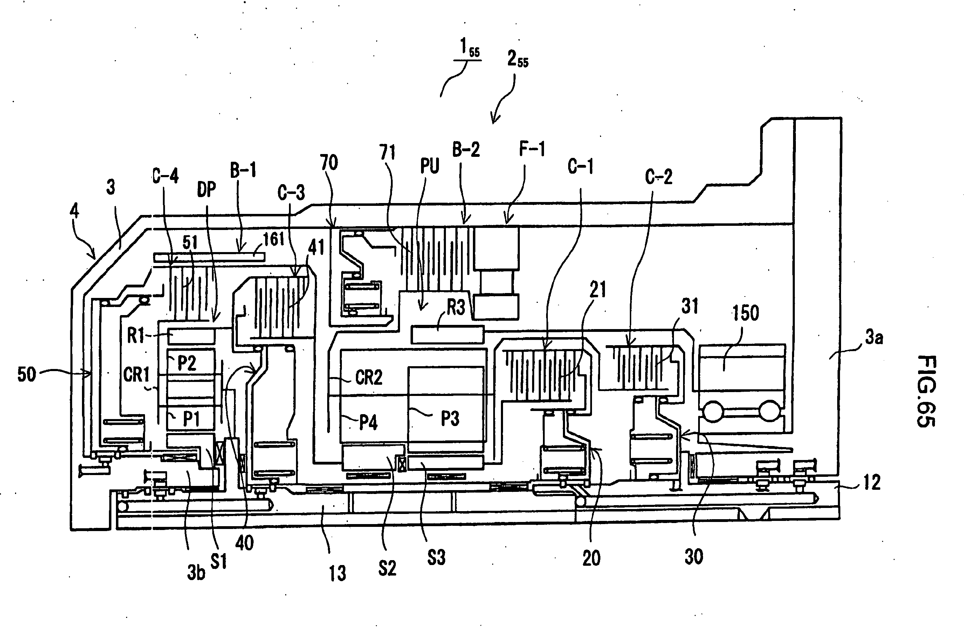

A 55th embodiment, which is a partial modification of the 43rd embodiment described above, will be explained with reference to FIG. 65. FIG. 65 is a diagrammatic section view showing an automatic transmission 1₅₅ of the 55th embodiment. It is noted that in the 55th embodiment explained below, only structures or components different from those of the automatic transmission 1₄₃ of the 43rd embodiment will be explained and an explanation of the structures or components other than that will be omitted here because they are almost the same.

As compared to the automatic transmission 1₄₃ of the 43rd embodiment, the automatic transmission 1₅₅ of the 55th embodiment is arranged so that the lateral (axial) position of the counter gear 150 and the hydraulic servo 30 of the second clutch C-2 is switched. Still more, the hydraulic servo 20 of the first clutch C-1 is disposed axially on the opposite side of the planetary gear unit PU from the planetary gear DP, or more specifically, the hydraulic servo 20 of the first clutch C=1 is disposed axially between the planetary gear unit PU and the hydraulic servo 30 of the second clutch C-2. Further, the hydraulic servo 40 of the third clutch C-3 is disposed axially between the planetary gear DP and the planetary gear unit PU.

It is noted that the automatic transmission 1₃₉ of the 39th embodiment described above may be built by inverting a transmission mechanism 2₅₅ of the automatic transmission 1₅₅ of the 55th embodiment in the lateral direction (axial direction) almost as it is.

### <56th Embodiment>

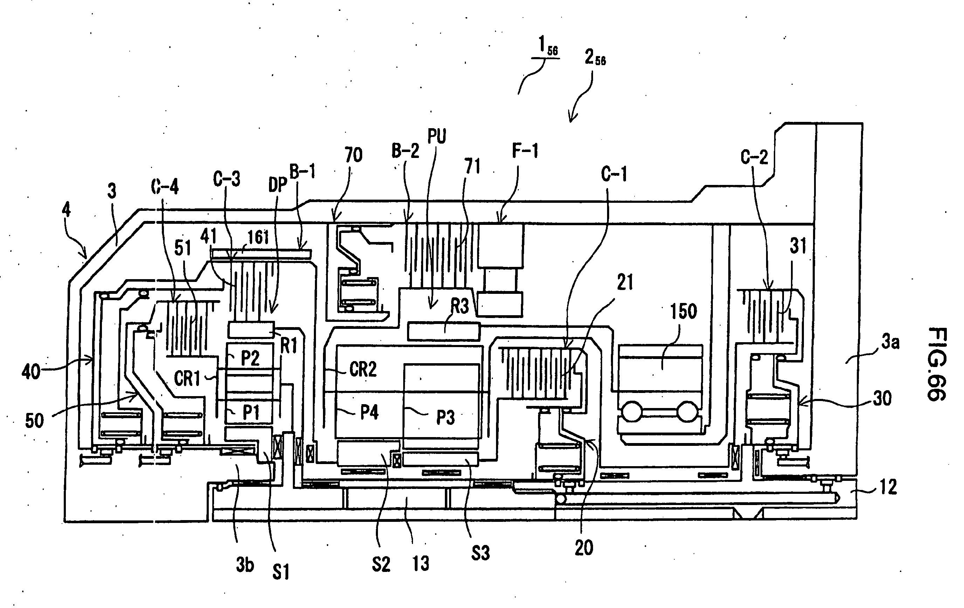

A 56th embodiment; which is a partial modification of the 43rd embodiment described above, will be explained with reference to FIG. 66. FIG. 66 is a diagrammatic section view showing an automatic transmission 1₅₆ of the 56th embodiment. It is noted that in the 56th embodiment explained below, only structures or components different from those of the automatic transmission 1₄₃ of the 43rd embodiment will be explained and an explanation of the structures or components other than that will be omitted here because they are almost the same.

As compared to the automatic transmission 1₄₃ of the 43rd embodiment, the automatic transmission 1₅₆ of the 56th embodiment is arranged so that the hydraulic servo 20 of the first clutch C-1 is disposed axially on the opposite side of the planetary gear unit PU from the planetary gear DP, or more specifically, the hydraulic servo 20 of the first clutch C-1 is disposed axially between the planetary gear unit PU and the counter gear 150.

It is noted that the automatic transmission 1₄₀ of the 40th embodiment described above may be built by inverting a transmission mechanism 2₅₆ of the automatic transmission 1₅₆ of the 56th embodiment in the lateral direction (axial direction) almost as it is.

### <57th Embodiment>

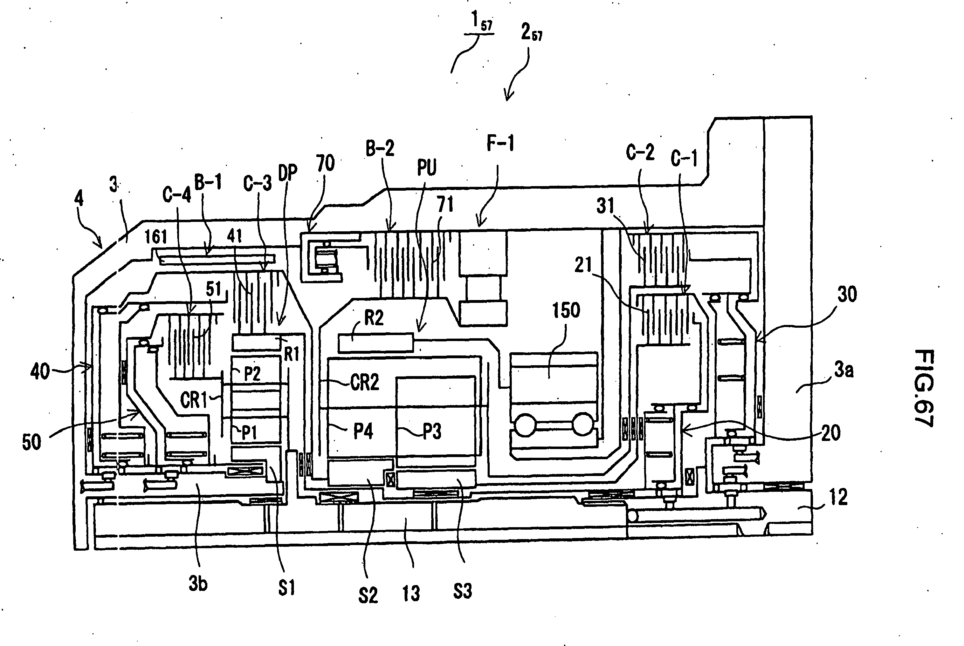

A 57th embodiment, which is a partial modification of the 43rd embodiment described above, will be explained with reference to FIG. 67. FIG. 67 is a diagrammatic section view showing an automatic transmission 1₅₇ of the 57th embodiment. It is noted that in the 57th embodiment explained below, only structures or components different from those of the automatic transmission 1₄₃ of the 43rd embodiment will be explained and an explanation of the structures or components other than that will be omitted here because they are almost the same.

As compared to the automatic transmission 1₄₃ of the 43rd embodiment, the automatic transmission 1₅₇ of the 57th embodiment is arranged so that the hydraulic servo 20 of the first clutch C-1 is disposed axially on the opposite side of the planetary gear unit PU from the planetary gear DP, or more specifically, the hydraulic servo 20 of the first clutch C-1 is disposed axially between the counter gear 150 and the hydraulic servo 30 of the second clutch C-2.

It is noted that the automatic transmission 1₄₁ of the 41st embodiment described above may be built by inverting a transmission mechanism 2₅₇ of the automatic transmission 1₅₇ of the 57th embodiment in the lateral direction (axial direction) almost as it is.

### <58th Embodiment>

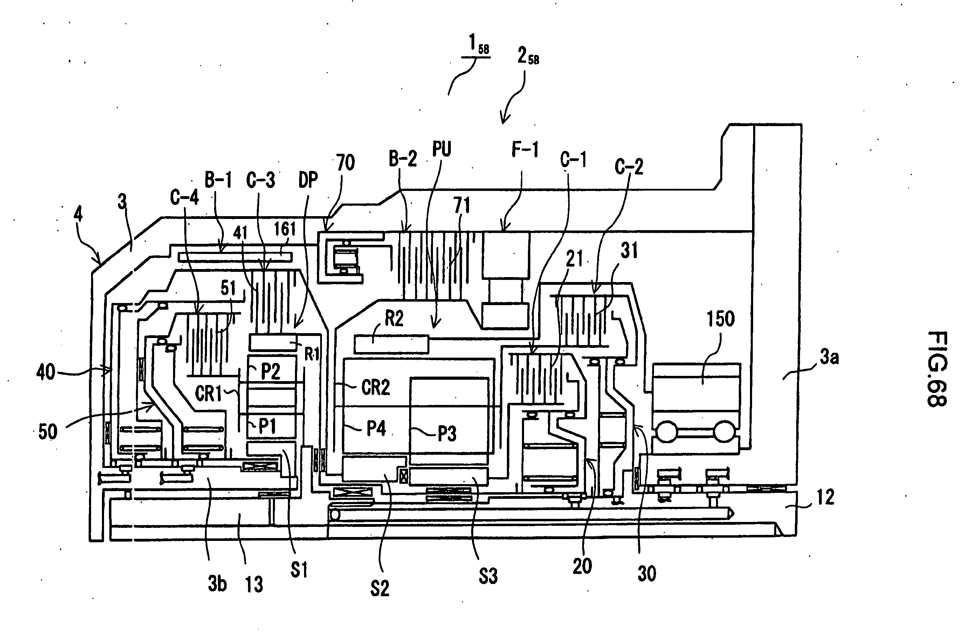

A 58th embodiment, which is a partial modification of the 43rd embodiment described above, will be explained with reference to FIG. 68. FIG. 68 is a diagrammatic section view showing an automatic transmission 1₅₈ of the 58th embodiment. It is noted that in the 58th embodiment explained below, only structures or components different from those of the automatic transmission 1₄₃ of the 43rd embodiment, will be explained and an explanation of the structures or components other than that will be omitted here because they are almost the same.

As compared to the automatic transmission 1₄₃ of the 43rd embodiment, the automatic transmission 1₅₈ of the 58th embodiment is arranged so that the lateral (axial) position of the counter gear 150 and the hydraulic servo 30 of the second clutch C-2 is switched and the hydraulic servo 20 of the first clutch C-1 is disposed axially on the opposite side of the planetary gear unit PU from the planetary gear DP. Specifically, the hydraulic servo 20 of the first clutch C-1 is disposed axially between the hydraulic servo 30 of the second clutch C-2 and the planetary gear unit PU.

It is noted that the automatic transmission 1₄₂ of the 42nd embodiment described above may be built by inverting a transmission mechanism 2₅₈ of the automatic transmission 1₅₈ of the 58th embodiment in the lateral direction (axial direction) almost as it is.

### <59th Embodiment>

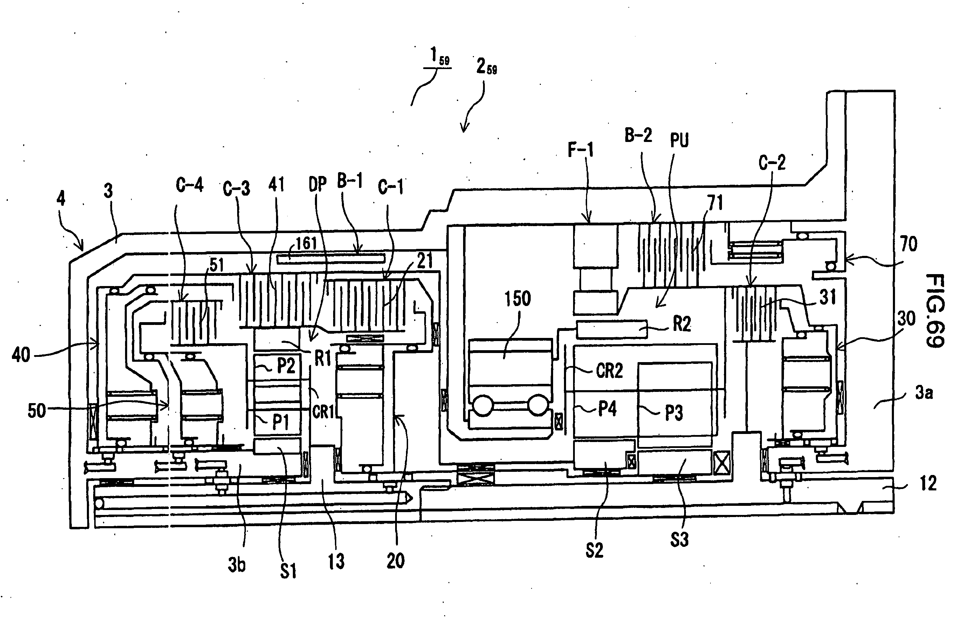

A 59th embodiment, which is a partial modification of the first through 58th embodiments described above, will be explained with reference to FIG. 69. FIG. 69 is a diagrammatic section view showing an automatic transmission 1₅₉ of the 59th embodiment. It is noted that in the 59th embodiment explained below, only structures or components different from those of the automatic transmission 1₄₃ of the 43rd embodiment will be explained and an explanation of the structures or components other than that will be omitted here because they are almost the same.

As compared to the automatic transmission 1₁₄ of the 14th embodiment described above, the automatic transmission 1₅₉ which is suitably mounted in an FF-type (front drive, front engine) vehicle for example is characterized in that the disposition of the first through fourth clutches C-1 through C-4, the first and second brakes B-1 and B-2, the one-way clutch F-1, the planetary gear DP, the planetary gear unit PU and the counter gear 150 is nearly inverted in the lateral (axial) direction while keeping the input shaft 12 and the intermediate shaft 13 as they are, i.e., while keeping the direction in which the engine is disposed as it is as shown in FIG. 69. That is, the automatic transmission 1₅₉ is built by nearly inverting the transmission mechanism 2₁₄ in the lateral (axial) direction.

Or more specifically, the transmission mechanism 2₅₉ of the automatic transmission 1₅₉ is disposed on an axis centering on the input shaft 12 and the intermediate shaft 13 which are on the same axis with the output shaft of the engine not shown for example and the planetary gear unit PU is disposed on the input shaft 12 within the mission case 3. The hydraulic servo 40 of the third clutch C-3, the hydraulic servo 50 of the fourth clutch C-4, the planetary gear DP, the hydraulic servo 20 of the first clutch C-1 and the counter gear 150 are disposed in order from the left axially on the left side of the planetary gear unit PU. Still more, the first brake B-1 composed of a band brake is disposed on the outer peripheral side of the clutch drum of the mission case 3.

It is noted that the hydraulic servo 40 of the third clutch C-3, the hydraulic servo 50 of the fourth clutch C-4 and the planetary gear DP are disposed on the boss portion 3b extending from the partitioning portion 3c of the mission case 3 and the hydraulic servo 20 of the first clutch C-1 is disposed on the intermediate shaft 13.

Meanwhile, the hydraulic servo 30 of the second clutch C-2 is disposed axially on the right side (input side) of the planetary gear unit PU. Still more, the second brake B-2 and the one-way clutch F-1 are disposed on the outer peripheral side of the planetary gear unit PU.

As described above, the hydraulic servo 40 of the third clutch C-3 and the hydraulic servo 50 of the fourth clutch C-4 are disposed axially on the opposite side of the planetary gear DP from the planetary gear unit PU, the hydraulic servo 20 of the first clutch C-1 and the counter gear 150 are disposed axially between the planetary gear DP and the planetary gear unit PU and the hydraulic servo 30 of the second clutch C-2 is disposed axially on the opposite side of the planetary gear unit PU from the planetary gear DP.

### <60th Embodiment>

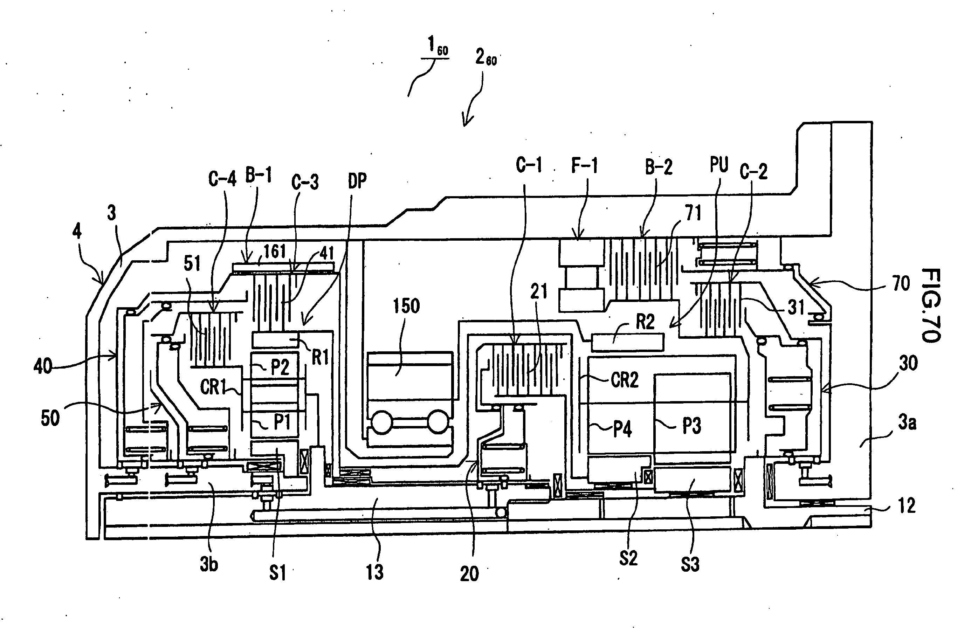

A 60th embodiment, which is a partial modification of the 59th embodiment described above, will be explained with reference to FIG. 70. FIG. 70 is a diagrammatic section view showing an automatic transmission 1₆₀ of the 60th embodiment. It is noted that in the 60th embodiment explained below, only structures or components different from those of the automatic transmission 1₅₉ of the 59th embodiment will be explained and an explanation of the structures or components other than that will be omitted here because they are almost the same.

As compared to the automatic transmission 1₅₉ of the 59-rd embodiment, the automatic transmission 1₆₀ of the 60th embodiment is arranged so that the lateral (axial) disposition of the hydraulic servo 20 of the first clutch C-1 and the counter gear 150 is switched.

It is noted that the automatic transmission 1₁₅ of the 15th embodiment described above may be built by inverting a transmission mechanism 2₆₀ of the automatic transmission 1₆₀ of the 60th embodiment in the lateral direction (axial direction) almost as it is.

### <61st Embodiment>

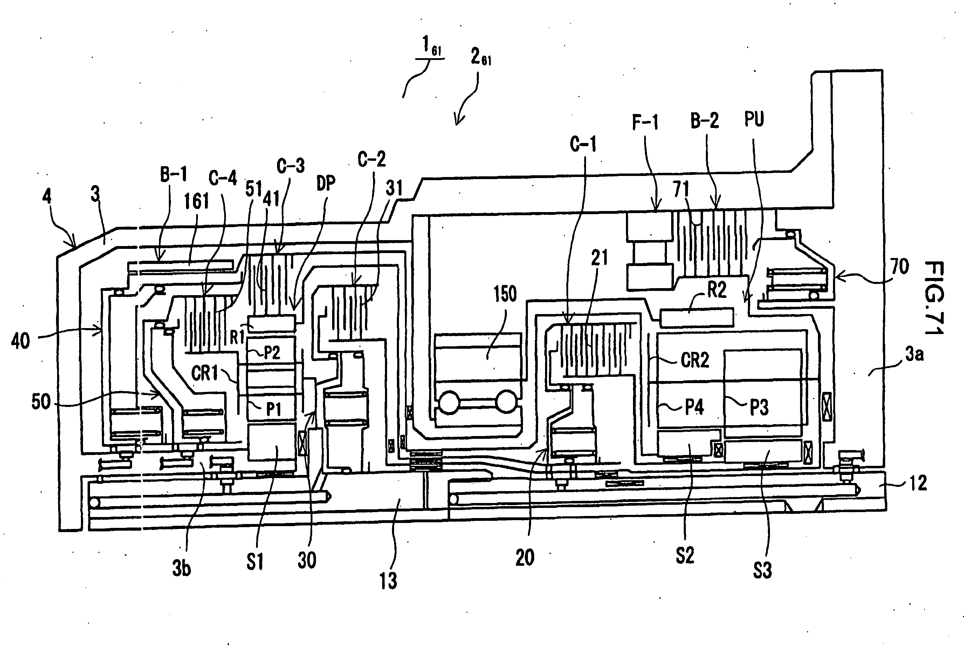

A 61st embodiment, which is a partial modification of the 59th embodiment described above, will be explained with reference to FIG. 71. FIG. 71 is a diagrammatic section view showing an automatic transmission 1₆₁ of the friction plate 61st embodiment. It is noted that in the friction plate 61st embodiment explained below, only structures or components different from those of the automatic transmission 1₅₉ of the 59th embodiment will be explained and an explanation of the structures or components other than that will be omitted here because they are almost the same.

As compared to the automatic transmission 1₅₉ of the 59-rd embodiment, the automatic transmission 1₆₁ of the friction plate 61st embodiment is arranged so that the hydraulic servo 30 of the second clutch C-2 is disposed axially between the planetary gear unit PU and the planetary gear DP, or more specifically, axially between the planetary gear DP and the counter gear 150. Still more, the hydraulic servo 20 of the first clutch C-1 is disposed axially between the planetary gear unit PU and the planetary gear DP, or more specifically, axially between the planetary gear unit PU and the counter gear 150.

It is noted that the automatic transmission 1₁₅ of the 15th embodiment described above may be built by inverting a transmission mechanism 2₆₁ of the automatic transmission 1₆₁ of the friction plate 61st embodiment in the lateral direction (axial direction) almost as it is.

### <62nd Embodiment>

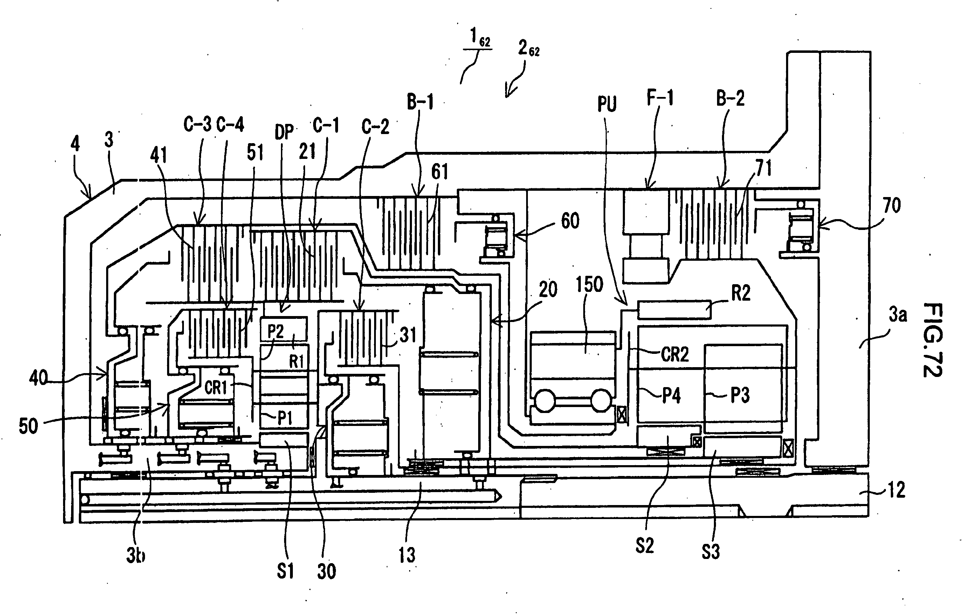

A 62nd embodiment, which is a partial modification of the 59th embodiment described above, will be explained with reference to FIG. 72. FIG. 72 is a diagrammatic section view showing an automatic transmission 1₆₂ of the 62nd embodiment. It is noted that in the 62nd embodiment explained below, only structures or components different from those of the automatic transmission 1₅₉ of the 59th embodiment will be explained and an explanation of the structures or components other than that will be omitted here because they are almost the same.

As compared to the automatic transmission 1₅₉ of the 59-rd embodiment, the automatic transmission 1₆₂ of the 62nd embodiment is arranged so that the hydraulic servo 30 of the second clutch C-2 is disposed axially between the planetary gear unit PU (specifically the counter gear 150) and the planetary gear DP, or more specifically, axially between the hydraulic servo 20 of the first clutch C-1 and the planetary gear DP. Still more, the multi-plate type brake similar to that of the first embodiment is used for the first brake B-1 instead of the band brake.

It is noted that the automatic transmission 1₁₇ of the 17th embodiment described above may be built by inverting a transmission mechanism 2₆₂ of the automatic transmission 1₆₂ of the 62nd embodiment in the lateral direction (axial direction) almost as it is.

### <63rd Embodiment>

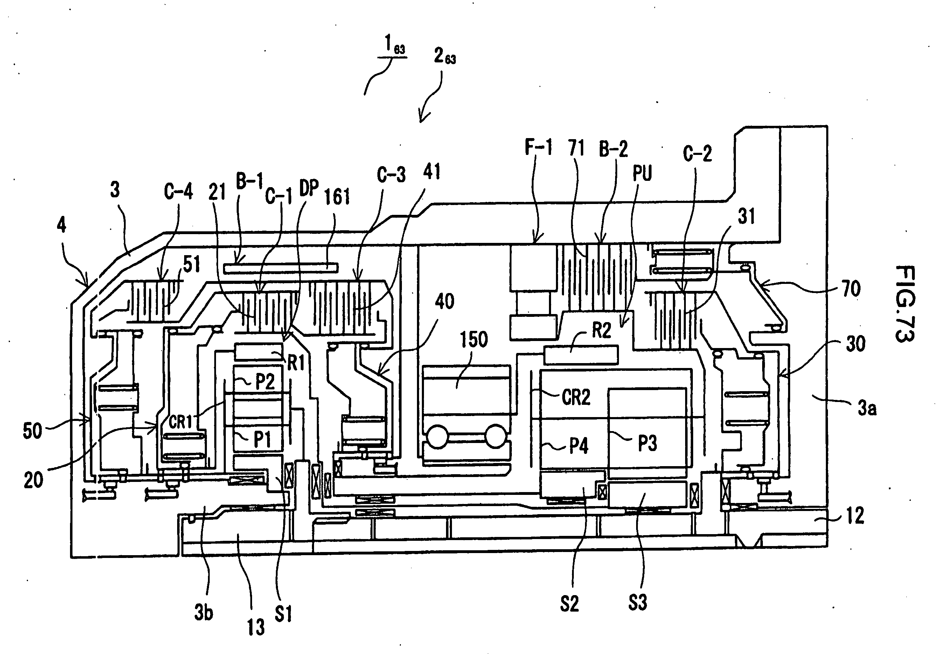

A 63rd embodiment, which is a partial modification of the 59th embodiment described above, will be explained with reference to FIG. 73. FIG. 73 is a diagrammatic section view showing an automatic transmission 1₆₃ of the 63rd embodiment. It is noted that in the 63rd embodiment explained below, only structures or components different from those of the automatic transmission 1₅₉ of the 59th embodiment will be explained and an explanation of the structures or components other than that will be omitted here because they are almost the same.

As compared to the automatic transmission 1₅₉ of the 59-rd embodiment, the automatic transmission 1₆₃ of the 63rd embodiment is arranged so that the hydraulic servo 40 of the third clutch C-3 is disposed axially between the planetary gear unit PU (specifically the counter gear 150) and the planetary gear DP and the hydraulic servo 20 of the first clutch C-1 is disposed axially on the opposite side of the planetary gear DP from the planetary gear unit PU. Specifically, the hydraulic servo 20 of the first clutch C-1 is disposed axially between the planetary gear DP and the hydraulic servo 50 of the fourth clutch C-4.

It is noted that the automatic transmission 1₁₈ of the 18th embodiment described above may be built by inverting a transmission mechanism 2₁₈ of the automatic transmission 1₁₈ of the 18th embodiment in the lateral direction (axial direction) almost as it is.

### <64th Embodiment>

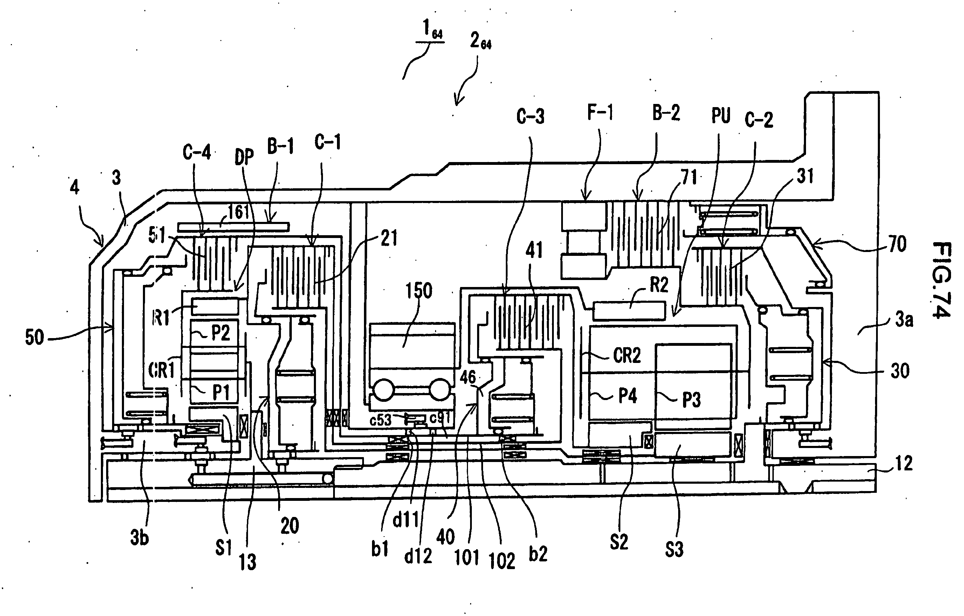

A 64th embodiment, which is a partial modification of the 59th embodiment described above, will be explained with reference to FIG. 74. FIG. 74 is a diagrammatic section view showing an automatic transmission 1₆₄ of the 64th embodiment. It is noted that in the 64th embodiment explained below, only structures or components different from those of the automatic transmission 1₅₉ of the 59th embodiment will be explained and an explanation of the structures or components other than that will be omitted here because they are almost the same.

As compared to the automatic transmission 1₅₉ of the 59-rd embodiment, the automatic transmission 1₆₄ of the 64th embodiment is arranged so that the hydraulic servo 40 of the third clutch C-3 is disposed axially between the planetary gear unit PU and the planetary gear DP, or more specifically, axially between the planetary gear unit PU and the counter gear 150. Still more, an oil passage c91 is formed by sealing a part between the support wall and the link member 101 by seal rings d11 and d12 and a part between the third sleeve member 1101 and the link member 102 by bushes b1 and b2. Thereby, operating fluid is supplied to the oil chamber 46 of the hydraulic servo 40 of the third clutch C-3 from the oil passage c53 within the support wall via the oil passage c90.

It is noted that the automatic transmission 1₁₉ of the 19th embodiment described above may be built by inverting a transmission mechanism 2₆₄ of the automatic transmission 1₆₄ of the 64th embodiment in the lateral direction (axial direction) almost as it is.

### <65th Embodiment>

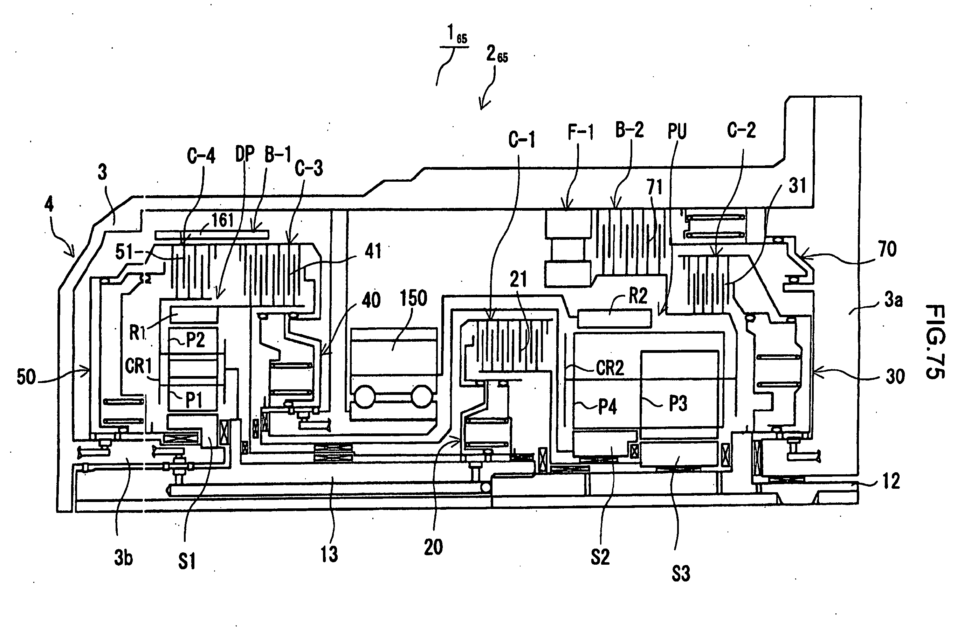

A 65th embodiment, which is a partial modification of the 59th embodiment described above, will be explained with reference to FIG. 75. FIG. 75 is a diagrammatic section view showing an automatic transmission 1₆₅ of the 65th embodiment. It is noted that in the 65th embodiment explained below, only structures or components different from those of the automatic transmission 1₅₉ of the 59th embodiment will be explained and an explanation of the structures or components other than that will be omitted here because they are almost the same.

As compared to the automatic transmission 1₅₉ of the 59-rd embodiment, the automatic transmission 1₆₅ of the 65th embodiment is arranged so that the hydraulic servo 20 of the first clutch C-1 and the hydraulic servo 40 of the third clutch C-3 are disposed axially between the planetary gear unit PU and the planetary gear DP. More specifically, the hydraulic servo 20 of the first clutch C-1 is disposed axially between the planetary gear unit PU and the counter gear 150 and the hydraulic servo 40 of the third clutch C-3 is disposed axially between the counter gear 150 and the planetary gear DP.

It is noted that the automatic transmission 1₂₀ of the 20th embodiment described above may be built by inverting a transmission mechanism 2₆₅ of the automatic transmission 1₆₅ of the 65th embodiment in the lateral direction (axial direction) almost as it is.

### <66th Embodiment>

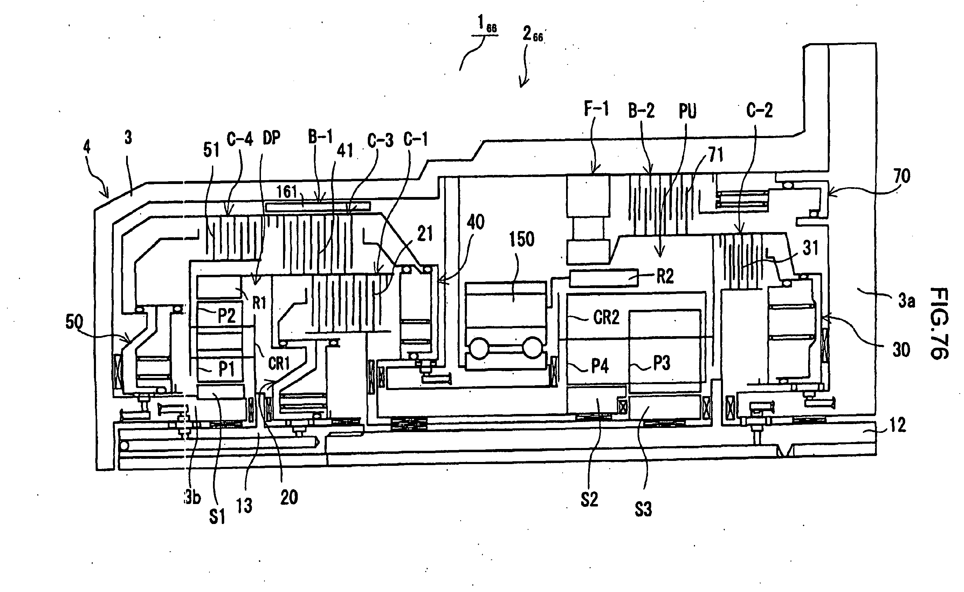

A 66th embodiment, which is a partial modification of the 59th embodiment described above, will be explained with reference to FIG. 76. FIG. 76 is a diagrammatic section view showing an automatic transmission 1₆₆ of the oil chamber 66th embodiment. It is noted that in the oil chamber 66th embodiment explained below, only structures or components different from those of the automatic transmission 1₅₉ of the 59th embodiment will be explained and an explanation of the structures or components other than that will be omitted here because they are almost the same.

As compared to the automatic transmission 1₅₉ of the 59-rd embodiment, the automatic transmission 1₆₆ of the oil chamber 66th embodiment is arranged so that the hydraulic servo 40 of the third clutch C-3 is disposed axially between the planetary gear unit PU and the planetary gear DP, or more specifically, axially between the counter gear 150 and the planetary gear DP (ormore specifically, the hydraulic servo 20 of the first clutch C-1).

It is noted that the automatic transmission 1₂₁ of the 21st embodiment described above may be built by inverting a transmission mechanism 2₆₆ of the automatic transmission 1₆₆ of the oil chamber 66th embodiment in the lateral direction (axial direction) almost as it is.

Still more, the oil chamber of the hydraulic servo of the first clutch C-1 may be formed in a manner of using the clutch drum in common as a member for positioning and supporting the ring gear R1 of the planetary gear DP as shown in FIG. 76.

### <67th Embodiment>

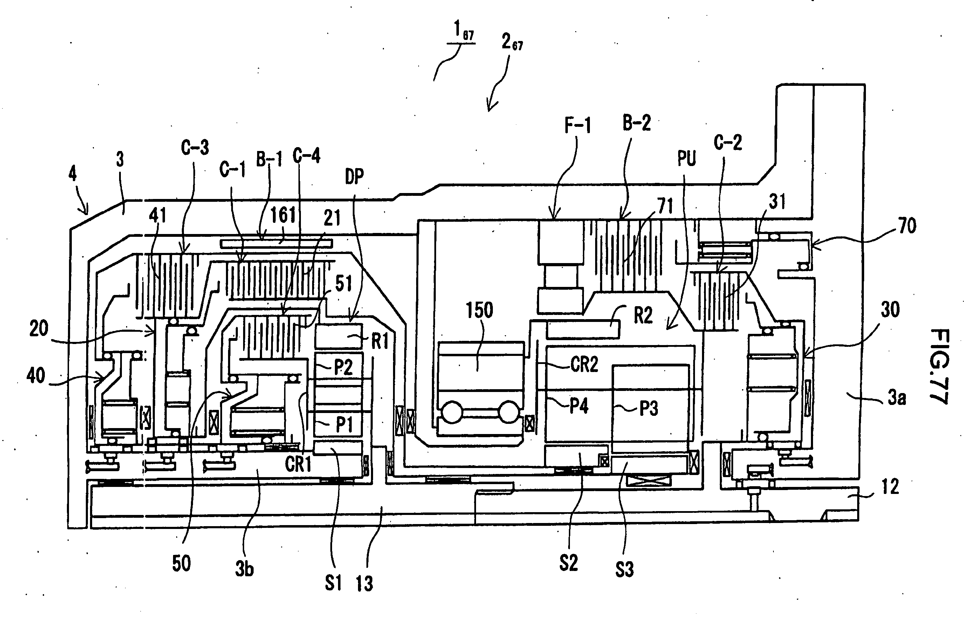

A 67th embodiment, which is a partial modification of the 59th embodiment described above, will be explained with reference to FIG. 77. FIG. 77 is a diagrammatic section view showing an automatic transmission 1₆₇ of the 67th embodiment. It is noted that in the 67th embodiment explained below, only structures or components different from those of the automatic transmission 1₅₉ of the 59th embodiment will be explained and an explanation of the structures or components other than that will be omitted here because they are almost the same.

As compared to the automatic transmission 1₅₉ of the 59-rd embodiment, the automatic transmission 1₆₇ of the 67th embodiment is arranged so that the hydraulic servo 20 of the first clutch C-1 is disposed axially on the opposite side of the planetary gear DP from the planetary gear unit PU, or more specifically, axially between the hydraulic servo 50 of the fourth clutch C-4 and the hydraulic servo 40 of the third clutch C-3.

It is noted that the automatic transmission 1₂₂ of the 22nd embodiment described above may be built by inverting a transmission mechanism 2₆₇ of the automatic transmission 1₆₇ of the 67th embodiment in the lateral direction (axial direction) almost as it is.

### <68th Embodiment>

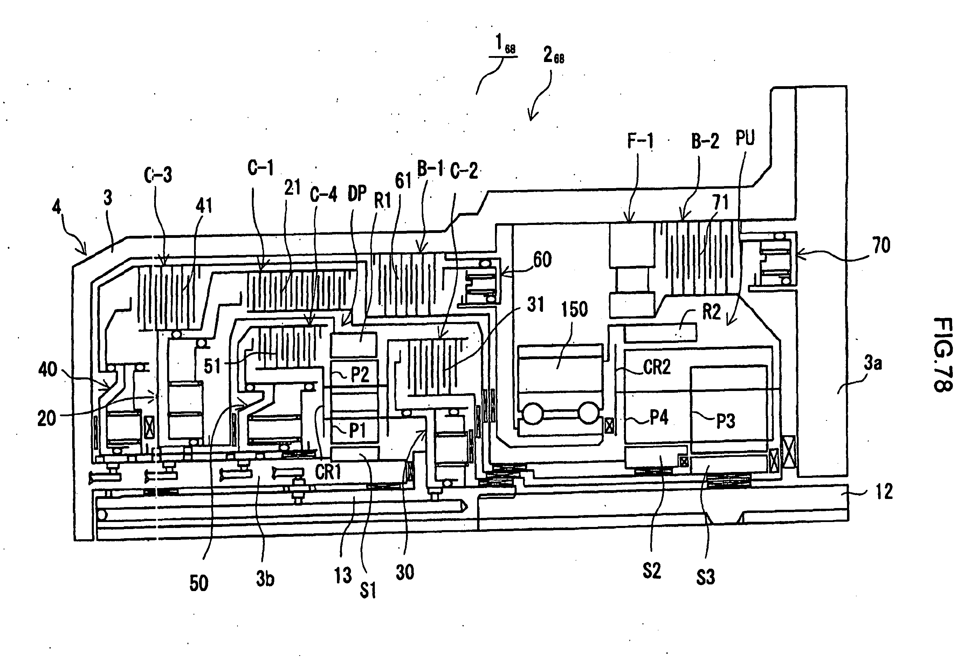

A 68th embodiment, which is a partial modification of the 59th embodiment described above, will be explained with reference to FIG. 78. FIG. 78 is a diagrammatic section view showing an automatic transmission 1₆₈ of the 68th embodiment. It is noted that in the 68th embodiment explained below, only structures or components different from those of the automatic transmission 1₅₉ of the 59th embodiment will be explained and an explanation of the structures or components other than that will be omitted here because they are almost the same.

As compared to the automatic transmission 1₅₉ of the 59-rd embodiment, the automatic transmission 1₆₈ of the 68th embodiment is arranged so that the hydraulic servo 20 of the first clutch C-1 is disposed axially on the opposite side of the planetary gear DP from the planetary gear unit PU and the hydraulic servo 30 of the second clutch C-2 is disposed axially between the planetary gear unit PU and the planetary gear DP. More specifically, the hydraulic servo 20 of the first clutch C-1 is disposed axially between the hydraulic servo 50 of the fourth clutch C-4 and the hydraulic servo 40 of the third clutch C-3 and the hydraulic servo 30 of the second clutch C-2 is disposed axially between the counter gear 150 and the planetary gear DP. Still more, the multi-plate type brake similar to that in the first embodiment is used for the first brake B-1 instead of the band brake.

It is noted that the automatic transmission 1₂₃ of the 23rd embodiment described above may be built by inverting a transmission mechanism 2₆₈ of the automatic transmission 1₆₈ of the 68th embodiment in the lateral direction (axial direction) almost as it is.

### <69th Embodiment>

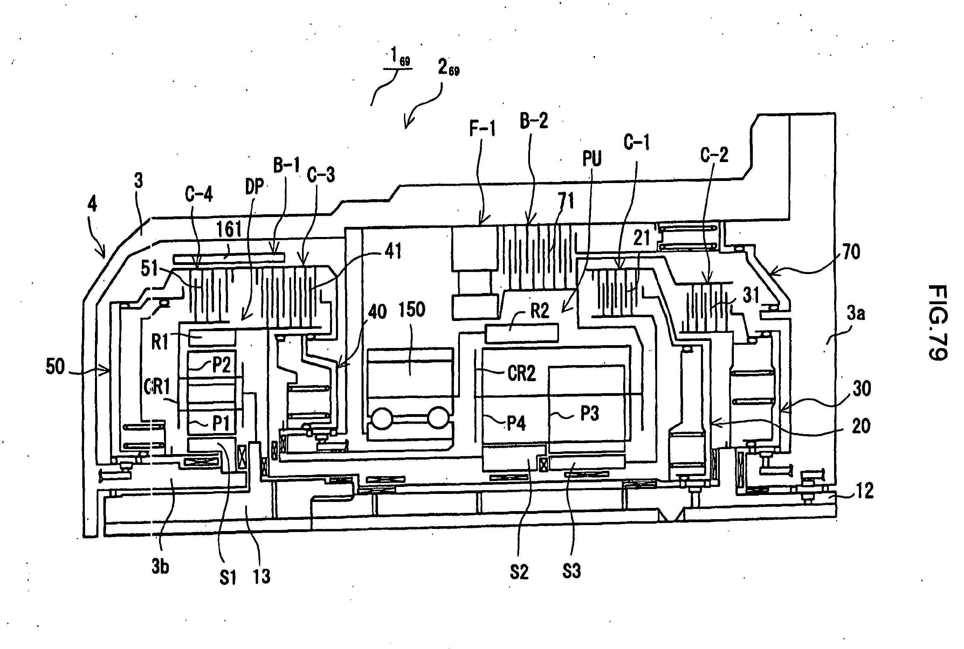

A 69th embodiment, which is a partial modification of the 59th embodiment described above, will be explained with reference to FIG. 79. FIG. 79 is a diagrammatic section view showing an automatic transmission 1₆₉ of the 69th embodiment. It is noted that in the 69th embodiment explained below, only structures or components different from those of the automatic transmission 1₅₉ of the 59th embodiment will be explained and an explanation of the structures or components other than that will be omitted here because they are almost the same.

As compared to the automatic transmission 1₅₉ of the 59th embodiment, the automatic transmission 1₆₉ of the 69th embodiment is arranged so that the hydraulic servo 40 of the third clutch C-3 is disposed axially between the planetary gear unit PU and the planetary gear DP and the hydraulic servo 20 of the first clutch C-1 is disposed axially on the opposite side of the planetary gear unit PU from the planetary gear DP. Specifically, the hydraulic servo 40 of the third clutch C-3 is disposed axially between the counter gear 150 and the planetary gear DP and the hydraulic servo 20 of the first clutch C-1 is disposed axially between the planetary gear unit PU and the hydraulic servo 30 of the second clutch C-2.

It is noted that the automatic transmission 1₂₄ of the 24th embodiment described above may be built by inverting a transmission mechanism 2₆₉ of the automatic transmission 1₆₉ of the 69th embodiment in the lateral direction (axial direction) almost as it is.

### <70th Embodiment>

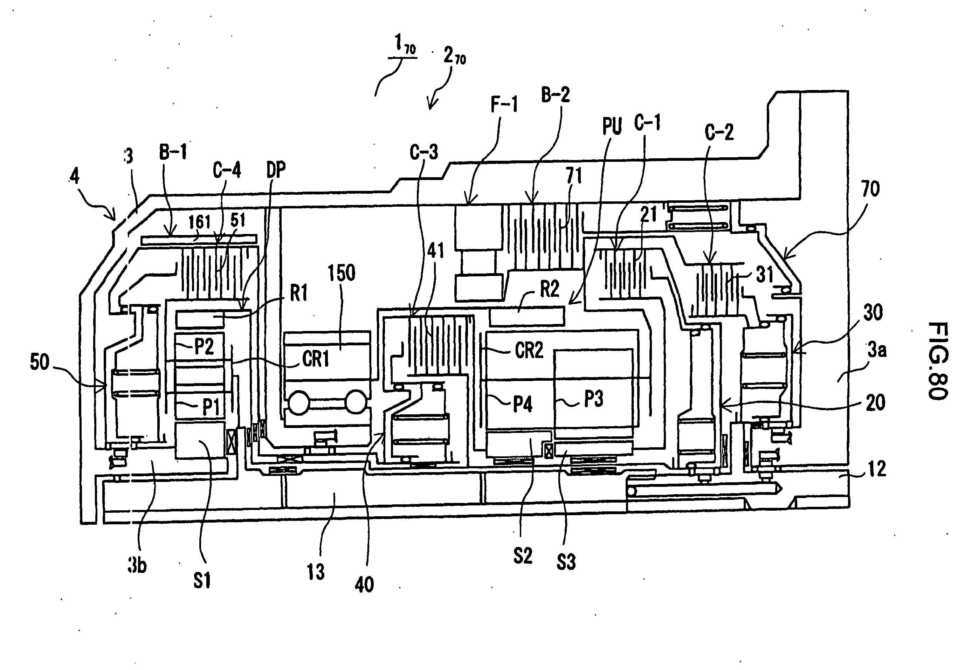

A 70th embodiment, which is a partial modification of the 59th embodiment described above, will be explained with reference to FIG. 80. FIG. 80 is a diagrammatic section view showing an automatic transmission 1₇₀ of the hydraulic servo 70th embodiment. It is noted that in the hydraulic servo 70th embodiment explained below, only structures or components different from those of the automatic transmission 1₅₉ of the 59th embodiment will be explained and an explanation of the structures or components other than that will be omitted here because they are almost the same.

As compared to the automatic transmission 1₅₉ of the 59-rd embodiment, the automatic transmission 1₇₀ of the hydraulic servo 70th embodiment is arranged so that the hydraulic servo 40 of the third clutch C-3 is disposed axially between the planetary gear unit PU and the planetary gear DP and the hydraulic servo 20 of the first clutch C-1 is disposed axially on the opposite side of the planetary gear unit PU from the planetary gear DP. Specifically, the hydraulic servo 40 of the third clutch C-3 is disposed axially between the counter gear 150 and the planetary gear unit PU and the hydraulic servo 20 of the first clutch C-1 is disposed axially between the planetary gear unit PU and the hydraulic servo 30 of the second clutch C-2.

It is noted that the automatic transmission 1₂₅ of the 25th embodiment described above may be built by inverting a transmission mechanism 2₇₀ of the automatic transmission 1₇₀ of the hydraulic servo 70th embodiment in the lateral direction (axial direction) almost as it is.

### <71st Embodiment>

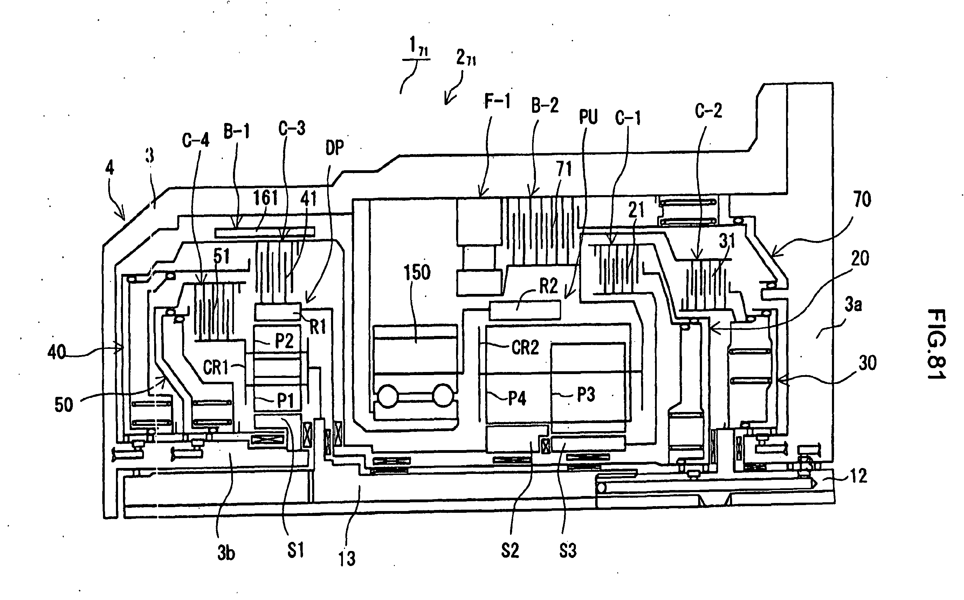

A 71st embodiment, which is a partial modification of the 59th embodiment described above, will be explained with reference to FIG. 81. FIG. 81 is a diagrammatic section view showing an automatic transmission 1₇₁ of the 71st embodiment. It is noted that in the 71st embodiment explained below, only structures or components different from those of the automatic transmission 1₅₉ of the 59th embodiment will be explained and an explanation of the structures or components other than that will be omitted here because they are almost the same.

As compared to the automatic transmission 1₅₉ of the 59-rd embodiment, the automatic transmission 1₇₁ of the 71st embodiment is arranged so that the hydraulic servo 20 of the first clutch C-1 is disposed axially on the opposite side of the planetary gear unit PU from the planetary gear DP, or more specifically, the hydraulic servo 20 of the first clutch C-1 is disposed axially between the planetary gear unit PU and the hydraulic servo 30 of the second clutch C-2.

It is noted that the automatic transmission 1₂₆ of the 26th embodiment described above may be built by inverting a transmission mechanism 2₇₁ of the automatic transmission 1₇₁ of the 71st embodiment in the lateral direction (axial direction) almost as it is.

It is noted that the case of using the so-called Ravigneaux type planetary gear having the long pinion P4 and the carrier CR2 engaging with the sun gear S2 and the sun gear S3 as the planetary gear unit PU has been explained in the first through 71st embodiments described above, the planetary gear may be one having four rotary elements in which a long pinion engages with a common sun gear, a first ring gear engages with the long pinion and a second ring gear engages with a short pinion engaging with the long pinion. Or, any type of planetary gear unit may be used as far as it has at least two rotary elements or preferably four rotary elements.

Still more, although the vehicular automatic transmission 1 having the torque converter 7 has been explained in the first through 71st embodiments, it may be one having a starting clutch for example.

Further, the vehicular automatic transmission 1 suitably used for the FR-type or FF-type vehicle has been exemplified in the first through 71st embodiments, the invention is not limited to that and the invention maybe applied to a vehicular automatic transmission for use in a four-wheel drive type vehicle for example. Still more, the invention is also applicable to one having an engine-directly-coupled motor for example, i.e., to a vehicular automatic transmission for use in a hybrid-type vehicle.

Still more, although the vehicular automatic transmission 1 having the one-way clutch F-1 and capable of attaining the forward first speed stage relatively smoothly has been exemplified in the first through 71st embodiments, the vehicular automatic transmission may be one having no one-way clutch F-1 and in this case, the forward first speed stage may be attained by engaging the second brake B-2.

Still more, the double pinion planetary gear in which rotation of the sun gear S1 is fixed, rotation of the input shaft 12 is inputted to the carrier CR1 and the ring gear R1 rotates at reduced rotation has been explained as the planetary gear DP for outputting reduced rotation in the first through 71st embodiments, the planetary gear DP may be a double pinion planetary gear in which the ring gear R1 is fixed, the rotation of the input shaft 12 is inputted to the carrier CR1 and the reduced rotation is outputted by the sun gear S1 for example. That is, the invention is not limited to that and any planetary gear structure may be used as far as it is capable of outputting the reduced rotation.

While one that is capable of attaining the forward sixth speed and reverse first speed stages by removing the fourth clutch C-4 from the tm 2₁ of the automatic transmission 1₁ of the first embodiment has been explained in the second embodiment, the invention is not limited to that and the automatic transmission capable of attaining the forward sixth speed and reverse first speed stages may be built similarly by removing the fourth clutch C-4 from the transmission mechanism of the automatic transmission of the third through 13th embodiments.

### Industrial Applicability

The inventive automatic transmission is useful as what is mounted in vehicles such as passenger cars, trucks and buses and is especially suitable for vehicles which require compactness and improved power transmitting efficiency from the aspect of mountability.

## Claims

1. A vehicular automatic transmission capable of attaining a multi-stage shift, comprising:
(a) an input shaft (12);
(b) a reduction planetary is composed of a double pinion planetary gear having:
a first sun gear (S1) whose rotation is fixed;
a first pinion gear (P1) engaging with said first sun gear (S1);
a second pinion gear (P2) engaging with said first pinion (P1);
(c) a first carrier (CR1) rotatably supporting said first and second pinion gears (P1, P2) and always linked with said input shaft (12) and
(d) a first ring gear (R1) engaging with said second pinion gear (P2) and outputting a reduced rotation reduced than an inputted rotation of said input shaft (12);
(e) a planetary gear set (PU) having a first rotary element (S2), a second rotary element (S3), a third rotary element (CR2) and a fourth rotary element (R3),
(f) at least two reduction transmitting clutches (C-1, C-3) for enabling the transmission of a reduced rotation through said reduction planetary gear (DP) composed of a first clutch (C-1) and a third clutch (C-3), said first clutch (C-1) is capable of transmitting said reduced rotation to said second rotary element (S3), said third clutch (C-3) is capable of transmitting said reduced rotation to said first rotary element (S2);
(g) an input transmitting clutch (C-4) for enabling said transmission of the inputted rotation to said first rotary element (S2) is composed of a fourth clutcht (C-4);
(h) a second clutch (C-2) is capable of transmitting the inputted rotation to said third rotary element (CR2);
(i) a first braking means (B-1) is capable of fixing said first rotary element (S2);
(j) a second braking means (B-2) is capable of fixing said third rotary element (CR2);
(k) an output member (15) is linked to said fourth element (R3);
said vehicular automatic transmission being **characterized in that**
(l) a hydraulic servo (50) of said fourth clutch (C-4) is disposed axially on an opposite side from said planetary gear set (PU) to said reduction planetary gear (DP);
(m) said fourth clutch (C-4) is linked to said first rotary element (S2) via an output side member (42) of the third clutch (C-3).

2. A vehicular automatic transmission as set forth in claim 1, wherein said hydraulic servo (50) of said fourth clutch (C-4) is disposed axially on a boss portion (3b) extending from a case (4); and
operating fluid is supplied to said hydraulic servo (50) of said fourth clutch (C-4) through an oil passage within said boss portion (3b).

3. The vehicular automatic transmission as set forth in Claim 1 or 2, wherein the hydraulic servo (40) of said third clutch (C-3) is disposed axially on the opposite side of said reduction planetary gear (DP) from said planetary gear set (PU) and the hydraulic servo (20) of said first clutch (C-1) is disposed axially between said reduction planetary gear (DP) and said planetary gear set (PU).

4. The vehicular automatic transmission as set forth in Claim 3, wherein said reduction planetary gear (DP) and said fourth clutch (C-4) are disposed on the inner peripheral side of at least either one of the clutch drum (22) of said first clutch (C-1) and the clutch drum (42) of said third clutch (C-3).

5. The vehicular automatic transmission as set forth in Claim 3 or 4, wherein:
the hydraulic servo (40) of said third clutch (C-3), the hydraulic servo (50) of said fourth clutch (C-4) and said reduction planetary gear (DP) are disposed on said boss portion (3b) extending from said case (4) axially in order from the side of the joint of said boss portion (3b) with said case (4);
the hydraulic servo (20) of said first clutch (C-1) is disposed on said input shaft (12) and adjacent to said reduction planetary gear (DP);
operating fluid is supplied respectively to the hydraulic servo (40) of said third clutch (C-3) and the hydraulic servo (50) of said fourth clutch (C-4) from the oil passages provided within the boss portion (3b); and
operating fluid is supplied to the hydraulic servo (20) of said first clutch (C-1) from an oil passage provided within said input shalt (12).

6. The vehicular automatic transmission as set forth in any one of Claims 3 through 5, wherein said third and fourth clutches (C-3, C-4) are linked to said fist rotary element (S2) through the outer peripheral side of said first clutch (C-1).

7. The vehicular automatic transmission as set forth in any one of Claim 1 to 6, wherein the friction plate (41) of said third clutch (C-3) is disposed on the outer peripheral side of the first ring gear (R1) and said fourth clutch (C-4) is disposed axially between, the hydraulic servo (40) and the friction plate (41) of said third clutch (C-3).

8. The vehicular automatic transmission as set forth in any one of Claims 1 to 7, wherein the friction plate (47) of said third clutch (C-3) is disposed on the outer peripheral side of said fourth clutch (C-4) and the friction plate (21) of said first clutch (C-1) is disposed on the outer peripheral side of said first ring gear (R1).

9. The vehicular automatic transmission as set forth in Claim 8, wherein:
the clutch drum (42) of said third clutch (C-3) is disposed in linkage on the outer peripheral side of the clutch drum (52) of said fourth clutch (C-4);
the hydraulic servo (40) of said third clutch (C-3) is disposed in linkage with the clutch drum (52) of said fourth clutch (C-4) and is built so as to have a cylinder member (44), a piston member (43) and an oil chamber (46) formed between the cylinder member (44) and the piston member (43) separately from the clutch drum (42) of said third clutch (C-3); and
the piston member (43) of the hydraulic servo (40) of said third clutch (C-3) is disposed so as to penetrate through and intersects with the clutch drum (42) of said third clutch (C-3) and to face to the friction plate (41) of said third clutch (C-3).

10. The vehicular automatic transmissions as set forth in Claim 9, wherein a return spring (45) of the hydraulic servo (40) of said third clutch (C-3) is disposed on the clutch drum (52) of said fourth clutch (C-4),

11. The vehicular automatic transmission as set forth in any one of Claims 3 through 10, wherein a friction plate (61) of said first braking means (B-1) is disposed on the outer peripheral side of the hydraulic servo (40) of said third clutch (C-3).

12. The vehicular automatic transmission as set forth in any one of Claims 3 through 10, wherein said first braking means (B-1) is disposed axially between said first clutch (C-1) and said planetary gear unit (PU).

13. The vehicular automatic transmission as set forth in any one of Claims 1 to 12, wherein the hydraulic servo (20) of said first clutch (C-1) is disposed axially on the opposite side of said reduction planetary gear (DP) from said planetary gear set (PU); and
the hydraulic servo (40) of said third clutch (C-3) is disposed axially between said reduction planetary gear (DP) and said planetary rear set (PU).

14. The vehicular automatic transmission as set forth in Claim 13, wherein said first braking means (B-1) is disposed axially between said third clutch (C-3) and said planetary gear set (PU).

15. The vehicular automatic transmission as set forth in Claim 13 or 14, wherein a support wall (120) fixed to the case (4) is disposed axially between said planetary gear set (PU) and said third clutch (C-3); and
operating fluid is supplied to the hydraulic servo (40) of said third clutch (C-3) via an oil passage provided in the support wall (120).

16. The vehicular automatic transmission as set forth in Claim 15, wherein the hydraulic servo (60) of said first braking means (B-1) is disposed on the outer peripheral side of the support wall (120).

17. The vehicular automatic transmission as set forth in any one of Claims 1 to 12, wherein the hydraulic servo (20) of said first clutch (C-1) and the hydraulic servo (40) of said third clutch (C-3) are disposed axially between said reduction planetary gear (DP) and said planetary gear set (PU).

18. The vehicular automatic transmission as set forth in Claim 17, wherein the friction plate (61) of said first braking means (B-1) is disposed so as to overlap radially with the outside of said fourth clutch (C-4).

19. The vehicular automatic transmission as set forth in Claim 17 or 18, wherein:
said fourth clutch (C-4) and said reduction planetary gear (DP) are disposed on said boss portion (3b) extending from one side of said case (4) ;
operating fluid is supplied to the hydraulic servo (50) of said fourth clutch (C-4) from the oil passage provided within the boss portion (3b); and
operating fluid is supplied to the hydraulic servo (30) of said second clutch (C-2) from an oil passage provided in a wall on the other side of the case (4).

20. The vehicular automatic transmission as set forth in any one of Claims 17 through 19, wherein:
the hydraulic servo (20) of said first clutch (C-1) is disposed on the side of said planetary gear set (PU);
the hydraulic servo (40) of said third clutch (C-3) is disposed on the side of said reduction planetary gear (DP), and
a link member (101) for linking said third clutch (C-3) with the rotary element of said planetary gear set (PU) is disposed so as to pass through the outer peripheral side of said first clutch (C-1).

21. The vehicular automatic transmission as set forth in Claim 20, wherein said reduction planetary gear (DP) is composed of a double pinion planetary gear (DP) having as first sun gear (S1) whose rotation is fixed, a first pinion gear (P1) engaging with said first sun gear (S1), a second pinion gear (P2) engaging with said first pinion gear (P1) , a. first carrier (CR1) for rotatably supporting said first and second pinion gears (P1, P2) and always linked with said input shaft (22), and a first ring gear (R1) engaging with said second pinion gear (P2) and outputting the reduced rotation.

22. The vehicular automatic transmission as set forth in Claim 21, wherein:
the friction plate (41) of said third clutch (C-3) is disposed on the outer peripheral side of the first ring gear (R1) of said reduction planetary gear (DP);
a positioning member (106) for positioning said first ring gear (R1) of said reduction planetary gear (DP) is disposed on said input shaft (12);
a cylinder portion (22) of the hydraulic servo (20) of said first clutch (C-1) and a cylinder portion (42) of the hydraulic servo (40) of said third clutch (C-3) are disposed axially on the both sides of said positioning member (106); and
the piston member (43) of the hydraulic servo (40) of said third clutch (C-3) and said first ring gear (R1) of said reduction planetary gear (DP) are built so that they penetrate through and intersect with each other and so that the piston member (43) is slidable against the first ring gear (R1) and the positioning member (106).

23. The vehicular automatic transmission as set forth in Claim 22, wherein an end portion (R1a) of the first ring gear (R1) of said reduction planetary gear (DP) is formed in the shape of a comb; and
a plurality of through holes (43c) through which the comb-like end portion (R1a) of the first ring gear (R1) of said reduction planetary gear (DP) penetrates and intersects are formed through the piston member (43) of the hydraulic servo (40) of said third clutch (C-3).

24. The vehicular automatic transmission as set forth in Claim 23, wherein:
an outer peripheral end portion (106a) of the positioning member (106) is formed in the shape of a comb;
the comb-like end portion (R1a) of the first ring gear (R1) of said reduction planetary gear (DP) is fitted into the comb-like outer peripheral end portion (106a) of said positioning member (106); and
the first ring gear (R1) of said reduction planetary gear (DP) is fixed to said positioning member (106) in the axial direction by a snap ring (109).

25. The vehicular automatic transmission as set forth in any one of Claims 17 through 19, wherein the hydraulic servo (20) of said first clutch (C-1) is disposed on the side of said reduction planetary gear (DP) ; and
the hydraulic servo (40) of said third clutch (C-3) is disposed on the side of said planetary gear set (PU) and a link member (102) for linking said first clutch (C-1) with said second rotary element (S3) is disposed through the inner peripheral side of said third clutch (C-3).

26. The vehicular automatic transmission as set forth in Claim 25, wherein said reduction planetary gear (DP) is composed of a double pinion planetary gear (DP) having a first sun gear (S1) whose rotation is fixed, a first pinion gear (P1) engaging with said first sun gear (S1), a second pinion gear (P2) engaging with said first pinion gear (P1), a first carrier (CR1) for rotatably supporting said first and second pinion gears (P1,P2) and always linked with said input shaft (12), and a first ring gear (R1) engaging with said second pinion gears (P2) and outputting the reduced rotation.

27. The vehicular automatic transmission as set forth in Claim 26, wherein the friction plate (41) of said third clutch (C-3) is disposed on the outer peripheral side of said first ring gear (R1) of said reduction planetary gear (DP) ; and
said first clutch (C-1) is disposed on the inner peripheral side of the clutch drum (42) of said third clutch (C-3).

28. The vehicular automatic transmission as set forth in Claim 26, wherein the friction plate (51) of said fourth clutch (C-4) is disposed on the outer peripheral side of the first ring gear (R1) of said reduction planetary gear (DP).

29. The vehicular automatic transmission as set forth in Claim 28, wherein the friction plate (41) of said third clutch (C-3) is disposed on the outer peripheral side of the clutch drum (22) of said first clutch (C-1).

30. The vehicular automatic transmission as set forth in any one of claims, 17 through 29, wherein the hydraulic servo (20) of said first clutch (C-1) and the hydraulic servo (40) of said third clutch (C-3) are disposed on the input shaft (12); and
operating fluid is supplied to the hydraulic servo (20) of said first clutch (C-1) and the hydraulic servo (40) of said third clutch (C-3) via oil passages, provided within the input shaft (12).

31. The vehicular automatic transmission as set forth in Claim 30, wherein a first oil passage (c6) for supplying operating fluid to the hydraulic servo (20) of said first clutch (C-1) in the axial direction, a second oil passage (c8) for supplying operating fluid to the hydraulic servo (40) of said third clutch (C-3) in the axial direction and a third oil passage (c4) for supplying lubricant oil in the axial direction are formed within the input shaft (12) in parallel with the axial direction.

32. The vehicular automatic transmission as set forth in any one of Claims 17 through 29, wherein:
at least one of the hydraulic servo (20) of said first clutch (C-1) and the hydraulic servo (40) of said third clutch (C-3) are disposed on the input shaft (12);
the support wall (120) fixed to said case (4) is disposed axially between said planetary gear set (PU) and said first clutch (C-1) and said third clutch (C-3);
operating fluid is supplied to one of the hydraulic servo (20) of said first clutch (C-1) and the hydraulic servo (40) of said third clutch (C-3) via the oil passage-provided within the input shaft (12); and
operating fluid is supplied to the other one of the hydraulic servo (20) of said first clutch (C-1) and the hydraulic servo (40) of said third clutch (C-3) via the oil passage provided within the support wall (120).

33. The vehicular automatic transmission as set forth in any one of Claims 1 to 12, wherein the hydraulic servo (20) of said first clutch (C-1) and the hydraulic servo (40) of said third clutch (C-3) are disposed axially on the opposite side of said reduction planetary gear (DP) from said planetary gear set (PU).

34. The vehicular automatic transmission as set forth in Claim 33, wherein:
the hydraulic servo (40) of said third clutch (C-3), the hydraulic servo (20) of said first clutch (C-1), the hydraulic servo (50) of said fourth clutch (C-4) and said reduction planetary gear (DP) are disposed on the boss portion (3b) extending from the case (4) in order from the side of the joint of the boss portion (3b) with the case (4) in the axial direction; and
operating fluid is supplied to the hydraulic servo (40) of said third clutch (C-3), the hydraulic servo (20) of said first clutch (C-1) and the hydraulic servo (50) of said fourth clutch (C-4) respectively from the oil passages provided within the boss portion (3b).

35. The vehicular automatic transmission as set forth in Claim 33 or 34, wherein said first braking means (B-1) is disposed axially between said reduction planetary gear (DP) and said planetary gear set (PU).

36. The vehicular automatic transmission as set forth in any one of Claims 1 to 12, wherein the hydraulic servo (20) of said first clutch (C-1) is disposed axially on the opposite side of said planetary gear set (PU) from said reduction planetary gear (DP); and
the hydraulic servo (40) of said third clutch (C-3) is disposed between said reduction planetary gear (DP) and said planetary gear set (PU).

37. The vehicular automatic transmission as set forth in any one of Claims 1 to 12, wherein the hydraulic servo (20) of said first clutch (C-1) is disposed axially on the opposite side of said planetary gear set (PU) from said reduction planetary gear (DP); and
the hydraulic servo (40) of said third clutch (C-3) is disposed on the opposite side of said reduction planetary gear (DP) from said planetary gear set (PU).

38. The vehicular automatic transmission as set forth in any one of Claims 1 through 37, wherein said second clutch (C-2) is disposed axially on the opposite side of said planetary gear set (PU) from said reduction planetary gear (DP).

39. The vehicular automatic transmission as set forth in any one of claims 1 through 37, wherein said second clutch (C-2) is disposed axially between said reduction planetary gear (DP) and said planetary gear set (PU).

40. The vehicular automatic transmission as set forth in any one of Claims 1 through 39, wherein the reduced rotation of said reduction planetary gear (DP) is inputted to the clutch drum (22) of said first clutch (C-1) forming the hydraulic servo (20) of said first clutch (C-1) when said first clutch (C-1) engages.

41. The vehicular automatic transmission as set forth in any one of Claims 1 through 40, wherein the reduced rotation of said reduction planetary gear (DP) is inputted to the clutch drum (42) of said third clutch (C-3) forming the hydraulic servo (40) of said third clutch (C-3) when said third clutch (C-3) engages.

42. The vehicular automatic transmission as set forth in any one of Claims 1 through 41, wherein the inputted rotation of the input shaft (12) is inputted to the clutch drum (52) of said fourth clutch (C-4) forming the hydraulic servo (50) of said fourth clutch (C-4) when said fourth clutch (C-4) engages.

43. The vehicular automatic transmission as set forth in any one of Claims 1 through 42, wherein:
said planetary gear set (PU) has the second sun gear (S2), the third sun gear (S3), the third pinion gear (P3) engaging with said third sun gear (S3), the fourth pinion gear (P4) engaging with said second sun gear (S2) and with said third pinion gear (P3), the carrier (CR2) rotatably supporting said third and fourth pinion gears (P3,P4), and the ring gear (R2) engaging with said fourth pinion gear (P4);
said first rotary element consists of said second sun gear (S2);
said second rotary element consists of said third sun gear (S3);
said third rotary element consists of said second carrier (CR2); and
said fourth rotary element consists of said second ring gear (R2).

44. The vehicular automatic transmission as set forth in Claim 43, wherein said planetary gear set (PU) is the Ravigneaux type planetary gear in which said second ring gear (R2) is disposed on one side of the outer peripheral side; and
a friction plate (71) of the second brake (B-2) is disposed on the other side of the outer peripheral side of said planetary gear set (PU).

45. The vehicular automatic transmission as set forth in any one of Claims 1 through 44, capable of attaining:
a forward first speed stage by engaging said first clutch (C-1) and fastening the second brake (B-2);
a forward second speed stage by engaging said first clutch (C-1) and fastening said first braking means (B-1);
a forward third speed stage by engaging said first clutch (C-1) and said third clutch (C-3);
a forward fourth speed stage by engaging said first clutch (C-1) and said fourth clutch (C-4);
a forward fifth speed stage by engaging said first clutch (C-1) and said second clutch (C-2);
a forward sixth speed stage by engaging said second clutch (C-2) and said fourth clutch (C-4);
a forward seventh speed stage by engaging said second clutch (C-2) and said third clutch (C-3);
a forward eighth speed stage by engaging said second clutch (C-2) and fastening said first braking means (B-1); and
a reverse stage by engaging said third clutch (C-3) or said fourth clutch (C-4) and fastening the second braking means (B-2).

46. The vehicular automatic transmission as set forth in any one of Claims 1 through 45, wherein said reduction planetary gear (DP) and said planetary gear set (PU) are disposed coaxially and in line in the axial direction.

47. The vehicular automatic transmission as set forth in any one of Claims 1 through 46, wherein said fourth clutch (C-4) is removable.

48. The vehicular automatic transmission as set forth in any one of Claims 1 through 47, wherein said output member is an output shaft (15) for transmitting a rotation coaxially with the input shaft (12).

49. The vehicular automatic transmission as set forth in any one of claims 1 through 47, wherein said output member is a counter gear (150) that transmits a rotation to a shaft parallel with the input shaft (12).

50. The vehicular automatic transmission as set forth in Claim 49, wherein said counter gear (150) and a support wall (130) for supporting said counter gear (150) are disposed axially between said reduction planetary gear (DP) and said planetary gear set (PU).

51. The vehicular automatic transmission as set forth in Claim 49, wherein said counter gear (150) is disposed axially on the opposite side of said planetary gear set (PU) from said reduction planetary gear (DP).

52. The vehicular automatic transmission as set forth in Claim 51, wherein said counter gear (150) is disposed on a boss portion (3d) extending from a side wall (3c) of said case (4) axially on the opposite side of said planetary gear unit (PU) from said reduction planetary gear (DP).

53. The vehicular automatic transmission as set forth in Claim 51 or 52, wherein said counter gear (150) is disposed axially at an end position on the opposite side from said input shaft (12) within said case (4)

54. the vehicular automatic transmission as set forth in Claim 51, wherein said counter gear (150) is disposed axially at an end position on the side of said input shaft (12) within said case (4).

55. The vehicular automatic transmission according to any one of claims 3 to 54, wherein said hydraulic servo (50) of said fourth clutch (C-4) is disposed between said reduction planetary gear (DP) and said partition member (3a) of the case (3) of said transmission.

56. The vehicular automatic transmission according to any one of claims 13 to 54 particularly as directly or indirectly dependent on claim 13, wherein said hydraulic servo (50) of said fourth clutch (C-4) is adjacent, to said hydraulic servo (20) of said first clutch (C-1).

57. The vehicular automatic transmission according to any one of claims 1 to 56, wherein the first clutch (C-1) and/or the second clutch (C-2) and/or the third clutch (C-3) and/or the fourth clutch (C-4) consist of a frictional place (21,31,41,51) and hydraulic servo (20,30,40,50).

58. The vehicular automatic transmission according to any one of claims 1 to 57 as directly or indirectly dependent on claim 13, wherein the hub member (112) is spline-coupled with the inner friction plate (51b) of the friction plate (51) of the fourth cluth (C-4) and is linked to said first rotary element through the outer peripheral side of the first clutch (C-1).

## Patentansprüche

1. Fahrzeugautomatikgetriebe, das dazu geeignet ist, einen mehrstufigen Schaltvorgang auszuführen, mit:
(a) einer Eingangswelle (12);
(b) einem Reduktions-Planetengetriebe, das aus einem Doppelritzel-Planetengetriebe besteht, das aufweist:
ein erstes Sonnenrad (S1), dessen Drehbewegung fixiert ist;
ein mit dem ersten Sonnenrad (S1) kämmendes erstes Ritzel (P1); und
ein mit dem ersten Ritzel (P1) kämmendes zweites Ritzel (P2);
(c) einem ersten Träger (CR1), der das erste und das zweite Ritzel (P1, P2) drehbar hält und permanent mit der Eingangswelle (12) verbunden ist;
(d) einem ersten Hohlrad (R1), das mit dem zweiten Ritzel (P2) kämmt und eine Drehbewegung mit einer bezüglich einer Eingangsdrehzahl der Eingangswelle (12) reduzierten Drehzahl ausgibt;
(e) einem Planetengetriebesatz (PU) mit einem ersten Drehelement (S2), einem zweiten Drehelement (S3), einem dritten Drehelement (CR2) und einem vierten Drehelement (R3);
(f) mindestens zwei aus einer ersten Kupplung (C-1) und einer dritten Kupplung (C-3) bestehen Reduktions-Übertragungskupplungen (C-1, C-3) zum Übertragen einer Drehbewegung mit einer reduzierten Drehzahl über das Reduktions-Planetengetriebe (DP), wobei die erste Kupplung (C-1) dazu geeignet ist, die Drehbewegung mit der reduzierten Drehzahl zum zweiten Drehelement (S3) zu übertragen, und wobei die dritte Kupplung (C-3) dazu geeignet ist, die Drehbewegung mit der reduzierten Drehzahl zum ersten Drehelement (S2) zu übertragen; und
(g) einer aus einer vierten Kupplung (C-4) bestehenden Eingangs-Übertragungskupplung (C-4) zum Übertragen der Eingangsdrehbewegung zum ersten Drehelement (S2);
(h) wobei die zweite Kupplung (C-2) dazu geeignet ist, die Eingangsdrehbewegung zum dritten Drehelement (CR2) zu übertragen;
(i) eine erste Bremse (B-1) dazu geeignet ist, das erste Drehelement (S2) zu blockieren;
(j) eine zweite Bremse (B-2) dazu geeignet ist, das dritte Drehelement (CR2) zu blockieren; und
(k) ein Abtriebselement (15) mit dem vierten Drehelement (R3) verbunden ist;
wobei das Fahrzeugautomatikgetriebe **dadurch gekennzeichnet ist, dass**
(l) eine Hydraulik-Servoeinrichtung (50) der vierten Kupplung (C-4) bezüglich des Planetengetriebesatzes (PU) axial auf einer gegenüberliegenden Seite des Reduktions-Planetengetriebes (DP) angeordnet ist; und
(m) die vierte Kupplung (C-4) über ein ausgangsseitiges Element (42) der dritten Kupplung (C-3) mit dem ersten Drehelement (S2) verbunden ist.

2. Fahrzeugautomatikgetriebe nach Anspruch 1, wobei
die Hydraulik-Servoeinrichtung (50) der vierten Kupplung (C-4) auf einem sich von einem Gehäuse (4) erstreckenden Vorsprungabschnitt (3b) axial angeordnet ist; und
der Hydraulik-Servoeinrichtung (50) der vierten Kupplung (C-4) über einen im Vorsprungabschnitt (3b) ausgebildeten Ölkanal ein Arbeitsfluid zugeführt wird.

3. Fahrzeugautomatikgetriebe nach Anspruch 1 oder 2, wobei die Hydraulik-Servoeinrichtung (40) der dritten Kupplung (C-3) bezüglich des Planetengetriebesatzes (PU) axial auf der gegenüberliegenden Seite des Reduktions-Planetengetriebes (DP) angeordnet ist und die Hydraulik-Servoeinrichtung (20) der ersten Kupplung (C-1) axial zwischen dem Reduktions-Planetengetriebe (DP) und dem Planetengetriebesatz (PU) angeordnet ist.

4. Fahrzeugautomatikgetriebe nach Anspruch 3, wobei das Reduktions-Planetengetriebe (DP) und die vierte Kupplung (C-4) auf der Innenumfangsseite der Kupplungstrommel (22) der ersten Kupplung (C-1) und/oder der Kupplungstrommel (42) der dritten Kupplung (C-3) angeordnet sind.

5. Fahrzeugautomatikgetriebe nach Anspruch 3 oder 4, wobei:
die Hydraulik-Servoeinrichtung (40) der dritten Kupplung (C-3), die Hydraulik-Servoeinrichtung (50) der vierten Kupplung (C-4) und das Reduktions-Planetengetriebe (DP) auf dem sich vom Gehäuse (4) erstreckenden Vorsprungabschnitt (3b) bezogen auf die Seite der Verbindungsstelle des Vorsprungabschnitts (3b) mit dem Gehäuse (4) axial nacheinander angeordnet sind;
die Hydraulik-Servoeinrichtung (20) der ersten Kupplung (C-1) auf der Eingangswelle (12) und benachbart zum Reduktions-Planetengetriebe (DP) angeordnet ist;
der Hydraulik-Servoeinrichtung (40) der dritten Kupplung (C-3) bzw. der Hydraulik-Servoeinrichtung (50) der vierten Kupplung (C-4) von den im Vorsprungabschnitt (3b) ausgebildeten Ölkanälen ein Arbeitsfluid zugeführt wird; und
der Hydraulik-Servoeinrichtung (20) der ersten Kupplung (C-1) von einem in der Eingangswelle (12) ausgebildeten Ölkanal ein Arbeitsfluid zugeführt wird.

6. Fahrzeugautomatikgetriebe nach einem der Ansprüche 3 bis 5, wobei die dritte und die vierte Kupplung (C-3, C-4) über die Außenumfangsseite der ersten Kupplung (C-1) mit dem ersten Drehelement (S2) verbunden sind.

7. Fahrzeugautomatikgetriebe nach einem der Ansprüche 1 bis 6, wobei die Reibungsplatte (41) der dritten Kupplung (C-3) auf der Außenumfangsseite des ersten Hohlrades (R1) angeordnet ist und die vierte Kupplung (C-4) axial zwischen der Hydraulik-Servoeinrichtung (40) und der Reibungsplatte (41) der dritten Kupplung (C-3) angeordnet ist.

8. Fahrzeugautomatikgetriebe nach einem der Ansprüche 1 bis 7, wobei die Reibungsplatte (41) der dritten Kupplung (C-3) auf der Außenumfangsseite der vierten Kupplung (C-4) angeordnet ist und die Reibungsplatte (21) der ersten Kupplung (C-1) auf der Außenumfangsseite des ersten Hohlrades (R1) angeordnet ist.

9. Fahrzeugautomatikgetriebe nach Anspruch 8, wobei:
die Kupplungstrommel (42) der dritten Kupplung (C-3) in Kopplung mit und auf der Außenumfangsseite der Kupplungstrommel (52) der vierten Kupplung (C-4) angeordnet ist;
die Hydraulik-Servoeinrichtung (40) der dritten Kupplung (C-3) in Kopplung mit der Kupplungstrommel (52) der vierten Kupplung (C-4) angeordnet und derart konstruiert ist, dass sie ein Zylinderelement (44), ein Kolbenelement (43) und eine Ölkammer (46) aufweist, die zwischen dem Zylinderelement (44) und dem Kolbenelement (43) getrennt von der Kupplungstrommel (42) der dritten Kupplung (C-3) ausgebildet ist;
wobei das Kolbenelement (43) der Hydraulik-Servoeinrichtung (40) der dritten Kupplung (C-3) derart angeordnet ist, dass es sich durch die Kupplungstrommel (42) der dritten Kupplung (C-3) erstreckt und mit ihr schneidet sowie der Reibungsplatte (41) der dritten Kupplung (C-3) zugewandt ist.

10. Fahrzeugautomatikgetriebe nach Anspruch 9, wobei eine Rückstellfeder (45) der Hydraulik-Servoeinrichtung (40) der dritten Kupplung (C-3) auf der Kupplungstrommel (52) der vierten Kupplung (C-4) angeordnet ist.

11. Fahrzeugautomatikgetriebe nach einem der Ansprüche 3 bis 10, wobei eine Reibungsplatte (61) der ersten Bremse (B-1) auf der Außenumfangsseite der Hydraulik-Servoeinrichtung (40) der dritten Kupplung (C-3) angeordnet ist.

12. Fahrzeugautomatikgetriebe nach einem der Ansprüche 3 bis 10, wobei die erste Bremse (B-1) axial zwischen der ersten Kupplung (C-1) und dem Planetengetriebesatz (PU) angeordnet ist.

13. Fahrzeugautomatikgetriebe nach einem der Ansprüche 1 bis 12, wobei
die Hydraulik-Servoeinrichtung (20) der ersten Kupplung (C-1) bezüglich des Planetengetriebesatzes (PU) axial auf der gegenüberliegenden Seite des Reduktions-Planetengetriebes (DP) angeordnet ist; und
die Hydraulik-Servoeinrichtung (40) der dritten Kupplung (C-3) axial zwischen dem Reduktions-Planetengetriebe (DP) und dem Planetengetriebesatz (PU) angeordnet ist.

14. Fahrzeugautomatikgetriebe nach Anspruch 13, wobei die erste Bremse (B-1) axial zwischen der dritten Kupplung (C-3) und dem Planetengetriebesatz (PU) angeordnet ist.

15. Fahrzeugautomatikgetriebe nach Anspruch 13 oder 14, wobei
eine am Gehäuse (4) befestigte Tragwand (120) axial zwischen dem Planetengetriebesatz (PU) und der dritten Kupplung (C-3) angeordnet ist; und
der Hydraulik-Servoeinrichtung (40) der dritten Kupplung (C-3) über einen in der Tragwand (120) ausgebildeten Ölkanal ein Arbeitsfluid zugeführt wird.

16. Fahrzeugautomatikgetriebe nach Anspruch 15, wobei die Hydraulik-Servoeinrichtung (60) der ersten Bremse (B-1) auf der Außenumfangsseite der Tragwand (120) angeordnet ist.

17. Fahrzeugautomatikgetriebe nach einem der Ansprüche 1 bis 12, wobei die Hydraulik-Servoeinrichtung (20) der ersten Kupplung (C-1) und die Hydraulik-Servoeinrichtung (40) der dritten Kupplung (C-3) axial zwischen dem Reduktions-Planetengetriebe (DP) und dem Planetengetriebesatz (PU) angeordnet sind.

18. Fahrzeugautomatikgetriebe nach Anspruch 17, wobei die Reibungsplatte (61) der ersten Bremse (B-1) derart angeordnet ist, dass sie die Außenseite der vierten Kupplung (C-4) radial überlappt.

19. Fahrzeugautomatikgetriebe nach Anspruch 17 oder 18, wobei:
die vierte Kupplung (C-4) und das Reduktions-Planetengetriebe (DP) auf dem sich von einer Seite des Gehäuses (4) erstreckenden Vorsprungabschnitt (3b) angeordnet sind;
der Hydraulik-Servoeinrichtung (50) der vierten Kupplung (C-4) über einen im Vorsprungabschnitt (3b) ausgebildeten Ölkanal ein Arbeitsfluid zugeführt wird; und
der Hydraulik-Servoeinrichtung (30) der zweiten Kupplung (C-2) über einen in einer Wand auf der anderen Seite des Gehäuses (4) ausgebildeten Ölkanal ein Arbeitsfluid zugeführt wird.

20. Fahrzeugautomatikgetriebe nach einem der Ansprüche 17 bis 19, wobei
die Hydraulik-Servoeinrichtung (20) der ersten Kupplung (C-1) auf der Seite des Planetengetriebesatzes (PU) angeordnet ist;
die Hydraulik-Servoeinrichtung (40) der dritten Kupplung (C-3) auf der Seite des Reduktions-Planetengetriebes (DP) angeordnet ist; und
ein Verbindungselement (101) zum Verbinden der dritten Kupplung (C-3) mit dem Drehelement des Planetengetriebesatzes (PU) derart angeordnet ist, dass es sich durch die Außenumfangsseite der ersten Kupplung (C-1) erstreckt.

21. Fahrzeugautomatikgetriebe nach Anspruch 20, wobei das Reduktions-Planetengetriebe (DP) aus einem Doppelritzel-Planetengetriebe (DP) mit einem ersten Sonnenrad (S1), dessen Drehbewegung fixiert ist, einem mit dem ersten Sonnenrad (S1) kämmenden ersten Ritzel (P1), einem mit dem ersten Ritzel (P1) kämmenden zweiten Ritzel (P2), einem mit der Eingangswelle (12) permanent verbundenen ersten Träger (CR1) zum drehbaren Halten des ersten und des zweiten Ritzels (P1, P2), und einem mit dem zweiten Ritzel (P2) kämmenden ersten Hohlrad (R1) zum Ausgeben der Drehbewegung mit der reduzierten Drehzahl besteht.

22. Fahrzeugautomatikgetriebe nach Anspruch 21, wobei:
die Reibungsplatte (41) der dritten Kupplung (C-3) auf der Außenumfangsseite des ersten Hohlrades (R1) des Reduktions-Planetengetriebes (DP) angeordnet ist;
ein Positionierungselement (106) zum Positionieren des ersten Hohlrades (R1) des Reduktions-Planetengetriebes (DP) auf der Eingangswelle (12) angeordnet ist;
ein Zylinderabschnitt (22) der Hydraulik-Servoeinrichtung (20) der ersten Kupplung (C-1) und ein Zylinderabschnitt (42) der Hydraulik-Servoeinrichtung (40) der dritten Kupplung (C-3) axial auf beiden Seiten des Positionierungselements (106) angeordnet sind; und
das Kolbenelement (43) der Hydraulik-Servoeinrichtung (40) der dritten Kupplung (C-3) und das erste Hohlrad (R1) des Reduktions-Planetengetriebes (DP) derart konstruiert sind, dass sie sich einander durchdringen und überschneiden, und derart, dass das Kolbenelement (43) bezüglich des ersten Hohlrades (R1) und des Positionierungselements (106) verschiebbar ist.

23. Fahrzeugautomatikgetriebe nach Anspruch 22 wobei:
ein Endabschnitt (R1a) des ersten Hohlrades (R1) des Reduktions-Planetengetriebes (DP) kammförmig ausgebildet ist; und
mehrere Durchgangslöcher (43c), durch die der kammförmige Endabschnitt (R1a) des ersten Hohlrades (R1) des Reduktions-Planetengetriebes (DP) sich erstreckt und überschneidet, durch das Kolbenelement (43) der Hydraulik-Servoeinrichtung (40) der dritten Kupplung (C-3) ausgebildet sind.

24. Fahrzeugautomatikgetriebe nach Anspruch 23, wobei:
ein Außenumfangsendabschnitt (106a) des Positionierungselements (106) kammförmig ausgebildet ist;
der kammförmige Endabschnitt (R1a) des ersten Hohlrades (R1) des Reduktions-Planetengetriebes (DP) in den kammförmigen Außenumfangsendabschnitt (106a) des Positionierungselements (106) eingepasst ist; und
das erste Hohlrad (R1) des Reduktions-Planetengetriebes (DP) in der axialen Richtung durch einen Sicherungs- oder Sprengring (109) am Positionierungselement (106) befestigt ist.

25. Fahrzeugautomatikgetriebe nach einem der Ansprüche 17 bis 19, wobei
die Hydraulik-Servoeinrichtung (20) der ersten Kupplung (C-1) auf der Seite des Reduktions-Planetengetriebes (DP) angeordnet ist; und
die Hydraulik-Servoeinrichtung (40) der dritten Kupplung (C-3) auf der Seite des Planetengetriebesatzes (PU) angeordnet ist und ein Verbindungselement (102) zum Verbinden der ersten Kupplung (C-1) mit dem zweiten Drehelement (S3) durch die Innenumfangsseite der dritten Kupplung (C-3) angeordnet ist.

26. Fahrzeugautomatikgetriebe nach Anspruch 25, wobei das Reduktions-Planetengetriebe (DP) aus einem Doppelritzel-Planetengetriebe (DP) mit einem ersten Sonnenrad (S1), dessen Drehbewegung fixiert ist, einem mit dem ersten Sonnenrad (S1) kämmenden ersten Ritzel (P1), einem mit dem ersten Ritzel (P1) kämmenden zweiten Ritzel (P2), einem mit der Eingangswelle (12) permanent verbundenen ersten Träger (CR1) zum drehbaren Halten des ersten und des zweiten Ritzels (P1, P2) und einem mit dem zweiten Ritzel (P2) kämmenden ersten Hohlrad (R1) zum Ausgeben der Drehbewegung mit der reduzierten Drehzahl besteht.

27. Fahrzeugautomatikgetriebe nach Anspruch 26, wobei die Reibungsplatte (41) der dritten Kupplung (C-3) auf der Außenumfangsseite des ersten Hohlrades (R1) des Reduktions-Planetengetriebes (DP) angeordnet ist; und
die erste Kupplung (C-1) auf der Innenumfangsseite der Kupplungstrommel (42) der dritten Kupplung (C-3) angeordnet ist.

28. Fahrzeugautomatikgetriebe nach Anspruch 26, wobei die Reibungsplatte (51) der vierten Kupplung (C-4) auf der Außenumfangsseite des ersten Hohlrades (R1) des Reduktions-Planetengetriebes (DP) angeordnet ist.

29. Fahrzeugautomatikgetriebe nach Anspruch 28, wobei die Reibungsplatte (41) der dritten Kupplung (C-3) auf der Außenumfangsseite der Kupplungstrommel (22) der ersten Kupplung (C-1) angeordnet ist.

30. Fahrzeugautomatikgetriebe nach einem der Ansprüche 17 bis 29, wobei
die Hydraulik-Servoeinrichtung (20) der ersten Kupplung (C-1) und die Hydraulik-Servoeinrichtung (40) der dritten Kupplung (C-3) auf der Eingangswelle (12) angeordnet sind; und
der Hydraulik-Servoeinrichtung (20) der ersten Kupplung (C-1) und der Hydraulik-Servoeinrichtung (40) der dritten Kupplung (C-3) über in der Eingangswelle (12) ausgebildete Ölkanäle ein Arbeitsfluid zugeführt wird.

31. Fahrzeugautomatikgetriebe nach Anspruch 30, wobei ein erster Ölkanal (c6) zum Zuführen von Arbeitsfluid zur Hydraulik-Servoeinrichtung (20) der ersten Kupplung (C-1) in der axialen Richtung, ein zweiter Ölkanal (c8) zum Zuführen von Arbeitsfluid zur Hydraulik-Servoeinrichtung (40) der dritten Kupplung (C-3) in der axialen Richtung und ein dritter Ölkanal (c4) zum Zuführen von Schmieröl in der axialen Richtung in der Eingangswelle (12) parallel zur axialen Richtung ausgebildet sind.

32. Fahrzeugautomatikgetriebe nach einem der Ansprüche 17 bis 29, wobei:
die Hydraulik-Servoeinrichtung (20) der ersten Kupplung (C-1) und/oder die Hydraulik-Servoeinrichtung (40) der dritten Kupplung (C-3) auf der Eingangswelle (12) angeordnet sind;
die am Gehäuse (4) befestigte Tragwand (120) axial zwischen dem Planetengetriebesatz (PU) und der ersten Kupplung (C-1) und der dritten Kupplung (C-3) angeordnet ist;
der Hydraulik-Servoeinrichtung (20) der ersten Kupplung (C-1) oder der Hydraulik-Servoeinrichtung (40) der dritten Kupplung (C-3) über den in der Eingangswelle (12) ausgebildeten Ölkanal ein Arbeitsfluid zugeführt wird; und
der anderen unter der Hydraulik-Servoeinrichtung (20) der ersten Kupplung (C-1) und der Hydraulik-Servoeinrichtung (40) der dritten Kupplung (C-3) über den in der Tragwand (120) ausgebildeten Ölkanal ein Arbeitsfluid zugeführt wird.

33. Fahrzeugautomatikgetriebe nach einem der Ansprüche 1 bis 12, wobei die Hydraulik-Servoeinrichtung (20) der ersten Kupplung (C-1) und die Hydraulik-Servoeinrichtung (40) der dritten Kupplung (C-3) bezüglich des Planetengetriebesatzes (PU) axial auf der gegenüberliegenden Seite des Reduktions-Planetengetriebes (DP) angeordnet sind.

34. Fahrzeugautomatikgetriebe nach Anspruch 33, wobei:
die Hydraulik-Servoeinrichtung (40) der dritten Kupplung (C-3), die Hydraulik-Servoeinrichtung (20) der ersten Kupplung (C-1), die Hydraulik-Servoeinrichtung (50) der vierten Kupplung (C-4) und das Reduktions-Planetengetriebe (DP) auf dem sich vom Gehäuse (4) erstreckenden Vorsprungabschnitt (3b) bezogen auf die Seite der Verbindungsstelle des Vorsprungabschnitts (3b) mit dem Gehäuse (4) in der axialen Richtung nacheinander angeordnet sind; und
der Hydraulik-Servoeinrichtung (40) der dritten Kupplung (C-3), der Hydraulik-Servoeinrichtung (20) der ersten Kupplung (C-1) und der die Hydraulik-Servoeinrichtung (50) der vierten Kupplung (C-4) ein Arbeitsfluid von den im Vorsprungabschnitt (3b) ausgebildeten jeweiligen Ölkanälen zugeführt wird.

35. Fahrzeugautomatikgetriebe nach Anspruch 33 oder 34, wobei die erste Bremse (B-1) axial zwischen dem Reduktions-Planetengetriebe (DP) und dem Planetengetriebesatz (PU) angeordnet ist.

36. Fahrzeugautomatikgetriebe nach einem der Ansprüche 1 bis 12, wobei
die Hydraulik-Servoeinrichtung (20) der ersten Kupplung (C-1) bezüglich des Reduktions-Planetengetriebes (DP) axial auf der gegenüberliegenden Seite des Planetengetriebesatzes (PU) angeordnet ist; und
die Hydraulik-Servoeinrichtung (40) der dritten Kupplung (C-3) zwischen dem Reduktions-Planetengetriebe (DP) und dem Planetengetriebesatz (PU) angeordnet ist.

37. Fahrzeugautomatikgetriebe nach einem der Ansprüche 1 bis 12, wobei
die Hydraulik-Servoeinrichtung (20) der ersten Kupplung (C-1) bezüglich des Reduktions-Planetengetriebes (DP) axial auf der gegenüberliegenden Seite des Planetengetriebesatzes (PU) angeordnet ist; und
die Hydraulik-Servoeinrichtung (40) der dritten Kupplung (C-3) bezüglich des Planetengetriebesatzes (PU) auf der gegenüberliegenden Seite des Reduktions-Planetengetriebes (DP) angeordnet ist.

38. Fahrzeugautomatikgetriebe nach einem der Ansprüche 1 bis 37, wobei die zweite Kupplung (C-2) bezüglich des Reduktions-Planetengetriebes (DP) auf der gegenüberliegenden Seite des Planetengetriebesatzes (PU) angeordnet ist.

39. Fahrzeugautomatikgetriebe nach einem der Ansprüche 1 bis 37, wobei die zweite Kupplung (C-2) axial zwischen dem Reduktions-Planetengetriebe (DP) und dem Planetengetriebesatz (PU) angeordnet ist.

40. Fahrzeugautomatikgetriebe nach einem der Ansprüche 1 bis 39, wobei die Drehbewegung mit der reduzierten Drehzahl des Reduktions-Planetengetriebes (DP) der Kupplungstrommel (22) der ersten Kupplung (C-1) zugeführt wird, die die Hydraulik-Servoeinrichtung (20) der ersten Kupplung (C-1) bildet, wenn die erste Kupplung (C-1) eingerückt ist.

41. Fahrzeugautomatikgetriebe nach einem der Ansprüche 1 bis 40, wobei die Drehbewegung mit der reduzierten Drehzahl des Reduktions-Planetengetriebes (DP) der Kupplungstrommel (42) der dritten Kupplung (C-3) zugeführt wird, die die Hydraulik-Servoeinrichtung (40) der dritten Kupplung (C-3) bildet, wenn die dritte Kupplung (C-3) eingerückt ist.

42. Fahrzeugautomatikgetriebe nach einem der Ansprüche 1 bis 41, wobei die Eingangsdrehbewegung der Eingangswelle (12) der Kupplungstrommel (52) der vierten Kupplung (C-4) zugeführt wird, die die Hydraulik-Servoeinrichtung (50) der vierten Kupplung (C-4) bildet, wenn die vierte Kupplung (C-4) eingerückt ist.

43. Fahrzeugautomatikgetriebe nach einem der Ansprüche 1 bis 42, wobei:
der Planetengetriebesatz (PU) das zweite Sonnenrad (S2), das dritte Sonnenrad (S3), das mit dem dritten Sonnenrad (S3) kämmende dritte Ritzel (P3), das mit dem zweiten Sonnenrad (S2) und dem dritten Ritzel (P3) kämmende vierte Ritzel (P4), den das dritte und das vierte Ritzel (P3, P4) drehbar haltenden Träger (CR2) und das mit dem vierten Ritzel (P4) kämmende Hohlrad (R2) aufweist;
das erste Drehelement aus dem zweiten Sonnenrad (S2) besteht;
das zweite Drehelement aus dem dritten Sonnenrad (S3) besteht;
das dritte Drehelement aus dem zweiten Träger (CR2) besteht; und
das vierte Drehelement aus dem zweiten Hohlrad (R2) besteht.

44. Fahrzeugautomatikgetriebe nach Anspruch 43, wobei der Planetengetriebesatz (PU) ein Planetengetriebesatz des Ravigneaux-Typs ist, bei dem das zweite Hohlrad (R2) auf einer Seite der Außenumfangsseite angeordnet ist; und
die Reibungsplatte (71) der zweiten Bremse (B-2) auf der anderen Seite der Außenumfangsseite des Planetengetriebesatzes (PU) angeordnet ist.

45. Fahrzeugautomatikgetriebe nach einem der Ansprüche 1 bis 44, wobei das Automatikgetriebe dazu geeignet ist, die folgenden Gangstufen einzurichten:
eine erste Vorwärtsgangstufe durch Einrücken der ersten Kupplung (C-1) und Betätigen der zweiten Bremse (B-2);
eine zweite Vorwärtsgangstufe durch Einrücken der ersten Kupplung (C-1) und Betätigen der ersten Bremse (B-1);
eine dritte Vorwärtsgangstufe durch Einrücken der ersten Kupplung (C-1) und der dritten Kupplung (C-3);
eine vierte Vorwärtsgangstufe durch Einrücken der ersten Kupplung (C-1) und der vierten Kupplung (C-4);
eine fünfte Vorwärtsgangstufe durch Einrücken der ersten Kupplung (C-1) und der zweiten Kupplung (C-2);
eine sechste Vorwärtsgangstufe durch Einrücken der zweiten Kupplung (C-2) und der vierten Kupplung (C-4);
eine siebente Vorwärtsgangstufe durch Einrücken der zweiten Kupplung (C-2) und der dritten Kupplung (C-3);
eine achte Vorwärtsgangstufe durch Einrücken der zweiten Kupplung (C-2) und Betätigen der ersten Bremse (B-1); und
eine Rückwärtsgangstufe durch Einrücken der dritten Kupplung (C-3) oder der vierten Kupplung (C-4) und Betätigen der zweiten Bremse (B-2).

46. Fahrzeugautomatikgetriebe nach einem der Ansprüche 1 bis 45, wobei das Reduktions-Planetengetriebe (DP) und der Planetengetriebesatz (PU) koaxial und in der axialen Richtung in Reihe angeordnet sind.

47. Fahrzeugautomatikgetriebe nach einem der Ansprüche 1 bis 46, wobei die vierte Kupplung (C-4) entfernbar ist.

48. Fahrzeugautomatikgetriebe nach einem der Ansprüche 1 bis 47, wobei das Abtriebselement eine Ausgangswelle (15) zum koaxialen Übertragen einer Drehbewegung bezüglich der Eingangswelle (12) ist.

49. Fahrzeugautomatikgetriebe nach einem der Ansprüche 1 bis 47, wobei das Abtriebselement ein Gegenzahnrad (150) ist, das eine Drehbewegung zu einer parallel zur Eingangswelle (12) angeordneten Welle überträgt.

50. Fahrzeugautomatikgetriebe nach Anspruch 49, wobei das Gegenzahnrad (150) und eine Tragwand (130) zum Halten des Gegenzahnrades (150) axial zwischen dem Reduktions-Planetengetriebe (DP) und dem Planetengetriebesatz (PU) angeordnet sind.

51. Fahrzeugautomatikgetriebe nach Anspruch 49, wobei das Gegenzahnrad (150) bezüglich des Reduktions-Planetengetriebes (DP) axial auf der gegenüberliegenden Seite des Planetengetriebesatzes (PU) angeordnet ist.

52. Fahrzeugautomatikgetriebe nach Anspruch 51, wobei das Gegenzahnrad (150) auf einem sich von einer Seitenwand (3c) des Gehäuses (4) erstreckenden Vorsprungabschnitt (3d) bezüglich des Reduktions-Planetengetriebes (DP) auf der gegenüberliegenden Seite des Planetengetriebesatzes (PU) angeordnet ist.

53. Fahrzeugautomatikgetriebe nach Anspruch 51 oder 52, wobei das Gegenzahnrad (150) bezüglich der Eingangswelle (12) axial an einer Endposition auf der gegenüberliegenden Seite im Gehäuse (4) angeordnet ist.

54. Fahrzeugautomatikgetriebe nach Anspruch 51, wobei das Gegenzahnrad (150) axial an einer Endposition auf der Seite der Eingangswelle (12) im Gehäuse (4) angeordnet ist.

55. Fahrzeugautomatikgetriebe nach einem der Ansprüche 3 bis 54, wobei die Hydraulik-Servoeinrichtung (50) der vierten Kupplung (C-4) zwischen dem Reduktions-Planetengetriebe (DP) und einem Trennelement (3a) des Gehäuses (3) des Getriebes angeordnet ist.

56. Fahrzeugautomatikgetriebe nach einem der Ansprüche 13 bis 54, insbesondere soweit diese direkt oder indirekt von Anspruch 13 abhängig sind, wobei die Hydraulik-Servoeinrichtung (50) der vierten Kupplung (C-4) benachbart zur Hydraulik-Servoeinrichtung (20) der ersten Kupplung (C-1) angeordnet ist.

57. Fahrzeugautomatikgetriebe nach einem der Ansprüche 1 bis 56, wobei die erste Kupplung (C-1) und/oder die zweite Kupplung (C-2) und/oder die dritte Kupplung (C-3) und/oder die vierte Kupplung (C-4) aus einer Reibungsplatte (21, 31, 41, 51) und einer Hydraulik-Servoeinrichtung (20, 30, 40, 50) bestehen.

58. Fahrzeugautomatikgetriebe nach einem der Ansprüche 1 bis 57, soweit diese direkt oder indirekt von Anspruch 13 abhängig sind, wobei ein Nabenelement (112) mit der inneren Reibungsplatte (51b) der Reibungsplatte (51) der vierten Kupplung (C-4) keilverzahnt und über die Außenumfangsseite der ersten Kupplung (C-1) mit dem ersten Drehelement verbunden ist.

## Revendications

1. Transmission automatique pour véhicule pouvant atteindre un changement de vitesse à plusieurs étages, comprenant :
(a) un arbre d'entrée (12) ;
(b) un engrenage planétaire de réduction qui est composé d'un engrenage planétaire à double pignon ayant :
un premier planétaire (S1) dont la rotation est fixe ;
un premier engrenage à pignons (P1) se mettant en prise avec ledit premier planétaire (S1) ;
un second engrenage à pignons (P2) se mettant en prise avec ledit premier engrenage à pignons (P1) ;
(c) un premier support (CR1) supportant de manière rotative lesdits premier et second engrenages à pignons (P1, P2) et toujours relié avec ledit arbre d'entrée (12) ; et
(d) une première couronne (R1) se mettant en prise avec ledit second engrenage à pignons (P2) et produisant une rotation réduite plus réduite qu'une rotation d'entrée dudit arbre d'entrée (12) ;
(e) un train planétaire (PU) ayant un premier élément rotatif (S2), un deuxième élément rotatif (S3), un troisième élément rotatif (CR2) et un quatrième élément rotatif (R3),
(f) au moins deux embrayages de transmission de réduction (C-1, C-3) pour permettre la transmission d'une rotation réduite par le biais dudit engrenage planétaire de réduction (DP) composé d'un premier embrayage (C-1) et d'un troisième embrayage (C-3), ledit premier embrayage (C-1) est capable de transmettre ladite rotation réduite audit deuxième élément rotatif (S3), ledit troisième embrayage (C-3) est capable de transmettre ladite rotation réduite audit premier élément rotatif (S2) ;
(g) un embrayage de transmission d'entrée (C-4) pour permettre ladite transmission de la rotation d'entrée audit premier élément rotatif (S2) est composé d'un quatrième embrayage (C-4) ;
(h) un deuxième embrayage (C-2) est capable de transmettre la rotation d'entrée audit troisième élément rotatif (CR2) ;
(i) des premiers moyens de freinage (B-1) sont capables de fixer le premier élément rotatif (S2) ;
(j) des seconds moyens de freinage (B-2) sont capables de fixer ledit troisième élément rotatif (CR2) ;
(k) un élément de sortie (15) est relié audit quatrième élément (R3) ;
ladite transmission automatique pour véhicule étant **caractérisée en ce que** :
(l) un servomécanisme hydraulique (50) dudit quatrième embrayage (C-4) est disposé axialement sur un côté opposé dudit train planétaire (PU) audit engrenage planétaire de réduction (DP) ;
(m) ledit quatrième embrayage (C-4) est relié audit premier élément rotatif (S2) via un élément latéral de sortie (42) du troisième embrayage (C-3).

2. Transmission automatique pour véhicule selon la revendication 1, dans laquelle ledit servomécanisme hydraulique (50) dudit quatrième embrayage (C-4) est disposé axialement sur une partie de bossage (3b) s'étendant à partir d'un carter (4) ; et
du fluide de travail est alimenté audit servomécanisme hydraulique (50) dudit quatrième embrayage (C-4) par un passage d'huile à l'intérieur de ladite partie de bossage (3b).

3. Transmission automatique pour véhicule selon la revendication 1 ou 2, dans laquelle le servomécanisme hydraulique (40) dudit troisième embrayage (C-3) est disposé axialement sur le côté opposé dudit engrenage planétaire de réduction (DP) par rapport audit train planétaire (PU) et le servomécanisme hydraulique (20) dudit premier embrayage (C-1) est disposé axialement entre ledit engrenage planétaire de réduction (DP) et ledit train planétaire (PU).

4. Transmission automatique pour véhicule selon la revendication 3, dans laquelle ledit engrenage planétaire de réduction (DP) et ledit quatrième embrayage (C-4) sont disposés sur le côté périphérique interne d'au moins l'un parmi le tambour d'embrayage (22) dudit premier embrayage (C-1) et le tambour d'embrayage (42) dudit troisième embrayage (C-3).

5. Transmission automatique pour véhicule selon la revendication 3 ou 4, dans laquelle :
le servomécanisme (40) dudit troisième embrayage (C-3), le servomécanisme hydraulique (50) dudit quatrième embrayage (C-4) et ledit engrenage planétaire de réduction (DP) sont disposés sur ladite partie de bossage (3b) s'étendant dudit carter (4) de manière axiale à partir du côté de l'assemblage de ladite partie de bossage (3b) avec ledit carter (4) ;
le servomécanisme hydraulique (20) dudit premier embrayage (C-1) est disposé sur ledit arbre d'entrée (12) et adjacent audit engrenage planétaire de réduction (DP) ;
le fluide de travail est alimenté respectivement au servomécanisme hydraulique (40) dudit troisième embrayage (C-3) et au servomécanisme hydraulique (50) dudit quatrième embrayage (C-4) par les passages d'huile prévus à l'intérieur de la partie de bossage (3b) ; et
le fluide de travail est alimenté au servomécanisme hydraulique (20) dudit premier embrayage (C-1) par un passage d'huile prévu à l'intérieur dudit arbre d'entrée (12).

6. Transmission automatique pour véhicule selon l'une quelconque des revendications 3 à 5, dans laquelle lesdits troisième et quatrième embrayages (C-3, C-4) sont reliés audit premier élément rotatif (S2) par le biais du côté périmétral externe dudit premier embrayage (C-1).

7. Transmission automatique pour véhicule selon l'une quelconque des revendications 1 à 6, dans laquelle la plaque de friction (41) dudit troisième embrayage (C-3) est disposée sur le côté périmétral externe de la première couronne (R1) et ledit quatrième embrayage (C-4) est disposé de manière axiale entre le servomécanisme hydraulique (40) et la plaque de friction (41) dudit troisième embrayage (C-3).

8. Transmission automatique pour véhicule selon l'une quelconque des revendications 1 à 7, dans laquelle la plaque de friction (41) dudit troisième embrayage (C-3) est disposée sur le côté périphérique externe dudit quatrième embrayage (C-4) et la plaque de friction (21) dudit premier embrayage (C-1) est disposée sur le côté périphérique externe de ladite première couronne (R1).

9. Transmission automatique pour véhicule selon la revendication 8, dans laquelle :
le tambour d'embrayage (42) dudit troisième embrayage (C-3) est disposé en liaison sur le côté périphérique externe du tambour d'embrayage (52) dudit quatrième embrayage (C-4) ;
le servomécanisme hydraulique (40) dudit troisième embrayage (C-3) est disposé en liaison avec le tambour d'embrayage (52) dudit quatrième embrayage (C-4) et est construit pour avoir un élément formant cylindre (44), un élément formant piston (43) et une chambre d'huile (46) formée entre l'élément formant cylindre (44) et l'élément formant piston (43) séparément du tambour d'embrayage (42) dudit troisième embrayage (C-3) ; et
l'élément formant piston (43) du servomécanisme hydraulique (40) dudit troisième embrayage (C-3) est disposé afin de pénétrer à travers et de couper le tambour d'embrayage (42) dudit troisième embrayage (C-3) et afin de faire face à la plaque de friction (41) dudit troisième embrayage (C-3).

10. Transmission automatique pour véhicule selon la revendication 9, dans laquelle un ressort de rappel (45) du servomécanisme hydraulique (40) dudit troisième embrayage (C-3) est disposé sur le tambour d'embrayage (52) dudit quatrième embrayage (C-4).

11. Transmission automatique pour véhicule selon l'une quelconque des revendications 3 à 10, dans laquelle une plaque de friction (61) desdits premiers moyens de freinage (B-1) est disposée sur le côté périphérique externe du servomécanisme hydraulique (40) dudit troisième embrayage (C-3).

12. Transmission automatique pour véhicule selon l'une quelconque des revendications 3 à 10, dans laquelle lesdits premiers moyens de freinage (B-1) sont disposés de manière axiale entre ledit premier embrayage (C-1) et ledit train planétaire (PU).

13. Transmission automatique pour véhicule selon l'une quelconque des revendications 1 à 12, dans laquelle le servomécanisme hydraulique (20) dudit premier embrayage (C-1) est disposé de manière axiale sur le côté opposé dudit engrenage planétaire de réduction (DP) par rapport audit train planétaire (PU) ; et
le servomécanisme hydraulique (40) dudit troisième embrayage (C-3) est disposé de manière axiale entre ledit engrenage planétaire de réduction (DP) et ledit train planétaire (PU).

14. Transmission automatique pour véhicule selon la revendication 13, dans laquelle lesdits premiers moyens de freinage (B-1) sont disposés de manière axiale entre ledit troisième embrayage (C-3) et ledit train planétaire (PU).

15. Transmission automatique pour véhicule selon la revendication 13 ou 14, dans laquelle une paroi de support (120) fixée au carter (4) est disposée de manière axiale entre ledit train planétaire (PU) et ledit troisième embrayage (C-3) ; et
le fluide de travail est alimenté au servomécanisme hydraulique (40) dudit troisième embrayage (C-3) via un passage d'huile prévu dans la paroi de support (120).

16. Transmission automatique pour véhicule selon la revendication 15, dans laquelle le servomécanisme hydraulique (60) desdits premiers moyens de freinage (B-1) est disposé sur le côté périphérique externe de la paroi de support (120).

17. Transmission automatique pour véhicule selon l'une quelconque des revendications 1 à 12, dans laquelle le servomécanisme hydraulique (20) dudit premier embrayage (C-1) et le servomécanisme hydraulique (40) dudit troisième embrayage (C-3) sont disposés de manière axiale entre ledit engrenage planétaire de réduction (DP) et ledit train planétaire (PU).

18. Transmission automatique pour véhicule selon la revendication 17, dans laquelle la plaque de friction (61) desdits premiers moyens de freinage (B-1) est disposée afin de chevaucher radialement sur l'extérieur dudit quatrième embrayage (C-4).

19. Transmission automatique pour véhicule selon la revendication 17 ou 18, dans laquelle :
ledit quatrième embrayage (C-4) et ledit engrenage planétaire de réduction (DP) sont disposés sur ladite partie de bossage (3b) s'étendant à partir d'un côté dudit carter (4) ;
le fluide de travail est alimenté au servomécanisme hydraulique (50) dudit quatrième embrayage (C-4) par le passage d'huile prévu à l'intérieur de la partie de bossage (3b) ; et
le fluide de travail est alimenté au servomécanisme hydraulique (30) dudit deuxième embrayage (C-2) par un passage d'huile prévu dans une paroi de l'autre côté du carter (4).

20. Transmission automatique pour véhicule selon l'une quelconque des revendications 17 à 19, dans laquelle :
le servomécanisme hydraulique (20) dudit premier embrayage (C-1) est disposé sur le côté dudit train planétaire (PU) ;
le servomécanisme hydraulique (40) dudit troisième embrayage (C-3) est disposé sur le côté dudit engrenage planétaire de réduction (DP) ; et
un élément de liaison (101) pour relier ledit troisième embrayage (C-3) avec l'élément rotatif dudit train planétaire (PU) est disposé afin de passer à travers le côté périphérique externe dudit premier embrayage (C-1).

21. Transmission automatique pour véhicule selon la revendication 20, dans laquelle ledit engrenage planétaire de réduction (DP) est composé d'un engrenage planétaire à double pignon (DP) ayant un premier planétaire (S1) dont la rotation est fixe, d'un premier engrenage à pignons (P1) se mettant en prise avec ledit premier planétaire (S1), d'un second engrenage à pignons (P2) se mettant en prise avec ledit premier engrenage à pignons (P1), d'un premier support (CR1) pour supporter de manière rotative lesdits premier et second engrenages à pignons (P1, P2) et toujours relié audit arbre d'entrée (12), et d'une première couronne (R1) se mettant en prise avec ledit second engrenage à pignons (P2) et produisant la rotation réduite.

22. Transmission automatique pour véhicule selon la revendication 21, dans laquelle :
la plaque de friction (41) dudit troisième embrayage (C-3) est disposée sur le côté périphérique externe de la première couronne (R1) dudit engrenage planétaire de réduction (DP) ;
un élément de positionnement (106) pour positionner ladite première couronne (R1) dudit engrenage planétaire de réduction (DP) est disposé sur ledit arbre d'entrée (12) ;
une partie formant cylindre (22) du servomécanisme hydraulique (20) dudit premier embrayage (C-1) et une partie formant cylindre (42) du servomécanisme hydraulique (40) dudit troisième embrayage (C-3) sont disposées de manière axiale sur les deux côtés dudit élément de positionnement (106) ; et
l'élément formant piston (43) du servomécanisme hydraulique (40) dudit troisième embrayage (C-3) et ladite première couronne (R1) dudit engrenage planétaire de réduction (DP) sont construits de sorte qu'ils pénètrent à travers et forment une intersection entre eux et de sorte que l'élément formant piston (43) peut coulisser contré la première couronne (R1) et l'élément de positionnement (106).

23. Transmission automatique pour véhicule selon la revendication 22, dans laquelle une partie d'extrémité (R1a) de la première couronne (R1) dudit engrenage planétaire de réduction (DP) est formée selon la forme d'un peigne ; et
une pluralité de trous de passage (43c) à travers lesquels la partie d'extrémité (R1a) en forme de peigne de la première couronne (R1) dudit engrenage planétaire de réduction (DP) pénètre et forme une intersection, est formée à travers l'élément formant piston (43) du servomécanisme hydraulique (40) dudit troisième embrayage (C-3).

24. Transmission automatique pour véhicule selon la revendication 23, dans laquelle :
une partie d'extrémité périphérique externe (106a) de l'élément de positionnement (106) est formée selon la forme d'un peigne ;
la partie d'extrémité (R1a) en forme de peigne de la première couronne (R1) dudit engrenage planétaire de réduction (DP) est montée dans la partie d'extrémité périphérique externe (106a) en forme de peigne dudit élément de positionnement (106) ; et
la première couronne (R1) dudit engrenage planétaire de réduction (DP) est fixée sur ledit élément de positionnement (106) dans la direction axiale par un anneau élastique (109).

25. Transmission automatique pour véhicule selon l'une quelconque des revendications 17 à 19, dans laquelle le servomécanisme hydraulique (20) dudit premier embrayage (C-1) est disposé sur le côté dudit engrenage planétaire de réduction (DP) ; et
le servomécanisme hydraulique (40) dudit troisième embrayage (C-3) est disposé sur le côté dudit train planétaire (PU) et un élément de liaison (102) pour relier ledit premier embrayage (C-1) avec ledit second élément rotatif (S3) est disposé à travers le côté périphérique interne dudit troisième embrayage (C-3).

26. Transmission automatique pour véhicule selon la revendication 25, dans laquelle ledit engrenage planétaire de réduction (DP) est composé d'un engrenage planétaire à double pignon (DP) ayant un premier planétaire (S1) dont la rotation est fixe, d'un premier engrenage à pignons (P1) se mettant en prise avec ledit premier planétaire (S1), d'un second engrenage à pignons (P2) se mettant en prise avec ledit premier engrenage à pignons (P1), d'un premier support (CR1) pour supporter de manière rotative lesdits premier et second engrenages à pignons (P1, P2) et toujours relié audit arbre d'entrée (12), et d'une première couronne (R1) se mettant en prise avec ledit second engrenage à pignons (P2) et produisant la rotation réduite.

27. Transmission automatique pour véhicule selon la revendication 26, dans laquelle la plaque de friction (41) dudit troisième embrayage (C-3) est disposée sur le côté périphérique externe de ladite première couronne (R1) dudit engrenage planétaire de réduction (DP) ; et
ledit premier embrayage (C-1) est disposé sur le côté périphérique interne du tambour d'embrayage (42) dudit troisième embrayage (C-3).

28. Transmission automatique pour véhicule selon la revendication 26, dans laquelle la plaque de friction (51) dudit quatrième embrayage (C-4) est disposée sur le côté périphérique externe de la première couronne (R1) dudit engrenage planétaire de réduction (DP).

29. Transmission automatique pour véhicule selon la revendication 28, dans laquelle la plaque de friction (41) dudit troisième embrayage (C-3) est disposée sur le côté périphérique externe du tambour d'embrayage (22) dudit premier embrayage (C-1).

30. Transmission automatique pour véhicule selon l'une quelconque des revendications 17 à 29, dans laquelle le servomécanisme hydraulique (20) dudit premier embrayage (C-1) et le servomécanisme hydraulique (40) dudit troisième embrayage (C-3) sont disposés sur l'arbre d'entrée (12) ; et
le fluide de travail est alimenté au servomécanisme hydraulique (20) dudit premier embrayage (C-1) et au servomécanisme hydraulique (40) dudit troisième embrayage (C-3) via des passages d'huile prévus à l'intérieur de l'arbre d'entrée (12).

31. Transmission automatique pour véhicule selon la revendication 30, dans laquelle un premier passage d'huile (c6) pour alimenter le fluide de travail au servomécanisme hydraulique (20) dudit premier embrayage (C-1) dans la direction axiale, un deuxième passage d'huile (c8) pour alimenter le fluide de travail au servomécanisme hydraulique (40) dudit troisième embrayage (C-3) dans la direction axiale et un troisième passage d'huile (c4) pour alimenter de l'huile de lubrification dans la direction axiale sont formés à l'intérieur de l'arbre d'entrée (12) parallèlement à la direction axiale.

32. Transmission automatique pour véhicule selon l'une quelconque des revendications 17 à 29, dans laquelle :
au moins l'un parmi le servomécanisme hydraulique (20) dudit premier embrayage (C-1) et le servomécanisme hydraulique (40) dudit troisième embrayage (C-3) est disposé sur l'arbre d'entrée (12) ;
la paroi de support (120) fixée audit carter (4) est disposée axialement entre ledit train planétaire (PU) et ledit premier embrayage (C-1) et ledit troisième embrayage (C-3) ;
le fluide de travail est alimenté à l'un parmi le servomécanisme hydraulique (20) dudit premier embrayage (C-1) et le servomécanisme hydraulique (40) dudit troisième embrayage (C-3) via le passage d'huile prévu à l'intérieur de l'arbre d'entrée (12) ; et
le fluide de travail est alimenté à l'autre parmi le servomécanisme hydraulique (20) dudit premier embrayage (C-1) et le servomécanisme hydraulique (40) dudit troisième embrayage (C-3) via le passage d'huile prévu à l'intérieur de la paroi de support (120).

33. Transmission automatique pour véhicule selon l'une quelconque des revendications 1 à 12, dans laquelle le servomécanisme hydraulique (20) dudit premier embrayage (C-1) et le servomécanisme hydraulique (40) dudit troisième embrayage (C-3) sont disposés de manière axiale sur le côté opposé dudit engrenage planétaire de réduction (DP) par rapport audit train planétaire (PU).

34. Transmission automatique pour véhicule selon la revendication 33, dans laquelle :
le servomécanisme hydraulique (40) dudit troisième embrayage (C-3), le servomécanisme hydraulique (20) dudit premier embrayage (C-1), le servomécanisme hydraulique (50) dudit quatrième embrayage (C-4) et ledit engrenage planétaire de réduction (DP) sont disposés sur la partie de bossage (3b) s'étendant à partir du carter (4) dans l'ordre à partir du côté de l'assemblage de la partie de bossage (3b) avec le carter (4) dans la direction axiale ; et
le fluide de travail est alimenté au servomécanisme hydraulique (40) dudit troisième embrayage (C-3), au servomécanisme hydraulique (20) dudit premier embrayage (C-1) et au servomécanisme hydraulique (50) dudit quatrième embrayage (C-4) respectivement par les passages d'huile prévus à l'intérieur de la partie de bossage (3b).

35. Transmission automatique pour véhicule selon la revendication 33 ou 34, dans laquelle lesdits premiers moyens de freinage (B-1) sont disposés de manière axiale entre ledit engrenage planétaire de réduction (DP) et ledit train planétaire (PU).

36. Transmission automatique pour véhicule selon l'une quelconque des revendications 1 à 12, dans laquelle le servomécanisme hydraulique (20) dudit premier embrayage (C-1) est disposé de manière axiale sur le côté opposé dudit train planétaire (PU) par rapport audit engrenage planétaire de réduction (DP) ; et
le servomécanisme hydraulique (40) dudit troisième embrayage (C-3) est disposé entre ledit engrenage planétaire de réduction (DP) et ledit train planétaire (PU).

37. Transmission automatique pour véhicule selon l'une quelconque des revendications 1 à 12, dans laquelle le servomécanisme hydraulique (20) dudit premier embrayage (C-1) est disposé de manière axiale sur le côté opposé dudit train planétaire (PU) par rapport audit engrenage planétaire de réduction (DP) ; et
le servomécanisme hydraulique (40) dudit troisième embrayage (C-3) est disposé sur le côté opposé dudit engrenage planétaire de réduction (DP) par rapport audit train planétaire (PU).

38. Transmission automatique pour véhicule selon l'une quelconque des revendications 1 à 37, dans laquelle ledit deuxième embrayage (C-2) est disposé de manière axiale sur le côté opposé dudit train planétaire (PU) par rapport audit engrenage planétaire de réduction (DP).

39. Transmission automatique pour véhicule selon l'une quelconque des revendications 1 à 37, dans laquelle ledit deuxième embrayage (C-2) est disposé de manière axiale entre ledit engrenage planétaire de réduction (DP) et ledit train planétaire (PU).

40. Transmission automatique pour véhicule selon l'une quelconque des revendications 1 à 39, dans laquelle la rotation réduite dudit engrenage planétaire de réduction (DP) est transmise au tambour d'embrayage (22) dudit premier embrayage (C-1) formant le servomécanisme hydraulique (20) dudit premier embrayage (C-1) lorsque ledit premier embrayage (C-1) se met en prise.

41. Transmission automatique pour véhicule selon l'une quelconque des revendications 1 à 40, dans laquelle la rotation réduite dudit engrenage planétaire de réduction (DP) est transmise au tambour d'embrayage (42) dudit troisième embrayage (C-3) formant le servomécanisme hydraulique (40) dudit troisième embrayage (C-3) lorsque ledit troisième embrayage (C-3) se met en prise.

42. Transmission automatique pour véhicule selon l'une quelconque des revendications 1 à 41, dans laquelle la rotation transmise de l'arbre d'entrée (12) est transmise au tambour d'embrayage (52) dudit quatrième embrayage (C-4) formant le servomécanisme hydraulique (50) dudit quatrième embrayage (C-4) lorsque ledit quatrième embrayage (C-4) se met en prise.

43. Transmission automatique pour véhicule selon l'une quelconque des revendications 1 à 42, dans laquelle :
ledit train planétaire (PU) comprend le deuxième planétaire (S2), le troisième planétaire (S3), le troisième engrenage à pignons (P3) qui se met en prise avec ledit troisième planétaire (S3), le quatrième engrenage à pignons (P4) qui se met en prise avec ledit second planétaire (S2) et ledit troisième engrenage à pignons (P3), le support (CR2) qui supporte de manière rotative lesdits troisième et quatrième engrenages à pignons (P3, P4) et la couronne (R2) qui se met en prise avec ledit quatrième engrenage à pignons (P4) ;
ledit premier élément rotatif se compose dudit deuxième planétaire (S2) ;
ledit second élément rotatif se compose dudit troisième planétaire (S3) ;
ledit troisième élément rotatif se compose dudit second support (CR2) ; et
ledit quatrième élément rotatif se compose de ladite seconde couronne (R2).

44. Transmission automatique pour véhicule selon la revendication 43, dans laquelle ledit train planétaire (PU) est l'engrenage planétaire de type Ravigneaux dans lequel ladite seconde couronne (R2) est disposée sur un côté du côté périphérique externe ; et
une plaque de friction (71) du second frein (B-2) est disposée de l'autre côté du côté périphérique externe dudit train planétaire (PU).

45. Transmission automatique pour véhicule selon l'une quelconque des revendications 1 à 44, pouvant atteindre :
un premier étage de vitesse en marche avant en mettant en prise ledit premier embrayage (C-1) et en fixant le second frein (B-2) ;
un deuxième étage de vitesse en marche avant en mettant en prise ledit premier embrayage (C-1) et en fixant lesdits premiers moyens de freinage (B-1) ;
un troisième étage de vitesse en marche avant en mettant en prise ledit premier embrayage (C-1) et ledit troisième embrayage (C-3) ;
un quatrième étage de vitesse en marche avant en mettant en prise ledit premier embrayage (C-1) et ledit quatrième embrayage (C-4) ;
un cinquième étage de vitesse en marche avant en mettant en prise ledit premier embrayage (C-1) et ledit deuxième embrayage (C-2) ;
un sixième étage de vitesse en marche avant en mettant en prise ledit deuxième embrayage (C-2) et ledit quatrième embrayage (C-4) ;
un septième étage de vitesse en marche avant en mettant en prise ledit deuxième embrayage (C-2) et ledit troisième embrayage (C-3) ;
un huitième étage de vitesse en marche avant en mettant en prise ledit deuxième embrayage (C-2) et en fixant lesdits premiers moyens de freinage (B-1) ; et
un étage de marche arrière en mettant en prise ledit troisième embrayage (C-3) ou ledit quatrième embrayage (C-4) et en fixant lesdits seconds moyens de freinage (B-2).

46. Transmission automatique pour véhicule selon l'une quelconque des revendications 1 à 45, dans laquelle ledit engrenage planétaire de réduction (DP) et ledit train planétaire (PU) sont disposés de manière coaxiale et alignés dans la direction axiale.

47. Transmission automatique pour véhicule selon l'une quelconque des revendications 1 à 46, dans laquelle ledit quatrième embrayage (C-4) est amovible.

48. Transmission automatique pour véhicule selon l'une quelconque des revendications 1 à 47, dans laquelle ledit élément de sortie est un arbre de sortie (15) pour transmettre une rotation de manière coaxiale par rapport à l'arbre d'entrée (12).

49. Transmission automatique pour véhicule selon l'une quelconque des revendications 1 à 47, dans laquelle ledit élément de sortie est un pignon intermédiaire (150) qui transmet une rotation à un arbre parallèle à l'arbre d'entrée (12).

50. Transmission automatique pour véhicule selon la revendication 49, dans laquelle ledit pignon intermédiaire (150) et une paroi de support (130) pour supporter ledit pignon intermédiaire (150) sont disposés de manière axiale entre ledit engrenage planétaire de réduction (DP) et ledit train planétaire (PU).

51. Transmission automatique pour véhicule selon la revendication 49, dans laquelle ledit pignon intermédiaire (150) est disposé de manière axiale sur le côté opposé dudit train planétaire (PU) par rapport audit engrenage planétaire de réduction (DP).

52. Transmission automatique pour véhicule selon la revendication 51, dans laquelle ledit pignon intermédiaire (150) est disposé sur une partie de bossage (3d) s'étendant à partir d'une paroi latérale (3c) dudit carter (4) de manière axiale sur le côté opposé dudit train planétaire (PU) par rapport audit engrenage planétaire de réduction (DP).

53. Transmission automatique pour véhicule selon la revendication 51 ou 52, dans laquelle ledit pignon intermédiaire (150) est disposé de manière axiale dans une position d'extrémité sur le côté opposé par rapport audit arbre d'entrée (12) à l'intérieur dudit carter (4).

54. Transmission automatique pour véhicule selon la revendication 51, dans laquelle ledit pignon intermédiaire (150) est disposé de manière axiale dans une position d'extrémité sur le côté dudit arbre d'entrée (12) à l'intérieur dudit carter (4).

55. Transmission automatique pour véhicule selon l'une quelconque des revendication 3 à 54, dans laquelle ledit servomécanisme hydraulique (50) dudit quatrième embrayage (C-4) est disposé entre ledit engrenage planétaire de réduction (DP) et ledit élément de séparation (3A) du carter (3) de ladite transmission.

56. Transmission automatique pour véhicule selon l'une quelconque des revendication 13 à 54 en particulier directement ou indirectement dépendante de la revendication 13, dans laquelle ledit servomécanisme hydraulique (50) dudit quatrième embrayage (C-4) est adjacent audit servomécanisme hydraulique (20) dudit premier embrayage (C-1).

57. Transmission automatique pour véhicule selon l'une quelconque des revendications 1 à 56, dans laquelle le premier embrayage (C-1) et/ou le deuxième embrayage (C-2) et/ou le troisième embrayage (C-3) et/ou le quatrième embrayage (C-4) se composent d'une plaque de friction (21, 31, 41, 51) et du servomécanisme hydraulique (20, 30, 40, 50).

58. Transmission automatique pour véhicule selon l'une quelconque des revendications 1 à 57 directement ou indirectement dépendante de la revendication 13, dans laquelle l'élément formant moyeu (112) est couplé par cannelure avec la plaque de friction interne (51b) de la plaque de friction (51) du quatrième embrayage (C-4) et est relié audit premier élément rotatif par le biais du côté périphérique externe du premier embrayage (C-1).
